# EUROPEAN PATENT APPLICATION

(11) **EP 4 745 343 A1**
(43) Date of publication of application: **20.05.2026**
(21) Application number: 25741372.4
(22) Date of filing: 06.01.2025
(51) Int. Cl.: E04H 4/16, B08B 9/093

(54) **CLEANING APPARATUS**

(30) Priority: 17.01.2024 CN 202410070430; 05.02.2024 WO PCT/CN2024/076021; 27.03.2024 CN 202410362217; 07.05.2024 CN 202420971277 U; 17.05.2024 WO PCT/CN2024/094025; 21.06.2024 WO PCT/CN2024/100765; 29.11.2024 WO PCT/CN2024/135845
(71) Applicant: Xingmai Innovation Technology (Suzhou) Co., Ltd., Suzhou, Jiangsu 215124 (CN)
(72) Inventor: WANG, Shengle, Suzhou, Jiangsu 215124 (CN)
(74) Representative: Huang, Liwei
(86) International application number: PCT/CN2025/070882
(87) International publication number: WO 2025/152809

(57) **Abstract**

The present disclosure provides a cleaning device, at least operating in a pool and including a cleaning device body. The cleaning device body includes: a first accommodating cavity configured to accommodate at least a part of a filtering box; a first end portion; and a second end portion. The cleaning device includes: an electronic control box provided in the cleaning device body and configured to at least accommodate a battery pack; and a buoyancy adjustment mechanism, including at least one buoyancy cavity. The buoyancy cavity includes at least a first buoyancy sub-cavity and a second buoyancy sub-cavity. The first buoyancy sub-cavity and the second buoyancy sub-cavity are configured to accommodate at least one of gas or liquid. The first accommodating cavity is close to the first end portion, and the electronic control box is close to the second end portion. At least a part of the first buoyancy sub-cavity is closer to the first end portion than the electronic control box, and at least a part of the second buoyancy sub-cavity is closer to the second end portion than the first accommodating cavity.

## Description

### CROSS-REFERENCE TO RELATED APPLICATIONS

This application claims priority to Chinese Patent Application No. 202410362217.0, filed with the China National Intellectual Property Administration on March 27, 2024 and entitled "POOL CLEANING ROBOT", which is incorporated herein by reference in its entirety.

This application claims priority to Chinese Patent Application No. 202410070430.4, filed with the China National Intellectual Property Administration on January 17, 2024 and entitled "POOL ROBOT AND CONTROL METHOD THEREOF, AND STORAGE MEDIUM", which is incorporated herein by reference in its entirety.

This application claims priority to International Patent Application No. PCT/CN2024/094025, filed with the World Intellectual Property Organization on May 17, 2024 and entitled "CLEANING DEVICE", which is incorporated herein by reference in its entirety.

This application claims priority to International Patent Application No. PCT/CN2024/100765, filed with the World Intellectual Property Organization on June 21, 2024 and entitled "CLEANING DEVICE", which is incorporated herein by reference in its entirety.

This application claims priority to Chinese Patent Application No. 202420971277.8, filed with the China National Intellectual Property Administration on May 7, 2024 and entitled "CLEANING DEVICE", which is incorporated herein by reference in its entirety.

This application claims priority to International Patent Application No. PCT/CN2024/076021, filed with the World Intellectual Property Organization on February 5, 2024 and entitled "CLEANING DEVICE AND CLEANING DEVICE SYSTEM", which is incorporated herein by reference in its entirety.

This application claims priority to International Patent Application No. PCT/CN2024/135845, filed with the World Intellectual Property Organization on November 29, 2024 and entitled "CLEANING DEVICE", which is incorporated herein by reference in its entirety.

### TECHNICAL FIELD

The present disclosure relates to the technical field of operating devices used in liquid, and in particular to, a cleaning device.

### BACKGROUND

With improvement of living standards of people, an increasing number of people choose swimming as a form of exercise that not only increases fun of life but also strengthens their physique. In addition, water quality of a swimming pool also attracts much attention.

In a related technology, a cleaning device specifically operating in water is usually used to clean the swimming pool to improve the water quality of the swimming pool. However, the existing cleaning device has a single function, an electronic control box of the cleaning device is heavy, the cleaning device has a poor capability to be switched between under a water surface and on the water surface, and a structure of the cleaning device is complex.

### SUMMARY

The present disclosure provides a cleaning device, at least operating in a pool and including a cleaning device body. The cleaning device body includes: a first accommodating cavity configured to accommodate at least a part of a filtering box; a first end portion; and a second end portion. The cleaning device includes: an electronic control box provided in the cleaning device body and configured to at least accommodate a battery pack; and a buoyancy adjustment mechanism including at least one buoyancy cavity. The buoyancy cavity includes at least a first buoyancy sub-cavity and a second buoyancy sub-cavity. The first buoyancy sub-cavity and the second buoyancy sub-cavity are configured to accommodate at least one of gas or liquid. The first accommodating cavity is close to the first end portion, and the electronic control box is close to the second end portion. At least a part of the first buoyancy sub-cavity is closer to the first end portion than the electronic control box, and at least a part of the second buoyancy sub-cavity is closer to the second end portion than the first accommodating cavity.

### BRIEF DESCRIPTION OF DRAWINGS

A person of ordinary skill in the art understands various other advantages and benefits by reading detailed descriptions of optional embodiments in the following. The accompanying drawings are only intended to illustrate optional embodiments and are not considered as any limitation on the present disclosure. In addition, identical reference numerals indicate identical elements in the accompanying drawings. In the drawings:
FIG. 1 is a schematic structural view of a cleaning device according to an embodiment of the present disclosure;
FIG. 2 is a schematic view of a cleaning device located on a target bottom wall of a target region according to the present disclosure;
FIG. 3 is a schematic view of a cleaning device located on a target side wall of a target region according to the present disclosure;
FIG. 4a is a side view of a cleaning device according to another embodiment of the present disclosure;
FIG. 4b is a schematic structural view of the cleaning device in FIG. 4a after some components are hidden;
FIG. 5 is a main view of a cleaning device according to another embodiment of the present disclosure;
FIG. 6 is a schematic structural view of mating between a camera unit, a light-supplementing member, and a mounting plate of a vision sensing assembly of a cleaning device according to the present disclosure;
FIG. 7 is a schematic structural view of mating between a control system and some components of an electronic control box of a cleaning device according to the present disclosure;
FIG. 8 is a schematic structural view of mating between a submersion detection assembly and an electronic control box of a cleaning device according to the present disclosure;
FIG. 9 is an enlarged view of a portion A in FIG. 8;
FIG. 10 is a schematic view of an exploded structure of a vision sensing assembly of a cleaning device according to an embodiment of the present disclosure;
FIG. 11 is a sectional view of a light transmission part of a vision sensing assembly of a cleaning device according to an embodiment of the present disclosure;
FIG. 12 is a schematic view of an exploded structure of a vision sensing assembly of a cleaning device according to another embodiment of the present disclosure;
FIG. 13 is a schematic diagram of an exploded structure of a vision sensing assembly of a cleaning device according to a third embodiment of the present disclosure;
FIG. 14 is a schematic structural view and a sectional view of mating between a wire harness and a sleeve seat of a vision sensing assembly of a cleaning device according to the present disclosure;
FIG. 15 is a schematic structural view of a heat sink of a vision sensing assembly of a cleaning device according to an embodiment of the present disclosure;
FIG. 16 is a main view of a cleaning device according to an embodiment of the present disclosure;
FIG. 17 is a partial schematic view of a cleaning device according to an embodiment of the present disclosure;
FIG. 18 is another partial schematic view of a cleaning device according to an embodiment of the present disclosure;
FIG. 19a is a bottom view of a cleaning device according to another embodiment of the present disclosure;
FIG. 19b is a partial schematic structural view of a cleaning device according to an embodiment of the present disclosure;
FIG. 19c is a partial schematic structural view of a bottom of a cleaning device according to an embodiment of the present disclosure;
FIG. 19d is a partial schematic structural view of a bottom of a cleaning device according to another embodiment of the present disclosure;
FIG. 20a is a side view of a cleaning device according to an embodiment of the present disclosure;
FIG. 20b is a third partial schematic view of a cleaning device according to an embodiment of the present disclosure;
FIG. 20c is a side view of a cleaning device according to a third embodiment of the present disclosure;
FIG. 20d is a side view of a cleaning device according to a fourth embodiment of the present disclosure;
FIG. 20e is a side view of a cleaning device according to a fifth embodiment of the present disclosure;
FIG. 20f is a side view of a cleaning device according to a sixth embodiment of the present disclosure;
FIG. 20g is a partial schematic view of a cleaning device according to an embodiment of the present disclosure;
FIG. 20h is an exploded view of a part of a side surface of a cleaning device according to an embodiment of the present disclosure;
FIG. 20i is a partial schematic view of a cleaning device according to an embodiment of the present disclosure;
FIG. 21 is a sectional view of a cleaning device according to another embodiment of the present disclosure;
FIG. 22 is an enlarged view of a portion B in FIG. 21;
FIG. 23 is a schematic structural view of a filtering box of a cleaning device according to an embodiment of the present disclosure;
FIG. 24 is another side view of a cleaning device according to an embodiment of the present disclosure;
FIG. 25 is a schematic structural view of a cleaning device according to another embodiment of the present disclosure;
FIG. 26 is a sectional view of a cleaning device according to another embodiment of the present disclosure;
FIG. 27 is a schematic structural view of one motion state of a cleaning device according to the present disclosure;
FIG. 28 is a schematic structural view of another motion state of a cleaning device according to the present disclosure;
FIG. 29 is a schematic structural view of a third motion state of a cleaning device according to the present disclosure;
FIG. 30 is a sectional view of mating between a filtering box and a second handle of a cleaning device according to the present disclosure;
FIG. 31 is a schematic structural view of a second handle of a cleaning device according to the present disclosure;
FIG. 32 is a schematic structural view of an electronic control box of a cleaning device according to an embodiment of the present disclosure;
FIG. 33 is a schematic structural view of mating between an electronic control box and a prompt assembly of a cleaning device according to the present disclosure;
FIG. 34a is a partial schematic structural view of a cleaning device according to an embodiment of the present disclosure;
FIG. 34b is a partial schematic structural view of a cleaning device according to another embodiment of the present disclosure;
FIG. 35 is a schematic structural view of a data transmission assembly of a cleaning device according to the present disclosure;
FIG. 36 is a schematic structural view of mating between a Hall magnet and a carrier plate of an in-position sensing assembly of a cleaning device according to the present disclosure;
FIG. 37 is a schematic structural view of mating between a Hall element and a Hall magnet of an in-position sensing assembly of a cleaning device according to an embodiment of the present disclosure;
FIG. 38a is a schematic structural view of a filtering box according to an embodiment of the present disclosure;
FIG. 38b is a schematic structural view of separation between the filtering box and a second handle in FIG. 38a;
FIG. 38c is a schematic view of a longitudinal section of the filtering box in FIG. 38a;
FIG. 38d is a schematic structural view of a cleaning device according to an embodiment of the present disclosure;
FIG. 38e is a schematic structural view of the cleaning device in FIG. 38d after a filtering box cover is removed;
FIG. 38f is a schematic structural view existing when a filtering box is placed in a filtering box cavity according to an embodiment of the present disclosure;
FIG. 38g is a schematic structural view existing when a filtering box is placed in a filtering box cavity according to an embodiment of the present disclosure;
FIG. 38h is a schematic structural view of a filtering box cavity according to an embodiment of the present disclosure;
FIG. 38i is a schematic structural view of a filtering box cavity according to an embodiment of the present disclosure;
FIG. 38j is a schematic view of a longitudinal section existing when a filtering box is placed in a filtering box cavity according to the present disclosure;
FIG. 38k is a partial schematic view of a longitudinal section of a filtering box cavity and a filtering box according to the present disclosure;
FIG. 39a is a schematic structural view of a filtering box according to another embodiment of the present disclosure;
FIG. 39b is a schematic structural view of a filtering box according to another embodiment of the present disclosure;
FIG. 39c is a schematic structural view existing when a filtering box is placed in a filtering box cavity according to another embodiment of the present disclosure;
FIG. 39d is a schematic structural view of a filtering box cavity according to another embodiment of the present disclosure;
FIG. 39e is a schematic structural view of an inner filtering box according to an embodiment of the present disclosure;
FIG. 39f is a schematic structural view of an inner filtering box according to an embodiment of the present disclosure;
FIG. 39g is a schematic structural view of an outer filtering box according to an embodiment of the present disclosure;
FIG. 39h is a schematic structural view of an outer filtering box according to an embodiment of the present disclosure;
FIG. 39i is a schematic view of a longitudinal section existing when double filtering boxes are placed in a filtering box cavity according to an embodiment of the present disclosure;
FIG. 39j is a schematic view of a longitudinal section of double filtering boxes according to an embodiment of the present disclosure;
FIG. 39k is a schematic structural view of a cleaning device according to another embodiment of the present disclosure;

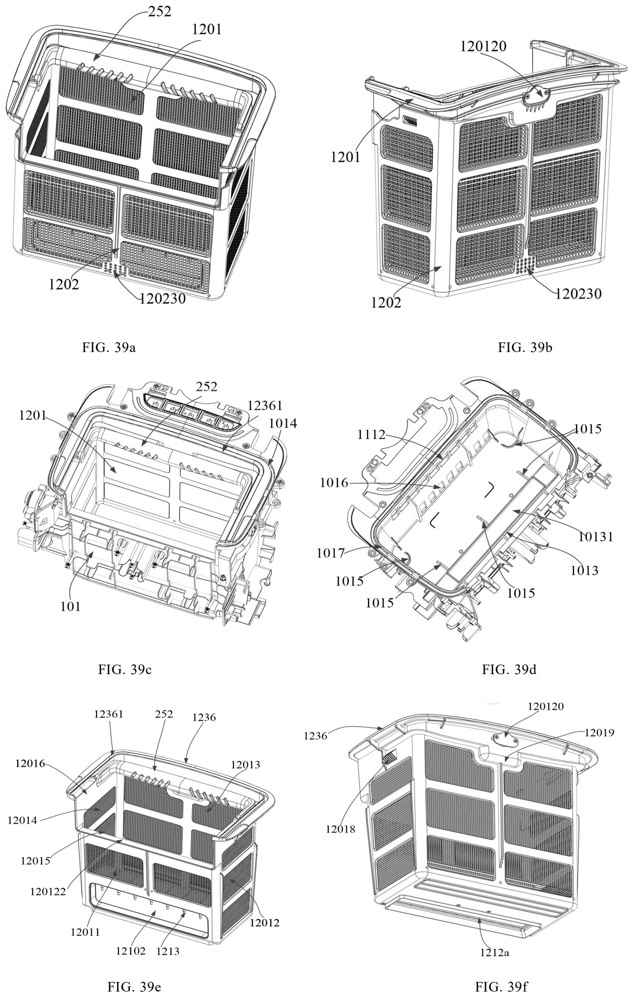

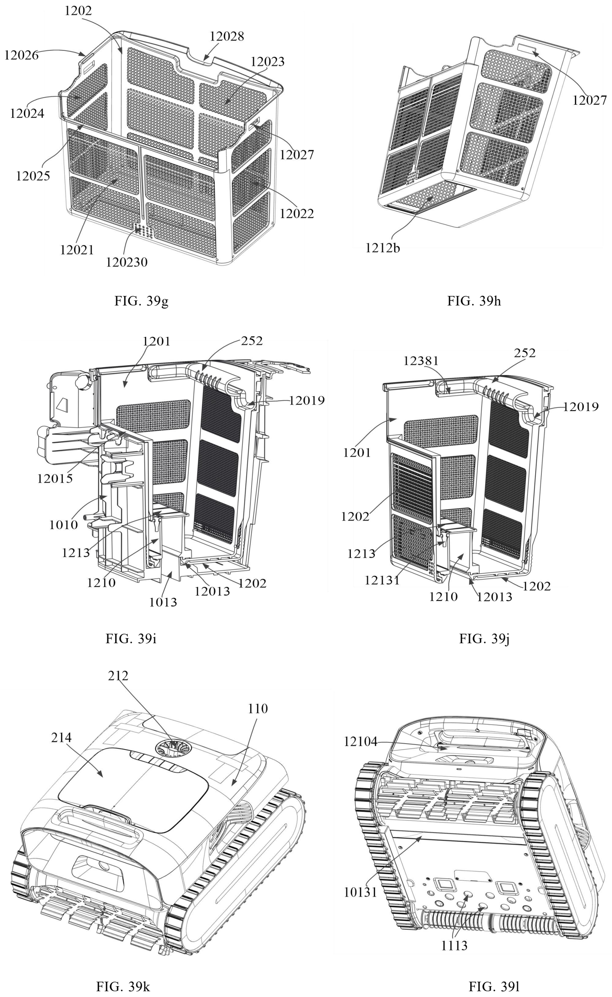

FIG. 39i is a schematic structural view of a cleaning device according to another embodiment of the present disclosure;

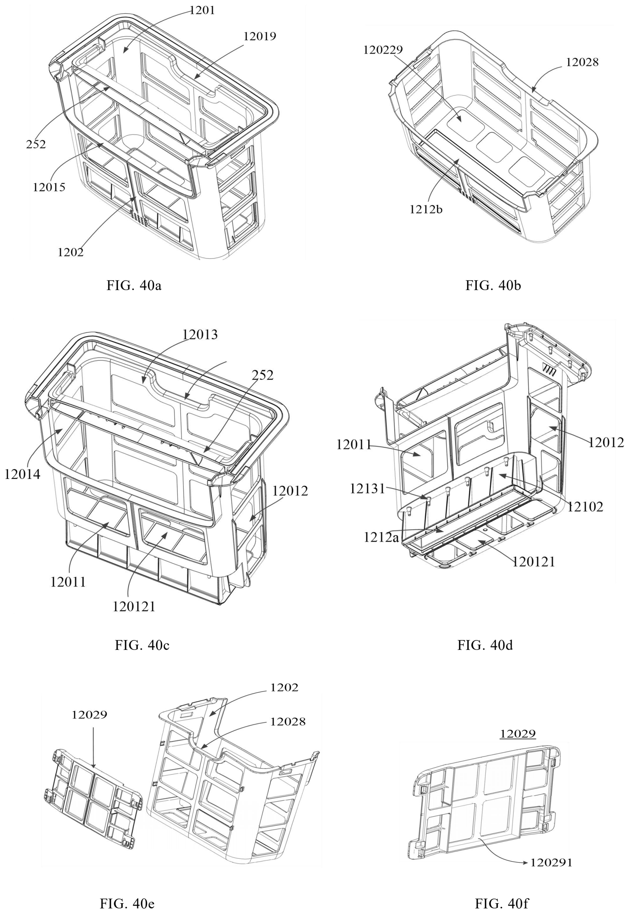

FIG. 40a is a schematic structural view of double filtering boxes (where a filtering mesh is removed) according to another embodiment of the present disclosure;
FIG. 40b is a schematic structural view of an outer filtering box according to another embodiment of the present disclosure;
FIG. 40c is a schematic structural view of an inner filtering box according to another embodiment of the present disclosure;
FIG. 40d is a schematic structural view of an inner filtering box according to another embodiment of the present disclosure;
FIG. 40e is a schematic structural view of an outer filtering box according to another embodiment of the present disclosure;
FIG. 40f is a schematic structural view of a second filtering apparatus according to an embodiment of the present disclosure;

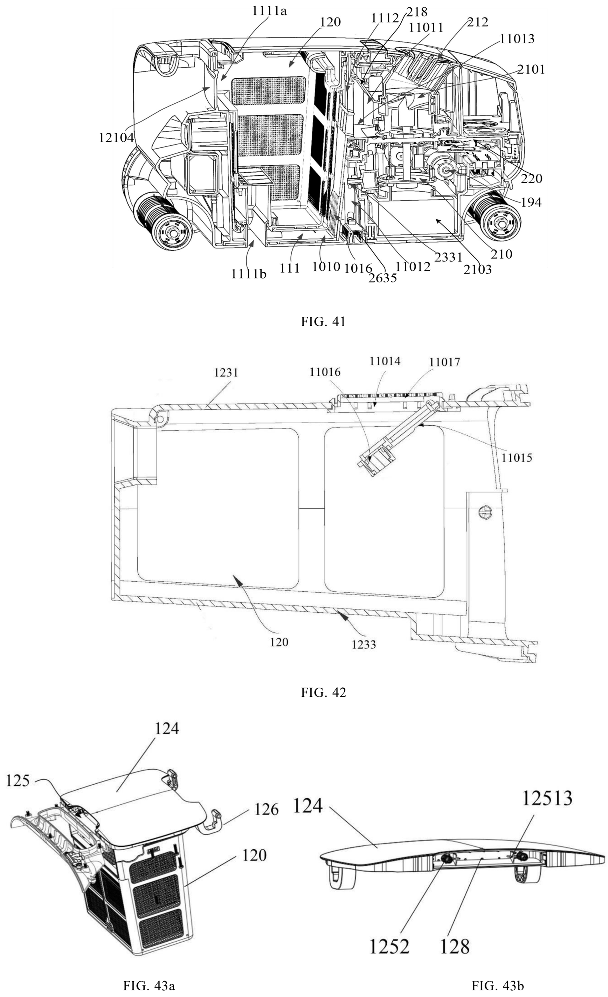

FIG. 41 is a schematic view of a longitudinal section of a cleaning device according to an embodiment of the present disclosure;
FIG. 42 is a schematic structural view of a section of a filtering box according to another embodiment of the present disclosure;
FIG. 43a is a schematic structural view of a cover plate and a pressing assembly according to an embodiment of the present disclosure;
FIG. 43b is a schematic structural view of a cover plate and a discharging hole according to an embodiment of the present disclosure;

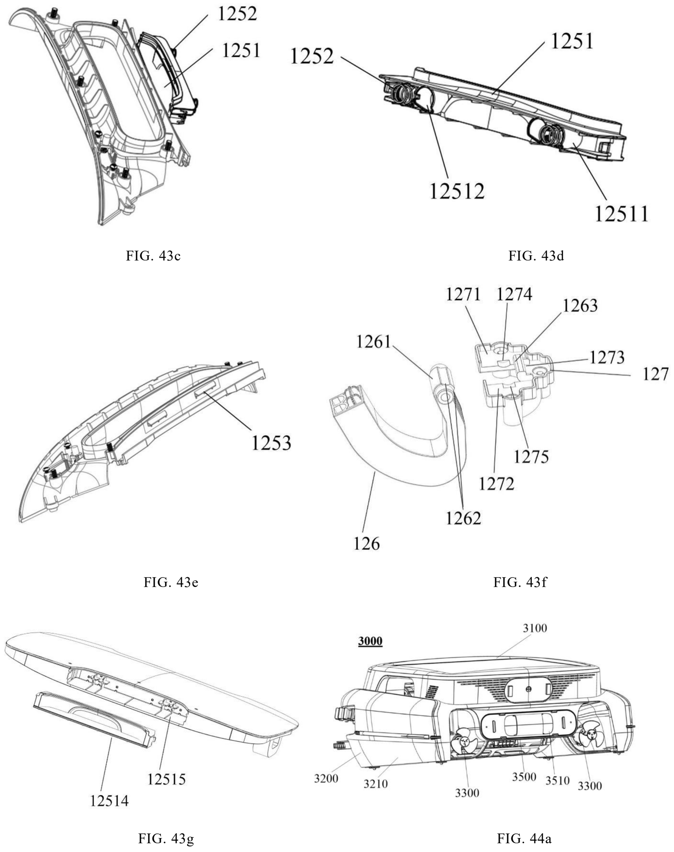

FIG. 43c is a schematic structural view of a pressing assembly according to an embodiment of the present disclosure;
FIG. 43d is a schematic structural view of a pressing assembly according to another embodiment of the present disclosure;
FIG. 43e is a schematic structural view of a locking portion according to an embodiment of the present disclosure;
FIG. 43f is a schematic structural view of a connection portion according to an embodiment of the present disclosure;
FIG. 43g is a schematic structural view of a cover plate and a pressing assembly according to another embodiment of the present disclosure;
FIG. 44a is a schematic structural view of a water surface cleaning device according to an embodiment of the present disclosure;

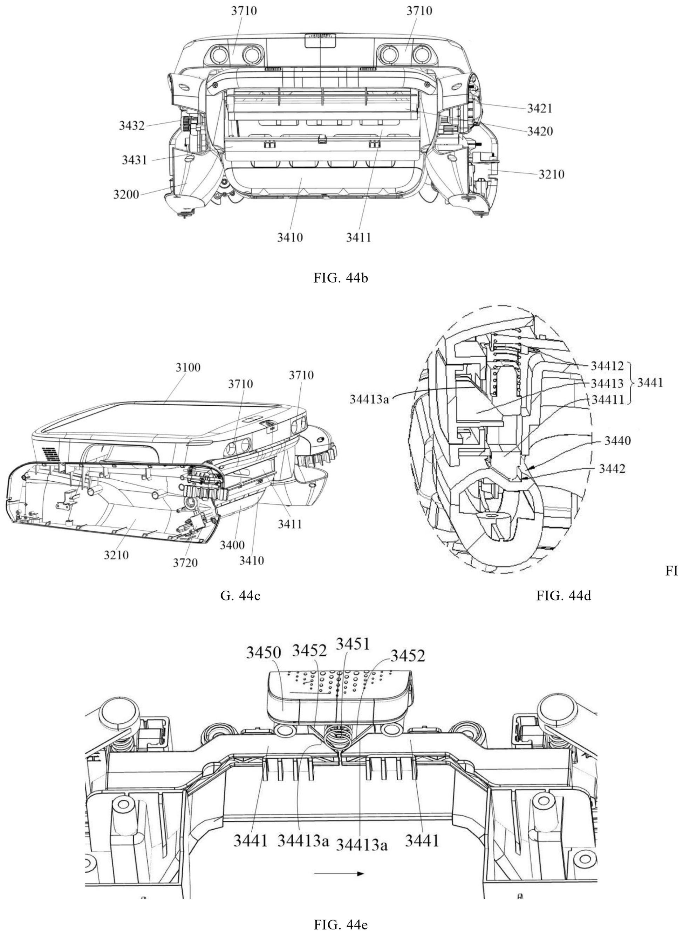

FIG. 44b is a schematic structural view of a water surface cleaning device according to an embodiment of the present disclosure;
FIG. 44c is a partial schematic view of a water surface cleaning device according to an embodiment of the present disclosure;
FIG. 44d is a partial schematic view of a locking member of a filtering box of a water surface cleaning device according to the present disclosure;
FIG. 44e is a partial schematic view of mating between a filtering box button and a locking member of a filtering box of a water surface cleaning device according to the present disclosure;

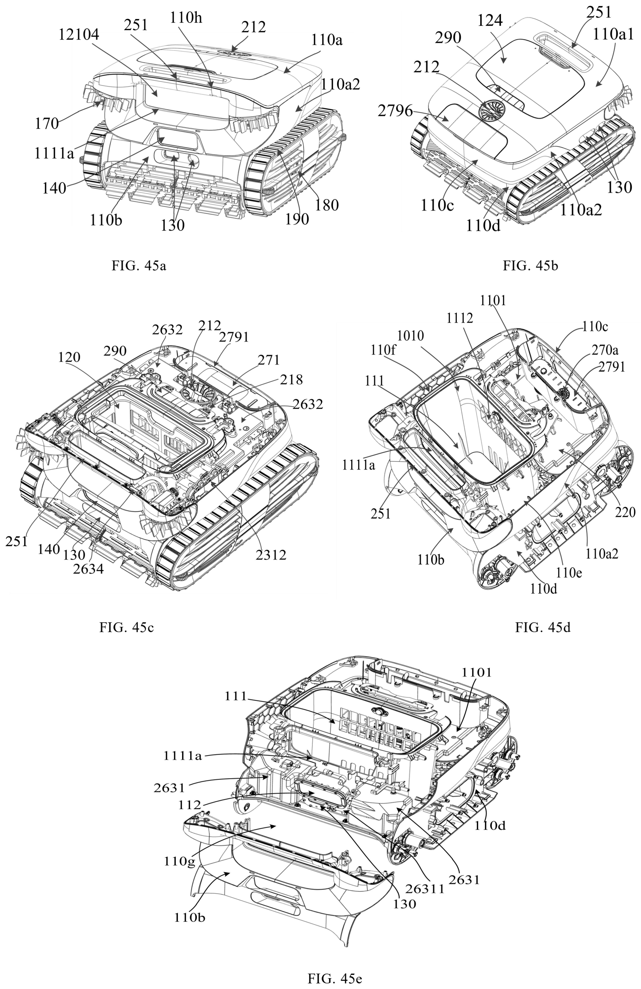

FIG. 45a is a schematic structural view of a cleaning device according to an embodiment of the present disclosure;
FIG. 45b is a schematic structural view of a cleaning device according to an embodiment of the present disclosure;
FIG. 45c is a partial schematic structural view of a cleaning device according to an embodiment of the present disclosure;
FIG. 45d is a schematic structural view of a cleaning device body according to an embodiment of the present disclosure;
FIG. 45e is a schematic exploded view of a structure of a front housing of the cleaning device body in FIG. 45d according to an embodiment of the present disclosure;

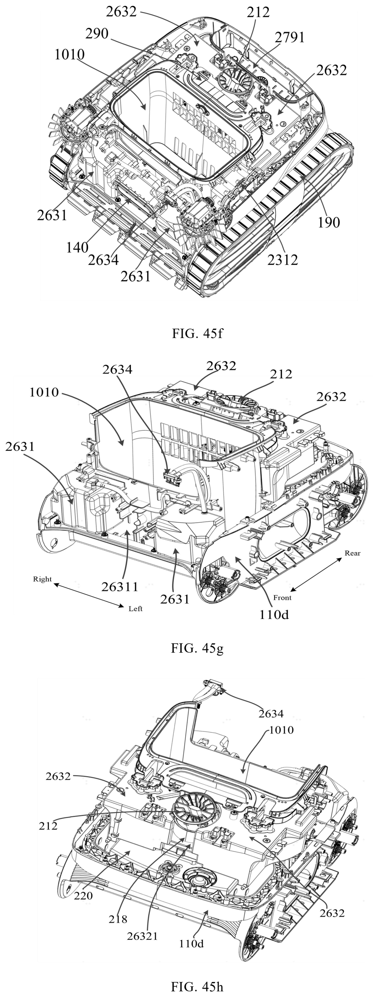

FIG. 45f is a partial schematic structural view of a cleaning device according to an embodiment of the present disclosure;
FIG. 45g is a partial schematic structural view of a cleaning device according to an embodiment of the present disclosure;
FIG. 45h is a partial schematic structural view of a cleaning device according to an embodiment of the present disclosure;

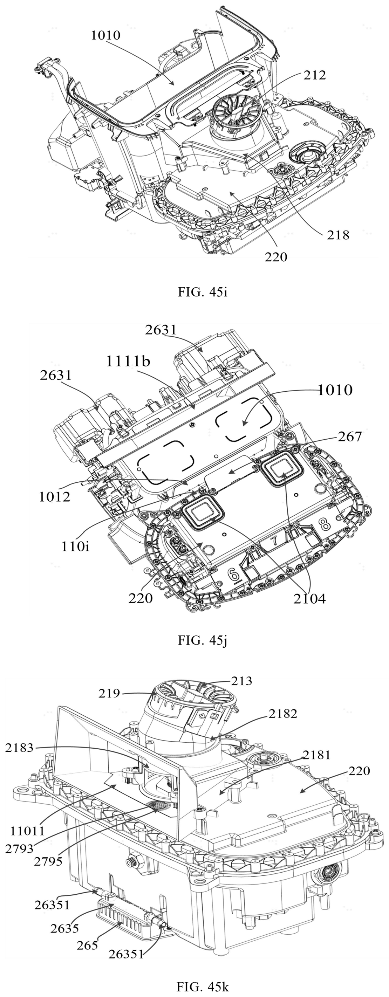

FIG. 45i is a partial schematic structural view of a cleaning device according to an embodiment of the present disclosure;
FIG. 45j is a partial schematic structural view of a cleaning device (viewed in a direction from top to bottom) according to an embodiment of the present disclosure;
FIG. 45k is a partial schematic structural view of a cleaning device (viewed in a direction from top to bottom)according to an embodiment of the present disclosure;
FIG. 45i is a schematic exploded view of a part of the structure in FIG. 45k;

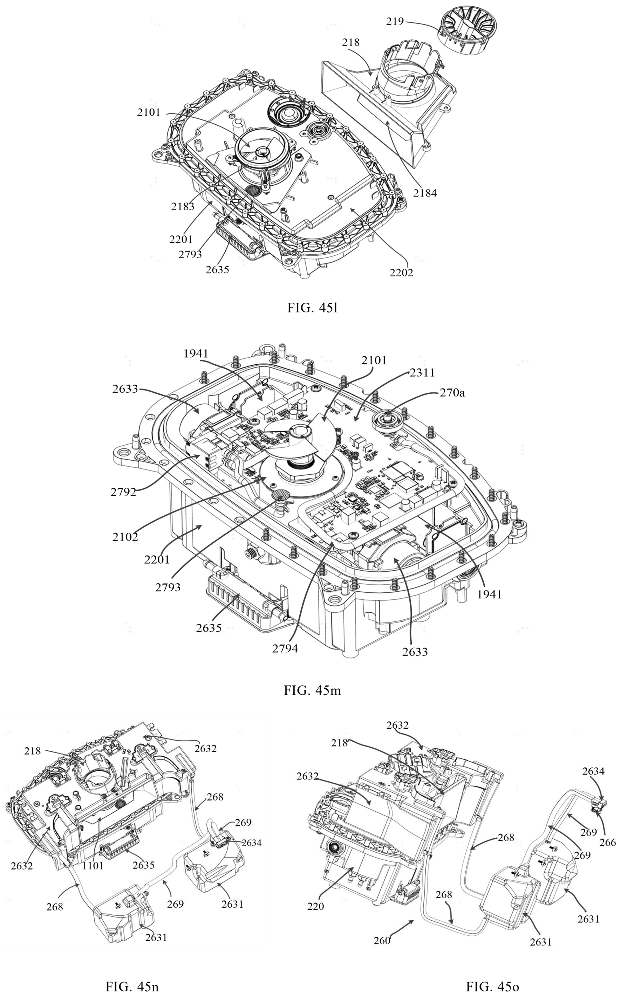

FIG. 45m is a partial schematic structural view of an electronic control box of a cleaning device according to an embodiment of the present disclosure;
FIG. 45n is a partial schematic structural view of an electronic control box and a buoyancy adjustment mechanism of a cleaning device according to an embodiment of the present disclosure;
FIG. 45o is a partial schematic structural view of an electronic control box and a buoyancy adjustment mechanism of a cleaning device according to an embodiment of the present disclosure;

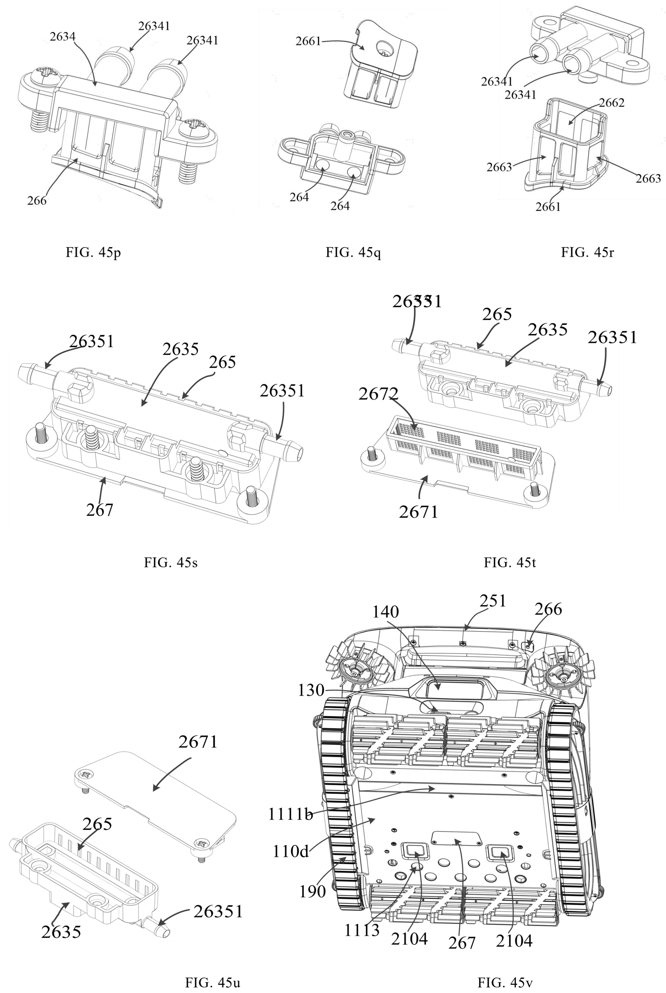

FIG. 45p is a schematic structural view of a first filtering part and a first gas flow portion of a cleaning device according to an embodiment of the present disclosure;
FIG. 45q is a schematic exploded view of the first filtering part and the first gas flow portion in FIG. 45p;
FIG. 45r is a schematic exploded view of the first filtering part and the first gas flow portion in FIG. 45p;
FIG. 45s is a schematic structural view of a second filtering part and a first liquid flow portion of a cleaning device according to an embodiment of the present disclosure;
FIG. 45t is a schematic exploded view of the second filtering part and the first liquid flow portion in FIG. 45s;
FIG. 45u is a schematic exploded view of the second filtering part and the first liquid flow portion in FIG. 45s;
FIG. 45v is a schematic structural view of a cleaning device according to an embodiment of the present disclosure;

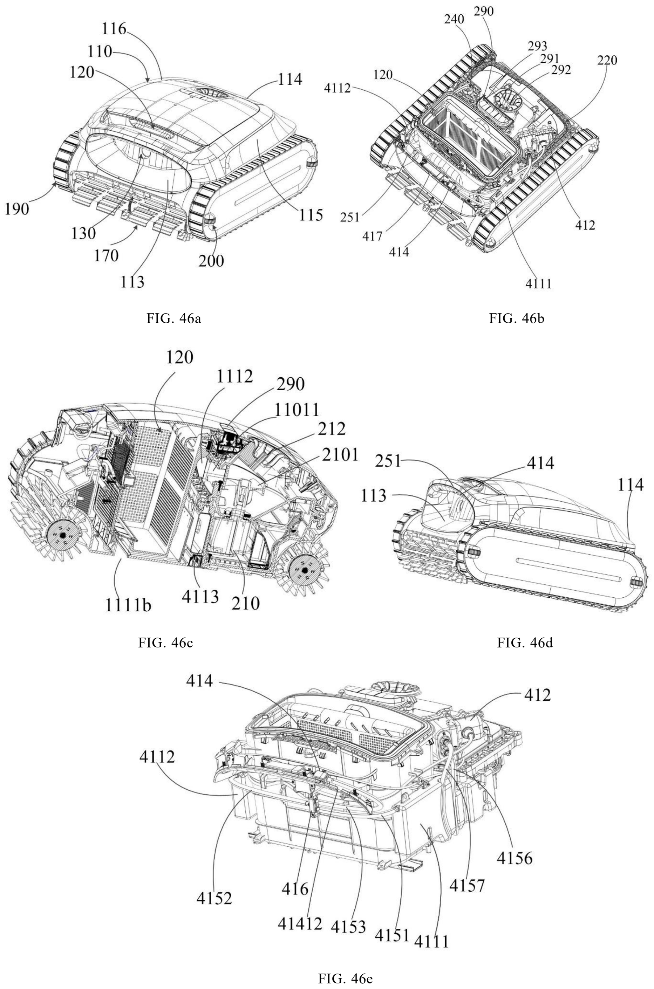

FIG. 46a is a schematic structural view of a cleaning device according to another embodiment of the present disclosure;
FIG. 46b is a schematic structural view of the cleaning device in FIG. 46a after a filtering box cover and a sixth side are removed;
FIG. 46c is a schematic view of a longitudinal section of a cleaning device according to another embodiment of the present disclosure;
FIG. 46d is a schematic view of a cleaning device floating on a water surface according to the present disclosure;
FIG. 46e is a partial schematic view of a cleaning device according to another embodiment of the present disclosure;

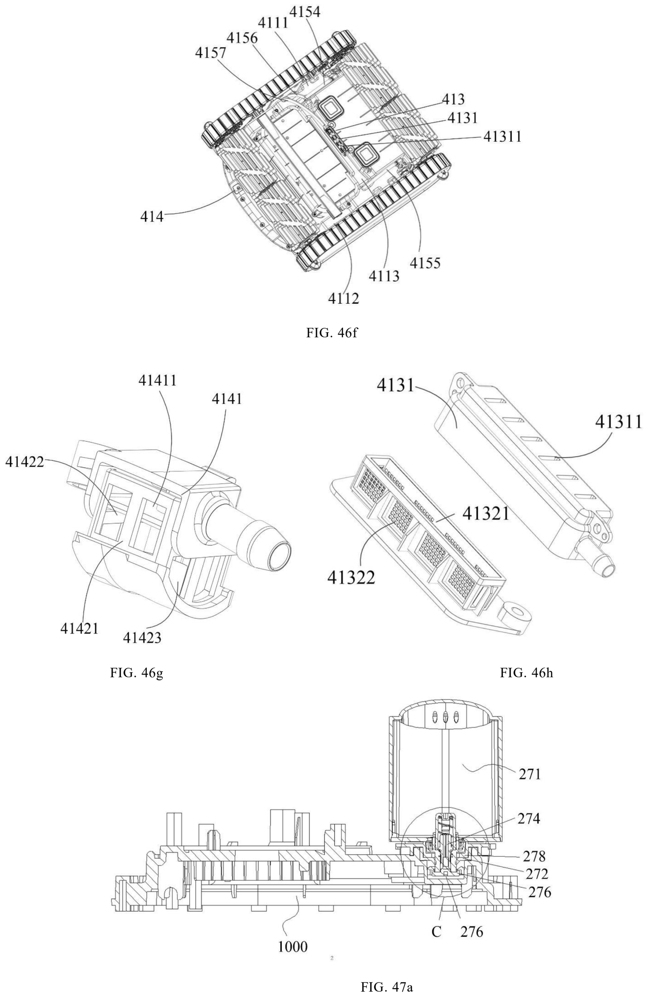

FIG. 46f is a bottom view of a cleaning device according to another embodiment of the present disclosure;
FIG. 46g is a schematic structural view of an air inlet portion according to the present disclosure;
FIG. 46h is a schematic structural view of a liquid outlet portion according to the present disclosure;
FIG. 47a is a partial schematic sectional view of a water quality treatment assembly on a cleaning device body according to the present disclosure; and

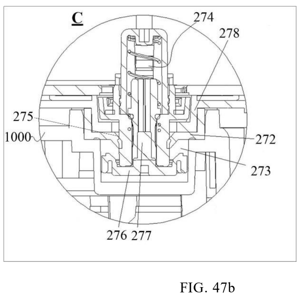

FIG. 47b is a schematic enlarged view of a portion C in FIG. 47a.

### Reference numerals:

1000: cleaning device; 100: target region; 101: travel surface; 1011: target side wall; 1012: target bottom wall; 1010: filtering box cavity; 10131: second water inlet; 1012: water baffle plate; 1013: second extension portion; 1014: second cavity; 1015: second rib; 1016: first water discharge opening; 1017: third outer edge; 110: cleaning device body; 1101: third accommodating cavity; 11011: third cavity; 11012: fourth cavity; 11013: first partition plate; 11014: flow guiding opening; 11015: cover part; 11016: counterweight block; 11017: third partition plate; 111: first accommodating cavity; 1111: debris inlet; 1111a: first debris inlet; 1111a1: first edge; 1111a2: second edge; 1111b: second debris inlet; 1112: first liquid discharge opening; 112: second accommodating cavity; 1113: second water discharge opening; 1114: third water discharge opening; 112a: first opening; 113: first side; 114: second side; 115: third side; 116: fourth side; 117: fifth side; 118: sixth side; 118a: second opening; 119: blocking door; 110a: housing; 110al: upper housing; 110a2: side housing; 110b: front housing; 110c: rear housing; 110d: bottom housing; 110e: first space; 110f: second space; 110g: third space; 110h: first gas flow hole; 110i: third gap; 120: filtering box; 1201: inner filtering box; 12011: first inner filtering surface; 12012: second inner filtering surface; 12013: third inner filtering surface; 12015: first inner inlet; 12016: first inner filtering box opening; 12014: fourth inner filtering surface; 12018: buckle; 12019: second avoidance region; 120120: sealing cover; 120121: fifth inner filtering surface; 120122: first periphery; 1202: outer filtering box; 12021: first outer filtering surface; 12022: second outer filtering surface; 120229: fifth outer filtering surface; 12023: third outer filtering surface; 120230: convex dot; 12024: fourth outer filtering surface; 12025: first outer inlet; 12026: first outer filtering box opening; 12027: mating hole; 12028: third avoidance region; 12029: second filtering apparatus; 120291: fixing frame; 121: opening; 1210: first extension portion; 12101: first outer edge; 12131: position-limiting cap; 1212a: second inner inlet; 1212b: second outer inlet; 1213: first blocking part; 12102: first outer wall; 12103: guiding portion; 1214: first cavity; 1215: sensing part; 1216: mounting cavity; 122: filtering box opening; 123: filtering surface; 123a: inner filtering mesh; 123b: outer filtering mesh; 123c: through hole; 1231: first filtering surface; 1232: second filtering surface; 1233: third filtering surface; 1234: fourth filtering surface; 1235: fifth filtering surface; 12382: connection shaft; 12381: first stepped surface; 12383: second stepped surface; 124: filtering box cover; 125: pressing assembly; 1251: pressing portion; 12511: position-limiting groove; 12512: positioning groove; 12513: positioning post; 12514: first ridge; 12515: second ridge; 1252: pressing elastic part; 1253: locking portion; 126: U-shaped connection part; 1261: rotation shaft portion; 1262: curved concave portion; 1263: curved convex portion; 127: first fixing part; 1271: first side wall; 1272: second side wall; 1273: third side wall; 1274: first groove; 1275: second groove; 128: discharging hole; 130: detection assembly; 131: first detection sub-part; 132: second detection sub-part; 140: vision sensing assembly; 140a: camera unit; 140b: light-supplementing member; 141: accommodating chamber; 141a: chamber opening; 141b: first mounting hole; 141c: first groove; 142: mounting plate; 1421: light shielding part; 1422: first inclined surface; 1423: second inclined surface; 1424: third inclined surface; 143: light transmission part; 1431: anti-reflective coating; 1432: protection coating; 1441: first sealing ring; 1442: second sealing ring; 145: press-fitting ring; 145a: second mounting hole; 1461: first fixing part; 1462: second fixing part; 1463: wire harness; 147: backplane; 147a: aperture; 147b: fourth mounting hole; 148: sleeve seat; 1481: inner sleeve seat; 1482: outer sleeve seat; 1491: heat dissipation part; 1492: thermally conductive material; 1493: drying cavity; 150: first auxiliary cleaning assembly; 151: side brush; 1511: side brush body; 1512: rotation shaft; 1513: side brush cover; 152: auxiliary drive assembly; 153: connection portion; 1531: fixed portion; 1532: telescopic portion; 154: guiding part; 160: second auxiliary cleaning assembly; 161: water spray part; 1611: nozzle; 162: second drive part; 1621: first impeller; 1622: first drive motor; 170: third auxiliary cleaning assembly; 171: roller brush assembly; 180: propulsion assembly; 181: first liquid outlet; 182: third drive part; 1821: second impeller; 1822: second drive motor; 183: second liquid outlet; 184: joining assembly; 185: speed reduction part; 190: traveling mechanism; 1901: base; 1902: flow channel baffle plate; 191: first guiding wheel; 1911: fourth gear set; 19111: third sub-gear; 19112: fourth sub-gear; 1912: fifth gear; 1913: second inner gear; 1914: second gear cover plate; 192: second guiding wheel; 1921: first gear; 1922: second gear set; 19221: first sub-gear; 19222: second sub-gear; 19223: first rotation shaft; 19224: second rotation shaft; 19225: first shaft sleeve; 19226: second shaft sleeve; 1923: third gear; 1924: first inner gear; 1925: first gear cover plate; 193: track; 194: fourth drive part; 195: cover plate: 1951: additional baffle plate; 19511: second anti-collision part; 19512: anti-collision strip; 1952: first hollow structure; 1953: second hollow structure; 196: topography detection assembly; 1961: transmission channel; 19611: third opening; 19612: fourth opening; 200: first anti-collision part; 201: roller wheel; 202: bracket; 210: main drive pump; 211: liquid inlet; 212: second liquid discharge opening; 213: grille part; 214: flow division plate; 215: first liquid discharge sub-duct; 2151: first liquid discharge sub-opening; 216: second liquid discharge sub-duct; 2161: second liquid discharge sub-opening; 217: liquid discharge baffle plate; 2104: charging member; 218: flow guiding cover; 2181: first housing; 2182: second housing; 2183: flow guiding part; 219: liquid outlet portion; 220: electronic control box; 221: electronic control box body; 222: electronic control box terminal; 222a: groove portion; 2221: wire extending portion; 2222: electronic control box terminal cover; 231: control system; 2311: first control board; 2312: second control board; 232: submersion detection assembly; 233: liquid level detection assembly; 234: map construction module; 235: adjustment assembly; 236: determining assembly; 237: prompt assembly; 238: temperature detection assembly; 240: data transmission assembly; 2401: antenna; 241: data transmission member; 242: protection housing; 251: first handle; 251a: avoidance opening; 252: second handle; 2521: first connection piece; 2522: second connection piece; 2523: lifting piece; 261: first buoyancy cavity; 2611: first buoyancy adjustment and control part; 262: second buoyancy cavity; 2621: second buoyancy adjustment and control part; 260: buoyancy adjustment mechanism; 2631: first buoyancy sub-cavity; 26311: first mounting region; 2632: second buoyancy sub-cavity; 26321: second mounting region; 2633: buoyancy adjustment part; 26331: second opening end; 2634: first gas flow portion; 26341: third opening end; 2635: first liquid flow portion; 26351: first opening end; 264: fifth opening; 265: sixth opening; 266: first filtering part; 2661: first mounting bracket; 2662: first filtering portion; 2663: second filtering portion; 267: second filtering part; 2671: second mounting part; 2672: third filtering portion; 268: second pipeline; 269: third pipeline; 270: water quality treatment assembly; 270a: reagent inlet assembly; 271: reagent kit; 272: sealing member; 273: reagent inlet portion; 274: valve member; 275: through hole; 276: blocking member; 277: pushing post; 278: mounting member; 2791: reagent cavity; 2792: reagent drive part; 2793: fifth filtering part; 2794: first pipeline; 2795: reagent outlet; 2796: first top cover; 280: in-position sensing assembly; 281: Hall element; 282: carrier plate; 283: Hall magnet; 290: button; 291: power button; 292: cleaning mode button; 293: indicator light; 3000: water surface cleaning device; 3100 water surface cleaning device body; 3200: adjustment mechanism; 3210: buoyancy cavity; 3300: moving mechanism; 3400: main cleaning mechanism; 3410: filtering box; 3411: debris inlet; 3420: roller brush; 3421: roller brush drive assembly; 3430: anti-regurgitation assembly; 3431: anti-regurgitation door; 3432: anti-regurgitation drive assembly; 3440: locking mechanism; 3441: locking assembly; 3442: locking groove; 34411: locking part; 34412: elastic part; 34413: pressing part; 34413a: first pressing inclined surface; 34413b: second pressing inclined surface; 3450: filtering box button; 3451: elastic part of a filtering box button; 3452: inclined surface of a filtering box button; 3500: water quality treatment assembly; 3510: reagent kit; 3610: overwater ultrasonic sensor; 3620 underwater ultrasonic sensor; 410: buoyancy adjustment assembly; 4111: third buoyancy cavity; 4112: fourth buoyancy cavity; 4113: fifth buoyancy cavity; 412: buoyancy cavity pump; 413: second liquid flow portion; 4131: second liquid flow cavity; 41311: eighth outlet; 4132: third filtering part; 41321: third filtering cavity; 41322: ninth filtering surface; 414: second gas flow portion; 4141: second gas flow cavity; 41411: ninth outlet; 4142: fourth filtering part; 41421: fourth filtering cavity; 41422: tenth filtering surface; 41423: eleventh filtering surface; 41412: tenth outlet; 415: connection duct; 4151: first connection duct; 4152: second connection duct; 4153: third connection duct; 4154: fourth connection duct; 4155: fifth connection duct; 4156: sixth connection duct; 4157: seventh connection duct; 416: gas flow cavity; 417: Wi-Fi antenna.

### DETAILED DESCRIPTION OF THE INVENTION

The following clearly and completely describes the technical solutions in embodiments of the present disclosure with reference to the accompanying drawings in embodiments of the present disclosure. Apparently, the described embodiments are merely some but not all of embodiments of the present disclosure. All other embodiments obtained by a person of ordinary skill in the art based on embodiments of the present disclosure without creative efforts shall fall within the protection scope of the present disclosure.

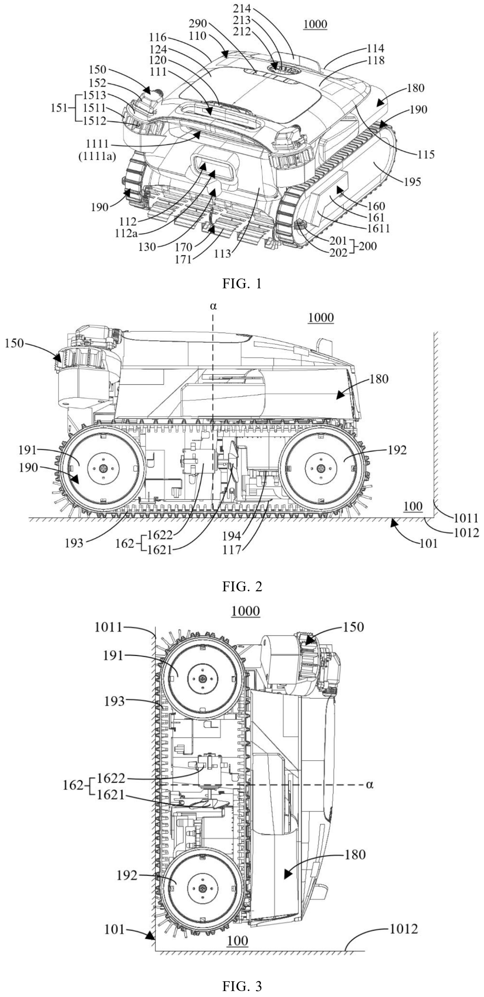

Refer to FIG. 1 to FIG. 3. FIG. 1 is a schematic structural view of a cleaning device according to an embodiment of the present disclosure. FIG. 2 is a schematic view of a cleaning device located on a target bottom wall of a target region according to the present disclosure. FIG. 3 is a schematic view of a cleaning device located on a target side wall of a target region according to the present disclosure. The present disclosure provides a cleaning device 1000. The cleaning device 1000 may be a pool cleaning robot capable of cleaning a target region 100. The target region 100 may be a region at which the cleaning device 1000 performs cleaning. For example, the target region 100 may be a swimming pool, a pipe, a hull, an oil well, or the like, but is not limited thereto. The target region 100 includes a travel surface 101. The travel surface 101 is a part of a to-be-cleaned surface, and the part is in contact with a traveling mechanism 190. The travel surface 101 includes a target side wall 1011 and a target bottom wall 1012. In embodiments of the present disclosure, an example in which the cleaning device 1000 is used to clean a swimming pool is used for description. The target side wall 1011 may be a side wall of the swimming pool, and the target bottom wall 1012 may be a bottom wall of the swimming pool.

The cleaning device 1000 has a first side 113 and a second side 114 opposite to each other, a third side 115 and a fourth side 116 opposite to each other, and a fifth side 117 and a sixth side 118 opposite to each other. The first side 113 is located at a front portion of the cleaning device 1000. The second side 114 is located at a rear portion of the cleaning device 1000. The third side 115 is located on a left side of the cleaning device 1000. The fourth side 116 is located on a right side of the cleaning device 1000. The fifth side 117 is located at a bottom of the cleaning device 1000. The sixth side 118 is located at a top of the cleaning device 1000.

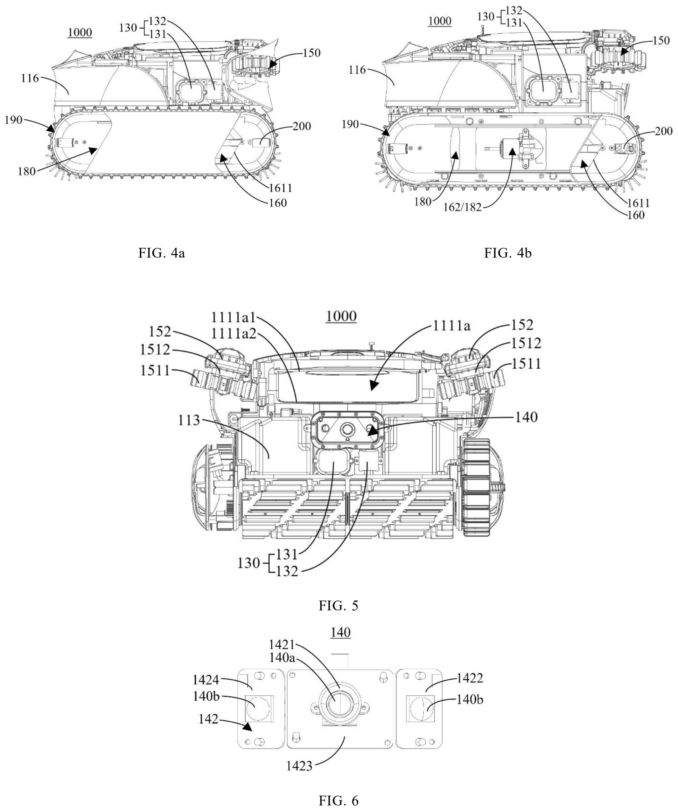

Refer to FIG. 4a to FIG. 5 together. FIG. 4a is a side view of a cleaning device according to another embodiment of the present disclosure. FIG. 4b is a schematic structural view of the cleaning device in FIG. 4a after some components are hidden. FIG. 5 is a main view of a cleaning device according to another embodiment of the present disclosure. The cleaning device 1000 includes a cleaning device body 110. The cleaning device body 110 serves as a carrier for carrying other components of the cleaning device 1000, and the cleaning device body 110 may be a frame of the cleaning device 1000. The cleaning device 1000 further includes at least one debris inlet 1111, at least one filtering box 120, at least one group of detection assemblies 130, and a control system 231.

The cleaning device body 110 is provided with the at least one debris inlet 1111, so that a dust-loaded water flow can enter the cleaning device body 110 through the debris inlet 1111. The at least one filtering box 120 may be detachably provided in the cleaning device body 110. The filtering box 120 has a water flow inlet. The water flow inlet is in fluid communication with the at least one debris inlet 1111. The dust-loaded water flow in the target region 100 can enter the filtering box 120 through the debris inlet 1111 and the water flow inlet sequentially.

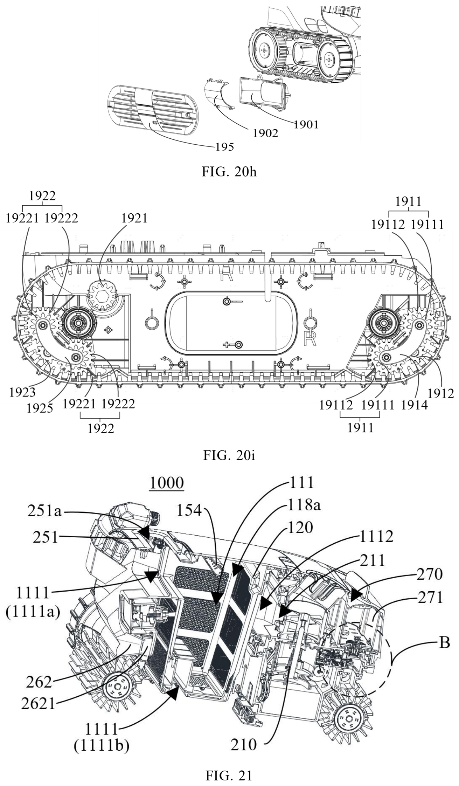

With reference to FIG. 21, the cleaning device body 110 is provided with a first accommodating cavity 111. The first accommodating cavity 111 communicates with an external environment through the debris inlet 1111, so that when the cleaning device 1000 enters the target region 100, the target region 100 communicates with the first accommodating cavity 111 through the debris inlet 1111. The filtering box 120 may be detachably provided in the first accommodating cavity 111. The debris inlet 1111 is configured as an opening for the dust-loaded water flow outside the cleaning device body 110 to enter the filtering box 120, and the dust-loaded water flow is filtered by the filtering box 120 and then discharged from the cleaning device body 110, to clean the target region 100. The debris inlet 1111 has a working region. The working region of the debris inlet 1111 is a coverage region of the debris inlet 1111 in a moving process of the cleaning device 1000 or a radiation region in which the debris inlet 1111 can generate a cleaning effect due to a suction force generated by a suction assembly in the cleaning device 1000. There is trash in the dust-loaded water flow. The trash in the dust-loaded water flow includes plant branches and leaves, plastic, metal, an insect, hair, dandruff, algae, silt, dirt, and the like. However, this is not limited thereto. The filtering box 120 is at least partially detachably accommodated in the first accommodating cavity 111, so that the filtering box 120 can be removed. This facilitates cleaning of trash in the filtering box 120.

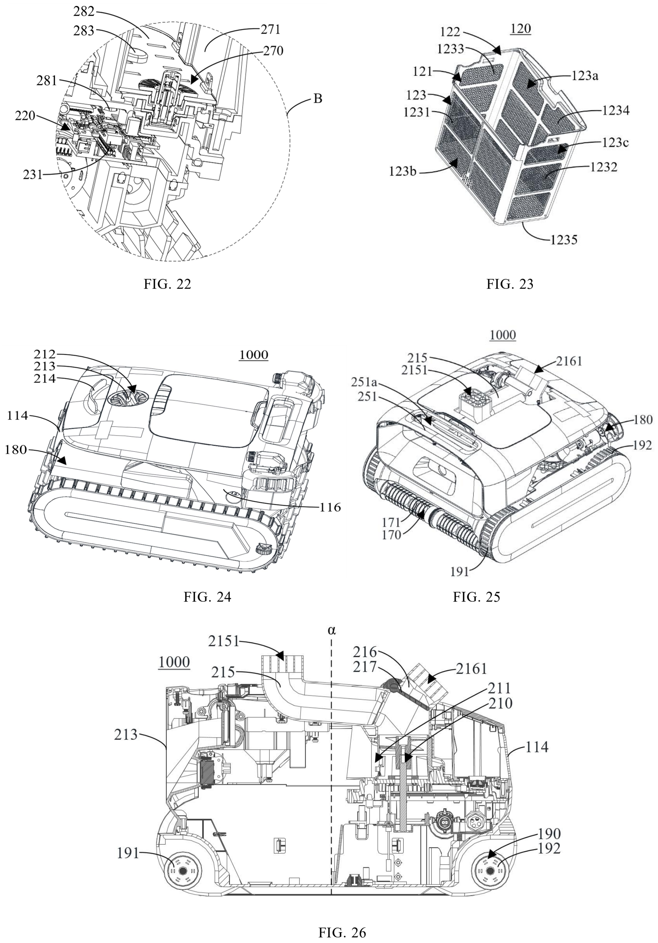

The at least one group of detection assemblies 130 is provided on a side surface of the cleaning device body 110, for example, one or more of the first side 113 to the sixth side 118, or at a joint between side surfaces of the cleaning device body 110, for example, a joint between the first side 113 and the third side 115, a joint between the second side 114 and the third side 115, a joint between the first side 113 and the fourth side 116, or a joint between the second side 114 and the fourth side 116. The detection assembly 130 is configured to detect an obstacle in the target region 100. The control system 231 is electrically connected to the at least one group of detection assemblies 130 to adjust an operation posture of the cleaning device 1000 based on information of the detection assemblies 130. With reference to FIG. 22, the control system 231 may be provided in an electronic control box 220 of the cleaning device 1000. The electronic control box 220 is sealed. The control system 231 is provided in the electronic control box 220 to prevent water from entering the electronic control box and then entering the control system 231, so that problems, such as a short circuit and damage to an electronic component of the control system 231, can be avoided.

In some embodiments, the control system 231 may include at least one control board. When a component is connected to the control board, the control system 231 can control the component. The control board may be a printed circuit board (Printed Circuit Board, PCB).

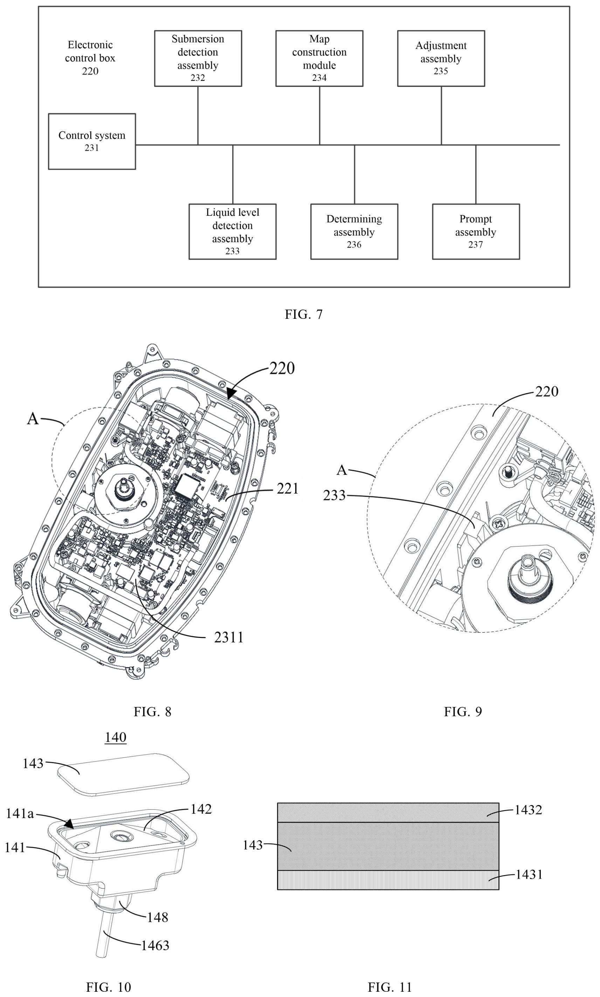

In some embodiments, with reference to FIG. 8 and FIG. 44a, the control board includes a first control board 2311 and a second control board 2312. The first control board 2311 is provided in the electronic control box 220. The second control board 2312 is provided at any position in the cleaning device body 110 outside the electronic control box 220. The first control board 2311 is electrically connected to the second control board 2312. The first control board 2311 and the second control board 2312 may be respectively connected to different components of the cleaning device body 110. For example, the second control board 2312 may be connected to at least one of the detection assembly 130, a topography detection assembly 196 (described later), or a third drive part 182, and the first control board 2311 may be connected to a component other than those components connected to the second control board 2312.

In some embodiments, the first control board 2311 and the second control board 2312 may be both main control boards and control respective components connected to the first control board 2311 and the second control board 2312. The first control board 2311 and the second control board 2312 may exchange information with each other. In some other embodiments, the first control board 2311 may be a main control board, and the second control board 2312 may be a secondary control board. The second control board 2312 is connected to the first control board 2311, so that the first control board 2311 can control all components connected to the second control board 2312.

In some embodiments, when the detection assembly 130 is provided on the third side 115 or the fourth side 116, the second control board 2312 and the detection assembly 130 may be provided on different sides. For example, the second control board 2312 is provided on the third side 115, and the detection assembly 130 is provided on the fourth side 116.

The target region 100 has diverse region topographies, including at least a wall topography of the target region 100. The wall topography may include a shape of each target side wall and a shape of a joint between adjacent target side walls. For example, the wall topography includes a shape of an edge of the target side wall 1011 and a shape of a wall surface located within the edge. The edge of the target side wall may be in a shape of a straight line, an arc, a right angle, an acute angle, or an obtuse angle. A joint between the target side wall 1011 and an adjacent target side wall 1011 is in a shape of a right angle, an arc angle, or the like. During operation of the cleaning device 1000, the detection assembly 130 may detect, in real time, the wall topography of the target region 100 facing the detection assembly 130, and the control system 231 may adjust the operation posture of the cleaning device 1000 based on the wall topography detected by the detection assembly 130. Alternatively, in one embodiment, the detection assembly 130 is a detection assembly. During operation of the cleaning device 1000, the detection assembly 130 may detect, in real time, information between the detection assembly and a target side wall in a direction in which the detection assembly faces, and the control system obtains a wall topography of the target side wall based on the information detected by the detection assembly 130, to adjust the operation posture of the cleaning device. For example, the detection assembly is configured to detect distance information between the detection assembly and the target side wall in the direction in which the detection assembly faces, and the control system obtains the wall topography of the target side wall based on the distance information detected by the detection assembly to adjust the operation posture of the cleaning device based on the wall topography. In this way, the following case can be avoided: The cleaning device 1000 slips at the edge of the target side wall 1011, climbs in a height direction of the target side wall 1011, or directly hits the target side wall 1011, causing the cleaning device 1000 to overturn or be damaged. Certainly, the control system may adjust the operation posture of the cleaning device based on the wall topography, so that the cleaning device can move along the edge of the target side wall to clean the edge of the target side wall. That the cleaning device moves along the edge may be that the cleaning device moves along an edge of a bottom wall of the target region or along an edge of a water surface.

In an embodiment, the detection assembly 130 is provided on the third side 115 or the fourth side 116 of the cleaning device 1000. When the cleaning device 1000 moves along the target side wall 1011, and the detection assembly 130 detects that the cleaning device 1000 moves at the curved target side wall 1011, the control system 231 may adjust a motion trajectory of the cleaning device 1000 to a trajectory corresponding to the curved side wall, and adjust the operation posture of the cleaning device 1000 based on the motion trajectory. In this way, the following case can be avoided: The cleaning device 1000 slips at the edge of the target side wall 1011, climbs in the height direction of the target side wall 1011, or directly hits the target side wall 1011, causing the cleaning device 1000 to overturn or be damaged. The detection assembly 130 is provided, so that the cleaning device 1000 can safely move and perform cleaning along the edge. The detection assembly 130 may further detect a distance between the detection assembly 130 and a target side wall 1011 corresponding to the detection assembly 130, so that the cleaning device 1000 can move and perform cleaning along the edge at a specific distance from the target side wall 1011. This prevents the cleaning device 1000 from scraping against the target side wall 1011.

The region topographies of the target region 100 may further include a topography of an object within the target region 100. The object within the target region 100 may be a facility provided within the target region 100, for example, a ladder, or an obstacle existing within the target region 100, for example, a rock. The control system 231 can adjust the operation posture of the cleaning device 1000 based on a distance, between the cleaning device 1000 and the facility or the obstacle within the target region 100, detected by the detection assembly 130. For example, if the detection assembly 130 detects that there is an obstacle within a preset range in front of the cleaning device 1000 when the cleaning device 1000 moves, the control system 231 adjusts the operation posture of the cleaning device 1000 for obstacle avoidance.

In some embodiments, the detection assembly 130 includes a single detection sub-part, such as an ultrasonic sensor or an infrared sensor. In some other embodiments, the detection assembly 130 includes at least a first detection sub-part 131 and a second detection sub-part 132. The first detection sub-part 131 is different from and close to the second detection sub-part 132. The first detection sub-part 131 and the second detection sub-part 132 may be arranged left and right, arranged vertically, or arranged on one side surface in a staggered manner. The first detection sub-part 131 and the second detection sub-part 132 are provided to expand a detection range, so that a special region topography can be detected more easily, and the control system 231 can adjust the operation posture of the cleaning device 1000 based on the region topography detected by the detection assembly 130, so that movement of the cleaning device 1000 is not limited by the diverse region topographies of the target region 100.

The cleaning device 1000 in a related technology cannot detect the curved target side wall 1011, causing the cleaning device 1000 to slip at the edge of the target side wall 1011, climb in the height direction of the target side wall 1011, or directly hit the target side wall 1011 when the cleaning device 1000 moves to the curved target side wall 1011. Consequently, the movement of the cleaning device 1000 is limited.

In some embodiments, the cleaning device 1000 includes two groups of detection assemblies 130. One group of detection assemblies 130 is provided on the first side 113 of the cleaning device body 110. The other group of detection assemblies 130 is provided on the fourth side 116 adjacent to the first side 113. The group of detection assemblies 130 provided on the first side 113 of the cleaning device body 110 is configured to detect a region topography of the target region 100 located in front of the cleaning device body 110, for example, a wall topography of a target side wall 1011 opposite to the first side 113 and/or a distance between the first side 113 and the corresponding target side wall 1011. The other group of detection assemblies 130 provided on the fourth side 116 of the cleaning device body 110 is configured to detect a region topography of the target region 100 on a side of the cleaning device body 110, for example, a wall topography of a target side wall 1011 opposite to the fourth side 116 and/or a distance between the fourth side 116 and the corresponding target side wall 1011. The two groups of detection assemblies 130 are provided, so that detection sensitivity is improved, and a misjudgment probability is reduced. In addition, detection efficiency is improved. In this way, the following case can be avoided: The operation posture of the cleaning device 1000 cannot be adjusted, causing the cleaning device 1000 to slip at the edge of the target side wall 1011, climb in the height direction of the target side wall 1011, or directly hit the target side wall 1011.

In some embodiments, the cleaning device 1000 includes two groups of detection assemblies 130. One group of detection assemblies 130 is provided on the first side 113 of the cleaning device body 110. The other group of detection assemblies 130 is provided on the third side 115 adjacent to the first side 113. In other embodiments, the cleaning device 1000 includes three groups of detection assemblies 130. The three groups of detection assemblies 130 are respectively provided on the first side 113, the third side 115, and the fourth side 116 of the cleaning device body 110.

In some embodiments, the first detection sub-part 131 is an infrared sensor, and the second detection sub-part 132 is an ultrasonic sensor. The ultrasonic sensor has a large detection range and can detect an obstacle far away from the cleaning device 1000. The infrared sensor has a small detection range and can only detect an obstacle close to the cleaning device 1000. In actual use, the ultrasonic sensor is used as a primary detection component, and the infrared sensor is used as an auxiliary detection component. However, when the cleaning device 1000 is close to the obstacle, and the obstacle is in a special shape, a detection effect of the infrared sensor is better than that of the ultrasonic sensor. For example, when a boundary of the target side wall 1011 is arc-shaped, and a slope of the wall is large, the ultrasonic sensor may not receive a returned signal and obtain distance data after sending a detection signal to the wall. Consequently, the ultrasonic sensor may misidentify the boundary as an operational region, causing the cleaning device 1000 to climb in the height direction of the target side wall 1011 or directly hit the target side wall 1011. The infrared sensor can be provided to more accurately detect the target side wall 1011 close to the cleaning device 1000. In this way, the infrared sensor and the ultrasonic sensor can jointly detect the region topography of the target region 100. For example, when the cleaning device 1000 needs to detect the boundary of the target side wall 1011, if both the ultrasonic sensor and the infrared sensor can obtain distance data, the boundary of the target side wall 1011 of the target region 100 is straight line-shaped, or if the ultrasonic sensor cannot obtain distance data, and the infrared sensor can obtain the distance data, the boundary of the target side wall 1011 of the target region 100 is arc-shaped. The infrared sensor and the ultrasonic sensor are provided to resolve a problem that it is difficult to detect some special region topographies only by using the ultrasonic sensor to detect the region topography of the target region, so that the detection sensitivity is improved, and the misjudgment probability is reduced. In addition, the detection efficiency is improved.

In an embodiment, the first detection sub-part 131 and the second detection sub-part 132 may be both ultrasonic sensors or infrared sensors.

In some embodiments, a detection angle of the first detection sub-part 131 may be substantially identical to a detection angle of the second detection sub-part 132. In an embodiment, the detection angles of the first detection sub-part 131 and the second detection sub-part 132 may be parallel to a plane on which the cleaning device 1000 is located. For example, when the cleaning device 1000 is located on the target bottom wall 1012, the detection angles of the first detection sub-part 131 and the second detection sub-part 132 are parallel to the target bottom wall 1012. When the cleaning device 1000 is located on the target side wall 1011, the detection angles of the first detection sub-part 131 and the second detection sub-part 132 are parallel to the target side wall 1011. In another embodiment, the detection angles of the first detection sub-part 131 and the second detection sub-part 132 both tilt downward.

In another embodiment, the detection angles of the first detection sub-part 131 and the second detection sub-part 132 may be different. The detection angle of the first detection sub-part 131 tilts downward, and the detection angle of the second detection sub-part 132 is parallel to the plane on which the cleaning device 1000 is located. For example, when the cleaning device 1000 is located on the target bottom wall 1012, the detection angle of the first detection sub-part 131 tilts toward the target bottom wall 1012, and the detection angle of the second detection sub-part 132 is parallel to the target bottom wall 1012. When the cleaning device 1000 is located on the target side wall 1011, the detection angle of the first detection sub-part 131 tilts toward the target side wall 1011, and the detection angle of the second detection sub-part 132 is parallel to the target side wall 1011. The detection angle of the first detection sub-part 131 tilts downward, and the detection angle of the second detection assembly 130 is parallel to the plane on which the cleaning device 1000 is located, so that the first detection sub-part 131 faces a direction of the boundary of the target side wall 1011. This improves an effect and efficiency of the detection assembly 130 in detecting a boundary topography of the target side wall 1011.

In an embodiment, the detection assembly 130 may further include a third detection sub-part (not shown in the figure). The third detection sub-part may be an ultrasonic sensor whose detection angle is parallel to a plane on which a moving direction of the cleaning device 1000 is located and may be configured to detect a distance between the cleaning device 1000 and a conventional obstacle. The first detection sub-part 131 and the second detection sub-part 132 are configured to detect a special obstacle.

In some embodiments, a tilting degree of the detection angle of the first detection sub-part 131 in the detection assembly 130 provided on the first side 113 of the cleaning device body 110 is less than or equal to a tilting degree of the detection angle of the first detection sub-part 131 in the detection assembly 130 provided on the third side 115 or the fourth side 116 of the cleaning device body 110. For example, the detection angle of the first detection sub-part 131 in the detection assembly 130 provided on the first side 113 of the cleaning device body 110 tilts downward at a first angle, for example, 5°, and the detection angle of the first detection sub-part 131 in the detection assembly 130 provided on the third side 115 or the fourth side 116 of the cleaning device body 110 tilts downward at a second angle, for example, 10°. In this case, the first angle is less than or equal to the second angle. In this way, the detection assembly 130 provided on the first side 113 of the cleaning device body 110 is prevented from misidentifying a part of an operational region, for example, an uphill slope in a transition region between a deep end and a shallow end of a pool, as the boundary of the target side wall 1011. This improves detection accuracy of the detection assembly 130.

In some embodiments, the boundary of the target side wall 1011 is detected by the detection assembly 130, so that the cleaning device 1000 can move along the target side wall 1011, and when the cleaning device 1000 moves along the edge, the detection assembly 130 can record a motion trajectory, a moving distance, and a change in the wall topography of the target side wall 1011 existing when the cleaning device 1000 moves around the target side wall 1011 by one circle, and a map of the target region 100 is generated based on the motion trajectory, the moving distance, and the change in the wall topography of the target side wall 1011 existing when the cleaning device 1000 moves around the target side wall 1011 by one circle. The detection assembly 130 is provided, so that construction of the map can be completed after the cleaning device 1000 moves around the target side wall 1011 by one circle, which reduces time costs and is efficient. This effectively improves map construction efficiency.

In some embodiments, after the detection assembly 130 detects the region topography, the operation posture of the cleaning device 1000 may be further adjusted based on a measurement result of an inertial measurement unit (Inertial Measurement Unit, IMU). The inertial measurement unit can be configured to sense real-time posture information of the cleaning device 1000. For example, the detection assembly 130 can detect a pitch angle of the cleaning device 1000 in a direction from the first side 113 to the second side 114, a roll angle of the cleaning device 1000 in a direction from the third side 115 to the fourth side 116, and a steering angle of the cleaning device 1000 during steering, and a tilt angle is calculated based on the pitch angle of the cleaning device 1000 in the direction from the first side 113 to the second side 114, the roll angle of the cleaning device 1000 in the direction from the third side 115 to the fourth side 116, and the steering angle of the cleaning device 1000 during steering. When the cleaning device 1000 moves along the target side wall 1011, if it is calculated, by using the inertial measurement unit, that the tilt angle is less than a preset value, the cleaning device 1000 moves in an original operation posture, and if it is calculated, by using the inertial measurement unit, that the tilt angle is greater than the preset value, the cleaning device 1000 readjusts the operation posture and moves in the adjusted operation posture, to prevent the cleaning device 1000 from slipping at the edge of the target side wall 1011 or climbing in the height direction of the target side wall 1011. The inertial measurement unit may include, for example, an accelerometer and a gyroscope.

In an embodiment, the cleaning device 1000 further includes a vision sensing assembly 140. The vision sensing assembly 140 is configured to capture an image of the target region 100, and the captured image is processed by a control assembly, to control an action or a behavior of the cleaning device 1000. For example, the vision sensing assembly 140 is configured to photograph an environment of the target region 100 and detect an image feature, so that functions such as localization, target detection, map construction, obstacle avoidance, and the like are implemented based on the image feature. For example, a previous frame of captured image is compared with a next frame of captured image to correct a positioning error due to slipping or overturning of the cleaning device 1000, an accumulated error of the inertial measurement unit of the cleaning device 1000, or the like. In addition, pictures are continuously captured during operation of the cleaning device 1000. If the cleaning device 1000 determines that construction of the map is completed, and a same picture matches a history picture, the cleaning device 1000 may perform repositioning when the cleaning device 1000 is lost. Furthermore, a specific target may be detected, and whether the specific target is trash that needs to be sucked in or an obstacle that needs to be avoided is determined. The vision sensing assembly 140 and/or the detection assembly 130 may be configured to plan a motion path of the cleaning device 1000, so that the cleaning device 1000 can regularly clean the target region 100 and construct a map. This can improve cleaning efficiency and a cleaning effect of the cleaning device 1000.

The vision sensing assembly 140 may be provided on any side surface of the cleaning device body 110. In an embodiment, the vision sensing assembly 140 is provided at a middle position on the first side 113 or the second side 116, so that when the cleaning device 1000 is located on the travel surface 101, an image of the travel surface 101 that is usually close to the fifth side 117 can be captured, and when the cleaning device 1000 is located on the water surface, an image of the water surface that is usually close to the sixth side 118 can be captured. This expands an image capturing range of the vision sensor 140.

The detection assembly 130 and/or the vision sensing assembly 140 are/is provided to plan a cleaning path of the cleaning device 1000 and prevent the cleaning device 1000 from climbing, slipping, overturning, or hitting an obstacle, so that the cleaning device 1000 can clean the target region 100 regularly and safely. This effectively improves a cleaning speed of the cleaning device 1000.

Refer to FIG. 6. FIG. 6 is a schematic structural view of mating between a camera unit, a light-supplementing member, and a mounting plate of a vision sensing assembly of a cleaning device according to the present disclosure. The vision sensing assembly 140 includes a camera unit 140a and several light-supplementing members 140b. The camera unit 140a is configured to capture an image of the target region 100. The light-supplementing member 140b is configured to adjust brightness of a captured region of the camera unit 140a.

The camera unit 140a and the light-supplementing member 140b may be provided on any side surface of the cleaning device body 110. For example, the vision sensing assembly 140 may face a forward direction or a backward direction of the cleaning device 1000, that is, the vision sensing assembly 140 may be provided on the first side 113 or the second side 114. The camera unit 140a and the light-supplementing member 140b may be located on a side of the cleaning device body 110, and the side of the cleaning device body 110 is provided with the debris inlet 1111. When the camera unit 140a detects, through target detection, that there is trash within a field of view of the camera unit 140a, that is, there is trash in the target region, the cleaning device 1000 may directionally move to a trash region and perform spot cleaning on the region. This improves the cleaning effect of the cleaning device 1000. In some embodiments, when the camera unit 140a detects that there is the trash within the field of view of the camera unit 140a, that is, there is the trash in the target region, the vision sensing assembly 140 can position the trash and plan a motion path based on a position at which the trash is located, and the cleaning device 1000 moves along the planned path, enabling a first debris inlet 1111a to be close to the trash. When the first debris inlet 1111a is close to the trash, a blocking door 119 (namely, a second blocking part 12104) at the first debris inlet 1111a is opened to allow the trash to be sucked into the filtering box 120 through the first debris inlet 1111a. In this case, a cleaning mechanism of the cleaning device does not need to be started to maximally save power. In addition, the cleaning device 1000 moves along the planned path, so that the trash can be prevented from entering a dead zone of the camera unit 140a. Alternatively, the cleaning device 1000 moves along the planned path, enabling a second debris inlet 1111b to be close to the trash. When the second debris inlet 1111b is close to the trash, a first blocking part 1213 at the second debris inlet 1111b is opened to allow the trash to be sucked into the filtering box 120 through the second debris inlet 1111b, so that the trash can be directionally cleaned. During this cleaning process, the cleaning mechanism may be started or may not be started.

In some embodiments, as shown in FIG. 5, when the first debris inlet 1111a, the vision sensing assembly 140, and the detection assembly 130 are located on a same side, the first debris inlet 1111a, the vision sensing assembly 140, and the detection assembly 130 may be sequentially arranged in an order from top to bottom.

With reference to FIG. 1 to FIG. 5, the cleaning mechanism of the cleaning device 1000 includes at least one of a first auxiliary cleaning assembly 150 or a second auxiliary cleaning assembly 160. The first auxiliary cleaning assembly 150 is provided at an edge of the debris inlet 1111 and configured to guide at least a part of trash in the target region 100 to a working region of the debris inlet 1111 or clean the target side wall 1011 of the target region 100. The second auxiliary cleaning assembly 160 is configured to spray water to a to-be-cleaned region of the target region 100 to guide at least a part of trash to the working region of the debris inlet 1111 or flush the target side wall 1011 or the target bottom wall 1012 of the target region 100. A projection of the first auxiliary cleaning assembly 150 on the travel surface 101 is at least partially beyond a projection of an outer contour of a track 193 on the travel surface 101.

The cleaning device 1000 further includes a propulsion assembly 180 and a traveling mechanism 190. The propulsion assembly 180 is configured to drive the cleaning device 1000 to move on the water surface or in water of the target region 100. The traveling mechanism 190 is configured to drive the cleaning device 1000 to move on the travel surface 101 of the target region 100.

In some embodiments, refer to FIG. 7 to FIG. 9 together. FIG. 7 is a schematic structural view of mating between a control system and some components of an electronic control box of a cleaning device according to the present disclosure. FIG. 8 is a schematic structural view of mating between a submersion detection assembly and an electronic control box of a cleaning device according to the present disclosure. FIG. 9 is an enlarged view of a portion A in FIG. 8. The cleaning device 1000 further includes at least one of a submersion detection assembly 232, a liquid level detection assembly 233, or a map construction module 234. The map construction module 234 may be provided in the electronic control box 220, or the map construction module 234 may be provided in the vision sensing assembly 140, and the control system 231 may be provided in the electronic control box 220. The control system 231 may be a control system, for example, a microcontroller, an embedded control system, or an application-specific integrated circuit (ASIC). The control system 231 may obtain various pieces of data information of the cleaning device 1000 and analyze and process the obtained data information to control various components of the cleaning device 1000. All of the camera unit 140a, the map construction module 234, and the liquid level detection assembly 233 may be connected to the control system 231. The submersion detection assembly 232 may be provided in the electronic control box 220 or on the cleaning device body 110. The submersion detection assembly 232 is configured to detect whether the cleaning device 1000 enters liquid in the target region 100. The liquid level detection assembly 233 is configured to detect a liquid level at a current position of the cleaning device 1000. The control system 231 determines the current position of the cleaning device 1000 based on the liquid level detected by the liquid level detection assembly 233, jointly determines the current position of the cleaning device 1000 with reference to a scene graph currently captured by the camera unit 140a, and chooses, based on the current position of the cleaning device 1000, to start at least one of the traveling mechanism 190 or the propulsion assembly 180 to drive the cleaning device 1000 to move, and/or start at least one of the first auxiliary cleaning assembly 150 or the second auxiliary cleaning assembly 160 to clean the target region 100. When the cleaning device 1000 is in an on state, the liquid level detection assembly 233 may be started, or after the submersion detection assembly 232 detects that the cleaning device 1000 has currently entered the liquid in the target region 100, the liquid level detection assembly 233 may be started, or the liquid level detection assembly 233 may be started in any case where a liquid level needs to be detected. This is not limited herein. The map construction module 234 is configured to construct a map of the target region 100. For example, when the target region 100 is a swimming pool, the map may be a map of a water surface of the swimming pool, a map of a bottom surface of the swimming pool, or a map of the entire swimming pool. The map may be a three-dimensional map or a two-dimensional map. The constructed map may be displayed or may be configured to provide map data when processing related to the map is involved.

In some embodiments, the submersion detection assembly 232 may be a capacitive submersion detector. The capacitive submersion detector may be provided inside or outside the electronic control box 220. Specifically, the capacitive submersion detector may be provided on an inner bottom wall or an outer bottom wall of the electronic control box 220. The capacitive submersion detector may be fixed to the electronic control box 220 in a manner, for example, rivet fixing, welding fixing, bonding fixing, bolt fixing, pin-key fixing, snap-fit fixing, or magnetic adsorption fixing. This is not limited thereto. The capacitive submersion detector is a non-contact liquid level detector. The capacitive submersion detector can detect whether the cleaning device 1000 enters the liquid, without being in contact with the liquid in the target region 100, and the capacitive submersion detector is not affected by barometric pressure, liquid pressure, and the like, leading to high accuracy of the capacitive submersion detector.

In some embodiments, the liquid level detection assembly 233 may be a pressure liquid level detector or a pressure sensor. The control system 231 determines the liquid level at the current position of the cleaning device 1000 based on liquid pressure applied to the pressure liquid level detection assembly 233. The pressure liquid level detector may be provided in a non-negative pressure zone of the cleaning device body 110, for example, provided to be away from a trash suction flow path in the cleaning device 1000. The debris inlet 1111, the filtering box 120, a main drive pump 210, and a liquid discharge opening of the main drive pump 210 communicate sequentially to form the trash suction flow path. It may be understood that the liquid pressure can be classified into static pressure and dynamic pressure. A depth of the cleaning device 1000 is usually calculated by a static pressure liquid level detector, and the dynamic pressure affects depth detection accuracy. Therefore, the pressure liquid level detector is provided in the non-negative pressure zone, so that the liquid pressure that can be detected by the pressure liquid level detector is only the static pressure. This reduces an impact of the dynamic pressure on the depth calculation accuracy and helps the liquid level detection assembly 233 accurately detect a depth of the liquid level detection assembly 233 in the water. Further, this can assist the control system 231 in accurately determining the position of the cleaning device 1000 and improve detection accuracy.

In some embodiments, refer to FIG. 41. FIG. 41 is a schematic view of a longitudinal section of a cleaning device according to an embodiment of the present disclosure. A part of the liquid level detection assembly 233 is provided inside the electronic control box 220, and a part of the liquid level detection assembly 233 extends through a side wall of the electronic control box 220 to the outside of the electronic control box 220. A part of the liquid level detection assembly 233 is in contact with the side wall of the electronic control box 220, and the part of the liquid level detection assembly 233 may be sealed in any manner to prevent liquid from infiltrating into the electronic control box 220. The part located outside the electronic control box 220 includes at least a detection end 2331. The detection end 2331 is configured to detect liquid pressure in an environment outside the electronic control box 220. The part located inside the electronic control box 220 includes at least a transmitter. The transmitter is connected to the control system 231 inside the electronic control box 220 to transmit detected liquid pressure information to the control system 231.

In some embodiments, space in which the detection end 2331 is located is away from the trash suction flow path in the cleaning device 1000, namely, a first water flow path (described below). For example, the space in which the detection end 2331 is located is far away from the first water flow path, and/or there is an isolation component (not shown in the figure) between the space in which the detection end 2331 is located and the first water flow path, for example, a baffle plate, or the space in which the detection end 2331 is located is separated from the first water flow path, and/or there is one or more components between the space in which the detection end 2331 is located and the first water flow path to reduce an impact of the dynamic pressure in the trash suction flow path on detection of the detection end 2331. In some embodiments, the detection end 2331 is located in a fourth cavity (described below) of a third accommodating cavity.

In some embodiments, when the cleaning device 1000 is placed in a liquid environment of the target region 100, the liquid in the target region 100 enters the cleaning device body 110 through a second water discharge opening 1113 (described in detail below). The second water discharge opening 1113 always communicates with the external environment. The detection end 2331 is provided inside space in fluid communication with the second water discharge opening 1113 to detect liquid pressure in the space. Liquid inside the space communicates with the liquid in the target region 100 in real time through the second water discharge opening 1113. Therefore, the liquid pressure detected by the detection end 2331 is close to or equivalent to actual pressure of the liquid at the current position of the cleaning device 1000. This improves liquid pressure detection accuracy.

In some embodiments, when a water baffle plate 1012 (described below) is provided on an outer side wall on which a first water discharge opening 1016 is located, a position of the detection end 2331 may be set with a motion range of the water baffle plate 1012 in a staggered manner. This reduces an impact of motion of the water baffle plate 1012 on the detection end 2331.

In some embodiments, the liquid level detection assembly 233 may alternatively be an ultrasonic detector, an optical detector, a ranging detector, an infrared detector, a distance code disk, or the like. However, this is not limited thereto.

In some embodiments, the cleaning device 1000 may include only one of the submersion detection assembly 232 and the liquid level detection assembly 233.

In some embodiments, the cleaning device 1000 further includes an adjustment assembly 235. The adjustment assembly 235 is connected to the control system 231. The control system 231 can determine, based on a brightness degree of an image captured by the camera unit 140a, a brightness degree of an environment in which the camera unit 140a is currently located, and control, based on the brightness degree of the environment in which the cleaning device 1000 is currently located, the adjustment assembly 235 to adjust light-supplementing brightness of the light-supplementing member 140b. Adjustment of the adjustment assembly 235 for the light-supplementing member 140b may include turning on the light-supplementing member 140b, turning off the light-supplementing member 140b, increasing the brightness of the light-supplementing member 140b, and decreasing the brightness of the light-supplementing member 140b. For example, when the camera unit 140a is in a dim light or backlight environment, the adjustment assembly 235 increases the brightness of the light-supplementing member 140b based on a brightness degree of the light or a backlight degree to improve definition of the image captured by the camera unit 140a. When the camera unit 140a is in a bright light environment, the light-supplementing member 140b is turned off, or the brightness of the light-supplementing member 140b is decreased by using the adjustment assembly 235, to reduce power consumption of the cleaning device 1000 without affecting the definition of the image captured by the camera unit 140a. In some embodiments, the control system 231 can control, based on an exposure degree of the image captured by the camera unit 140a, the adjustment assembly 235 to adjust an exposure parameter of the camera unit 140a to improve image quality of the camera unit 140a.

In some embodiments, the control system 231 can control, based on a current state and/or detection data of the cleaning device 1000, the adjustment assembly 235 to continuously turn off the light-supplementing member 140b or decrease the brightness of the light-supplementing member 140b. The current state of the cleaning device 1000 may include a posture of the cleaning device 1000. The detection data of the cleaning device 1000 may include the brightness degree of the environment, detected by the cleaning device 1000, in which the camera unit 140a is currently located. However, this is not limited thereto.

When the current state and/or the detection data of the cleaning device 1000 meet a preset condition, the light-supplementing member 140b is continuously turned off or the light-supplementing brightness of the light-supplementing member 140b remains within a fixed range until a condition for turning on the light-supplementing member 140b or increasing the brightness of the light-supplementing member 140b is met. For example, when the brightness degree meets a preset threshold within preset time, the cleaning device 1000 may be in a scenario in which the cleaning device 1000 is about to be in contact with the target side wall 1011. In this case, the light-supplementing member 140b is continuously turned off, or the brightness of the light-supplementing member 140b is decreased. When the cleaning device 1000 is almost perpendicular to a horizontal plane, and the first side 113 faces upward, the cleaning device 1000 may be in a scenario in which the cleaning device 1000 is about to climb from the target bottom wall 1012 to the target side wall 1011 or a platform. In this case, the light-supplementing member 140b is continuously turned off, or the brightness of the light-supplementing member 140b is decreased. In this way, the following case can be avoided: The brightness is frequently adjusted by using the light-supplementing member 140b due to misjudgment of a frequent change in the brightness degree of the environment in which the camera unit 140a is currently located, causing consumption of the light-supplementing member 140b to be increased and user experience to be affected. This improves operation effectiveness of the light-supplementing member 140b.

In some embodiments, the cleaning device 1000 further includes a determining assembly 236. The determining assembly 236 has a detection function and a determining function. The determining assembly 236 is connected to the camera unit 140a. The determining assembly 236 can determine a specific target in the target region 100 based on a captured image in a manner such as machine learning, so that the cleaning device 1000 can perform obstacle avoidance or move to the specific target to perform cleaning. For example, when the determining assembly 236 determines a fixed facility such as a ladder or identifies an obstacle such as a rock, the cleaning device 1000 performs obstacle avoidance, and when the determining assembly 236 determines trash such as a leaf or a cleanable region such as a platform, the cleaning device 1000 moves to the trash or the cleanable region to perform cleaning. The determining assembly 236 can further identify a structure of the target based on the captured image, so that the cleaning device 1000 can complete cleaning of one region before cleaning another region. This avoids a case where the cleaning device 1000 moves to another region before completing cleaning of the region in which the cleaning device 1000 is located.

In some embodiments, the determining assembly 236 can further track trash. This avoids a case where the trash enters the dead zone of the camera unit 140a, causing the trash to fail to be cleaned.

In some embodiments, the vision sensing assembly 140 and/or the determining assembly 236 are/is enabled in a specific cleaning mode. The specific cleaning mode may be executed independently after being enabled or may be executed after a conventional cleaning mode ends. This is not limited herein. A conventional cleaning mode is a mode in which the vision sensing assembly 140 and/or the determining assembly 236 are/is not enabled. Specifically, the specific cleaning mode is a mode in which the cleaning device 1000 cruises and performs cleaning in the target region 100 along a preset cleaning path, for example, a bow-shaped path (the bow-shaped path means that two adjacent paths are parallel to each other, and the cleaning device moves along the two adjacent paths in two opposite forward directions) or a square spiral path. If in a process of cruising and performing cleaning, it is determined that there is a specific target in the target region 100, for example, a leaf, the cleaning device 1000 moves to the specific target to perform cleaning and after completing cleaning, the cleaning device 1000 may move backward, move forward, or perform steering to return to an original cleaning path. In other words, after the cleaning device completes cleaning of the specific target, the cleaning device returns to the original cleaning path and continues to cruise along the preset cleaning path. Whether cleaning of the specific target is completed may be determined in a plurality of manners. For example, the determining assembly 236 may directly identify whether the target has been cleaned, or a determining condition may be preset, and if the condition is met, it is considered that cleaning is completed. For example, the determining condition is a time condition, and if the cleaning device 1000 stays at the specific target for preset time, it is considered that cleaning is completed. Specific content of the determining condition is not limited herein.

In some embodiments, in the specific cleaning mode, a spacing between adjacent sub-paths of the preset cleaning path may be dynamically adjusted. For example, if the determining assembly 236 does not identify trash on a consecutive preset quantity of adjacent sub-paths, the cleaning device 1000 is controlled to expand the spacing between adjacent to-be-cruised sub-paths. For example, the spacing is adjusted from a first path spacing to a second path spacing, and the second path spacing is greater than the first path spacing. If the determining assembly 236 identifies the trash on the consecutive preset quantity of adjacent sub-paths or identifies a plurality of pieces of trash on a single sub-path, the cleaning device 1000 is controlled to adjust the spacing between the adjacent to-be-cruised sub-paths from the second path spacing to the first path spacing or any spacing less than the second path spacing. In this way, cleaning effectiveness can be improved, and the cleaning efficiency can also be improved.

In some embodiments, in the specific cleaning mode, a stop condition is included. The stop condition may be completion of cruising of the target region 100 or end time of cleaning estimated based on an area of the target region 100. The area of the target region 100 may be estimated after the map construction module 234 constructs a map of the target region 100.

In some embodiments, in the specific cleaning mode, a platform cleaning function is further performed. A platform may be a surface in the target region 100, and the surface is higher than the target bottom wall 1012 and has a step. The platform may be identified by the determining assembly 236. For example, a process of cleaning the platform includes: The cleaning device 1000 identifies the platform by using the determining assembly 236 and/or the liquid level detection assembly 233 in the process of cruising and performing cleaning, and after identifying the platform, the cleaning device 1000 may be controlled to directly move to the platform to perform cleaning, or position information of the platform may be recorded, and after cruising and cleaning are completed, the cleaning device 1000 may be controlled, based on information of an end position, to move to the recorded platform to perform cleaning. The position information of the recorded platform may be coordinate information of the platform in the constructed map of the target region 100 or may be another positioning information. A manner in which the cleaning device 1000 moves to the platform may be that the cleaning device 1000 is controlled to move along the bow-shaped path in a direction of a recorded position of the platform relative to the end position until the cleaning device 1000 is close to the platform, or the cleaning device 1000 may directly plan a path and move to the platform based on the recorded position and the information of the end position. This is not limited herein.

In some embodiments, after reaching the platform, the cleaning device 1000 may climb upward from a step of the platform until the cleaning device 1000 moves to a surface of the platform, and then clean the surface of the platform. If an area of the current platform is less than a preset moveable area of the cleaning device 1000, for example, an area of a bottom of the cleaning device 1000, and there are also other steps on the platform, the cleaning device 1000 may be controlled to continue to climb until cleaning of a specific surface of the platform is completed. After cleaning is completed, the cleaning device 1000 may move backward or turn around to leave the platform to perform subsequent operations, for example, moving to a next recorded platform, continuing to perform another cleaning task, or returning to a specific position.

In some embodiments, whether to start the vision sensing assembly 140 and/or the determining assembly 236 may be determined by a user. For example, a function button is provided on a communication device connected to the cleaning device 1000 or on the cleaning device body 110, and a function corresponding to the vision sensing assembly 140 and/or the determining assembly 236 is enabled or disabled by using the button. Alternatively, the cleaning device 1000 determines an environment of the target region 100 and/or a parameter of the cleaning device 1000, to determine whether to enable the vision sensing assembly 140 and/or the determining assembly 236. For example, if a preset condition is met, for example, the environment of the target region 100 is complex, and/or a remaining battery level of the cleaning device 1000 is insufficient to support turning-on of the vision sensing assembly 140 and/or the determining assembly 236 in the target region 100, the vision sensing assembly 140 and/or the determining assembly 236 are/is turned off. In this way, cleaning flexibility and efficiency can be improved.

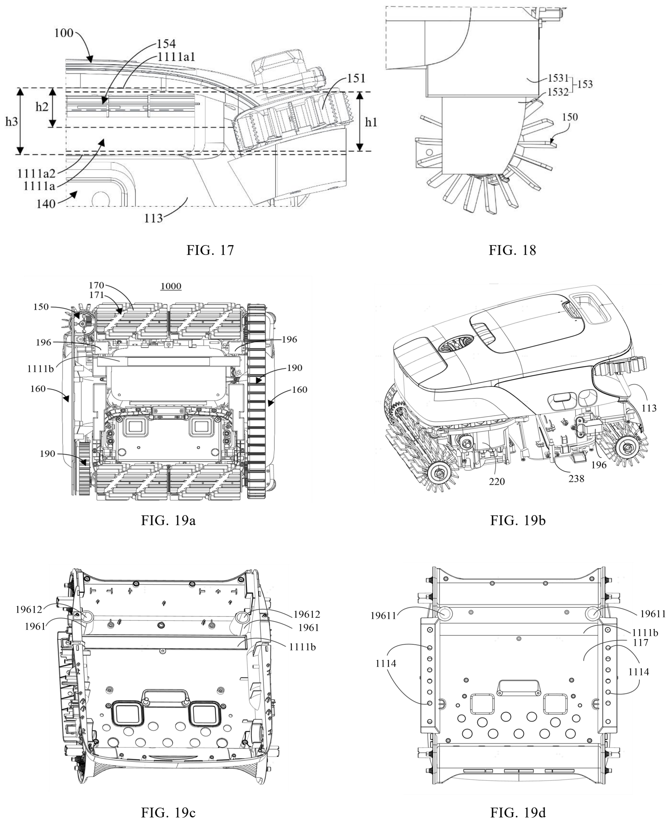

In some embodiments, the cleaning device 1000 further includes a temperature detection assembly 238. The temperature detection assembly 238 is configured to detect a temperature of liquid in the target region 100. For example, if the target region 100 is a swimming pool, the temperature detection assembly 238 may detect a temperature of water in the swimming pool. In an embodiment, the temperature detection assembly 238 is at least partially provided inside the cleaning device body 110. Specifically, the temperature detection assembly 238 may be provided inside the electronic control box 220 or outside the electronic control box 220. When the temperature detection assembly 238 is provided outside the electronic control box 220, the temperature detection assembly 238 may be provided in any region, in the cleaning device body 110, in which the temperature detection assembly 238 can be in contact with the liquid flowing from the target region 100 into the cleaning device body 110. Specifically, when the cleaning device 1000 is located in the target region 100, the liquid in the target region 100 may enter the cleaning device body 110, and the temperature detection assembly 238 is in contact with the liquid entering the cleaning device body 110 to detect the temperature of the liquid in the target region 100. The temperature detection assembly 238 is provided inside the cleaning device body 110. This reduces a probability of damage to the temperature detection assembly 238 due to collision, sunlight irradiation, or the like. In addition, the temperature detection assembly 238 is in direct contact with the liquid in the target region 100. This ensures accuracy of the detected temperature. FIG. 19b is a partial schematic structural view of a cleaning device according to an embodiment of the present disclosure. As shown in FIG. 19b, the temperature detection assembly 238 is provided outside the electronic control box 220 and may be connected to the electronic control box 220 through a line (not shown in the figure) to transmit detected temperature data to the control system 231 in the electronic control box 220. In some embodiments, the temperature detection assembly 238 may be provided in a part of space formed by a bottom housing (not shown in FIG. 19b) of the cleaning device body 110. The bottom housing is provided with at least one second water discharge opening 1113. The second water discharge opening 1113 always communicates with the external environment, so that when the cleaning device 1000 is placed in the liquid environment of the target region 100, a part of the liquid is retained in the part of the space of the bottom housing, and at least a part of a detection part of the temperature detection assembly 238 is in contact with the part of the liquid to detect a temperature of the part of the liquid. In this way, the temperature of the liquid in the target region 100 is detected.

The cleaning device 1000 may further feed back the temperature detected by the temperature detection assembly 238 to the communication device connected to the cleaning device 1000, and temperature data, for example, a real-time water temperature detected by the cleaning device 1000 or a water temperature detected before the cleaning device 1000 leaves the water surface last time, is displayed on the communication device. The communication device may be a mobile phone, a tablet computer, a laptop computer, a desktop computer, an electronic watch, an electronic band, a station of the cleaning device 1000, or the like. However, this is not limited thereto.

Refer to FIG. 1 and FIG. 10. FIG. 10 is a schematic view of an exploded structure of a vision sensing assembly of a cleaning device according to an embodiment of the present disclosure. The cleaning device body 110 is provided with a second accommodating cavity 112. The vision sensing assembly 140 is provided in the second accommodating cavity 112. The second accommodating cavity 112 is provided with a first opening 112a. The first opening 112a may be provided on any side of the cleaning device body 110. For example, the first opening 112a may be provided on the first side 113 of the cleaning device body 110. The vision sensing assembly 140 further includes an accommodating chamber 141 and a mounting plate 142 and a light transmission part 143 that are provided in the accommodating chamber 141. The accommodating chamber 141 is a basic carrier of the vision sensing assembly 140, provides accommodating space and fixed positions for the mounting plate 142, the light transmission part 143, the camera unit 140a, and the light-supplementing member 140b, and other components of the vision sensing assembly 140, and protects the mounting plate 142, the light transmission part 143, the camera unit 140a, and the light-supplementing member 140b, and other components of the vision sensing assembly 140 from water, vibration, and the like. The accommodating chamber 141 may be in various shapes and various sizes, for example, a cube, a cuboid, a cylinder, or a prism. A specific shape and size of the accommodating chamber 141 are not limited. The shape of the accommodating chamber 141 may be determined based on a quantity of components of the vision sensing assembly 140 and a size of the vision sensing assembly 140. Because the accommodating chamber 141 is configured to accommodate the camera unit 140a and the light-supplementing member 140b, the accommodating chamber 141 should be made of a material that is resistant to water, corrosion, heat, and vibration and has specific mechanical strength, for example, copper, iron, stainless steel, aluminum alloy, plastics, or rubber. This is not specially limited in embodiments of the present disclosure.

The accommodating chamber 141 is fixed to the second accommodating cavity 112. A fixing manner includes screw fixing, rivet fixing, bolt fixing, pin-key fixing, welding fixing, adhesive bonding fixing, snap-fit fixing, magnetic adsorption fixing, and the like. However, this is not limited thereto.

The mounting plate 142 is provided at an end of the accommodating chamber 141, where the end of the accommodating chamber 141 is provided with a chamber opening 141a, and the mounting plate 142 is located in the accommodating chamber 141. The camera unit 140a and the light-supplementing member 140b are mounted on the mounting plate 142. The mounting plate 142 may be integrally molded on the accommodating chamber 141 to ensure structural strength of the mounting plate 142 and sealing performance between the mounting plate 142 and the accommodating chamber 141. Certainly, the mounting plate 142 may alternatively be fixedly connected to the accommodating chamber 141. A manner in which the mounting plate 142 is fixedly connected to the accommodating chamber 141 includes, but is not limited to, riveting, welding, bonding, bolt connection, pin-key connection, snap-fit connection, magnetic adsorption, and the like.

The vision sensing assembly 140 may include a plurality of light-supplementing members 140b. The plurality of light-supplementing members 140b are provided around the camera unit 140a. In embodiments of the present disclosure, an example in which the vision sensing assembly 140 includes two light-supplementing members 140b is used for description. One light-supplementing member 140b is provided on one side of the camera unit 140a, and the other light-supplementing member 140b is provided on another side of the camera unit 140a. In some embodiments, an optical axis of the camera unit 140a is lower than a center of the light-supplementing member 140b. For example, the camera unit 140a is closer to the fifth side 117 of the cleaning device 1000 than the light-supplementing member 140b, to avoid the following case: Light radiates from the light-supplementing member 140b to the camera unit 140a, leading to overexposure of an image captured by the camera unit 140a.

In some embodiments, a connection line between a center of the camera unit 140a and centers of the two light-supplementing members 140b may be parallel to an arrangement direction of the third side 115 and the fourth side 116 of the cleaning device 1000.

In some embodiments, a side of the mounting plate 142 faces the chamber opening 141a, and the side has a first inclined surface 1422, a second inclined surface 1423, and a third inclined surface 1424 that are sequentially connected. A side of each of the first inclined surface 1422 and the second inclined surface 1423 faces away from the chamber opening 141a, an included angle is formed between the sides, and the angle is obtuse. A side of each of the second inclined surface 1423 and the third inclined surface 1424 faces away from the chamber opening 141a, an included angle is formed between the sides, and the angle is obtuse. The camera unit 140a is located on the second inclined surface 1423. One light-supplementing member 140b is located on the first inclined surface 1422. The other light-supplementing member 140b is located on the third inclined surface 1424. Irradiation regions of the light-supplementing members 140b on two sides of the camera unit 140a deviate from the field of view of the camera unit 140a. In this way, when the field of view of the camera unit 140a tilts downward, the following case can be avoided: Light in the field of view of the camera unit 140a is too strong, leading to overexposure of an image captured by the camera unit 140a.

In some embodiments, the vision sensing assembly 140 further includes a light shielding part 1421. The light shielding part 1421 is mounted on the mounting plate 142. The light shielding part 1421 is provided at a periphery of the camera unit 140a or an edge of a side of the camera unit 140a, where the side of the camera unit 140a is close to the light-supplementing member 140b. The light shielding part 1421 is provided, so that the following case can be avoided: The light directly radiates from the light-supplementing member 140b to the camera unit 140a, leading to damage to a photosensitive element of the camera unit 140a. In addition, a possibility that the light directly radiates from the light-supplementing member 140b to the camera unit 140a, leading to overexposure of an image captured by the camera unit 140a can be reduced. This ensures a service life of the camera unit 140a and improves imaging quality of the camera unit 140a. The light shielding part 1421 is fixed or integrally molded on the mounting plate 142.

The light transmission part 143 covers the chamber opening 141a of the accommodating chamber 141. The light transmission part 143 is located on a side of the mounting plate 142, and the side of the mounting plate 142 is close to the chamber opening 141a of the accommodating chamber 141. The camera unit 140a can photograph the target region 100 through the light transmission part 143. The light from the light-supplementing member 140b can pass through the light transmission part 143. The light transmission part 143 may be made of glass, acrylonitrile-styrene copolymer (Acrylonitrile-styrene Copolymer, SAN), polymethyl methacrylate (Polymethyl Methacrylate, PMMA), a non-asbestos seal material (Non-Asbestos Seal Material, NAS), or the like. However, this is not limited thereto.

In some embodiments, refer to FIG. 11. FIG. 11 is a sectional view of a light transmission part of a vision sensing assembly of a cleaning device according to an embodiment of the present disclosure. The vision sensing assembly 140 further includes an anti-reflective coating 1431 and/or a protection coating 1432. The light transmission part 143 has a side facing the mounting plate 142 and a side away from the mounting plate 142. The anti-reflective coating 1431 is provided on the side facing the mounting plate 142. The protection coating 1432 is provided on the side facing away from the mounting plate 142.

The anti-reflective coating 1431 and the protection coating 1432 may be plated on a surface of the light transmission part 143 through vacuum evaporation, magnetron sputtering, or the like. The anti-reflective coating 1431 can be provided to reduce or eliminate reflected light from the surface of the light transmission part 143 and increase an amount of transmitted light. The protection coating 1432 may be an anti-fingerprint (Anti-fingerprint, AF) coating. The protection coating 1432 is provided on the side of the light transmission part 143, where the side faces away from the mounting plate 142, so that a surface of the light transmission part 143 has a strong hydrophobic property and is resistant to oil and grease, fingerprints, and abrasion, where the surface of the light transmission part 143 faces away from the mounting plate 142.

To ensure the imaging quality of the camera unit 140a, a service life of the camera unit, and the service life of the light-supplementing member 140b, specific sealing performance between the light transmission part 143 and the accommodating chamber 141 needs to be ensured, to prevent liquid from entering a gap between the light transmission part and the mounting plate 142 or prevent moisture from adhering to the side of the light transmission part 143, where the side of the light transmission part 143 faces the mounting plate 142.

In some embodiments, the accommodating chamber 141 and the light transmission part 143 are sealed by using sealant. The accommodating chamber 141 and the light transmission part 143 are sealed by using the sealant, so that the liquid in the target region 100 cannot infiltrate into the gap between the light transmission part 143 and the mounting plate 142 from a gap between the accommodating chamber 141 and the light transmission part 143.

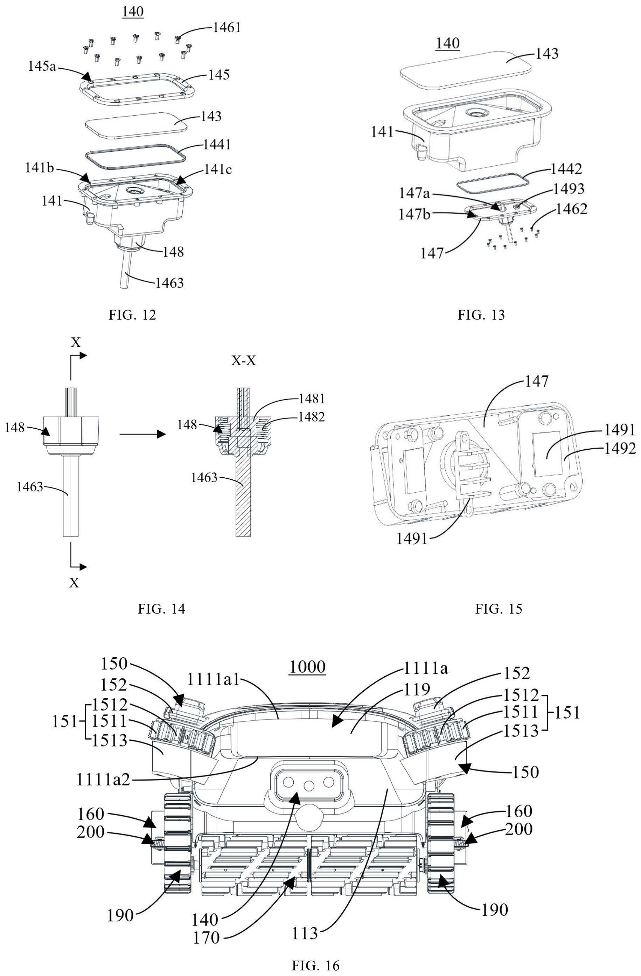

In some embodiments, refer to FIG. 12. FIG. 12 is a schematic view of an exploded structure of a vision sensing assembly of a cleaning device according to another embodiment of the present disclosure. A first sealing ring 1441 is provided between the accommodating chamber 141 and the light transmission part 143. A side of the light transmission part 143 is away from the accommodating chamber 141, and the side is provided with a press-fitting ring 145. A first fixing part 1461 passes through the press-fitting ring 145 to fix the press-fitting ring 145 to the accommodating chamber 141, so that the light transmission part 143 and the first sealing ring 1441 are press-fit between the press-fitting ring 145 and the accommodating chamber 141. An end surface of the accommodating chamber 141 is provided with the chamber opening 141a, and a first groove 141c is formed on the end surface. The first groove 141c faces the light transmission part 143. The first sealing ring 1441 is at least partially provided in the first groove 141c. The light transmission part 143 covers the first sealing ring 1441. The end surface of the accommodating chamber 141 is provided with the chamber opening 141a, and a periphery of the end surface of the accommodating chamber 141 is provided with a first mounting hole 141b. The press-fitting ring 145 is provided with a second mounting hole 145a fitting the first mounting hole 141b. The press-fitting ring 145 is provided on the side of the light transmission part 143, and the side of the light transmission part 143 is away from the accommodating chamber 141. The second mounting hole 145a corresponds to the first mounting hole 141b. The first fixing part 1461 sequentially passes through the second mounting hole 145a and the first mounting hole 141b to fix the press-fitting ring 145 to the accommodating chamber 141, so that the light transmission part 143 and the first sealing ring 1441 are press-fit between the press-fitting ring 145 and the accommodating chamber 141. The first sealing ring 1441 is provided between the accommodating chamber 141 and the light transmission part 143, so that the first sealing ring 1441 can play a role in sealing the accommodating chamber 141 and the light transmission part 143, to prevent liquid from infiltrating into the gap between the light transmission part 143 and the mounting plate 142 from the gap between the accommodating chamber 141 and the light transmission part 143. The first fixing part 1461 may be a screw, a bolt, a rivet, or the like. However, this is not limited thereto. In some embodiments, the press-fitting ring 145 may alternatively be fixed to the accommodating chamber 141 through adhesive bonding, snap-fit connection, magnetic adsorption connection, or the like. In this way, the light transmission part 143 and the first sealing ring 1441 can also be press-fit between the press-fitting ring 145 and the accommodating chamber 141.

An end of the accommodating chamber 141 faces away from the mounting plate 142. To ensure service lives of other components in the accommodating chamber 141, the end of the accommodating chamber 141 also needs to have specific sealing performance to prevent liquid from entering the accommodating chamber 141 to erode other components in the accommodating chamber 141.

In some embodiments, refer to FIG. 13. FIG. 13 is a schematic diagram of an exploded structure of a vision sensing assembly of a cleaning device according to a third embodiment of the present disclosure. The accommodating chamber 141 further includes a backplane 147. The backplane 147 is provided at the end of the accommodating chamber 141, and the end of the accommodating chamber 141 faces away from the mounting plate 142. The backplane 147 and the accommodating chamber 141 may be sealed by using sealant, or a second sealing ring 1442 is provided between the backplane 147 and the accommodating chamber 141. A second fixing part 1462 passes through the backplane 147 to fix the backplane 147 to the accommodating chamber 141, so that the second sealing ring 1442 is press-fit between the accommodating chamber 141 and the backplane 147.

In some embodiments, the end of the accommodating chamber 141 faces away from the mounting plate 142, and a second groove (not shown in the figure) is formed on the end. The second groove faces away from a side of the mounting plate 142. The second sealing ring 1442 is at least partially provided in the second groove. The backplane 147 covers the second sealing ring 1442. An end surface of the accommodating chamber 141 faces away from the mounting plate 142, and a periphery of the end surface is provided with a third mounting hole. The backplane 147 is provided with a fourth mounting hole 147b fitting the third mounting hole. When the backplane 147 covers the second sealing ring 1442, the fourth mounting hole 147b corresponds to the third mounting hole, and the second fixing part 1462 sequentially passes through the fourth mounting hole 147b and the third mounting hole to fix the backplane 147 to the accommodating chamber 141, so that the second sealing ring 1442 is press-fit between the accommodating chamber 141 and the backplane 147. The second sealing ring 1442 is provided between the backplane 147 and the accommodating chamber 141, so that the second sealing ring 1442 can play a role in sealing the backplane 147 and the accommodating chamber 141, to prevent liquid from infiltrating into the accommodating chamber 141 from a gap between the backplane 147 and the accommodating chamber 141.

The second fixing part 1462 may be a screw, a bolt, a rivet, or the like. However, this is not limited thereto. In some embodiments, the backplane 147 may alternatively be fixed to the accommodating chamber 141 through adhesive bonding, snap-fit connection, magnetic adsorption connection, or the like. In this way, the second sealing ring 1442 can also be press-fit between the backplane 147 and the accommodating chamber 141.

The first sealing ring 1441 and the second sealing ring 1442 may be both made of rubber, silica gel, sponge, wool felt, or the like. However, this is not limited thereto. Rubber, silica gel, sponge, and wool felt all have good elasticity and a long service life. The first sealing ring and the second sealing ring 1442 are elastic, so that better sealing between the backplane 147 and the accommodating chamber 141 and better sealing between the accommodating chamber 141 and the light transmission part 143 can be implemented. This improves a sealing effect of the accommodating chamber 141.

The backplane 147 is provided with an aperture 147a communicating with the inside of the accommodating chamber 141. The aperture 147a is configured to allow a wire harness 1463 to be inserted. A sleeve seat 148 is provided at an edge of the aperture 147a. The sleeve seat 148 is configured to seal the aperture 147a and the wire harness 1463. The wire harness 1463 extends into the accommodating chamber 141 through the aperture 147a for supplying power for components such as the camera unit 140a and the light-supplementing member 140b and for communication of components such as the camera unit 140a and the light-supplementing member 140b. The sleeve seat 148 is provided at the edge of the aperture 147a to seal the aperture 147a and the wire harness 1463, to prevent liquid from entering the accommodating chamber 141 along the wire harness 1463.

In some embodiments, refer to FIG. 14. FIG. 14 is a schematic structural view and a sectional view of mating between a wire harness and a sleeve seat of a vision sensing assembly of a cleaning device according to the present disclosure. The sleeve seat 148 includes an inner sleeve seat 1481 and an outer sleeve seat 1482. An edge of the aperture 147a faces away from the inside of the accommodating chamber 141, and the inner sleeve seat 1481 is provided at the edge of the aperture 147a and is provided around the aperture 147a. The inner sleeve seat 1481 and the backplane 147 may be integrally molded. The inner sleeve seat 1481 may be integrally molded at the edge of the aperture 147a, so that there is no gap between the inner sleeve seat 1481 and the edge of the aperture 147a. Certainly, the inner sleeve seat 1481 and the backplane 147 may be of two independent components, and the inner sleeve seat 1481 is connected to the backplane 147 in a sealing manner. The outer sleeve seat 1482 is sleeved on the inner sleeve seat 1481 and the wire harness 1463 to seal the aperture 147a and the wire harness 1463. In some embodiments, an outer surface of the inner sleeve seat 1481 is provided with an external thread, and an inner surface of the outer sleeve seat 1482 is provided with an internal thread fitting the external thread of the inner sleeve seat 1481. The inner sleeve seat 1481 and the outer sleeve seat 1482 are threaded through fitting between the internal thread and the external thread. In some embodiments, the outer surface of the inner sleeve seat 1481 and the inner surface of the outer sleeve seat 1482 may not be provided with a thread, and the outer sleeve seat 1482 may be in interference fit with the inner sleeve seat 1481. After the outer sleeve seat 1482 is connected to the inner sleeve seat 1481 and the wire harness 1463, sealant may be filled into a gap between the inner sleeve seat 1481 and the wire harness 1463 through a side of the outer sleeve seat 1482, where the side of the outer sleeve seat 1482 faces away from the backplane 147, to block the aperture 147a. The inner sleeve seat 1481 and the outer sleeve seat 1482 may be both made of rubber, silica gel, plastic, metal, or the like. However, this is not limited thereto.

In some embodiments, refer to FIG. 15. FIG. 15 is a schematic structural view of a heat sink of a vision sensing assembly of a cleaning device according to an embodiment of the present disclosure. The vision sensing assembly 140 further includes a heat dissipation part 1491. The vision sensing assembly 140 further includes a heat dissipation part 1491. The heat dissipation part 1491 is provided on an inner wall of the accommodating chamber 141, a side of the backplane 147, where the side faces the mounting plate 142, and/or a side of the mounting plate 142, where the side faces the backplane 147. The heat dissipation part 1491 is thermally conductively connected to the inner wall of the accommodating chamber 141, the backplane 147, and/or the mounting plate 142. The heat dissipation part 1491 can absorb heat generated by a heat dissipation component inside the accommodating chamber 141 and transfer the heat to the inner wall of the accommodating chamber 141, so that the heat is released to the external environment through the inner wall of the accommodating chamber 141.

In some embodiments, the vision sensing assembly 140 further includes a thermally conductive material 1492. The thermally conductive material 1492 is provided between the inner wall of the accommodating chamber 141 and the heat dissipation part 1491, between the backplane 147 and the heat dissipation part 1491, and/or between the mounting plate 142 and the heat dissipation part 1491. The thermally conductive material 1492 may be a product with high thermal conductivity, for example, thermally conductive silica gel, thermally conductive silicone grease, or a soft silica gel thermal pad.

In some embodiments, as shown in FIG. 13, the vision sensing assembly 140 further includes a drying cavity 1493. The drying cavity 1493 is provided inside the accommodating chamber 141. Specifically, the drying cavity 1493 may be provided on the inner wall of the accommodating chamber 141, a side of the mounting plate 142, where the side faces away from the light transmission part 143, a side of the backplane 147, where the side faces the inside of the accommodating chamber 141, and/or other components of the accommodating chamber 141. The drying cavity 1493 is configured to accommodate a desiccant to absorb moisture inside the accommodating chamber 141 to prevent components inside the accommodating chamber 141 from being aging due to the moisture.

In some embodiments, with reference to FIG. 1, there may be one or more debris inlets 1111, which may be provided at the bottom of the cleaning device 1000 or may be provided at a front side, a top, or the like of the cleaning device 1000. For example, the debris inlets 1111 include the first debris inlet 1111a provided on the first side 113 of the cleaning device 1000 and/or the second debris inlet 1111b provided on the fifth side 117 of the cleaning device 1000. Specifically, the first debris inlet 1111a may be provided at a position on the first side 113 of the cleaning device body 110, and the position is close to the sixth side 118. The second debris inlet 1111b may be provided at a position on the fifth side 117 of the cleaning device body 110, and the position is close to the first side 113. However, this is not limited thereto.

In some embodiments, the first auxiliary cleaning assembly 150 is provided close to the first debris inlet 1111a and/or the second debris inlet 1111b, for example, at an edge of the first debris inlet 1111a. At least a part of the first auxiliary cleaning assembly 150 is located in front of the debris inlet 1111 to guide at least a part of trash outside the working region of the debris inlet 1111 to the working region of the debris inlet 1111. The cleaning device 1000 may include two first auxiliary cleaning assemblies 150. The two first auxiliary cleaning assemblies 150 are provided opposite to each other on two sides of the debris inlet 1111, for example, on two sides of the first debris inlet 1111a or two sides of the second debris inlet 1111b. The first auxiliary cleaning assemblies 150 can rotate toward the debris inlet 1111 to guide the trash to the working region of the debris inlet 1111. Certainly, the first auxiliary cleaning assembly 150 may alternatively be provided at another position, provided that it can be ensured that the first auxiliary cleaning assembly 150 can guide the trash to the working region of the debris inlet 1111.

In some embodiments, the first auxiliary cleaning assembly 150 is configured to guide the trash to a working region of the first debris inlet 1111a when the propulsion assembly 180 drives the cleaning device 1000 to move on the water surface of the target region 100 or be suspended in liquid in the target region 100. Certainly, the first auxiliary cleaning assembly 150 may alternatively be configured to guide the trash to the working region of the first debris inlet 1111a and/or a working region of the second debris inlet 1111b when the cleaning device 1000 moves on the target bottom wall 1012 or the target side wall 1011 of the target region 100. The first auxiliary cleaning assembly 150 is provided, so that the trash originally located outside the working region of the debris inlet 1111 can be guided to the working region of the debris inlet 1111, which is equivalent to expanding a debris suction range of the debris inlet 1111. This improves the cleaning efficiency of the cleaning device 1000. In embodiments of the present disclosure, an example in which the first auxiliary cleaning assembly 150 is provided close to the first debris inlet 1111a is used for description.

In some embodiments, in the moving direction of the cleaning device 1000, at least a part of the first auxiliary cleaning assembly 150 is located in front of the first debris inlet 1111a to guide water outside the working region of the first debris inlet 1111a to the working region of the first debris inlet 1111a.

Refer to FIG. 16. FIG. 16 is a main view of a cleaning device according to an embodiment of the present disclosure. The cleaning device 1000 further includes the blocking door 119. The blocking door 119 is configured to block the first debris inlet 1111a. The blocking door 119 is configured to: when the first auxiliary cleaning assembly 150 cleans the target region 100, be opened to expose the first debris inlet 1111a, so that the trash in the target region 100 can be sucked into the first accommodating cavity 111 through the first debris inlet 1111a. The blocking door 119 is further configured to block the first debris inlet 1111a when the cleaning device 1000 does not use the first debris inlet 1111a, for example, when the second debris inlet 1111b is used or when the cleaning mode is changed, to prevent the trash in the first accommodating cavity 111 from flowing back to the target region 100 through the first debris inlet 1111a. In embodiments of the present disclosure, an example in which the first auxiliary cleaning assembly 150 guides trash floating on the water surface of the target region 100 to the working region of the first debris inlet 1111a when the cleaning device 1000 moves on the water surface of the target region 100 is used for description. When the cleaning device 1000 moves on the water surface of the target region 100, at least a part of the first auxiliary cleaning assembly 150 is exposed at the water surface, that is, the first auxiliary cleaning assembly 150 is fully exposed above the water surface and there is a preset distance between the first auxiliary cleaning assembly 150 and the water surface for cleaning a side wall higher than the water line; or the first auxiliary cleaning assembly 150 is fully exposed at the water surface and the first auxiliary cleaning assembly 150 faces and is in contact with the water surface, or one part of the first auxiliary cleaning assembly 150 submerges in liquid and the other part of the first auxiliary cleaning assembly 150 is exposed at the water surface, and when the cleaning device 1000 cleans the water surface of the target region 100 by using the first auxiliary cleaning assembly 150, the blocking door 119 is opened to expose the first debris inlet 1111a, and the first auxiliary cleaning assembly 150 rotates to push the trash floating on the water surface of the target region 100 toward the working region of the first debris inlet 1111a, so that the trash is sucked in through the first debris inlet 1111a.

With reference to FIG. 1, FIG. 5, and FIG. 16, the first auxiliary cleaning assembly 150 may be provided at an edge of the first debris inlet 1111a, where the edge is close to the sixth side 118, an edge of the first debris inlet 1111a, where the edge is close to the fifth side 117, an edge of the first debris inlet 1111a, where the edge is close to the third side 115, an edge of the first debris inlet 1111a, where the edge is close to the fourth side 116, a joint between the first side 113 and the third side 115, and/or a joint between the first side 113 and the fourth side 116. The cleaning device 1000 may include one or more first auxiliary cleaning assemblies 150. In some embodiments, the cleaning device 1000 may include two first auxiliary cleaning assemblies 150, one of which is provided at the joint between the first side 113 and the third side 115, and the other one of which is provided at the joint between the first side 113 and the fourth side 116, so that the first auxiliary cleaning assemblies 150 can push trash on the first side 113, the third side 115, and the fourth side 116 of the cleaning device 1000 toward the working region of the debris inlet 1111. This expands the cleaning range of the first auxiliary cleaning assembly 150. In addition, the first auxiliary cleaning assembly 150 may be further configured to perform auxiliary cleaning, for example, cleaning the target side wall 1011 when the cleaning device 1000 moves close to the target side wall 1011. This improves the cleaning efficiency and the cleaning effect of the cleaning device 1000.

The first auxiliary cleaning assembly 150 is provided at the edge of the first debris inlet 1111a, and at least a part of the first auxiliary cleaning assembly 150 is located in front of the first debris inlet 1111a in the moving direction of the cleaning device 1000. In this way, when the cleaning device body 110 moves forward in the moving direction, because the first debris inlet 1111a is provided at the front portion, the trash is sucked in through the first debris inlet 1111a as the cleaning device 1000 moves forward. Under the action of the first auxiliary cleaning assembly 150, the trash originally located outside a coverage region of the first debris inlet 1111a can be guided to the working region of the first debris inlet 1111a, which is equivalent to expanding a cleaning range of the first debris inlet 1111a. This improves trash cleaning efficiency.

The first auxiliary cleaning assembly 150 agitates water toward the first debris inlet 1111a, or a suction force of the first debris inlet 1111a is improved, to expand the cleaning range of the first debris inlet 1111a by using the first auxiliary cleaning assembly 150. This is not limited herein. In a specific embodiment, the first auxiliary cleaning assembly 150 may be rotatably provided at the cleaning device body 110 to agitate water near the first debris inlet 1111a, so that water outside the working region of the first debris inlet 1111a flows to the working region of the first debris inlet 1111a. In this way, trash located outside the working region can be driven to flow to the working region of the first debris inlet 1111a with the water, and flow into the cleaning device body 110.

A rotation direction of the first auxiliary cleaning assembly 150 may be set based on an actual situation, provided that water can be agitated to flow to the first debris inlet 1111a. For example, in the moving direction of the cleaning device 1000, if it is viewed from the top of the cleaning device 1000 to the bottom of the cleaning device 1000, when the first auxiliary cleaning assembly 150 is closer to the left side of the cleaning device body 110 than the first debris inlet 1111a, the first auxiliary cleaning assembly 150 rotates in a clockwise direction, and when the first auxiliary cleaning assembly 150 is closer to the right side of the cleaning device body 110 than the first debris inlet 1111a, the first auxiliary cleaning assembly 150 rotates in a counterclockwise direction. Based on the above disposition, when the first auxiliary cleaning assembly 150 operates, the first auxiliary cleaning assembly 150 agitates water away from the first debris inlet 1111a, especially water located on the left front or right front of the cleaning device 1000, to the first debris inlet 1111a, and a water flow direction is substantially opposite to the moving direction of the cleaning device 1000. In other words, as the cleaning device 1000 moves, the water guided by the first auxiliary cleaning assembly 150 is sucked into the cleaning device body 110 through the first debris inlet 1111a.

In some embodiments, as shown in FIG. 16, the first auxiliary cleaning assembly 150 includes at least a side brush 151. The side brush 151 may be rotatably provided on the cleaning device body 110, for example, rotatably provided at a joint between two adjacent sides of the cleaning device body 110, and configured to guide at least a part of trash in the target region 100 to the working region of the debris inlet 1111.

At least a part of the side brush 151 is beyond a contour of the cleaning device 1000. It may be understood that when the cleaning device 1000 is located on the travel surface 101, an orthographic projection of the side brush 151 on the travel surface 101 is at least partially located outside a contour of a boundary of an orthographic projection of the cleaning device 1000 on the travel surface 101, to expand a cleaning range of the side brush 151, so that the side brush 151 can guide trash farther away from the coverage region of the first debris inlet 1111a to the working region of the first debris inlet 1111a. This improves the trash cleaning efficiency. In an embodiment, there are two first auxiliary cleaning assemblies. Two side brushes are arranged on two sides of the first debris inlet 1111a, and at least a part of the side brush is beyond the contour of the cleaning device 1000.

The side brushes 151 are provided at the joint between the first side 113 and the third side 115 and the joint between the first side 113 and the fourth side 116. The side brush 151 includes a side brush body 1511, a rotation shaft 1512, and a side brush cover 1513. The side brush cover 1513 is provided on the cleaning device body 110. The rotation shaft 1512 is rotatably provided in the side brush cover 1513. The side brush body 1511 is provided around the rotation shaft 1512. The side brush body 1511 is configured to agitate water or be in contact with and clean wall surfaces such as the target side wall 1011 and the target bottom wall 1012. Specifically, during rotation, the rotation shaft 1512 drives the side brush body 1511 to rotate. During rotation, the side brush body 1511 can agitate water or clean wall surfaces such as the target side wall 1011 and the target bottom wall 1012. A manner of disposing the side brush cover 1513 on the cleaning device body 110 includes, but is not limited to, screw fixing, rivet fixing, welding fixing, bonding fixing, bolt fixing, pin-key fixing, snap-fit fixing, magnetic adsorption fixing, and the like. The rotation shaft 1512 is rotatably provided in the side brush cover 1513, and at least a part of the side brush body 1511 is exposed outside the side brush cover 1513. Optionally, the side brush cover 1513 is screwed to the cleaning device body 110.

The side brush body 1511 is at least partially made of a flexible material, and/or the side brush body 1511 is at least partially made of a rigid material. In an embodiment, the side brush body 5111 is completely made of a flexible material. In another embodiment, the side brush body 5111 is completely made of a rigid material. In another embodiment, the side brush body 5111 is partially made of a flexible material and partially made of a rigid material. The flexible material is a material capable of undergoing elastic deformation. The rigid material is a material less likely to undergo elastic deformation. When the side brush body 5111 is made of a flexible material, the side brush body 5111 may be a bristle, a rubber sheet, or the like. When the side brush body 5111 is made of a rigid material, the side brush body 5111 may be a plastic blade, a metal blade, or the like. The side brush body 5111 may include one or more cleaning portions. There may be one, two, three, or more cleaning portions. This is not limited herein. For example, when the side brush body 5111 is a rubber sheet, the cleaning portion may be a rubberized brush blade, and when the side brush body 5111 is a plastic blade, the cleaning portion is a plastic brush blade.

In some embodiments, shapes of different cleaning portions of a same side brush body 5111 may be different. For example, one cleaning portion has a tail end away from the rotation shaft 1512, and the tail end is in a straight-line shape; and one cleaning portion has a tail end away from the rotation shaft 1512, and the tail end is serrated. The tail end of the cleaning portion is set to be serrated, so that the cleaning portion can block some trash, such as long hair, which is convenient for the user to perform cleaning. The tail end of the cleaning portion is set to be in a straight-line shape, so that a stirring effect of the side brush body 5111 for liquid is improved. Different cleaning portions of the side brush body 5111 such as adjacent cleaning portions are set to be in different shapes, to ensure a stirring effect of the side brush 151 while the side brush 151 can block the trash.

Refer to FIG. 2, FIG. 3, and FIG. 17. FIG. 17 is a partial schematic view of a cleaning device according to an embodiment of the present disclosure. The cleaning device 1000 has a central plane α. A height of a projection of the side brush 151 on the central plane α of the cleaning device 1000 at least partially overlaps with a height of a projection of the first debris inlet 1111a on the central plane α of the cleaning device 1000.

With reference to FIG. 2, the traveling mechanism 190 includes at least a first guiding wheel 191 and a second guiding wheel 192. The first guiding wheel 191 and the second guiding wheel 192 are configured to drive the cleaning device 1000 to move on the target bottom wall 1012 and the target side wall 1011. Sizes of the first guiding wheel 191 and the second guiding wheel 192 may be substantially the same. The cleaning device body 110 includes a housing located on the third side 115, the fourth side 116, and the sixth side 118. A side contour of the housing is not beyond side contours of the first guiding wheel 191 and the second guiding wheel 192. It may be understood that when the cleaning device 1000 is located on the travel surface 101, orthographic projections of the first guiding wheel 191 and the second guiding wheel 192 on the travel surface 101 are at least partially located outside a boundary of an orthographic projection of the contour of the housing of the cleaning device body 110 on the travel surface 101. It may be understood that the orthographic projection of the side brush 151 on the travel surface 101 is at least partially located outside the orthographic projections of the housing of the cleaning device body 110, the first guiding wheel 191, and the second guiding wheel 192 on the travel surface 101. For ease of description, in the present disclosure, the travel surface 101 of the cleaning device refers to a part of the to-be-cleaned surface, and the part is in contact with the traveling mechanism 190 of the cleaning device 1000. The travel surface 101 is parallel to the forward direction of the cleaning device 1000 and substantially parallel to the to-be-cleaned surface. A plane on which a rotation shaft of the first guiding wheel 191 and a rotation shaft of the second guiding wheel 192 of the traveling mechanism 190 of the cleaning device 1000 are located is defined as a longitudinal plane of the cleaning device 1000. The longitudinal plane is parallel to the travel surface 101. A plane perpendicular to the longitudinal plane and parallel to extension directions of rotation shafts of the first guiding wheel 191 and the second guiding wheel 192 is defined as the central plane of the cleaning device 1000, and a distance between the plane and the rotation shaft of the first guiding wheel 191 is equal to a distance between the plane and the rotation shaft of the second guiding wheel 192. The central plane α is opposite to the first side 113 and the second side 114 of the cleaning device 1000.

When the cleaning device 1000 is in a horizontal state, the projection of the side brush 151 on the central plane α of the cleaning device 1000 at least partially overlaps with the projection of the first debris inlet 1111a on the central plane α of the cleaning device 1000 in a height direction, namely, a height direction of the cleaning device 1000. The first debris inlet 1111a includes at least a first edge 1111a1 close to the sixth side 118 of the cleaning device 1000 and a second edge 1111a2 close to the fifth side 117 of the cleaning device 1000. The above projection relationship may be further described as follows: In the height direction of the cleaning device 1000, the projection of the side brush 151 on the central plane α of the cleaning device 1000 is at least partially located between projections of the first edge 1111a1 and the second edge 1111a2 on the central plane α of the cleaning device 1000, or in the height direction of the cleaning device 1000, the side brush 151 is at least partially located between the first edge 1111al and the second edge 1111a2.

The height of the projection of the side brush 151 on the central plane α of the cleaning device 1000 is h1. The height of the projection of the first debris inlet 1111a on the central plane α of the cleaning device 1000 may be h2 or h3. Herein, h1 at least partially overlaps with h2 or h3. The height of the projection is a height of a projection plane.

When the cleaning device 1000 performs cleaning on the water surface, the first debris inlet 1111a is at least partially located below the water surface. In other words, the second edge 1111a2 is located below the water surface, and the first edge 1111a1 may be located above or below the water surface. The side brush 151 may alternatively be at least partially located below the water surface. An example in which the first edge 1111a1 of the first debris inlet 1111a is located above the water surface, one part of the side brush 151 is located on the water surface, and the other part of the side brush 151 is located below the water surface is used. In this case, one part of the first debris inlet 1111a is located above the water surface, and the other part of the first debris inlet 1111a is located below the water surface. When the side brush 151 is in operation, trash near the cleaning device 1000 may be guided to a region between the first edge 1111al and the second edge 1111a2, and may be directly sucked in through the first debris inlet 1111a.

In the moving direction of the cleaning device 1000, at least a part of the side brush 151 is located in front of the first debris inlet 1111a. As the cleaning device body 110 moves forward, trash cleaned and driven by the side brush 151 may naturally reach the working region of the first debris inlet 1111a.

In some embodiments, as shown in FIG. 16, the cleaning device 1000 includes an auxiliary drive assembly 152 and a real-time rotation speed detection assembly. The auxiliary drive assembly 152 includes a stepper motor. The stepper motor drives the side brush 151 to move. The real-time rotation speed detection assembly is provided on the cleaning device body 110 and configured to detect a rotation speed of the stepper motor in real time. Specifically, the stepper motor is connected to the rotation shaft 1512 to drive, through the rotation shaft 1512, the side brush body 1511 to rotate. The real-time rotation speed detection assembly may be provided at the stepper motor. The real-time rotation speed detection assembly may be configured to detect the rotation speed of the stepper motor in real time, to determine, based on the rotation speed, whether the stepper motor is out of step. When the real-time rotation speed detection assembly detects that the stepper motor is out of step, the real-time rotation speed detection assembly feeds back a signal to a control system (not shown in the figure), and the control system increases a current of the stepper motor incrementally, to increase an output torque of the stepper motor. In this way, a requirement that the stepper motor can normally operate under heavy load for the cleaning device 1000 can be met.

In another embodiment, when the cleaning device 1000 moves in the water and performs cleaning in a region close to the wall of the pool, the side brush body 1511 cleans the wall of the pool, and the load is high. The real-time rotation speed detection assembly detects a state of the stepper motor in real time and feeds back a detection result to the control system, and the control system adjusts an input current of the stepper motor to meet the normal operation under the current load.

The cleaning device 1000 includes a movement drive assembly (not shown in the figure). The movement drive assembly (not shown in the figure) is provided on the cleaning device body 110. The movement drive assembly is connected to the first auxiliary cleaning assembly 150 and is configured to actively drive the first auxiliary cleaning assembly 150 to telescopically move relative to the cleaning device body 110. In other words, under the action of the movement drive assembly, the first auxiliary cleaning assembly 150 may move between an initial position and a compression position. For ease of description, the compression position may be defined as a position at which the first auxiliary cleaning assembly 150 performs a retraction movement to an extreme position in a direction close to the cleaning device body 110. The initial position may be defined as a position at which the first auxiliary cleaning assembly 150 performs an extension movement to an extreme position in a direction away from the cleaning device body 110. It may be understood that the first auxiliary cleaning assembly 150 may further move to a middle position between the initial position and the compression position.

In an embodiment, the first auxiliary cleaning assembly 150 may passively move between the initial position and the compression position. For example, the first auxiliary cleaning assembly 150 is located at the initial position in an initial state. When the cleaning device 1000 is in contact with an obstacle such as a wall in a moving process, the obstacle can squeeze the first auxiliary cleaning assembly 150 to move from the initial position to the compression position. When the cleaning device 1000 is separated from the obstacle, the first auxiliary cleaning assembly 150 returns to the initial position under the action of a first reset assembly. For example, the first reset assembly may be an elastic mechanism, a stepless rebound mechanism, or the like. When the cleaning device 1000 moves normally, the first auxiliary cleaning assembly 150 is located at the initial position under the action of the first reset assembly. When the cleaning device 1000 is in contact with the obstacle, especially when the first auxiliary cleaning assembly 150 is in contact with the obstacle, an action force applied by the obstacle to the first auxiliary cleaning assembly 150 overcomes an action force of the first reset assembly, so that the first auxiliary cleaning assembly 150 is retracted toward the cleaning device body 110, that is, the first auxiliary cleaning assembly 150 moves from the initial position to the middle position or the compression position. When the cleaning device 1000 moves away from the obstacle again, the first auxiliary cleaning assembly 150 returns to the initial position again under the action force of the first reset assembly, that is, the first auxiliary cleaning assembly 150 moves from the compression position or the middle position to the initial position.

In some embodiments, the movement drive assembly and the first reset assembly cooperate with each other, so that the first auxiliary cleaning assembly 150 moves between the initial position and the compression position. A specific scenario and a manner are not limited herein.

In the present disclosure, the first auxiliary cleaning assembly 150 is movably connected to the cleaning device body 110, and the first auxiliary cleaning assembly 150 may be driven by the movement drive assembly of the cleaning device 1000 to telescopically move. In this way, the first auxiliary cleaning assembly 150 is more flexible. A motion trajectory along which the first auxiliary cleaning assembly 150 is driven by the movement drive assembly to move between the initial position and the compression position may be a straight-line trajectory, a continuous curved-line trajectory, a discontinuous broken-line trajectory, or the like. This is not limited herein.

In some embodiments, refer to FIG. 18. FIG. 18 is another partial schematic view of a cleaning device according to an embodiment of the present disclosure. The movement drive assembly may include a connection portion 153 and a first drive part (not shown in the figure). The first auxiliary cleaning assembly 150 is connected to the cleaning device body 110 through the connection portion 153. The first drive part is connected to the connection portion 153 and configured to drive the first auxiliary cleaning assembly 150 to telescopically move relative to the cleaning device body 110.

In some embodiments, the connection portion 153 includes a fixed portion 1531 and a telescopic portion 1532. The fixed portion 1531 is fixedly connected to the cleaning device body 110. One end of the telescopic portion 1532 is connected to the fixed portion 1531, and the other end of the telescopic portion 1532 is connected to the first auxiliary cleaning assembly 150. The telescopic portion 1532 may telescopically move relative to the fixed portion 1531.

In some other embodiments, the first auxiliary cleaning assembly 150 is movably connected to the movement drive assembly. The first drive part includes a first transmission mechanism (not shown in the figure) and a first power source. An input end of the first transmission mechanism is connected to the first power source. An output end of the first transmission mechanism is connected to the first auxiliary cleaning assembly 150. The first power source is configured to provide power for the first transmission mechanism, so that the first transmission mechanism can drive the first auxiliary cleaning assembly 150 to telescopically move relative to the cleaning device body 110 and the connection portion 153.

In an embodiment, as shown in FIG. 17, the cleaning device 1000 further includes a guiding part 154. The guiding part 154 may be rotatably provided at the cleaning device body 110 or an opening 121 of the filtering box 120. As the guiding part 154 rotates, water outside the filtering box 120 is guided to flow through the opening 121 of the filtering box 120 and enter the filtering box 120. When the cleaning device 1000 is in a state of performing water surface cleaning, the guiding part 154 is at least partially located below the water surface to effectively agitate water at the opening 121 of the filtering box 120. This improves efficiency of external debris entering the filtering box 120. In a specific embodiment, when water surface cleaning is performed, one part of the guiding part 154 is located below the water surface, and the other part of the guiding part 154 is located above the water surface, which corresponds to a case where one part of the first debris inlet 1111a is located above the water surface, and the other part of the first debris inlet 1111a is located below the water surface, to implement a better water surface cleaning effect.

Therefore, in an embodiment, when the cleaning device 1000 performs water surface cleaning, one part of the first debris inlet 1111a is located above the water surface, and the other part of the first debris inlet 1111a is located below the water surface, so that trash floating on the water surface such as leaves and trash bags can naturally enter the filtering box 120 along with a water flow at the water surface. One part of the guiding part 154 is located below the water surface, and the other part of the guiding part 154 is located above the water surface, so that in the working region of the first debris inlet 1111a, the guiding part 154 can guide at least the water flow at the water surface to the first debris inlet 1111a. When the first auxiliary cleaning assembly 150 is in operation, the trash floating on the water surface and located outside the working region of the first debris inlet 1111a can be guided to the working region of the first debris inlet 1111a from a side portion and the front portion of the cleaning device body 110. Further, with a movement of the cleaning device 1000 and under the action of the guiding part 154, the trash can be guided to pass through the first debris inlet 1111a and finally enter the filtering box 120.

In some embodiments, as shown in FIG. 1 to FIG. 4b, two ends of the second auxiliary cleaning assembly 160 may communicate with the target region 100. The second auxiliary cleaning assembly 160 is configured to spray water to a to-be-cleaned region in the target region 100, to flush at least the to-be-cleaned region or guide at least a part of trash at the to-be-cleaned region to the working region of the debris inlet 1111. The to-be-cleaned region may be any region in the pool. Specifically, the to-be-cleaned region may include at least one of a water region between the cleaning device 1000 and the travel surface 101 or the travel surface 101, or the to-be-cleaned region may further include the working region of the debris inlet 1111. It may be understood that when the to-be-cleaned region of the cleaning device 1000 is the target bottom wall 1012, the second auxiliary cleaning assembly 160 is configured to spray water to the target bottom wall 1012; when the to-be-cleaned region of the cleaning device 1000 is the target side wall 1011, the second auxiliary cleaning assembly 160 is configured to spray water to the target side wall 1011; and when the to-be-cleaned region of the cleaning device 1000 is located in water in the target region 100, the second auxiliary cleaning assembly 160 is configured to spray water to the water. Water sprayed by the second auxiliary cleaning assembly 160 may draw the trash to the working region of the debris inlet 1111 in at least one of the following manners: agitation, reflection performed by the pool wall, water flow guidance, or the like. In this way, the trash can be sucked in through the debris inlet 1111.

In some embodiments, as shown in FIG. 2 and FIG. 3, the second auxiliary cleaning assembly 160 includes at least a water spray part 161 and a second drive part 162. A nozzle 1611 of the water spray part 161 faces a side of the cleaning device body 110, and the side of the cleaning device body 110 is provided with the debris inlet 1111. The second drive part 162 is configured to drive water to be sprayed out through the nozzle 1611 of the water spray part 161. The water spray part 161 may be a water spray pipe. However, this is not limited thereto. The nozzle 1611 of the water spray part 161 tilts toward the to-be-cleaned region. It may be understood that when the to-be-cleaned region of the cleaning device 1000 is the target bottom wall 1012, the nozzle 1611 tilts toward the target bottom wall 1012 for water to be sprayed to the target bottom wall 1012; when the to-be-cleaned region of the cleaning device 1000 is the target side wall 1011, the nozzle 1611 tilts toward the target side wall 1011 for water to be sprayed to the target side wall 1011; and when the to-be-cleaned region of the cleaning device 1000 is water in the target region 100, the nozzle 1611 tilts toward the water for water to be sprayed to the water.

In some embodiments, the second drive part 162 is provided on the water spray part 161. The second drive part 162 is configured to drive liquid in the target region 100 to flow from another end of the water spray part 161 and to be sprayed out through the nozzle 1611. The second drive part 162 may be provided in the water spray part 161. However, this is not limited thereto. The nozzle 1611 faces the to-be-cleaned region of the cleaning device 1000, for example, tilting toward the to-be-cleaned region, so that water can be sprayed to the to-be-cleaned region through the nozzle 1611, to flush off trash in the to-be-cleaned region. This improves water spraying precision. In addition, in a process of spraying water to the to-be-cleaned region through the nozzle 1611, because a flow rate of water sprayed out through the nozzle 1611 is high, a part of the to-be-cleaned region applies a reaction force toward the debris inlet 1111 to the water sprayed out through the nozzle 1611. The water can be driven by the reaction force to move close to the debris inlet 1111, to drive the trash on the travel surface 101 to move close to the debris inlet 1111, so that the trash enters a negative pressure zone near the debris inlet 1111. In this way, the trash can be more easily sucked into the filtering box 120 through the debris inlet 1111. Furthermore, the trash can also be gathered under agitation formed by the liquid sprayed out through the nozzle 1611, so that the trash can be more conveniently sucked into the filtering box 120 through the debris inlet 1111. This improves the cleaning effect of the cleaning device 1000.

In some embodiments, as shown in FIG. 2, the second drive part 162 may include a first impeller 1621 and a first drive motor 1622. The first drive motor 1622 is connected to the first impeller 1621. The first drive motor 1622 is configured to drive the first impeller 1621 to rotate, to drive the liquid in the target region 100 to flow from another end of the water spray part 161 and to be sprayed out through the nozzle 1611. Power of the first drive motor 1622 is positively correlated with pressure of the water sprayed out through the nozzle 1611.

There may be one or more water spray parts 161. Each water spray part 161 is provided with one or more nozzles 1611. Different water spray parts 161 may operate simultaneously or independently. Different nozzles 1611 provided at a same water spray part 161 may also operate simultaneously or independently.

In an embodiment, the nozzle 1611 of the water spray part 161 can rotate, and the cleaning device 1000 further includes a rotating assembly (not shown in the figure). The nozzle 1611 of the water spray part 161 may be rotated by the rotating assembly, so that the nozzle 1611 is oriented toward a target orientation.

In an embodiment, there may be a plurality of water spray parts 161, and the plurality of water spray parts 161 are provided on a left side and a right side of the cleaning device body 110 respectively. At least one water spray part 161 is provided at each of the left side and the right side of the cleaning device body 110, and an orientation of the nozzle 1611 of the water spray part 161 provided at the left side is different from that of the nozzle 1611 of the water spray part 161 provided at the right side. For another example, the plurality of water spray parts 161 are provided on a same side of the cleaning device body 110, for example, a front side or the right side of the cleaning device body 110. Orientations of nozzles 1611 of the plurality of water spray parts 161 are different from each other. In this way, a water spray part 161 provided with a nozzle 1611 of a matched orientation can be selected based on a posture of the cleaning device 1000 for spraying water.

In an embodiment, two water spray parts 161 are provided on each of two sides of the cleaning device 1000. The two water spray parts 161 provided on each of two sides are an upper water spray part and a lower water spray part. Correspondingly, a nozzle 1611 of the upper water spray part is an upper nozzle, and a nozzle 1611 of the lower water spray part is a lower nozzle. The upper nozzle and the lower nozzle orient toward the front or at a certain outward expansion angle relative to the front. For example, when the cleaning device 1000 performs water surface cleaning, the upper nozzle at least one of two sides of the cleaning device 1000 is chosen to clean the pool wall at the water line. When the cleaning device 1000 cleans the travel surface 101 of the target region 100, the lower nozzle on at least one side of the cleaning device 1000 is chosen to operate to clean the target bottom wall 1012 or the target side wall 1011.

In a specific embodiment, when the cleaning device 1000 performs water surface cleaning, the nozzle 1611 currently operating at least needs to be provided at a position on the cleaning device body 110, and the position is close to the water surface. In this case, the water sprayed out through the nozzle 1611 can be used to clean the water surface and the pool wall at the water line. At the same time, the cleaning device 1000 may move on the water surface under the action of the second drive part 162, so that the cleaning device 1000 can movably clean the water surface.

Further, when the cleaning device 1000 cleans the travel surface 101 of the target region 100, at least one nozzle 1611 currently operating needs to be provided on the cleaning device body 110 and tilts toward the target bottom wall 1012 or the target side wall 1011. For example, when the cleaning device 1000 cleans the target bottom wall 1012, the at least one nozzle 1611 tilts toward the target bottom wall 1012. In this case, the water is sprayed out through the nozzle 1611 to clean small debris at a specific height position in the water, a specific height position on the target side wall 1011, the target bottom wall 1012, and a corner between the target bottom wall 1012 and the target side wall 1011.

In some embodiments, as shown in FIG. 1, the cleaning device 1000 further includes a third auxiliary cleaning assembly 170. The third auxiliary cleaning assembly 170 may be a roller brush assembly 171. The cleaning device 1000 may include one or more roller brush assemblies 171. The roller brush assembly 171 may be provided at the bottom of the cleaning device body 110. The roller brush assembly 171 is configured to clean the target bottom wall 1012 and the target side wall 1011. When the cleaning device 1000 moves on the target bottom wall 1012 and the target side wall 1011, the roller brush assembly 171 can clean the target bottom wall 1012 and the target side wall 1011 to scrub off trash adhering to the target bottom wall 1012 and the target side wall 1011, so that the trash can be sucked in through the second debris inlet 1111b provided on the fifth side 117 of the cleaning device 1000. This improves the cleaning effect.

In some embodiments, as shown in FIG. 2, the cleaning device 1000 further includes at least two traveling mechanisms 190 to drive the cleaning device 1000 to move on the target bottom wall 1012 and the target side wall 1011. One traveling mechanism 190 is provided on one side of the cleaning device body 110, for example, the third side 115 of the cleaning device body 110. The other traveling mechanism 190 is provided on another side opposite to the side of the cleaning device body 110, for example, the fourth side 116 of the cleaning device body 110. The traveling mechanism 190 is configured to drive the cleaning device 1000 to move. The second auxiliary cleaning assembly 160 may be provided on a side of the traveling mechanism 190, and the side faces away from the cleaning device body 110, so that a flow path of the liquid sprayed out through the nozzle 1611 is not blocked by the cleaning device body 110.

In some embodiments, the traveling mechanism 190 includes the first guiding wheel 191, the second guiding wheel 192, and the track 193. The first guiding wheel 191 is spaced from the second guiding wheel 192. The track 193 is wrapped around the first guiding wheel 191 and the second guiding wheel 192. In some embodiments, the traveling mechanism 190 further includes a fourth drive part 194. The fourth drive part 194 may be a motor, an electric pump, or the like. However, this is not limited thereto. The fourth drive part 194 may be connected to the first guiding wheel 191 and/or the second guiding wheel 192. It may be understood that the fourth drive part 194 may be connected to the first guiding wheel 191. In this case, the first guiding wheel 191 is a driving wheel, the second guiding wheel 192 is a driven wheel, and the fourth drive part 194 is configured to drive the first guiding wheel 191 to rotate, to drive the second guiding wheel 192 and the track 193 to move. Alternatively, the fourth drive part 194 may be connected to the second guiding wheel 192. In this case, the second guiding wheel 192 is a driving wheel, the first guiding wheel 191 is a driven wheel, and the fourth drive part 194 is configured to drive the second guiding wheel 192 to rotate, to drive the first guiding wheel 191 and the track 193 to move. Alternatively, the fourth drive part 194 may be connected to the first guiding wheel 191 and the second guiding wheel 192, and the fourth drive part 194 is configured to drive the first guiding wheel 191 and the second guiding wheel 192 to rotate, to drive the track 193 to move.

In some embodiments, the track 193 may be engaged with the first guiding wheel 191 and the second guiding wheel 192. For example, a surface of the track 193 faces the first guiding wheel 191 and the second guiding wheel 192, and the surface is provided with a convex tooth and a tooth groove that are alternately provided. A surface of each of the first guiding wheel 191 and the second guiding wheel 192 faces the track 193, and the surface is provided with a convex tooth and a tooth groove that are alternately provided. In some other embodiments, the track 193 may be a rack, and the first guiding wheel 191 and the second guiding wheel 192 may be gears. The track 193, the first guiding wheel 191, and the second guiding wheel 192 form a gear-rack mechanism. In other embodiments, the track 193 may be frictionally connected to the first guiding wheel 191 and the second guiding wheel 192. The surface of the track 193 faces the first guiding wheel 191 and the second guiding wheel 192, and the surface is closely attached to the first guiding wheel 191 and the second guiding wheel 192. When the fourth drive part 194 drives at least one of the first guiding wheel 191 or the second guiding wheel 192 to rotate, the track 193 can be driven under friction between the first guiding wheel 191 and the track 193 and friction between the second guiding wheel 192 and the track 193 to move.

In some embodiments, the cleaning device 1000 may include two roller brush assemblies 171. One end of one roller brush assembly 171 is rotatably connected to a first guiding wheel 191 of one traveling mechanism 190, and the other end is rotatably connected to a first guiding wheel 191 of the other traveling mechanism 190. One end of the other roller brush assembly 171 is rotatably connected to a second guiding wheel 192 of one traveling mechanism 190, and the other end is rotatably connected to a second guiding wheel 192 of the other traveling mechanism 190. In a moving process of the traveling mechanisms 190, the two roller brush assemblies 171 can rotate with movement of the traveling mechanisms 190. In other words, in the moving process of the traveling mechanisms 190, the first guiding wheel 191 of one traveling mechanism 190 and the first guiding wheel 191 of the other traveling mechanism 190 can drive one roller brush assembly 171 to rotate, and the second guiding wheel 192 of one traveling mechanism 190 and the second guiding wheel 192 of the other traveling mechanism 190 can drive the other roller brush assembly 171 to rotate. Certainly, the two roller brush assemblies 171 may alternatively be respectively controlled by two separate motors or share a separate motor instead of being controlled by the traveling mechanism 190 in a transmission manner. In this way, rotation speeds and rotation directions of the two roller brush assemblies 171 can be controlled independently.

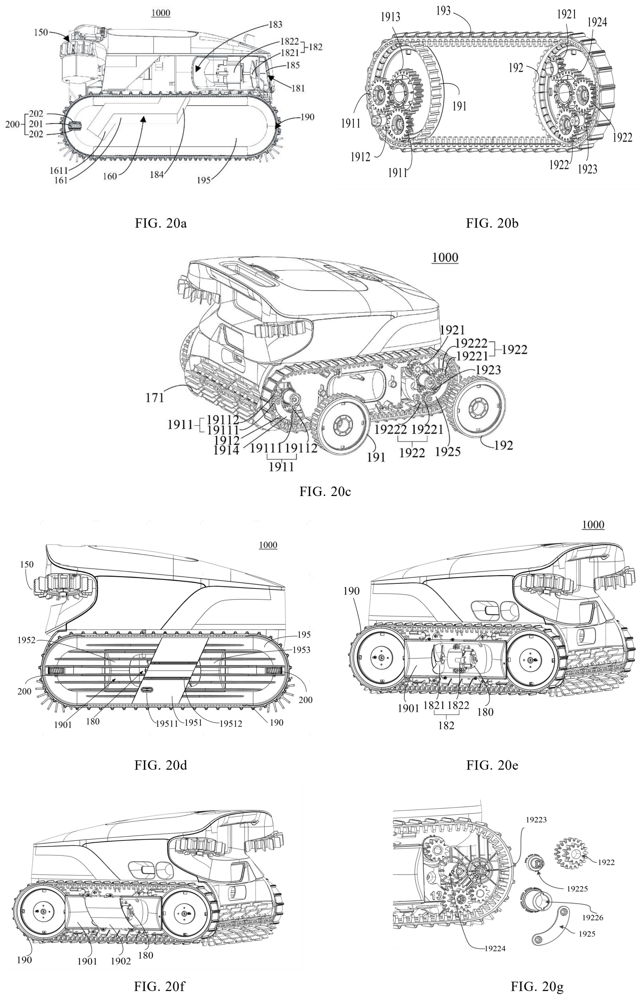

In some embodiments, the cleaning device 1000 includes a transmission assembly, and the traveling mechanism 190 drives, by using the transmission assembly, the roller brush assembly 171 to rotate. Refer to FIG. 20b, FIG. 20c, and FIG. 20i. FIG. 20b is a third partial schematic view of a cleaning device according to an embodiment of the present disclosure. FIG. 20c is a side view of a cleaning device according to a third embodiment of the present disclosure. FIG. 20i is a partial schematic view of a cleaning device according to an embodiment of the present disclosure. An example in which the second guiding wheel 192 is the driving wheel, and the first guiding wheel 191 is the driven wheel is used. The transmission assembly includes a second transmission assembly configured to at least drive the second guiding wheel 192 to rotate. The second transmission assembly further includes a first gear 1921, and an output end of the fourth drive part 194 is connected to the first gear 1921. The first gear 1921 is engaged with a first inner gear 1924 of the second guiding wheel 192. When the second guiding wheel 192 rotates, the first inner gear 1924 simultaneously rotates, so that the first gear 1921 can rotate to drive the second guiding wheel 192 to rotate. In this way, the first guiding wheel 191 is driven by the track 193 to rotate.

In some embodiments, the second transmission assembly further includes a second gear set 1922. The second gear set 1922 includes a first sub-gear 19221 and a second sub-gear 19222. The first sub-gear 19221 and the second sub-gear 19222 are coaxially provided as same-level gears and may be of the same size or different sizes. When one of the first sub-gear 19221 and the second sub-gear 19222 rotates, the other one of the first sub-gear 19221 and the second sub-gear 19222 simultaneously rotates. The second transmission assembly further includes a third gear 1923. The third gear 1923 is engaged with the second sub-gear 19222. The third gear 1923 is connected to the roller brush assembly 171. When the third gear 1923 rotates, the roller brush assembly 171 connected to the third gear 1923 rotates with the third gear 1923. The first inner gear 1924 is further engaged with the first sub-gear 19221. The first inner gear 1924 rotates to drive the first sub-gear 19221 to rotate, to drive the second sub-gear 19222 to rotate together with the third gear 1923, so that the roller brush assembly 171 is driven to rotate. In this way, the second guiding wheel 192 drives the roller brush assembly 171 to rotate.

In some embodiments, the second transmission assembly includes more than one second gear set 1922. Different second gear sets 1922 are dispersedly provided. Second sub-gears 19222 of the different second gear sets 1922 are all engaged with the third gear 1923. First sub-gears 19221 of the different second gear sets 1922 are all engaged with the first inner gear 1924. A plurality of second gear sets 1922 are provided, so that a force applied to a single second gear set 1922 is distributed. This reduces a possibility of damage to the second gear set 1922. In some embodiments, the second transmission assembly further includes a first gear cover plate 1925. The first gear cover plate 1925 is connected to ends of gear shafts of the different second gear sets 1922 to connect the different second gear sets 1922 in series to optimize forces applied to the different second gear sets 1922, so that the following case is avoided: A force is applied to the single second gear set 1922 in a same direction for a long time, leading to deviation of a direction of the gear shaft. This increases stability of each second gear set 1922.

In some embodiments, a shaft sleeve is further provided between the gear or the gear set in the transmission assembly and a rotation shaft to protect the gear and the rotation shaft and improve a service life of the gear. The shaft sleeve may be made of a polyoxymethylene (Polyoxymethylene) material. The material is self-lubricating and highly wear-resistant, so that the service life of the gear can be better improved. The rotation shaft protrudes from a side wall of the housing of the cleaning device body. The shaft sleeve is sleeved on the rotation shaft and is detachably fixedly connected to the rotation shaft. For example, at least one protrusion is provided on an outer side wall and/or a top of the rotation shaft and/or at a position on a surface of the side wall of the housing, and the position is close to the rotation shaft. A groove is provided at a bottom and/or a top and/or an inner side wall of the shaft sleeve. The groove is provided corresponding to the protrusion, so that the rotation shaft is clamped to the shaft sleeve through the protrusion and the groove. The gear is sleeved on the shaft sleeve. When the gear rotates, the shaft sleeve and the rotation shaft remain fixed, and the gear rotates relative to the shaft sleeve. The fixing manner in the present disclosure is not limited to the above detachably fixing manner and may be any one of manners of detachably fixing the shaft sleeve to the rotation shaft. Refer to FIG. 20c and FIG. 20g. FIG. 20g is a partial schematic view of a cleaning device according to an embodiment of the present disclosure. A first rotation shaft 19223 protrudes from the side wall of the housing of the cleaning device body and is cylindrical or conical. A plurality of protrusions are provided on an outer wall of the first rotation shaft 19223 and at a position on the surface of the side wall of the housing of the cleaning device body, and the position is close to the first rotation shaft 19223. The plurality of protrusions are distributed around with the rotation shaft as a center. A first shaft sleeve 19225 is sleeved on the first rotation shaft 19223, and a plurality of grooves are provided at a bottom of the first shaft sleeve 19225. When the first shaft sleeve 19225 is sleeved on the first rotation shaft 19223, the grooves on the first shaft sleeve 19225 are fittingly fixed to the protrusions on the first rotation shaft 19225 and the protrusions on the surface of the side wall of the housing of the cleaning device body. The second gear set 1922 is sleeved on the first shaft sleeve 19225. The second gear set 1922 can rotate relative to the first shaft sleeve 19225. Similarly, when the cleaning device is provided with a plurality of gear sets, for example, a plurality of second gear sets 1922 or a plurality of fourth gear sets 1911, each gear set may be of the above structure to improve a service life of each gear set. In addition, positions and quantities of grooves and protrusions are not limited to the above description. The grooves and the protrusions may be provided at any appropriate positions, and any appropriate quantities of grooves and protrusions may be chosen, so that the shaft sleeve can be detachably connected to the rotation shaft. For example, the shaft sleeve is provided with the protrusion, and the rotation shaft is provided with the groove, or the shaft sleeve is provided with the protrusion and the groove, and the rotation shaft is provided with a matched groove and protrusion.

In some embodiments, as shown in FIG. 20c and FIG. 20g, a second rotation shaft 19224 protrudes from the side wall of the housing of the cleaning device body. The second rotation shaft 19224 is cylindrical. A second shaft sleeve 19226 is sleeved on the second rotation shaft 19224. The second guiding wheel 192 is sleeved on the second shaft sleeve 19226. A bottom of the second shaft sleeve 19226 is provided with a groove. A top of the second shaft sleeve 19226 is provided with a protrusion. A plurality of protrusions are provided at a position on the surface of the side wall of the housing of the cleaning device body, and the position is close to the second rotation shaft 19224. The plurality of protrusions are dispersed along the second rotation shaft 19224. A groove is provided at the top of the second rotation shaft 19224. When the second shaft sleeve 19226 is sleeved on the second rotation shaft 19224, the grooves at the bottom of the second shaft sleeve 19226 can be fittingly fixed to the plurality of protrusions on the side wall of the housing, and the protrusions at the top of the second shaft sleeve 19226 can be fittingly fixed to the grooves at the top of the second rotation shaft 19224. The second guiding wheel 192 is sleeved on the second shaft sleeve 19226, so that the second guiding wheel 192 can rotate relative to the second shaft sleeve 19226. Positions and quantities of grooves and protrusions are not limited to the above description. The grooves and the protrusions may be provided at any appropriate positions, and any appropriate quantities of grooves and protrusions may be chosen, so that the shaft sleeve can be detachably connected to the rotation shaft. For example, the shaft sleeve is provided with the protrusion, and the rotation shaft is provided with the groove, or the shaft sleeve is provided with the protrusion and the groove, and the rotation shaft is provided with a matched groove and protrusion. When the cleaning device is provided with a plurality of guiding wheels, each guiding wheel may be configured in the above manner. For example, the first guiding wheel 191 is also of the above structure.

In some embodiments, the transmission assembly further includes a first transmission assembly configured to at least enable the first guiding wheel 191 to drive the roller brush assembly 171 to rotate. The first transmission assembly includes the fourth gear set 1911. The fourth gear set 1911 includes a third sub-gear 19111 and a fourth sub-gear 19112. The third sub-gear 19111 and the fourth sub-gear 19112 are coaxially provided as same-level gears and may be of the same size or different sizes. When one of the third sub-gear 19111 and the fourth sub-gear 19112 rotates, the other one of the third sub-gear 19111 and the fourth sub-gear 19112 simultaneously rotates. The first transmission assembly further includes a fifth gear 1912. The fifth gear 1912 is engaged with the fourth sub-gear 19112. The fifth gear 1912 is connected to the roller brush assembly 171. When the fifth gear 1912 rotates, the roller brush assembly 171 connected to the fifth gear 1912 rotates with the fifth gear 1912. The first guiding wheel 191 includes a second inner gear 1913. When the first guiding wheel 191 rotates, the second inner gear 1913 simultaneously rotates. When the second guiding wheel 192 drives the first guiding wheel 191 to rotate, the second inner gear 1913 rotates. The second inner gear 1913 is further engaged with the third sub-gear 19111. The second inner gear 1913 rotates to drive the third sub-gear 19111 to rotate, to drive the fourth sub-gear 19112 to rotate together with the fifth gear 1912, so that the roller brush assembly 171 is driven to rotate. In this way, the first guiding wheel 191 drives the roller brush assembly 171 to rotate. Based on the above manner, only one fourth drive part 194 is needed to drive the first guiding wheel 191, the second guiding wheel 192, and the two roller brush assemblies 171, leading to a simple driving structure and low manufacturing costs.

In some embodiments, the first transmission assembly includes more than one fourth gear set 1911. Different fourth gear sets 1911 are dispersedly provided. Fourth sub-gears 19112 of the different fourth gear sets 1911 are all engaged with the fifth gear 1912. Third sub-gears 19111 of the different fourth gear sets 1911 are all engaged with the second inner gear 1913. A plurality of fourth gear sets 1911 are provided, so that a force applied to a single fourth gear set 1911 is distributed. This reduces a possibility of damage to the fourth gear set 1911. In some embodiments, the fourth transmission assembly further includes a second gear cover plate 1914. The second gear cover plate 1914 is connected to ends of gear shafts of the different fourth gear sets 1911 to connect the different fourth gear sets 1911 in series to optimize forces applied to the different fourth gear sets 1911, so that the following case is avoided: A force is applied to the single fourth gear set 1911 in a same direction for a long time, leading to deviation of a direction of the gear shaft. This increases stability of each fourth gear set 1911.

In some embodiments, the cleaning device 1000 operates in at least one of a first motion state, a second motion state, or a third motion state. The first motion state is defined as a state in which the cleaning device 1000 moves on the target bottom wall 1012 or an angle between an overall direction of the cleaning device 1000 and the target bottom wall 1012 is less than 90°, and the cleaning device 1000 is away from the water surface. A direction of the plane on which the traveling mechanism 190 such as the track 193 or the guiding wheel included in the traveling mechanism 190 is in contact with the to-be-cleaned surface may be defined as an overall direction of the traveling mechanism 190, that is, the plane is a plane on which a bottom of the track 193 and/or a bottom of the guiding wheel are located. Alternatively, if the traveling mechanism includes the first guiding wheel 191, the second guiding wheel 192, and the track 193, the overall direction of the cleaning device 1000 may be an extension direction of a connection line between a rotation center of the first guiding wheel 191 and a rotation center of the second guiding wheel 192. The second motion state is defined as a state in which the cleaning device 1000 moves on the target side wall 1011 or the overall direction of the cleaning device 1000 is substantially parallel to the target side wall 1011. The third motion state is defined as a state in which the cleaning device 1000 moves on the water surface, the traveling mechanism is at least partially exposed at the water surface, or the cleaning device 1000 is completely located below the water surface and close to the water surface.

In an embodiment, the cleaning device moves on the target bottom wall in the first motion state and cleans the target bottom wall through a first water flow path formed by the second debris inlet 1111b, the filtering box 120, the main drive pump 210, and the second liquid discharge opening 212. The cleaning device moves on the side wall in the second motion state and cleans the side wall through the first water flow path formed by the second debris inlet 111b, the filtering box, the main drive pump, and the second liquid discharge opening, or under the action of the first water flow path, the main drive pump operates, liquid is continuously discharged through the second liquid discharge opening, and the discharged liquid applies a thrust to the cleaning device, so that the bottom of the cleaning device is tightly attached to the side wall and moves on the side wall. The cleaning device moves on the water surface in the third motion state and cleans the water surface through a third water flow path formed by the first debris inlet 1111a, the filtering box 120, the main drive pump 210, and the second liquid discharge opening 212.

After the first side 113 of the cleaning device 1000 is at least partially exposed at the water surface, the second side 114 of the cleaning device 1000 rotates and moves toward the water surface. After the traveling mechanism 190 rotates from the target side wall 1011 to the water surface, the traveling mechanism 190 is in a substantially horizontal state, that is, the cleaning device 1000 is in a substantially horizontal state. In this way, the cleaning device 1000 is switched from the second motion state to the third motion state. When the first side 113 is at least partially exposed at the water surface, a fifth opening provided on the first side 113 is exposed at the water surface, enabling gas to be input into the first buoyancy cavity 261 by using a first buoyancy adjustment and control part 2611 (for details, refer to the following descriptions), so that the second side 114 rotates and moves toward the water surface.

In some embodiments, refer to FIG. 19a. FIG. 19a is a bottom view of a cleaning device according to another embodiment of the present disclosure. The cleaning device 1000 further includes at least one topography detection assembly 196. The at least one topography detection assembly 196 is provided at a bottom of the front portion and/or a bottom of the rear portion of the cleaning device 1000. The bottom of the front portion may be a bottom of the first side 113 or a front portion of the fifth side 117. The bottom of the rear portion may be a bottom of the second side 114 or a rear portion of the fifth side 117. For example, the topography detection assembly 196 may be provided in a region at the bottom of the cleaning device body 110, where the region is close to the second side 114, or a region at the bottom of the cleaning device body 110, where the region is close to the first side 113. The topography detection assembly 196 may alternatively be provided on the first side 113.

The topography detection assembly 196 is configured to detect a topography of a to-be-cleaned surface under the cleaning device 1000 to adjust the operation posture of the cleaning device 1000. For example, the topography detection assembly 196 detects a distance between the topography detection assembly 196 and the to-be-cleaned surface under the cleaning device 1000 to determine whether a topography in the moving direction of the cleaning device 1000 is a recessed region lower than the current travel surface 101, for example, an overhanging region, so that when the cleaning device 1000 is about to enter the overhanging region, the cleaning device 1000 can perform steering or turn around, to avoid the following case: The cleaning device 1000 steps into the overhanging region, causing the cleaning device 1000 to flip or be damaged, thereby protecting the cleaning device 1000, or so that when the cleaning device 1000 is about to enter the overhanging region, the cleaning device 1000 can flip to reach another travel surface 101. In this way, travel requirements in some scenarios can be met. This improves movement flexibility of the cleaning device 1000. Distance information is transmitted by the topography detection assembly 196 to the control system 231 connected to the topography detection assembly 196, so that the topography of the to-be-cleaned surface under the cleaning device 1000 can be determined by the control system 231.

The cleaning device 1000 may include one or more topography detection assemblies 196, for example, ultrasonic sensors or infrared sensors. When a plurality of topography detection assemblies 196 are included, the plurality of topography detection assemblies 196 may be dispersedly provided to expand a detection range of the topography detection assemblies 196. For example, when two topography detection assemblies 196 are included, the two topography detection assemblies 196 may be respectively close to the third side 115 and the fourth side 116 of the cleaning device body 110.

In some embodiments, the topography detection assembly 196 is turned on only when the topography detection assembly 196 detects that the cleaning device 1000 is located in a region of a specific type and/or performs a specific task. For example, when the cleaning device 1000 is located on a platform provided with steps and/or performs a cleaning task on the platform, the topography detection assembly 196 is turned on. In this way, the following case can be avoided: The topography detection assembly 196 is turned on for a long time, causing the cleaning device 1000 to perform operations such as performing steering or turning around in a case where the cleaning device 1000 incorrectly detects a topography when the cleaning device 1000 moves in a conventional region, affecting the cleaning effect of the cleaning device 1000. The region of the specific type may be detected by the vision sensing assembly 140, the liquid level detection assembly 233, and the like. However, this is not limited thereto.

In some embodiments, the topography detection assembly 196 may be provided close to one or more of the traveling mechanism 190, the roller brush assembly 171, and the second debris inlet 1111b of the cleaning device 1000. Optionally, the cleaning device 1000 includes two topography detection assemblies 196. The two topography detection assemblies 196 are both provided in the region at the bottom of the cleaning device body 110, and the region is close to the first side 113. One topography detection assembly 196 is close to one traveling mechanism 190, and the other topography detection assembly 196 is close to the other traveling mechanism 190.

In some embodiments, the topography detection assembly 196 faces a region under the front portion of the cleaning device 1000 and/or a region under the rear portion of the cleaning device 1000. For example, the topography detection assembly 196 is provided at any position on the cleaning device body 110, so that a signal transceiver of the topography detection assembly 196 faces the region under the front portion and/or the region under the rear portion of the cleaning device to detect a topography of a to-be-cleaned surface under the front portion and/or the bottom of the rear portion of the cleaning device 1000. FIG. 19c is a partial schematic structural view of a bottom of a cleaning device according to an embodiment of the present disclosure. FIG. 19d is a partial schematic structural view of a bottom of a cleaning device according to another embodiment of the present disclosure. As shown in FIG. 19b, the topography detection assembly 196 is provided at a position inside the cleaning device body 110, and the position is close to the first side 113. As shown in FIG. 19c and FIG. 19d, at least one transmission channel 1961 is provided inside the cleaning device body 110. The transmission channel 1961 protrudes from the bottom housing of the cleaning device body 110 toward the inside of the cleaning device body 110 and is presented as being of a hollow structure. Two sides of the transmission channel 1961 are provided with a third opening 19611 and a fourth opening 19612. The third opening 19611 is located on the fifth side 117 of the cleaning device body 110. The fourth opening 19612 is located inside the cleaning device body 110. The signal transceiver of the topography detection assembly 196 is provided close to the fourth opening 19612, so that a sent detection signal can pass through the transmission channel 1961 and be transmitted to the outside of the cleaning device body 110 through the third opening 19611. A process in which the topography detection assembly 196 receives an external signal of the cleaning device body 110 is opposite to the above process. The external signal of the cleaning device body 110 is a signal from the outside of the cleaning device body 110. For example, when the topography detection assembly 196 is an ultrasonic sensor, the detection signal sent by the topography detection assembly 196 is an ultrasonic signal, and the external signal may be a signal obtained through reflection of the ultrasonic signal.

The transmission channel 1961 may be in a shape of a truncated cone tapering in a direction from the fifth side 117 to the sixth side 118 or in a form of a cylinder. This is not limited herein. The transmission channel 1961 may be integrally molded with the bottom housing of the cleaning device body 110 or may be detachably disposed with the bottom housing of the cleaning device body 110. The transmission channel 1961 is provided, so that the topography detection assembly 196 can be provided inside the cleaning device body 110, to avoid the following case: The topography detection assembly 196 is provided outside the cleaning device body 110 and may be subject to interference from an external factor such as an environment. This reduces an impact of the external factor on a detection result of the topography detection assembly 196 and therefore ensures accuracy of the detection result. The transmission channel 1961 is provided, so that a transmission distance of the signal transmitter of the topography detection assembly 196 is increased, to avoid the following case: The signal transmission distance is too short, leading to a decrease in detection accuracy.

Still refer to FIG. 2 and FIG. 4a and refer to FIG. 20a and FIG. 20d together. FIG. 20a is a side view of a cleaning device according to an embodiment of the present disclosure. FIG. 20d is a side view of a cleaning device according to a fourth embodiment of the present disclosure. The cleaning device 1000 further includes a cover plate 195. The cover plate 195 covers a side of the traveling mechanism 190, where the side faces away from the cleaning device body 110, and covers at least the first guiding wheel 191 and the second guiding wheel 192, so that the first guiding wheel 191 and the second guiding wheel 192 are invisible from an outer side portion of the cleaning device 1000. If the traveling mechanism 190 includes the track 193, an area of a ring formed by the track 193 is substantially the same as an area of the cover plate. The cover plate 195 may detachably cover the side of the traveling mechanism 190, where the side faces away from the cleaning device body 110, so that the cover plate 195 can be detached. This facilitates cleaning and maintenance of the first guiding wheel 191 and the second guiding wheel 192. The cover plate 195 is provided to prevent the first guiding wheel 191 and the second guiding wheel 192 from being eroded under an impact of the water flow. This ensures a service life of the first guiding wheel 191 and a service life of the second guiding wheel 192. In addition, fixed debris can be prevented from entering a region between the first guiding wheel 191 and the track 193 and a region between the second guiding wheel 192 and the track 193 to some extent, so that movement of the traveling mechanism 190 cannot be affected. This avoids problems, for example, obstruction of movement of the traveling mechanism 190, imbalanced movement of the traveling mechanism 190, and increasing noise during movement of the traveling mechanism 190. A side surface of the cover plate 195 faces away from the cleaning device body 110, and the side surface may be a complete plane or a non-complete plane, for example, a grille. This is not limited herein.

In another embodiment, the cover plate 195 may be of an integrated structure or a split structure. When the cover plate 195 is of an integrated structure, the cover plate 195 covers annular space formed by the track 193. When the cover plate 195 is of a split structure, the cover plate 195 may include at least a first sub-cover plate and a second sub-cover plate. The first sub-cover plate covers at least an outer side portion of the first guiding wheel 191, and the second sub-cover plate covers at least an outer side portion of the second guiding wheel 192.

In still another embodiment, when the cleaning device 1000 moves on the travel surface 101, a projection of a contour of the cover plate 195 on the travel surface 101 is within a projection of an outer contour of the track 193 on the travel surface 101. In other words, a width of the projection of the outer contour of the track 193 on each side of the cleaning device 1000 on the travel surface 101 is greater than a width of the projection of the contour of the cover plate 195 on each side of the cleaning device 1000 on the travel surface 101. Based on the above disposition, because the track is flexible, when the side portion of the cleaning device 1000 is in contact with the side wall of the pool or an obstacle, the track 195 serves as a buffer to prevent the cover plate 195 or other components from being damaged because of being in direct contact with the side wall or the obstacle. Certainly, the projection of the outer contour of the track 193 on the travel surface 101 may alternatively be within or flush with the projection of the contour of the cover plate 195 on the travel surface 101. In this case, a first anti-collision part 200 may be provided on the cover plate 195 or other components to reduce damage to the machine caused by collision.

If the second auxiliary cleaning assembly 160 is included, the second auxiliary cleaning assembly 160 may be provided on a side of the cover plate 195, and the side faces away from the traveling mechanism 190. The second auxiliary cleaning assembly 160 is provided on the cover plate 195, so that when the traveling mechanism 190 moves, the traveling mechanism 190 does not affect a flow path and a flow form of liquid sprayed by the second auxiliary cleaning assembly 160.

In some embodiments, the cleaning device 1000 further includes the first anti-collision part 200. There may be one or more first anti-collision parts 200. The first anti-collision part 200 at least partially or completely protrudes from the contour of the cleaning device body 110. For example, the first anti-collision part 200 may be provided on the first side 113 of the cleaning device 1000 and protrudes from a contour of a front side of the cleaning device body 110 or may be provided on the side of the cover plate 195, where the side faces away from the traveling mechanism 190, and/or on a side of the second auxiliary cleaning assembly 160, where the side faces away from the cover plate 195, to protrude from a contour of the side portion of the cleaning device body 110. One or more first anti-collision parts 200 may be provided on a single side. For example, one first anti-collision part 200 is provided at each of a front portion and a rear portion of the cover plate 195 and/or the second auxiliary cleaning assembly 160, to prevent the cleaning device body 110 from being scratched and correct a moving posture of the cleaning device 1000 when the cleaning device 1000 moves along an edge in the target region 100. For example, the following case can be avoided: The traveling mechanism 190 may climb the target side wall because of being in direct contact with the target side wall 1011.

In some embodiments, when the first anti-collision part 200 is provided on the second auxiliary cleaning assembly 160, the first anti-collision part 200 is located at a front portion of the second auxiliary cleaning assembly 160 in the forward direction of the cleaning device 1000, or when the first anti-collision part 200 is provided on the cover plate 195 and on a same side as the second auxiliary cleaning assembly 160, the first anti-collision part 200 is located in front of the second auxiliary cleaning assembly 160 in the forward direction of the cleaning device 1000, so that a possibility that the second auxiliary cleaning assembly 160 is scratched can be reduced. This alleviates abrasion of the second auxiliary cleaning assembly 160 and ensures a service life of the second auxiliary cleaning assembly 160.

In some embodiments, the first anti-collision part 200 includes a roller wheel 201 and a bracket 202. For example, there are two brackets 202 provided on the cover plate 195 and/or the second auxiliary cleaning assembly 160. The two brackets 202 may be spaced from each other in an arrangement direction of the first side 113 and the second side 114 of the cleaning device body 110 or in an arrangement direction of the fifth side 117 and the sixth side 118 of the cleaning device body 110. The roller wheel 201 is rotatably provided between the two brackets 202, so that when the first anti-collision part 200 is in contact with an object, rolling friction can be generated between the roller wheel 201 and a contact surface.

In some embodiments, the cleaning device 1000 further includes the propulsion assembly 180. The propulsion assembly 180 includes a first liquid outlet 181 and a third drive part 182. When the cleaning device 1000 moves in the target region 100, an action force applied to the cleaning device 1000 may include a driving force applied to the cleaning device 1000. The propulsion assembly 180 of the cleaning device 1000 may be closer to the sixth side 118 than the traveling mechanism 190 or provided on a side portion of the traveling mechanism 190. The propulsion assembly 180 may be spaced from the traveling mechanism 190 or may overlap with the traveling mechanism 190. The propulsion assembly 180 is configured to drive the cleaning device 1000 to move in the target region 100. When the cleaning device 1000 is located on the water surface of the target region 100 or suspended in the liquid at a specific depth, the third drive part 182 can drive water to enter the propulsion assembly 180 and be sprayed out through the first liquid outlet 181 to push the cleaning device 1000 to move. The propulsion assembly 180 may be configured to adjust a magnitude and a direction of the driving force applied to the cleaning device 1000. The propulsion assembly 180 may be any component that can provide the driving force. For example, the propulsion assembly 180 may be a propeller. The propeller rotates to apply a driving force to the cleaning device 1000. Under the driving force, the cleaning device 1000 may move on the water surface of the target region 100 or may be suspended and move in the liquid at a specific depth.

In some embodiments, the cleaning device 1000 may include two propulsion assemblies 180. One propulsion assembly 180 is provided on one side of the cleaning device body 110, and the other propulsion assembly 180 is provided on another side of the cleaning device body 110. When the cleaning device needs to make a turn or turn around, power or a direction of each propulsion assembly 180 is adjusted, so that there is a speed difference between the two propulsion assemblies. In this way, the cleaning device can make a turn, turn around, or perform steering. When the cleaning device 1000 moves in the liquid, the cleaning device 1000 may separately adjust the power of the propulsion assemblies 180 on two sides of the cleaning device body 110 to adjust a speed at which the liquid is driven by the propulsion assemblies 180 on two sides of the cleaning device body 110 to move in a preset direction, so that the cleaning device 1000 makes a turn.

In some embodiments, as shown in FIG. 20a, the propulsion assembly 180 includes the first liquid outlet 181 and the third drive part 182. The propulsion assembly 180 is located at a side portion of the cleaning device body 110. The propulsion assembly 180 is higher than the track 193. This is not limited in the present disclosure. The first liquid outlet 181 faces the rear portion of the cleaning device body 110. The third drive part 182 is configured to drive water to be sprayed out through the first liquid outlet 181 to drive the cleaning device 1000 to move. The propulsion assembly includes a first fluid opening and a second fluid opening. When the cleaning device moves forward on the water surface, the second fluid opening serves as a liquid inlet configured to allow water to enter the propulsion assembly, and the first fluid opening serves as a liquid outlet. For example, the first fluid opening is the first liquid outlet 181 configured to allow water to be sprayed out. In contrast, when the cleaning device moves backward on the water surface, the first fluid opening serves as the liquid inlet configured to allow water to enter the propulsion assembly, and the second fluid opening serves as the liquid outlet.

Similar to the second auxiliary cleaning assembly 160, the third drive part 182 may also include a second impeller 1821 and a second drive motor 1822. For more content about the second impeller 1821 and the second drive motor 1822, refer to the first impeller 1621 and the first drive motor 1622.

In some embodiments, the propulsion assembly 180 may communicate with the water spray part 161. The cleaning device 1000 further includes a joining assembly 184. The propulsion assembly 180 further includes a second liquid outlet 183. The second liquid outlet 183 communicates with the water spray part 161 of the second auxiliary cleaning assembly 160 through the joining assembly 184, so that the propulsion assembly 180 communicates with the water spray part 161. The first liquid outlet 181 is located at an end of the propulsion assembly 180, and the end is away from the nozzle 1611. The third drive part 182 is further configured to drive water to enter through the first liquid outlet 181, flow sequentially through the propulsion assembly 180, the joining assembly 184, and the water spray part 161, and be sprayed out through the nozzle 1611.

The joining assembly 184 is connected between the second liquid outlet 183 of the propulsion assembly 180 and the water spray part 161, so that the propulsion assembly 180, the joining assembly 184, and the second auxiliary cleaning assembly 160 sequentially communicate. In some embodiments, the second drive part 162 of the second auxiliary cleaning assembly 160 and the third drive part 182 of the propulsion assembly 180 may be the same drive part. Certainly, the second drive part 162 of the second auxiliary cleaning assembly 160 and the third drive part 182 of the propulsion assembly 180 may alternatively be two different drive parts. When the second drive part 162 and the third drive part 182 are the same drive part, the drive part may be provided inside the propulsion assembly 180, inside the joining assembly 184, inside the second auxiliary cleaning assembly 160, at a joint between the propulsion assembly 180 and the joining assembly 184, at a joint between the joining assembly 184 and the second auxiliary cleaning assembly 160, at an end of the second auxiliary cleaning assembly 160, where the end is away from the joining assembly 184, or at an end of the propulsion assembly 180, where the end is away from the joining assembly 184. The drive part rotates in a first direction to drive water to enter through the first liquid outlet 181, flow sequentially through the propulsion assembly 180, the joining assembly 184, and the water spray part 161, and be sprayed out through the nozzle 1611, to flush off trash on the target bottom wall 1012 and the target side wall 1011 and drive the trash to move close to the debris inlet 1111. The drive part may alternatively rotate in a second direction to drive water to enter through the nozzle 1611, flow sequentially through the water spray part 161, the joining assembly 184, and the propulsion assembly 180, and be sprayed out through the first liquid outlet 181, to drive the cleaning device 1000 to move on the water surface of the target region 100 or may be suspended and move in the liquid at a specific depth. The first direction is opposite to the second direction. When the second drive part 162 and the third drive part 182 are two different drive parts, the third drive part 182 can drive water to flow into the propulsion assembly 180 through the first liquid outlet 181 and flow along the joining assembly 184, and the second drive part 162 can drive the water entering the propulsion assembly 180 to flow to the water spray part 161 and be sprayed out through the nozzle 1611. Two different drive parts are provided, so that a flow rate at which the water enters through the first liquid outlet 181 can be increased, and a speed and pressure of the water sprayed out through the nozzle 1611 can be increased. This improves a flushing effect of the nozzle 1611 on the to-be-cleaned region and a driving effect for driving the trash to move close to the debris inlet 1111, thereby improving the cleaning effect of the cleaning device 1000. The second drive part 162 can further drive water to flow into the water spray part 161 through the nozzle 1611 and flow toward the joining assembly 184 along the water spray part 161. The third drive part 182 can further drive the water entering the water spray part 161 to flow to the propulsion assembly 180 and be sprayed out through the first liquid outlet 181. It should be noted that when the cleaning device 1000 is located on the water surface of the target region 100, the nozzle 1611 of the water spray part 161 is located below the water surface, so that the water can flow into the water spray part 161 through the nozzle 1611 and be sprayed out through the first liquid outlet 181 to drive the cleaning device 1000 to move.

In some embodiments, as shown in FIG. 4a and FIG. 4b, the second auxiliary cleaning assembly 160 extends in a front-back direction of the cleaning device body 110 and is provided on the same side of the cleaning device 1000 as the propulsion assembly 180. The propulsion assembly 180 and the second auxiliary cleaning assembly 160 have a common flow channel, so that the joining assembly 184 between the second auxiliary cleaning assembly 160 and the propulsion assembly 180 can be reduced. This reduces structural complexity of the cleaning device 1000 while the cleaning effect is improved. In addition, according to an actual functional need, the cleaning device may be provided with only the propulsion assembly 180 to implement a propulsion function, or only the second auxiliary cleaning assembly 160 to implement an auxiliary cleaning function, or only the propulsion assembly 180 to implement both the propulsion function and the auxiliary cleaning function, or only the second auxiliary cleaning assembly 160 to implement both the auxiliary cleaning function and the propulsion function.

In some embodiments, as shown in FIG. 20d and FIG. 20e, the propulsion assembly 180 is provided in internal space of the traveling mechanism 190. Specifically, the propulsion assembly 180 may be located between the first guiding wheel 191 and the second guiding wheel 192 that are on the same side. This reduces the structural complexity of the cleaning device 1000. The cover plate 195 of the traveling mechanism 190 may be partially of a hollow structure. The propulsion assembly 180 can be viewed from the outside of the cover plate 195 at a particular viewing angle. Water outside the cleaning device 1000 may enter the internal space of the traveling mechanism 190 from one side of at least a part of the hollow structure (namely, a first hollow structure 1952), flow through the propulsion assembly 180 provided in the internal space of the traveling mechanism 190, and then flow out of the internal space of the traveling mechanism 190 from another side of at least another part of the hollow structure (namely, a second hollow structure 1953), to form a complete fluid path of the propulsion assembly 180. In this embodiment, the third drive part 182 (including the second impeller 1821 and the second drive motor 1822) of the propulsion assembly 180 may alternatively rotate reversely to form two fluid paths in opposite directions. In this case, the propulsion assembly 180 can implement both the propulsion function and the auxiliary cleaning function. Certainly, the third drive part 182 of the propulsion assembly 180 may not rotate reversely, to only play the propulsion function. When the auxiliary cleaning function is not needed, the second auxiliary cleaning assembly 160 may not be provided.

In some embodiments, refer to FIG. 20e and FIG. 20h. FIG. 20e is a side view of a cleaning device according to a fifth embodiment of the present disclosure. FIG. 20h is an exploded view of a part of a side surface of a cleaning device according to an embodiment of the present disclosure. For ease of description, the third drive part 182 is omitted in FIG. 20h. The propulsion assembly 180 includes the third drive part 182. A base 1901 is further provided in the internal space of the traveling mechanism 190. The base 1901 is closer to the interior of the cleaning device body 110 than the propulsion assembly 180. The propulsion assembly 180 may be partially or completely accommodated in space formed by the base 1901. The base 1901 may be provided on a side plate (not shown) on a side of the traveling mechanism 190, and the side is close to the cleaning device body 110. However, this is not limited thereto. In some embodiments, refer to FIG. 20f and FIG. 20h. FIG. 20f is a side view of a cleaning device according to a sixth embodiment of the present disclosure. The cleaning device 1000 is further provided with a flow channel baffle plate 1902. The flow channel baffle plate 1902 is closer to the exterior of the cleaning device body 110 than the propulsion assembly 180. The flow channel baffle plate 1902 may be fixedly or detachably connected to the base 1901 and form at least a part of a fluid flow channel of the propulsion assembly 180 together with the base 1901. The flow channel baffle plate 1902 may be provided on a side surface of the cover plate 195, and the side surface faces the cleaning device body 110. When the cover plate 195 covers the traveling mechanism 190, the base 1901 and the flow channel baffle plate 1902 together form at least a part of the fluid flow channel of the propulsion assembly 180. When the cover plate 195 is detached, the base 1901 and the propulsion assembly 180 are accessible, and the user can clean the propulsion assembly 180. The flow channel of the propulsion assembly 180 is limited to limit a direction in which water flows through the propulsion assembly 180. This increases operation effectiveness of the propulsion assembly 180.

In some embodiments, the side surface of the cover plate 195 faces away from the cleaning device body 110, and the side surface is further provided with an additional baffle plate 1951. Two ends of the additional baffle plate 1951 are both connected to the cover plate 195. For example, one end of the additional baffle plate 1951 is fixed to an upper edge of the cover plate 195, and the other end is fixed to a lower edge of the cover plate 195. The additional baffle plate 1951 and the cover plate 195 may be integrally molded or may be detachably connected. In a longitudinal direction of the cover plate 195, the additional baffle plate 1951 may cover a surface of the cover plate 195 as a whole or may be embedded in the cover plate 195. In addition, the additional baffle plate 1951 may be provided at a position corresponding to the propulsion assembly 180 to shield and protect the propulsion assembly 180. The additional baffle plate 1951 may be of any shape, including, but not limited to, a circle, a triangle, a polygon, and the like. A structure of the additional baffle plate 1951 may be solid or partially hollow. This is not limited herein.

In some embodiments, one or more anti-collision strips 19512 are further provided on the additional baffle plate 1951. The anti-collision strip 19512 protrudes from the additional baffle plate 1951 and may be provided at any easily accessible position on the additional baffle plate 1951, to prevent a surface of the additional baffle plate 1951 from being scratched. In a length direction of the additional baffle plate 1951, a length of the anti-collision strip 19512 may extend across the additional baffle plate 1951, and the anti-collision strip 19512 may be made of any friction-resistant material. This is not limited herein. In one embodiment, as shown in FIG. 20d, the cover plate 195 is provided with the first hollow structure and the second hollow structure. In the forward direction of the cleaning device, the first hollow structure is located in front of the second hollow structure, and the first hollow structure and the second hollow structure are arranged on two sides of the additional baffle plate. When the cleaning device moves on the water surface, the first hollow structure serves as a water inlet of the propulsion assembly, and the second hollow structure serves as a water outlet of the propulsion assembly. The motor of the propulsion assembly rotates in a forward direction, and the water sequentially passes through the first hollow structure, a cavity formed between the base 1901 and the cover plate 195, and the propulsion assembly, and is finally discharged from the cleaning device through the second hollow structure, to apply a forward thrust to the cleaning device to drive the cleaning device to move on the water surface. If the side wall needs to be flushed underwater, the motor of the propulsion assembly rotates in a reverse direction. In this case, the first hollow structure serves as the water outlet, and the second hollow structure serves as the water inlet. Liquid enters the cavity between the base and the baffle plate through the second hollow structure, flows through the propulsion assembly, is finally discharged through the first hollow structure, and is sprayed out through the nozzle 1611.

In an embodiment, each of the first hollow structure and the second hollow structure may be a grille, a hole, an opening, or the like. Each of the first hollow structure and the second hollow structure is a grille and can shield the propulsion assembly to some extent while water can flow through the first hollow structure and the second hollow structure.

In some embodiments, the additional baffle plate 1951 is further provided with one or more second anti-collision parts 19511 partially or completely protruding from the additional baffle plate 1951, that is, partially or completely protruding from the contour of the side portion of the cleaning device body 110, to prevent the additional baffle plate 1951 from being scratched. If the first anti-collision part 200 is provided on the side of the cover plate 195, where the side faces away from the traveling mechanism 190, a horizontal distance over which the second anti-collision part 19511 protrudes from the contour of the side portion of the cleaning device body 110 is less than or equal to a horizontal distance over which the first anti-collision part 200 protrudes from the contour of the side portion of the cleaning device body 110, to prevent the second anti-collision part 19511 from greatly protruding, so that the second anti-collision part 19511 is less likely to be centrally hit. This reduces a possibility of damage to the second anti-collision part 19511. A structure of the second anti-collision part 19511 may be similar to that of the first anti-collision part 200, and a size of the second anti-collision part 19511 may be different from that of the first anti-collision part 200. This is not limited herein. In a vertical direction, the second anti-collision part 19511 may be provided at a position on the additional baffle plate 1951, and the position is close to the fifth side 117. In this way, when there is a boundary with a slope in the target region 100, for example, a circular-arc-shaped boundary, a possibility that the additional baffle plate 1951 is scratched is reduced.

In some embodiments, as shown in FIG. 20a, the cleaning device 1000 further includes a speed reduction part 185. The speed reduction part 185 is provided on the propulsion assembly 180 and configured to reduce a moving speed of the cleaning device 1000. In some embodiments, the speed reduction part 185 may be connected to the second drive motor 1822 of the third drive part 182 of the propulsion assembly 180. The speed reduction part 185 is configured to reduce power of the third drive part 182 when the cleaning device 1000 cleans the water surface of the target region 100, to reduce a driving force of the third drive part 182, so that a flow rate at which water flows into the propulsion assembly 180 is reduced, and a flow speed and a thrust of water sprayed out through the first liquid outlet 181, enabling the moving speed of the cleaning device 1000 to be reduced. In this way, the following case can be avoided: A splash is so large that the splash is splashed on a side of the target region 100. In addition, the following case can be avoided: Trash is pushed away from the working region of the debris inlet 1111 due to an excessively high speed at which the cleaning device 1000 moves on the water surface. This improves the cleaning effect of the cleaning device 1000.

In some embodiments, the speed reduction part 185 may be a speed reduction baffle plate. The speed reduction baffle plate may be provided at the first liquid outlet 181. The speed reduction baffle plate is configured to adjust a flow area of the first liquid outlet 181 to adjust the flow speed and the thrust of the water sprayed out through the first liquid outlet 181, to adjust the moving speed of the cleaning device 1000.

In some embodiments, the speed reduction part 185 may be a gear reducer, a worm reducer, a cycloidal reducer, a harmonic drive reducer, or the like. However, this is not limited thereto.

In some embodiments, refer to FIG. 21 to FIG. 23. FIG. 21 is a sectional view of a cleaning device according to another embodiment of the present disclosure. FIG. 22 is an enlarged view of a portion B in FIG. 21. FIG. 23 is a schematic structural view of a filtering box of a cleaning device according to an embodiment of the present disclosure. The cleaning device 1000 further includes the main drive pump 210. The opening 121 is formed on the filtering box 120. The opening 121 may communicate with the debris inlet 1111, for example, the first debris inlet 1111a. The filtering box 120 is provided with a filtering surface 123. The first accommodating cavity 111 is provided with a first liquid discharge opening 1112. The debris inlet 1111, the filtering box 120, and the first liquid discharge opening 1112 are in fluid communication. The main drive pump 210 is configured to drive water to flow into the filtering box 120 through the debris inlet 1111, flow through the filtering surface 123 of the filtering box 120, and then flow out of the first accommodating cavity 111 through the first liquid discharge opening 1112. The water flowing into the filtering box 120 through the debris inlet 1111 contains trash. The trash remains in the filtering box 120 after being filtered out by the filtering box 120, and the liquid flows through the filtering surface 123 of the filtering box 120 to the first liquid discharge opening 1112 to be discharged from the first accommodating cavity 111.

The main drive pump 210 can provide a specific suction force, so that a negative pressure zone is formed close to the first debris inlet 1111a and the opening 121. In this way, liquid and trash in the working region of the first debris inlet 1111a are sucked into the filtering box 120. Because the filtering box 120 is provided with the filtering surface 123, the liquid can flow to the first liquid discharge opening 1112 through the filtering surface 123 to be discharged from the first accommodating cavity 111, and the trash remains in the filtering box 120, so that the trash is separated from the liquid. The first auxiliary cleaning assembly 150 guides the trash on the water surface of the target region 100 and/or the trash suspended in the liquid of the target region 100 to the working region of the debris inlet 1111. For details about an operation principle that the main drive pump 210 drives the water to flow into the filtering box 120 and be discharged, refer to the above embodiment. Details are not described herein again.

The filtering surface 123 includes a first filtering surface 1231, a second filtering surface 1232, a third filtering surface 1233, and a fourth filtering surface 1234. Optionally, the filtering surface 123 further includes a fifth filtering surface 1235. The first filtering surface 1231, the second filtering surface 1232, the fourth filtering surface 1234, and the third filtering surface 1233 are sequentially connected end to end to form filtering portions on sides of the filtering box 120. The fifth filtering surface 1235 forms a filtering portion at the bottom of the filtering box 120. The first filtering surface 1231 is located on a side of the filtering surface 123, and the side is close to the first side 113 of the cleaning device body 110. The second filtering surface 1232 is located on a side of the filtering surface 123, and the side is close to the third side 115 of the cleaning device body 110. The third filtering surface 1233 is located on a side of the filtering surface 123, and the side is close to the fourth side 116 of the cleaning device body 110. The fourth filtering surface 1234 is located on a side of the filtering surface 123, and the side is close to the second side 114 of the cleaning device body 110. The opening 121 is provided over the first filtering surface 1231. The fourth filtering surface 1234 faces the main drive pump 210.

The filtering box 120 is further provided with a filtering box opening 122. The filtering box opening 122 is located at the top of the filtering box 120. The filtering box opening 122 may communicate with the opening 121. Certainly, the filtering box opening 122 may be spaced from the opening 121. The sixth side 118 of the cleaning device body 110 is provided with a second opening 118a. The second opening 118a corresponds to the filtering box opening 122. The cleaning device 1000 further includes a filtering box cover 124. The filtering box cover 124 is provided on the cleaning device body 110 and configured to allow the second opening 118a and the filtering box opening 122 to be opened and closed. When the cleaning device 1000 finishes cleaning, the filtering box cover 124 may be opened to remove the filtering box 120 to clean the filtering box 120. The fifth filtering surface 1235 is provided at the bottom of the filtering box 120, so that when the filtering box 120 is cleaned by using a flushing tool that outputs liquid, for example, a water gun, trash at the bottom of the filtering box 120 can be more smoothly flushed off by using the flushing tool that outputs liquid, for example, a water gun. This improves efficiency and an effect in cleaning the filtering box 120.

The opening 121 of the filtering box 120 is closer to the first debris inlet 1111a than the first filtering surface 1231. Optionally, two openings 121 are provided over the first filtering surface 1231. One opening 121 is configured to be connected to the first debris inlet 1111a, and the other opening 121 is configured to be connected to the second debris inlet 1111b through other connection portions. Optionally, one opening 121 is provided over the first filtering surface 1231 and configured to be connected to the first debris inlet 1111a, one opening 121 is also provided to the fifth filtering surface 1235, and the opening 121 is closer to the first filtering surface 1231 than the fifth filtering surface 1235 and configured to be connected to the second debris inlet 1111b. The fourth filtering surface 1234 faces the main drive pump 210. A liquid inlet 211 of the main drive pump 210 is in fluid communication with the first liquid discharge opening 1112. The fourth filtering surface 1234 opposite to the first filtering surface 1231 faces the main drive pump 210, so that the opening 121 can face the main drive pump 210, and negative pressure is gradually increased in a direction from the opening 121 to the fourth filtering surface 1234. In this way, more liquid flowing into the filtering box 120 can be driven by the negative pressure to flow to the fourth filtering surface 1234, to more quickly flow out through the first liquid discharge opening 1112. This improves filtration efficiency of the filtering box 120.

There is a gap between the filtering box 120 and an inner wall of the first accommodating cavity 111. When the main drive pump 210 operates, negative pressure is generated in the whole filtering box 120. However, because the fourth filtering surface 1234 faces the main drive pump 210, most of the liquid flowing into the filtering box 120 directly flows through the fourth filtering surface 1234 to the first liquid discharge opening 1112 and is discharged, and the remaining liquid flows through the first filtering surface 1231, the second filtering surface 1232, and the third filtering surface 1233 to the gap between the filtering surface 123 that the liquid flows through and the inner wall of the first accommodating cavity 111, flows together to a gap between the fourth filtering surface 1234 and the inner wall of the first accommodating cavity 111 through the gap between the filtering surface 123 that the liquid flows through and the inner wall of the first accommodating cavity 111, and is discharged through the first liquid discharge opening 1112.

Because the fourth filtering surface 1234 faces the main drive pump 210, most of the liquid flowing into the filtering box 120 flows through the fourth filtering surface 1234. Consequently, the fourth filtering surface 1234 is more likely to be clogged by trash. When the fourth filtering surface 1234 is clogged, the liquid flowing into the filtering box 120 can also flow to the first liquid discharge opening 1112 through the first filtering surface 1231, the second filtering surface 1232, and the third filtering surface 1233. The first filtering surface 1231, the second filtering surface 1232, and the third filtering surface 1233 are provided, so that when the fourth filtering surface 1234 is clogged, the liquid flowing into the filtering box 120 can also be smoothly discharged through the first filtering surface 1231, the second filtering surface 1232, and the third filtering surface 1233. This avoids accumulation of liquid in the filtering box 120 due to clogging of the filtering box 120.

To improve a filtration effect of the filtering box 120 and ensure that the liquid flowing into the filtering box 120 can also be smoothly discharged through the first filtering surface 1231, the second filtering surface 1232, and the third filtering surface 1233 when the fourth filtering surface 1234 is clogged, a mesh count of each of the first filtering surface 1231, the second filtering surface 1232, the third filtering surface 1233, and the fourth filtering surface 1234 may be optimized. It may be understood that a mesh count refers to a quantity of holes of the filtering mesh within a one-inch (25.4 mm) length. A higher mesh count indicates a higher filtration level, a smaller trash particle that can be filtered out, and a better filtration effect.

In some embodiments, a mesh count of a filtering mesh of the first filtering surface 1231 may range from 25 to 35, and a mesh count of a filtering mesh of each of the second filtering surface 1232, the third filtering surface 1233, and the fourth filtering surface 1234 may range from 50 to 120. For example, the mesh count of the filtering mesh of the first filtering surface 1231 may be 30, but this is not limited thereto, and the mesh count of the filtering mesh of each of the second filtering surface 1232, the third filtering surface 1233, and the fourth filtering surface 1234 may be 60 or 100, but this is not limited thereto. The mesh count of the filtering mesh of the first filtering surface 1231 is within a range of 25 to 35, and the mesh count of the filtering mesh of each of the second filtering surface 1232, the third filtering surface 1233, and the fourth filtering surface 1234 is within a range of 50 to 120, that is, the mesh count of the first filtering surface 1231 is less than the mesh count of each of other filtering surfaces 123, so that the filtration effect and the filtration efficiency can be ensured. In addition, it can be ensured that when the second filtering surface 1232, the third filtering surface 1233, and the fourth filtering surface 1234 are clogged, the liquid flowing into the filtering box 120 can also be smoothly discharged through the first filtering surface 1231. Certainly, as described above, most of the dust-loaded liquid flows to the first liquid discharge opening 1112 through the fourth filtering surface 1234, and the mesh count of each of the first filtering surface 1231, the second filtering surface 1232, and the third filtering surface 1233 is set to be less than the mesh count of the fourth filtering surface 1234, so that when the fourth filtering surface 1234 is clogged, flow smoothness of the entire working water can be ensured.

In an embodiment, each filtering surface 123 includes an inner filtering mesh 123a and an outer filtering mesh 123b. Each of the first filtering surface 1231, the second filtering surface 1232, the third filtering surface 1233, and the fourth filtering surface 1234 includes an inner filtering mesh 123a and an outer filtering mesh 123b. The filtering box 120 may include only one filtering box 120, and the inner filtering mesh 123a and the outer filtering mesh 123b are stacked on the same filtering box 120, or the inner filtering mesh 123a is provided on an inner side of a side wall of the same filtering box 120, and the outer filtering mesh 123b is provided on an outer side of the side wall of the same filtering box 120. Certainly, the filtering box 120 may alternatively include two filtering boxes 120, that is, the filtering box 120 includes an inner filtering box 120 and an outer filtering box 120. The inner filtering box 120 is sleeved inside the outer filtering box 120. The inner filtering mesh 123a is provided on the inner filtering box 120, and the outer filtering mesh 123b is provided on the outer filtering box 120. In some embodiments, each filtering surface 123 may include only one layer of filtering mesh. Certainly, each filtering surface 123 may alternatively include more than two layers of filtering meshes. For example, each filtering surface 123 may include three layers of filtering meshes, four layers of filtering meshes, five layers of filtering meshes, six layers of filtering meshes, or eight layers of filtering meshes. However, this is not limited thereto.

In embodiments of the present disclosure, an example in which each filtering surface 123 includes an inner filtering mesh 123a and an outer filtering mesh 123b is used for description. The inner filtering mesh 123a and the outer filtering mesh 123b are provided, so that the filtering box 120 can filter trash out twice, that is, after the inner filtering mesh 123a performs filtering, the outer filtering mesh 123b performs filtering again. This improves the filtration effect.

The filtering surface 123 may be made of a conventional filtering mesh, for example, braided fabrics or textile fabrics. However, this is not limited thereto.

The filtering surface 123 is provided with a through hole 123c. The through hole 123c is configured to allow the liquid in the filtering box 120 to be discharged. The through hole 123c may be a fiber gap on the filtering surface 123, or the through hole 123c may be formed on the filtering surface 123 by performing stamping, cutting, hot melting, or laser etching on a flexible or rigid plate such as plastic or metal.

To improve the filtration effect of the filtering box 120 and ensure that the filtering surface 123 is not completely clogged, the present disclosure optimizes filtration levels of the first filtering surface 1231, the second filtering surface 1232, the third filtering surface 1233, and the fourth filtering surface 1234. It should be noted that a higher filtration level of the filtering surface 123 indicates a smaller trash particle that can be filtered out and a better filtration effect. For example, a smaller flow area of the through hole 123c on the filtering surface 123 indicates a higher filtration level of the filtering surface 123, a smaller trash particle that can be filtered out, and a better filtration effect, and a larger flow area of the through hole 123c on the filtering surface 123 indicates a lower filtration level of the filtering surface 123, a larger trash particle that can be filtered out, and a poor filtration effect. Certainly, a manner to measure the filtration level of the filtering surface 123 is not limited thereto and may be other manners, provided that a higher filtration level of the filtering surface 123, a smaller trash particle that can be filtered out, and a better filtration effect can be ensured.

In some embodiments, filtration levels of the second filtering surface 1232, the third filtering surface 1233, and the fourth filtering surface 1234 are all greater than a filtration level of the first filtering surface 1231, and filtration levels of the first filtering surface 1231, the second filtering surface 1232, the third filtering surface 1233, and the fourth filtering surface 1234 are all different. Filtration levels of inner filtering meshes 123a of the first filtering surface 1231, the second filtering surface 1232, the third filtering surface 1233, and the fourth filtering surface 1234 may be respectively equal to filtration levels of outer filtering meshes 123b of the first filtering surface 1231, the second filtering surface 1232, the third filtering surface 1233, and the fourth filtering surface 1234, or the filtration levels of the outer filtering meshes 123b of the first filtering surface 1231, the second filtering surface 1232, the third filtering surface 1233, and the fourth filtering surface 1234 may be respectively greater than the filtration levels of the inner filtering meshes 123a of the first filtering surface 1231, the second filtering surface 1232, the third filtering surface 1233, and the fourth filtering surface 1234, so that when the second filtering surface 1232, the third filtering surface 1233, and the fourth filtering surface 1234 are clogged, the liquid flowing into the filtering box 120 can also be smoothly discharged through the first filtering surface 1231. In some embodiments, the filtration levels of the second filtering surface 1232, the third filtering surface 1233, and the fourth filtering surface 1234 are all greater than the filtration level of the first filtering surface 1231, and the filtration level of the inner filtering mesh 123a of the first filtering surface 1231 is equal to the filtration level of the corresponding outer filtering mesh 123b, and the filtration levels of the inner filtering meshes 123a of the second filtering surface 1232, the third filtering surface 1233, and the fourth filtering surface 1234 are all less than the filtration levels of the corresponding outer filtering meshes 123b. In other words, the filtration levels of the second filtering surface 1232, the third filtering surface 1233, and the fourth filtering surface 1234 are all greater than the filtration level of the first filtering surface 1231, the filtration level of the inner filtering mesh 123a of the first filtering surface 1231 is equal to the filtration level of the outer filtering mesh 123b of the first filtering surface 1231, and the filtration levels of the inner filtering meshes 123a of the second filtering surface 1232, the third filtering surface 1233, and the fourth filtering surface 1234 are respectively less than the filtration levels of the outer filtering meshes 123b of the second filtering surface 1232, the third filtering surface 1233, and the fourth filtering surface 1234.

**In** some embodiments, the filtration level of the outer filtering mesh 123b of the first filtering surface 1231 is greater than the filtration level of the inner filtering mesh 123a of the first filtering surface 1231, and the filtration levels of the outer filtering meshes 123b of the remaining filtering surfaces are greater than or equal to the filtration levels of the corresponding inner filtering meshes 123a.

**In** some embodiments, the filtration levels of the second filtering surface 1232, the third filtering surface 1233, and the fourth filtering surface 1234 are all greater than the filtration level of the first filtering surface 1231, the filtration levels of the outer filtering meshes 123b of the first filtering surface 1231, the second filtering surface 1232, and the third filtering surface 1233 are respectively equal to the filtration levels of the inner filtering meshes 123a of the first filtering surface 1231, the second filtering surface 1232, and the third filtering surface 1233, and the filtration level of the outer filtering mesh 123b of the fourth filtering surface 1234 is greater than the filtration level of the inner filtering mesh 123a of the fourth filtering surface 1234.

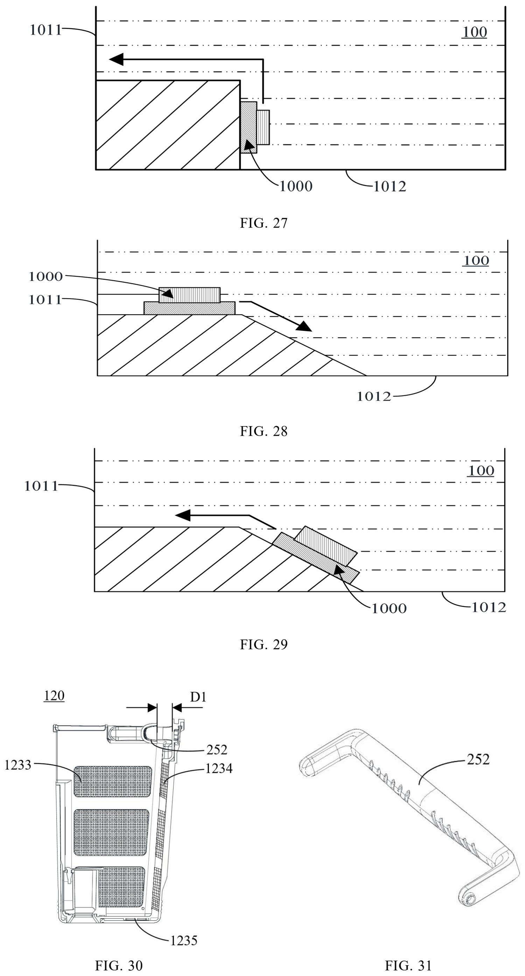

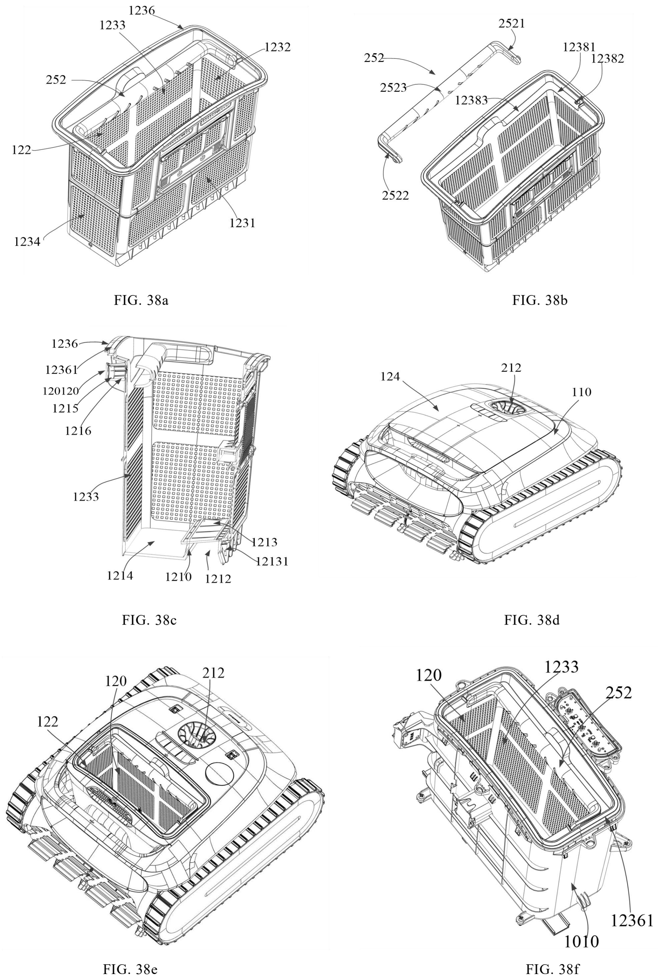

In one embodiment, as shown in FIG. 38a and FIG. 38b, the filtering box 120 is provided in the first accommodating cavity 111, and the first accommodating cavity 111 is provided with the first liquid discharge opening 1112. Side walls of the filtering box 120 include at least a first side wall, a second side wall, and a third side wall that are sequentially connected end to end or more side walls that are sequentially connected end to end. A specific quantity of side walls may be determined based on a shape and a size of the first accommodating cavity 111 of the actual product. For ease of description, an example in which the filtering box includes a first side wall, a second side wall, a third side wall, and a fourth side wall that are sequentially connected end to end is used to describe the structure of the filtering box 120. Herein, it should be noted that, for ease of description, positions of the third filtering surface 1233 and the fourth filtering surface 1234 of the filtering box in FIG. 38a, the later accompanying drawings, and corresponding embodiments are reversed relative to positions of the third filtering surface 1233 and the fourth filtering surface 1234 in FIG. 23 and FIG. 30. Position reversal is only for convenience of description of a sequence of reference numerals of components in the technical solution, and does not have any impact on the substance of the technical solution and does not constitute any adverse limitation on the technical solution. In other words, from the embodiment corresponding to FIG. 38a, the first filtering surface 1231 is located on a side of the filtering surface 123, and the side is close to the first side 113 of the cleaning device body 110. The second filtering surface 1232 is located on a side of the filtering surface 123, and the side is close to the third side 115 of the cleaning device body 110. The third filtering surface 1233 is located on a side of the filtering surface 123, and the side is close to the second side 114 of the cleaning device body 110. The fourth filtering surface 1234 is located on a side of the filtering surface 123, and the side is close to the fourth side 116 of the cleaning device body 110. The third filtering surface 1233 faces the main drive pump 210. Each side wall is provided with a filtering mesh. The first side wall is provided with at least one first filtering mesh to form the first filtering surface 1231. The second side wall is provided with at least one second filtering mesh to form the second filtering surface 1232. The third side wall is provided with at least one third filtering mesh to form the third filtering surface 1233. The fourth side wall is provided with at least one fourth filtering mesh to form the fourth filtering surface 1234. The side walls of the filtering box, all filtering surfaces, and the bottom of the filtering box form a first cavity 1214 in an enclosing manner. The filtering box is provided with a filtering box water inlet portion for the debris inlet 1111 of the cleaning device body to communicate with an inner cavity of the filtering box. The liquid is filtered in the filtering box, and the filtered liquid is sucked into the suction assembly through the first liquid discharge opening 1112 and then discharged from the cleaning device through the second liquid discharge opening 212 on the cleaning device body, so that the trash under the water surface or on the water surface is cleaned. There may be one, two, three, or more filtering meshes on each filtering surface. A specific quantity of filtering meshes is not limited and chosen based on an actual requirement.

As shown in FIG. 38c, the filtering box water inlet portion includes at least a second inlet 1212. The second inlet 1212 is configured to allow the first cavity 1214 of the filtering box to communicate with the debris inlet 111. In an embodiment, the third filtering surface 1233 is close to, faces, or is adjacent to the first liquid discharge opening 1112, so that the liquid in the filtering box can flow through the third filtering surface 1233, be quickly sucked into the suction assembly through the first liquid discharge opening 1112, and be discharged from the cleaning device through the second liquid discharge opening 212.

In an embodiment, the filtration levels of the first filtering surface, the second filtering surface, the third filtering surface, and the fourth filtering surface are all the same, that is, sizes of filtering holes on filtering meshes of filtering surfaces are the same. In another embodiment, the filtration level of the third filtering surface is lower than the filtration levels of the first filtering surface, the second filtering surface, and the fourth filtering surface, so that the third filtering surface performs coarse filtration for filtering out large-sized particles or trash, and the other three filtering surfaces perform fine filtration for filtering out small-sized particles or trash. Because the second liquid discharge opening 212 is provided at the top of the cleaning device body 100, liquid is constantly discharged through the second liquid discharge opening 212, and the liquid applies a counter-thrust to the cleaning device, so that the bottom of the cleaning device can be tightly attached to the side wall of the pool, and the cleaning device can move on the side wall of the pool. The third filtering surface is configured to perform coarse filtration. When the other filtering surfaces are clogged, under the action of the suction assembly, the liquid in the filtering box 120 can still smoothly enter the gap between the filtering box 120 and the first accommodating cavity 111 through the third filtering surface and then be sucked away by the suction assembly through the first liquid discharge opening 1112, to ensure an amount of water inflow required by the suction assembly. In this way, when the cleaning device climbs a slope or moves on a side wall in the pool, the cleaning device can still move on the side wall or climb the wall or the slope even if the other filtering surfaces are clogged, to prevent the cleaning device from falling off from the side wall. Alternatively, in another embodiment, a part of the third filtering mesh of the third filtering surface 1233 is configured to perform coarse filtration, and a part of the third filtering mesh is configured to perform fine filtration. Similarly, when the third filtering mesh for fine filtration is clogged, under the action of the suction assembly, the liquid in the filtering box 120 enters the gap between the filtering box 120 and the first accommodating cavity 111 through the part of the third filtering mesh for coarse filtration and is sucked away by the suction assembly. In other embodiments, the filtration levels of the filtering meshes may be the same or different. This is not specifically limited herein. The filtration levels of the filtering meshes may be chosen based on an actual requirement.

For example, the first filtering surface and the third filtering surface are configured to perform coarse filtration and have the same filtration level, and the second filtering surface and the fourth filtering surface are configured to perform fine filtration and have the same filtration level. Alternatively, a part of the first filtering mesh or the entire first filtering mesh of the first filtering surface 1231 is configured to perform coarse filtration, a part of the third filtering mesh or the entire third filtering mesh of the third filtering surface 1233 is configured to perform coarse filtration, and the filtering meshes of the second filtering surface 1232 and the fourth filtering surface 1234 are configured to perform fine filtration, or the filtering meshes of the second filtering surface 1232, the third filtering surface 1233, and the fourth filtering surface 1234 are configured to perform fine filtration.

In an embodiment, as shown in FIG. 38c, the filtering box water inlet portion is provided at the bottom of the filtering box and includes a first extension portion 1210 that extends toward the first cavity 1214 of the filtering box 120. The first extension portion 1210 has a hollow channel with an opening at each end. An opening at an outer side end of the hollow channel serves as a second inlet 1212, communicates with the second debris inlet 1111b, and is used in cleaning the bottom wall of the pool or the side wall of the pool. An opening at an inner side end of the hollow channel communicates with the first cavity 1214 of the filtering box 120. The hollow channel is configured to guide liquid entering through the second debris inlet 1111b to the filtering box, to ensure that the liquid in the pool smoothly flows into the filtering box.

When the cleaning device cleans the bottom wall of the pool or the side wall of the pool in water, the hollow channel or the second inlet 1212 of the first extension portion 1210 needs to be in an on state for the liquid in the pool to flow into the filtering box. However, in some cases, the hollow channel does not need to be opened, or the second inlet 1212 does not need to communicate with the first cavity 1214 of the filtering box 120. As shown in FIG. 38c, a movable first blocking part 1213 is provided on the first extension portion 1210 or an inner wall of the filtering box. The first blocking part 1213 moves in the first cavity 1214 of the filtering box 120, so that the first blocking part 1213 blocks the opening at the inner side end of the hollow channel or is opened to expose the opening at the inner side end of the hollow channel, enabling the second inlet 1212 to communicate with or dis-communicate with the first cavity 1214 of the filtering box 120. The first blocking part 1213 may block the opening at the inner side end of the first extension portion 1210 or the opening at the outer side end of the first extension portion 1210, which may be designed based on an actual requirement.

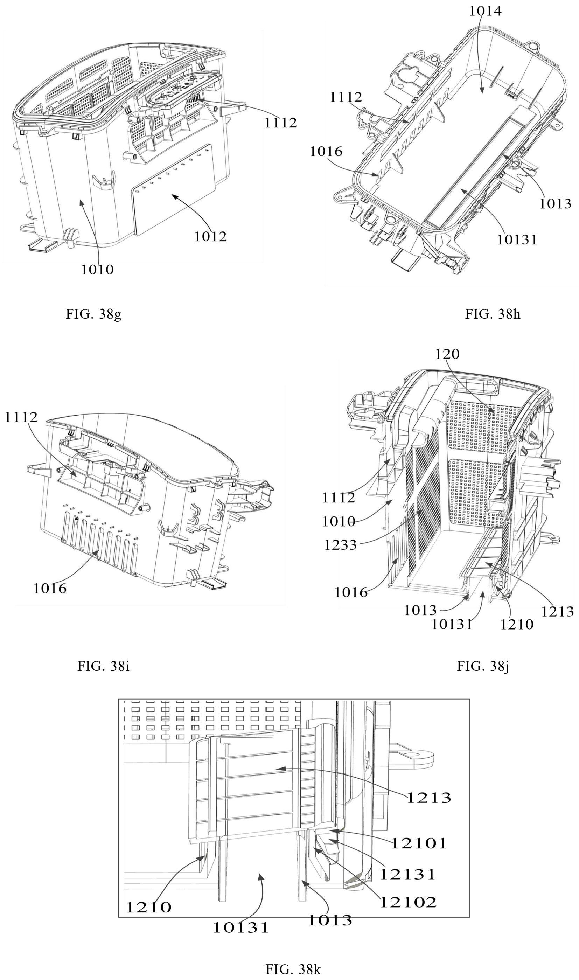

A drive assembly may be provided to drive the first blocking part 1213 to move, so that the first blocking part 1213 blocks the second inlet 1212 or is opened to expose the second inlet 1212. For example, when the bottom wall or the side wall of the pool needs to be cleaned, the second inlet 1212 needs to communicate with the first cavity 1214 of the filtering box. In this case, a control unit controls the drive assembly to drive the first blocking part 1213 to move, so that the second inlet 1212 or the hollow channel is opened. In contrast, when the second inlet 1212 does not need to communicate with the first cavity 1214 of the filtering box, the control unit controls the drive assembly to drive the first blocking part to move, so that the second inlet 1212 or the hollow channel is closed. Alternatively, the first blocking part is made of a soft rubber material to form a soft rubber sealing part. When the suction assembly is turned on, negative pressure is generated in the first cavity 1214 of the filtering box 120, and the soft rubber sealing part is opened under the negative pressure, so that the liquid in the pool enters the filtering box through the second inlet 1212. As shown in FIG. 38k, one end of the soft rubber sealing part is mounted on the wall of the filtering box or on the first extension portion 1210.

An example in which the soft rubber sealing part is provided on the first extension portion 1210 is used. As shown in FIG. 38k, one side of the opening at the inner side end of the first extension portion 1210 has a first outer edge 12101. A side wall of the first extension portion 1210 is connected to the first outer edge 12101, and the side wall serves as a first outer wall 12102. The first outer edge 12101 may be molded on or mounted on the side wall of the filtering box. A plurality of connection posts are provided on one end of the soft rubber sealing part. The end of the soft rubber sealing part laps over the first outer edge 12101. The plurality of connection posts extend downward through the first outer edge 12101. An end portion of each connection post is provided with a position-limiting cap 12131 configured to limit the end of the soft rubber sealing part on the first extension portion 1210. The other end of the soft rubber sealing part rotates under the negative pressure of the suction assembly, so that the hollow channel or the second inlet 1212 is opened. Under withdrawal of the negative pressure of the suction assembly or under gravity of liquid in the filtering box (mentioned above), the other end of the soft rubber sealing part rotates again, so that the hollow channel or the second inlet 1212 is closed.

As shown in FIG. 38j or FIG. 39e, the first extension portion 1210 is provided close to or adjacent to the first side wall. To facilitate mounting of the position-limiting cap 12131 on the connection post, an outer wall of the first side wall of the filtering box 120 is provided with a first avoidance region that is recessed inward, to expose both the first outer edge 12101 and the first outer wall 12102 of the first extension portion 1210, so that the connection post passes through the first outer edge 12101 and then is exposed outside the filtering box. In this way, the position-limiting cap can be mounted on the connection post from the outside of the filtering box. The first outer wall 12102 of the first extension portion 1210 may be molded on the filtering box as a part of the side wall of the filtering box, or the first outer wall 12102 of the first extension portion 1210 may be detachably mounted on the side wall of the filtering box, or the entire first extension portion 1210 is molded on the filtering box as a part of the filtering box.

As shown in FIG. 38h, the cleaning device body is provided with a filtering box cavity 1010. The filtering box cavity 1010 has a second cavity 1014. The second cavity may be the first accommodating cavity 111 or a part of the first accommodating cavity 111. The filtering box 120 is mounted in the second cavity 1014 of the filtering box cavity 1010. The filtering box cavity 1010 includes a filtering box cavity water inlet portion. The filtering box cavity water inlet portion is provided with a second water inlet 10131. The second water inlet 10131 passes through the bottom of the cleaning device body and communicates with the outside as the second debris inlet 1111b. It should be noted that the filtering box cavity 1010 may be a separate component mounted in the cleaning device body. Certainly, the filtering box cavity 1010 may be molded on the cleaning device body directly as a part of the cleaning device body.

As shown in FIG. 38j, when the filtering box cavity water inlet portion is provided with the first extension portion 1210, a second extension portion 1013 is provided at a corresponding position on the bottom of the filtering box cavity 1010, so that the liquid in the pool can smoothly enter the filtering box 120. The second extension portion 1013 has a hollow channel with an opening at each end. An opening at an outer side end of the second extension portion 1013 serves as the second debris inlet 1111b. The second extension portion 1013 extends into the first extension portion 1210, and an opening at an inner side end of the second extension portion 1013 is higher than or flush with the opening at the inner side end of the first extension portion 1210, so that the liquid in the pool can directly enter the filtering box through the second extension portion 1013 and flow in a direction consistent with a flow direction of water to be filtered by the filtering box, to ensure that the liquid can enter the filtering box 120. Certainly, the opening at the inner side end of the second extension portion 1013 may alternatively be lower than the opening at the inner side end of the first extension portion 1210. However, in a path in which the liquid enters the filtering box sequentially through the opening at the inner side end of the second extension portion 1013 and the opening at the inner side end of the first extension portion 1210, because the opening at the inner side end of the second extension portion 1013 is lower than the opening at the inner side end of the first extension portion 1210, a first gap is formed between the first extension portion 1210 and the second extension portion 1013. In this case, a part of the liquid necessarily flows into the first gap and then directly flows into the filtering box cavity without entering the first cavity 1214 of the filtering box for filtration. Consequently, the filtration effect is reduced. Alternatively, a sealing member is provided at the first gap, so that a part of the liquid cannot flow into the first gap, and all of the liquid entering the second extension portion 1013 can enter the filtering box.

As shown in FIG. 38i, FIG. 38g, and FIG. 41, the first liquid discharge opening 1112 is provided on a side wall of the filtering box cavity 1010. The first liquid discharge opening 1112 communicates with the main drive pump 210 of the suction assembly. The filtered water in the filtering box enters the filtering box cavity 1010, then enters the suction assembly through the first liquid discharge opening 1112 on the filtering box cavity 1010, and is finally discharged from the cleaning device through the second liquid discharge opening 212. The suction assembly is located in the cleaning device body but outside the filtering box cavity 1010, and is close to or adjacent to the first liquid discharge opening 1112.

In an embodiment, refer to FIG. 38a, FIG. 38b, and FIG. 40f. FIG. 40f is a schematic structural view of a second filtering apparatus according to an embodiment of the present disclosure. A side wall of the filtering box 120 is close to the first liquid discharge opening 1112, namely, the third side wall close to the second side 114 of the cleaning device body 110. A part of the third side wall of the filtering box 120 corresponds to the first liquid discharge opening 1112, and the part is further provided with a second filtering apparatus 12029. The second filtering apparatus 12029 may be provided on a side of the third side wall of the filtering box 120, and the side is close to the first liquid discharge opening 1112, so that the liquid in the pool enters the filtering box 120 through the second debris inlet 1111b and the second inlet 1212, is filtered by the second filtering apparatus 12029 again after being filtered by the filtering surface of the filtering box 120, enters the filtering box cavity 1010 and then enters the suction assembly through the first liquid discharge opening 1112 on the filtering box cavity 1010, and is finally discharged through the second liquid discharge opening 212 of the cleaning device. In this way, liquid in the swimming pool can be further filtered. The second filtering apparatus 12029 includes a filtering assembly (not shown in the figure) and a fixing frame 120191. The fixing frame 120291 is square or rectangular. Certainly, the fixing frame 120291 may alternatively be in other appropriate shapes such as a circle or a polygon. This is not limited in the present disclosure. A middle part of the fixing frame 120291 is provided with a groove. The filtering assembly may be detachably or non-detachably provided in the groove at the middle part of the fixing frame. A bottom surface of the groove is of a cross-shaped frame structure. Certainly, this is not limited in the present disclosure. Each of four corners of the fixing frame 12091 is provided with a detachable fixing component. The third side wall of the filtering box 120 is provided with a detachable fixing member correspondingly connected to the detachable fixing member. For example, each of four corners of the fixing frame 12091 is provided with an opening, and a buckle is provided at a corresponding position on the third side wall of the filtering box 120. The buckle is detachably connected to the opening, so that the fixing frame is fixedly connected to the filtering box. The detachable connection in the present disclosure is not limited thereto. In addition, the filtering assembly may include a HEPA (HEPA) filtering member. This is not limited in the present disclosure.

As shown in FIG. 38a, the top of the filtering box is provided with a filtering box opening 122. Correspondingly, the top of the filtering box cavity 1010 is provided with an opening for the filtering box to be placed into the filtering box cavity 1010 or be removed from the filtering box cavity 1010. As shown in FIG. 38e and FIG. 38d, the housing of the cleaning device body is provided with an access opening. The housing is provided with a filtering box cover 124. The filtering box cover 124 is flippably or movably provided at the access opening on the housing for covering the access opening or being opened to expose the access opening, so that the filtering box can be removed from the filtering box cavity 1010 or the cleaning device body.

In an embodiment, to remove the filtering box 120 from the filtering box cavity 1010 of the cleaning device body and place the filtering box 120 into the filtering box cavity 1010 of the cleaning device body, as shown in FIG. 38a and FIG. 38b, the filtering box 120 is provided with a movable second handle 252. The second handle 252 has a working state and a stored state. The second handle 252 is in the stored state when the filtering box 120 does not need to be removed or placed. As shown in FIG. 38a, the second handle 252 is stored in the filtering box 120 and is not higher than the top opening of the filtering box or not higher than the access opening. When the filtering box needs to be removed or placed, the second handle 252 is rotated, so that the second handle 252 extends out of the top opening of the filtering box or the access opening, enabling the filtering box to be lifted. In this way, the filtering box can be removed or placed. In an embodiment, as shown in FIG. 38b, each end of the second handle 252 is provided on an inner side wall of the filtering box through a connection shaft 12382. Preferably, two connection shafts 12382 are respectively provided on two opposite inner side walls of the filtering box. For example, the two connection shafts 12382 are provided on the second side wall and the fourth side wall. The third side wall faces the first liquid discharge opening 1112. Alternatively, the second handle 252 may be provided on the side wall of the filtering box in other rotatable or flippable connection manners. This is not limited herein.

When the second handle 252 is in the stored state, the second handle 252 is higher than the second filtering surface 1232, the third filtering surface 1233, the fourth filtering surface 1234, and the first filtering surface 1231, so that when the handle is in the stored state, the liquid can pass through the third filtering surface 1233 on the third side wall in a cleaning process of the cleaning device without being affected by the second handle 252. In this way, the liquid is filtered in the filtering box without passing through the second handle 252, and the second handle 252 does not prevent the liquid from flowing to various filtering surfaces.

Further, when the second handle 252 is in the stored state, the filtering box more stably supports the second handle 252, so that in the cleaning process of the cleaning device, the second handle 252 does not shake or shakes slightly. As shown in FIG. 38b, each of the two opposite inner side walls of the filtering box is provided with a first stepped surface 12381. The second handle 252 includes a first connection piece 2521, a second connection piece 2522, and a lifting piece 2523 for connecting the first connection piece 2521 to the second connection piece 2522. Each of the first connection piece 2521 and the second connection piece 2522 is connected to the inner side wall of the filtering box 120 through one connection shaft 12382 and laps over one first stepped surface to stably and fixedly support the second handle 252. The lifting piece 2523 is suspended in the inner cavity of the filtering box, so that the user can hold the lifting piece 2523 to lift the handle to remove or place the filtering box.

When the second handle 252 is in the stored state, and the filtering box cover 124 covers the access opening, an inner wall of the filtering box cover 124 may be close to, adjacent to, or in contact with a top surface of the second handle 252 to limit the top of the second handle 252, so that the second handle 252 does not move or shake in the stored state under limitation of the filtering box cover 124 and the first stepped surface.

When the second handle 252 is in the working state, the filtering box cover 124 is opened, the user rotates the second handle 252, and at least a part of the lifting piece 2523 of the second handle 252 extends out of the filtering box opening 122 of the filtering box 120 or further extends out of the access opening of the housing of the cleaning device body, so that the user can lift the filtering box to remove or place the filtering box.

In an embodiment, as shown in FIG. 38b, two first stepped surfaces 12381 are respectively provided on inner walls of the second side wall and the fourth side wall, and the lifting piece 2523 of the second handle 252 is provided close to or adjacent to the third side wall. An inner wall of the third side wall of the filtering box 120 is provided with a second stepped surface 12383 for the user to more conveniently hold the lifting piece 2523. Each end of the second stepped surface 12383 is connected to one end of the first stepped surface 12381 adjacent thereto. A first gap exists between the lifting piece 2523 and the second stepped surface 12383 in a direction in which the first side wall faces the third side wall, so that the user can hold the lifting piece 2523 through the first gap to remove the filtering box. Optionally, the second stepped surface 12383 may be lower than the lifting piece 2523 to form avoidance space, so that a hand of the user is located below the bottom of the lifting piece 2523 to hold the lifting piece 2523. Preferably, the second stepped surface 12383 and the first stepped surfaces are all located above the filtering meshes on the side walls of the filtering box on which the second stepped surface 12383 and the first stepped surfaces are located, so that the second handle 252 is provided without affecting the filtration effect of the filtering box.

In an embodiment, to detect whether the filtering box is mounted in position in the filtering box cavity 1010, a detection assembly is further included. The detection assembly includes a detection part and a sensing part. One of the detection part and the sensing part 1215 is provided on the filtering box, and the other is provided on the filtering box cavity 1010 or the cleaning device body. When the filtering box is mounted in the filtering box cavity 1010 or the first accommodating cavity 111, the detection part receives a signal from the sensing part, indicating that the filtering box is mounted in position in the filtering box cavity 1010. For example, the sensing part 1215 is iron, and the detection part is a Hall sensor. The Hall sensor detects the iron, indicating that the filtering box is mounted in position. As shown in FIG. 38c, a mounting cavity 1216 is provided on an outer side wall of the filtering box, and one of the detection part and the sensing part is provided in the mounting cavity 1216. For example, the sensing part 1215 is provided in the mounting cavity. In an embodiment, an outer side wall of the third side wall of the filtering box 120 is recessed inward to form the mounting cavity for one of the sensing part and the detection part to be mounted in, and the mounting cavity 1216 is sealed by a sealing cover 120120. Certainly, the mounting cavity may be provided on other side walls of the filtering box.

In an embodiment, when the filtering box 120 is mounted in the filtering box cavity 1010, to facilitate removing of the filtering box from the filtering box cavity 1010, a second gap exists between the bottom of the filtering box and the bottom of the filtering box cavity 1010. In this way, the following case can be avoided: When the bottom of the filtering box is in contact with the bottom of the filtering box cavity 1010, an adsorption force is generated by a water film formed by liquid in the second cavity 1014 of the filtering box cavity 1010 between the bottom of the filtering box and the bottom of the filtering box cavity 1010, causing the bottom of the filtering box to be difficult to be separated from the bottom of the filtering box cavity 1010 and causing the filtering box to be difficult to be removed. The second gap is provided, so that the bottom of the filtering box is not in contact with the bottom of the filtering box cavity 1010. In this way, even if the liquid in the filtering box cavity 1010 is located in the second gap, a water film is not formed, and an adsorption force is not generated. This facilitates removing of the filtering box from the filtering box cavity 1010. For example, in an embodiment, the bottom of the filtering box is provided with at least one raised outer edge (not shown in the figure) extending downward. The raised outer edge is in contact with the bottom of the filtering box cavity 1010 to support the filtering box, so that the second gap is formed between the bottom of the filtering box and the bottom of the filtering box cavity 1010. There may be a plurality of raised outer edges. The plurality of raised outer edges are evenly arranged on the bottom of the filtering box, or the raised outer edges may be circular and arranged around an edge of the bottom of the filtering box, or the raised outer edges are provided on a bottom surface of the filtering box cavity 1010 and protrude upward.

In an embodiment, as shown in FIG. 38g and FIG. 38i, the first liquid discharge opening 1112 is provided on the side wall of the filtering box cavity 1010, and the first liquid discharge opening 1112 is opposite to the third side wall of the filtering box. In the cleaning process of the cleaning device, the liquid in the pool sequentially flows through the second debris inlet 1111b, the second inlet 1212, the first cavity 1214 of the filtering box, the second cavity of the filtering box cavity 1010, the first liquid discharge opening 1112, and the suction assembly, and is finally discharged through the second liquid discharge opening 212 of the cleaning device to form the first water flow path for the water to flow through.

The side wall of the filtering box cavity 1010 is further provided with at least one first water discharge opening 1016, so that when the cleaning device is lifted out of or picked up from the pool to leave the water surface, the liquid in the filtering box can be quickly discharged. As shown in FIG. 39i, the bottom of the cleaning device body is provided with at least one second water discharge opening 1113. The first water discharge opening 1016 communicates with the second water discharge opening 1113. The first water discharge opening 1016 is located in the cleaning device. As shown in FIG. 38g, the water baffle plate 1012 is provided on the outer side wall on which the first water discharge opening 1016 is located. When the cleaning device is in a cleaning or operation state in water or on the water surface, and the main drive pump of the suction assembly is turned on, the first cavity 1214 of the filtering box and the second cavity of the filtering box cavity 1010 are under negative pressure under the action of the main drive pump, so that the liquid in the pool enters the cleaning device through the second water discharge opening 1113, and applies first pressure to the water baffle plate 1012 on the outer side wall of the filtering box cavity 1010 toward the inside of the filtering box cavity 1010, and the first pressure is greater than second pressure applied by the liquid in the filtering box cavity 1010 to the water baffle plate 1012 toward the outside of the filtering box cavity 1010. Under a pressure difference between the first pressure and the second pressure, the water baffle plate can tightly cover, block, obscure, or seal the first water discharge opening 1016, so that the liquid in the filtering box cavity 1010 cannot be discharged through the first water discharge opening 1016 and cannot be discharged from the cleaning device through the second water discharge opening 1113.

When the cleaning device is ready to leave the water, the main drive pump is turned off, and the filtering box and the filtering box cavity 1010 are not under negative pressure. In or after a process in which the cleaning device leaves the water (that is, leaves the water surface), because the cleaning device is lifted out of the water, liquid outside the filtering box cavity 1010 is discharged from the cleaning device through the second water discharge opening 1113, and the first pressure applied to the filtering box cavity 1010 is canceled. In this case, the liquid in the second cavity of the filtering box cavity 1010 drives, under gravity of liquid (especially when the cleaning device is obliquely lifted), the water baffle plate to move away from the first water discharge opening 1016, so that the first water discharge opening 1016 is opened, and the water in the filtering box and the water in the filtering box cavity 1010 can be quickly discharged from the cleaning device through the first water discharge opening 1016 and the second water discharge opening 1113 sequentially. This increases a water discharge speed of the cleaning device in the process of leaving the water, quickly reduces a weight of the pool robot, and therefore improves user experience. In other words, the first water discharge opening 1016 communicates with the second water discharge opening 1113 to form a second water flow path for liquid flow. In contrast, in a process in which the cleaning device enters the water, the liquid in the pool quickly enters the cleaning device through the second water discharge opening 1113. This helps quickly increase the gravity of the pool robot, enabling the pool robot to quickly enter the water. Because the main drive pump is in an on state in the process in which the cleaning device enters the water, the water baffle plate 1012 keeps covering or blocking the first water discharge opening 1016 in the process in which the cleaning device enters the water. In other words, the water baffle plate 1012 has a non-water discharge state in which the first water discharge opening 1016 is closed and a water discharge state in which the first water discharge opening 1016 is opened.

In an embodiment, as shown in FIG. 38g, the water baffle plate 1012 is made of a flexible waterproof material. One end of the flexible waterproof material is provided on the outer side wall of the filtering box cavity 1010, and another end is suspended and can keep covering, sealing, obscuring, or blocking the first water discharge opening 1016 under the pressure difference between the first pressure and the second pressure. In the process in which the cleaning device leaves the water, the water baffle plate 1012 rotates away from the first water discharge opening 1016 under gravity of the liquid in the filtering box cavity 1010, so that the first water discharge opening 1016 is opened. In another embodiment, the water baffle plate 1012 is movably provided on the outer side wall of the filtering box cavity 1010 by using an elastic part. When the cleaning device is in the water or on the water surface, the water baffle plate 1012 covers, obscures, or seals the first water discharge opening 1016 under the action of the elastic part. When the cleaning device leaves the water, the water baffle plate 1012 overcomes an action force of the elastic part under the gravity of the liquid in the filtering box cavity 1010 to move away from the first water discharge opening 1016, so that the first water discharge opening 1016 is opened. In other words, only when the cleaning device leaves the water, the water baffle plate 1012 is turned on to expose the first water discharge opening 1016, and when the cleaning device is in other states, the water baffle plate 1012 always covers, blocks, or seals the first water discharge opening 1016. In other words, the first water flow path and the second water flow path are separated from each other.

In an embodiment, as shown in FIG. 19d, the bottom of the housing of the cleaning device body is further provided with at least one third water discharge opening 1114, so that when the cleaning device is lifted out of the water surface, water in the traveling mechanism can be quickly discharged from the cleaning device. The third water discharge opening 1114 is provided at a position on the bottom of the housing of the cleaning device body, where the position is close to the track 193, and communicates with the internal space of the traveling mechanism, so that when the cleaning device is lifted out of the water surface, the water in the traveling mechanism can be quickly discharged. When the cleaning device moves, a projection of the third water discharge opening on the travel surface is located within the projection of the track 193 on the travel surface. When a plurality of third water discharge openings 1114 are provided, the plurality of third water discharge openings 1114 may be arranged, for example, in one or more rows, and projections of the plurality of third water discharge openings 1114 on the travel surface are all located within the projection of the track 193 on the travel surface.

In an embodiment, the first water discharge opening 1016 and the first liquid discharge opening 1112 are provided on the same side wall of the filtering box cavity 1010. As shown in FIG. 38i, the first liquid discharge opening 1112 is provided above the first water discharge opening 1016, and filtered liquid is sucked into the suction assembly through the first liquid discharge opening 1112. The first water discharge opening 1016 is provided below the first liquid discharge opening 1112. When the cleaning device is lifted out of the water, the first water discharge opening 1016 is located below, so that when the cleaning device tilts, the liquid in the filtering box and the liquid in the filtering box cavity 1010 can be quickly discharged from the cleaning device through the first water discharge opening 1016 under the gravity of the liquid. Certainly, the first water discharge opening 1016 and the first liquid discharge opening 1112 may not be provided on the same side wall of the filtering box cavity 1010, and may be provided on different side walls of the filtering box, provided that the first water discharge opening 1016 is provided close to the bottom of the cleaning device and on the side wall of the filtering box cavity. Certainly, the first water discharge opening 1016 may alternatively be provided at the bottom of the filtering box cavity 1010. If the water baffle plate is driven by a drive assembly to move to expose or block the first water discharge opening 1016, the first water discharge opening 1016 may be provided on a side wall of the filtering box or at the bottom of the filtering box.

As shown in FIG. 38c and FIG. 38f, a top edge of the filtering box is provided with a second outer edge 1236 extending outward. The second outer edge 1236 is provided with a first mounting groove. A first sealing strip 12361 is provided in the first mounting groove. A first protrusion (not shown in the figure) corresponding to the first sealing strip is provided on an inner surface of the filtering box cover 124. When the filtering box is mounted in the filtering box cavity 1010, and the filtering box cover 124 covers the access opening, the first protrusion can squeeze the first sealing strip 12361, so that the filtering box cover 124 seals the filtering box opening 122 of the filtering box, to prevent small-sized trash remaining in the filtering box from flowing out of the filtering box through a gap between the filtering box cover 124 and the filtering box opening 122 of the filtering box 120 in the cleaning process or the operation process of the cleaning device. The first sealing strip mates with the first protrusion, so that a sealed connection is formed between the filtering box cover 124 and the filtering box opening of the filtering box, enabling the small-sized trash to remain in the filtering box.

As shown in FIG. 38a to FIG. 38k, the filtering box water inlet portion includes the second inlet 1212 and is not provided with a first inlet, and the cleaning device is mainly configured to clean the bottom wall or the side wall of the pool. However, in another embodiment, as shown in FIG. 21, the filtering box water inlet portion further includes at least one first inlet 1211. The debris inlet 1111 further includes the first debris inlet 1111a provided on a front side wall of the front portion of the cleaning device. The first debris inlet 1111a communicates with the first inlet 1211, so that the cleaning device can be configured to perform water surface cleaning. As shown in FIG. 41, the first inlet 1211 may be provided on the first side wall of the filtering box 120, and the first inlet 1211 faces and communicates with the first debris inlet 1111a, so that liquid on the water surface can enter the filtering box through the first debris inlet 1111a and the first inlet 1211. In other words, the filtering box water inlet portion includes the second inlet 1212 and the first inlet 1211, and the debris inlet includes the first debris inlet 1111a and the second debris inlet 1111b. The first debris inlet 1111a communicates with the first inlet for water surface cleaning, and the second debris inlet 1111b communicates with the second inlet 1212 for cleaning of the bottom wall or the side wall of the pool. As shown in FIG. 41, the second debris inlet 1111b may be provided at the bottom of the cleaning device.

As shown in FIG. 41 or FIG. 39i, similar to the first blocking part 1213, a second blocking part 12104 is provided on the filtering box cavity 1010 or the cleaning device body and configured to block the first debris inlet 1111a, to be opened to expose the first debris inlet 1111a or cover the first debris inlet 1111a (or the first inlet 1211). A drive assembly is provided on the cleaning device body or the filtering box cavity 1010. The drive assembly is configured to drive the second blocking part to move, so that the second blocking part covers the first debris inlet 1111a or is opened to expose the first debris inlet 1111a. If the water surface needs to be cleaned, the control unit controls the drive assembly to drive the second blocking part to move, so that the first debris inlet 1111a is opened. If the water surface does not need to be cleaned, the control unit controls the drive assembly to drive the second blocking part to move, so that the first debris inlet 1111a is closed.

Because the first debris inlet 1111a is provided on the front side wall of the front portion of the cleaning device body, when water surface cleaning is performed, and the first debris inlet 1111a is opened, the liquid on the water surface enters the filtering box under the action of the main drive pump, and the liquid in the filtering box presses against the first blocking part 1213 under gravity, so that the first blocking part 1213 keeps covering the opening at the inner side end of the first extension portion 1210, and the second debris inlet 1111b does not communicate with the inside of the filtering box. After water surface cleaning is completed, and the bottom wall or the side wall of the pool starts to be cleaned, the second blocking part covers the first debris inlet 1111a, so that the first debris inlet 1111a is closed, and under the action of the main drive pump, the first blocking part is opened to expose the second debris inlet 1111b, so that the liquid in the pool enters the filtering box through the second debris inlet 1111b.

The foregoing filtering box is a single filtering box. In an embodiment, as shown in FIG. 39a to FIG. 39i, a filtering box is sleeved on a periphery of the single filtering box to form a structure of double filtering boxes. For ease of presentation, a filtering box on an inner side is represented as an inner filtering box 1201, and a filtering box on an outer side is represented as an outer filtering box 1202. In other words, the double filtering boxes include the inner filtering box and the outer filtering box.

The outer filtering box 1202 is sleeved over or surrounds the inner filtering box 1201. The inner filtering box 1201 performs first-level filtering, and the outer filtering box 1202 performs second-level filtering. Liquid filtered by the outer filtering box 1202 enters the suction assembly through the first liquid discharge opening 1112 and is finally discharged from the cleaning device through the second liquid discharge opening 212. A structure of the outer filtering box 1202 is similar to a structure of the inner filtering box 1201. A side wall of each of the inner filtering box 1201 and the outer filtering box 1202 is provided with a filtering surface, and the filtering surface includes the first filtering surface 1231, the second filtering surface 1232, the third filtering surface 1233, and the fourth filtering surface 1234. For ease of description, the filtering surface of the inner filtering box 1201 is represented as an inner filtering surface, and the filtering surface of the outer filtering box 1202 is represented as an outer filtering surface.

In an embodiment, as shown in FIG. 39e, a first side wall of the inner filtering box 1201 is provided with a first inner filtering mesh to form a first inner filtering surface 12011, a second side wall is provided with at least one second inner filtering mesh to form a second inner filtering surface 12012, a third side wall is provided with at least one third inner filtering mesh to form a third inner filtering surface 12013, and a fourth side wall is provided with at least one fourth inner filtering mesh to form a fourth inner filtering surface 12014. The first inner filtering surface 12011, the second inner filtering surface 12012, the third inner filtering surface 12013, and the fourth inner filtering surface 12014 of the inner filtering box 1201 have a same filtration level and can filter out trash of a same size, and the inner filtering box 1201 performs coarse filtration.

As shown in FIG. 39g, the outer filtering box 1202 includes a first side wall, a second side wall, a third side wall, and a fourth side wall sequentially connected end to end. The first side wall is provided with at least one first outer filtering mesh to form a first outer filtering surface 12021, the second side wall is provided with at least one second outer filtering mesh to form a second outer filtering surface 12022, the third side wall is provided with at least one third outer filtering mesh to form a third outer filtering surface 12023, and the fourth side wall is provided with at least one fourth outer filtering mesh to form a fourth outer filtering surface 12024. The first outer filtering surface 12021 corresponds to the first inner filtering surface 12011, the second outer filtering surface 12022 corresponds to the second inner filtering surface 12012, the third outer filtering surface 12023 corresponds to the third inner filtering surface 12013, and the fourth outer filtering surface 12024 corresponds to the fourth inner filtering surface 12014. The filtering surface of the inner filtering box 1201 performs coarse filtration, and at least a part of the filtering surface of the outer filtering box 1202 performs fine filtration.

For example, the four filtering surfaces of the outer filtering box 1202 have a same filtration level and can filter out trash of a same size. Compared with the filtering surface of the inner filtering box 1201, the filtering surface of the outer filtering box 1202 can filter out trash of a smaller size, so that the filtering surface of the outer filtering box 1202 performs fine filtration, and the filtering surface of the inner filtering box 1201 performs coarse filtration. The inner filtering box performs coarse filtration on the liquid in the pool, and then the outer filtering box performs fine filtration on the liquid in the pool. Then, the liquid enters the suction assembly through the first liquid discharge opening of the first accommodating cavity 111 and is finally discharged from the cleaning device through the second liquid discharge opening.

In another embodiment, the four filtering surfaces of the inner filtering box 1201 have a same filtration level, and in the four filtering surfaces of the outer filtering box 1202, the second outer filtering surface 12022, the third outer filtering surface 12023, and the fourth outer filtering surface 12024 have a same filtration level different from that of the first outer filtering surface 12021. The filtration level of the first outer filtering surface 12021 is the same as that of the inner filtering surface of the inner filtering box 1201 to perform coarse filtration. The second outer filtering surface 12022, the third outer filtering surface 12023, and the fourth outer filtering surface 12024 of the outer filtering box 1202 perform fine filtration to filter out trash of a smaller size. Because the main drive pump of the suction assembly is in the on state when the cleaning device moves on the side wall or the slope of the pool, the liquid in the pool enters the filtering box through the second debris inlet 1111b and the second inlet 1212, and after being filtered by the inner filtering box 1201 and the outer filtering box 1202, the liquid enters the filtering box cavity 1010, then enters the suction assembly through the first liquid discharge opening 1112 on the filtering box cavity 1010, and is finally discharged through the second liquid discharge opening 212 of the cleaning device. Because the second liquid discharge opening 212 is provided at the top of the cleaning device body, when the liquid is continuously discharged through the second liquid discharge opening 212, the discharged liquid applies a counter-thrust to the cleaning device, so that under the thrust, the bottom of the cleaning device can be tightly attached to the side wall or the slope of the pool, and the cleaning device can move on the side wall or the slope of the pool, to prevent the cleaning device from falling off from the side wall or the slope of the pool.

When the second outer filtering surface 12022, the third outer filtering surface 12023, and the fourth outer filtering surface 12024 of the outer filtering box 1202 are at least partially clogged, the first filtering surface 1231 is designed to perform coarse filtration, to ensure an amount of water flowing into the suction assembly. In this case, the liquid filtered by the inner filtering box 1201 may enter the filtering box cavity 1010 through the first filtering surface 1231 and then enter the suction assembly to meet the amount of water flowing into the suction assembly, to ensure that the cleaning device normally moves on the side wall or the slope of the pool under the reverse thrust generated by the liquid discharged through the second liquid discharge opening 212. Therefore, the filtration level of the first outer filtering surface 12021 is designed to be the same as that of the inner filtering surface of the inner filtering box 1201 to ensure the amount of water flowing into the suction assembly.

The third outer filtering surface 12023 and the third inner filtering surface 12013 are both close to or adjacent to the first liquid discharge opening 1112 of the filtering box cavity 1010, and the filtration level of the first outer filtering surface 12021 away from the third outer filtering surface 12023 is the same as that of the inner filtering surface. Therefore, under suction of the suction assembly, the liquid filtered by the inner filtering box 1201 preferentially enters the filtering box cavity 1010 through the third outer filtering surface 12023 and then enters the suction assembly through the first liquid discharge opening 1112 in a direction of a suction force. The first outer filtering surface 12021 and the third outer filtering surface 12023 are opposite to each other and farthest from each other. In a normal case, most of liquid filtered by the inner filtering box 1201 enters the second cavity of the filtering box cavity 1010 through the third outer filtering surface 12023, the second outer filtering surface 12022, and the fourth outer filtering surface 12024, and a very small amount of liquid filtered by the inner filtering box 1201 enters the filtering box cavity 1010 through the fourth outer filtering surface 12024. However, when at least one of the third outer filtering surface 12023, the second filtering surface 1232, or the fourth filtering surface 1234 is clogged, the liquid filtered by the inner filtering box 1201 directly enters the filtering box cavity 1010 through the first outer filtering surface 12021 under suction of the suction assembly to meet a requirement for the amount of water flowing into the suction assembly.

Certainly, filtration levels of other outer filtering surfaces of the outer filtering box 1202 may be set to be the same as that of the inner filtering surface of the inner filtering box 1201. For example, the filtration level of at least one of the second outer filtering surface 12022 or the fourth outer filtering surface 12024 of the outer filtering box 1202 is set to be the same as that of the inner filtering surface, or a filtration level of one part of one of the first outer filtering surface 12021, the second outer filtering surface 12022, the third outer filtering surface 12023, and the fourth outer filtering surface 12024 is set to be the same as that of the inner filtering surface for coarse filtration, to ensure the amount of water flowing into the suction assembly, and a filtration level of the other part is set to be the same as those of other outer filtering surfaces for fine filtration. The filtration level of the third outer filtering surface is preferably different from the filtration level of the inner filtering surface to perform fine filtration, to ensure a secondary filtration effect of the outer filtering box 1202.

In addition, for the inner filtering box 1201, the filtration levels of various inner filtering surfaces may be the same or different, which is determined based on an actual requirement, and for the outer filtering box 1202, the filtration levels of various outer filtering surfaces may be the same or different, so that under suction, the inner filtering box 1201 can perform coarse filtration, and the outer filtering box 1202 can perform fine filtration while the amount of water flowing into the suction assembly is met. A specific filtration level is chosen based on an actual requirement. In other words, the outer filtering box 1202 at least partially surrounds the inner filtering box 1201, and a filtration level of at least one filtering surface of the outer filtering box 1202 is higher than a filtration level of at least one filtering surface of the inner filtering box 1201, so that the inner filtering box 1201 performs coarse filtration, and the at least one filtering surface of the outer filtering box 1202 performs fine filtration, to implement secondary filtration. To meet the amount of water flowing into the suction assembly, the outer filtering box 1202 includes at least two filtering surfaces. A filtration level of at least one filtering surface of the outer filtering box is comparable to or the same as a filtration level of at least one filtering surface of the inner filtering box to meet the requirement for the amount of water flowing into the suction assembly. A filtration level of at least one filtering surface is higher than a filtration level of at least one filtering surface of the inner filtering box to implement secondary filtration on the liquid.

As shown in FIG. 39i and FIG. 39h, for the second inlet 1212 of the double filtering boxes, the opening at the outer side end of the first extension portion 1210 of the inner filtering box 1201 serves as a second inner inlet 1212a, a second outer inlet 1212b is provided at the bottom of the outer filtering box 1202, and the second outer inlet 1212b communicates with the second inner inlet 1212a. Optionally, as shown in FIG. 39i, the filtering box water inlet portion further includes a guiding portion 12103. The guiding portion 12103 is provided on an end surface of the outer side end of the first extension portion 1210. A first end of the guiding portion 12103 is connected to the outer side end of the first extension portion 1210. A second end of the guiding portion 12103 abuts against or is adjacent to the second outer inlet 1212b of the outer filtering box 1202. The guiding portion 12103 is in a flared shape with a gradually increasing diameter from the first end to the second end.

As shown in FIG. 39j, the second extension portion 1013 of the filtering box cavity 1010 does not extend into the hollow channel of the first extension portion 1210. An end surface of the inner side end of the second extension portion 1013 abuts against the end surface of the outer side end of the first extension portion 1210. The guiding portion 12103 is located on an outer side of the second extension portion 1013. The second outer inlet 1212b of the outer filtering box 1202 is blocked outside the second extension portion 1013, so that the second debris inlet 1111b of the filtering box cavity 1010 communicates with the first extension portion 1210, and the liquid in the pool enters an inner cavity of the inner filtering box 1201 through the second debris inlet, the second inner inlet 1212a, and the hollow channel of the first extension portion 1210. Because the second outer inlet 1212b of the outer filtering box 1202 is blocked outside the second extension portion 1013, liquid entering through the second debris inlet does not directly enter the outer filtering box 1202 through the second outer inlet 1212b. The guiding portion 12103 is provided to guide the second extension portion 1013 to extend into the guiding portion 12103 when the double filtering boxes are mounted in the filtering box cavity 1010 to ensure that the end surface of the inner side end of the second extension portion 1013 can accurately abut against the end surface of the outer side end of the first extension portion 1210, to ensure that the filtering box can be mounted in position. In another embodiment, the second extension portion 1013 may extend into the first extension portion 1210, so that the liquid can also enter a cavity of the inner filtering box 1201 through the second debris inlet, the second extension portion 1013, and the first extension portion 1210.

At least one of the bottom of the inner filtering box 1201 or the bottom of the outer filtering box 1202 is provided with at least one first rib (not shown in the figure) to avoid the following case: When the bottom of the inner filtering box 1201 is in direct contact with the bottom of the outer filtering box 1202, an adsorption force is generated by a water film formed by liquid between the bottom of the inner filtering box 1201 and the bottom of the outer filtering box 1202, causing the inner filtering box 1201 to be difficult to be separated from the outer filtering box 1202. In this way, a gap is formed between the bottom of the inner filtering box 1201 and the bottom of the outer filtering box 1202 to prevent the water film from being formed. This facilitates separation between the inner filtering box 1201 and the outer filtering box 1202.

The inner filtering box 1201 is detachably connected to the outer filtering box 1202. As shown in FIG. 39e, the inner filtering box 1201 is provided with the second handle 252. The inner filtering box 1201 and the outer filtering box 1202 can be synchronously removed from or placed into the filtering box cavity 1010 by using the second handle 252. The inner filtering box 1201 and the outer filtering box 1202 are detachably connected in various manners, for example, snap-fit connection, fastener connection, or magnetic adsorption connection. As shown in FIG. 39h, a side wall of the outer filtering box 1202 is provided with at least one mating hole 12027. As shown in FIG. 39f, a side wall of the inner filtering box 1201 is provided with a buckle 12018. The buckle 12018 is clamped to the mating hole 12027, so that the inner filtering box 1201 is detachably connected to the outer filtering box 1202. When the user holds the outer filtering box 1202 and lifts up the second handle 252, the buckle 12018 can be detached from the mating hole, so that the inner filtering box 1201 is separated from the outer filtering box 1202. In contrast, when the user inserts the outer filtering box 1202 into the inner filtering box 1201 and presses down on the outer filtering box 1202, the buckle 12018 can be inserted into the mating hole 12027, so that the inner filtering box 1201 is connected to the outer filtering box 1202.

As shown in FIG. 39j and FIG. 39f, to further help the user hold the second handle 252, the second stepped surface 12383 of the inner filtering box 1201 is provided with a second avoidance region 12019 that is recessed downward. In this way, the user reaches the bottom of the lifting piece 2523 of the second handle 252 through the second avoidance region 12019 to hold the second handle 252, to remove or place the filtering box 120. As shown in FIG. 38c and FIG. 39i, the inner filtering box 1201 is provided with the detection assembly for detecting whether the filtering box is mounted in position in the filtering box cavity 1010, and the detection assembly protrudes from an outer wall of the inner filtering box 1201. Therefore, as shown in FIG. 39g, an inner wall of the outer filtering box 1202 is provided with a third avoidance region 12028, so that the outer filtering box 1202 can avoid the detection assembly.

As shown in FIG. 39g, to facilitate separation between the outer filtering box 1202 and the inner filtering box 1201, an outer wall surface of the outer filtering box 1202 is provided with a plurality of convex dots 120230. In this way, the user presses the convex dots to hold the inner filtering box 1201 and pulls out of the inner filtering box 1201 by using the second handle 252, to separate the inner filtering box 1201 from the outer filtering box 1202.

As shown in FIG. 39a and FIG. 39b, the second outer edge 1236 of the inner filtering box 1201 is located above the top of the outer filtering box 1202. In other words, the outer filtering box 1202 does not completely surround the outside of the inner filtering box 1201, the outer filtering box 1202 partially surrounds the outside of the inner filtering box 1201, and the top of the inner filtering box is higher than the top of the outer filtering box. When the double filtering boxes are mounted in the filtering box cavity 1010, the second outer edge 1236 may lap over a top opening of the filtering box cavity 1010 for limiting mounting of the filtering box in the filtering box cavity 1010. In addition, the second handle 252 is provided on an inner wall of the inner filtering box 1201, so that the second handle 252 does not occupy any space other than space of the filtering box, leading to a compact structure of the double filtering boxes and small occupied space. In addition, the inner filtering box 1201 is provided with the detection assembly for detecting whether the filtering box is mounted in position in the filtering box cavity 1010, and the detection part or the sensing part of the detection assembly is provided on the outer wall of the inner filtering box 1201 and needs to be sealed in the mounting cavity 1216. Because the top of the inner filtering box is lower than the bottom of the mounting cavity 1216 on the outer filtering box, in the cleaning process, a height of liquid does not exceed a height of the outer filtering surface of the outer filtering box 1202, to ensure that the liquid does not enter the mounting cavity 1216 and does not affect detection performance of the detection assembly, thereby ensuring the detection performance of the detection assembly.

Certainly, the second outer edge 1236 may be provided at the top of the outer filtering box 1202, and the sensing part or the detection part of the detection assembly may be provided on the side wall of the outer filtering box 1202. The outer filtering box 1202 may surround the entire periphery of the inner filtering box 1201. The mounting cavity 1216 is higher than the top of the inner filtering box. The second handle 252 is provided on the inner wall of the inner filtering box 1201, so that the second handle 252 does not occupy space other than space of the filtering box, leading to a compact structure of the double filtering boxes. Alternatively, the second outer edge 1236 and the sensing part or the detection part of the detection assembly may be provided on a side wall of the outer filtering box 1202, and the second handle 252 may be provided on the second outer edge 1236 of the outer filtering box 1202, so that the filtering box can also be removed or placed. However, compared with a case where the second handle 252 is provided on the inner wall of the inner filtering box 1201, in this case, the second handle 252 needs to occupy space in addition to the space of the filtering box, leading to an uncompact structure of the double filtering boxes.

As shown in FIG. 39e, a first inner inlet 12015 is provided on the first side wall of the inner filtering box 1201. As shown in FIG. 39g, a first outer inlet 12025 is provided on the first side wall of the outer filtering box 1202. The first outer inlet 12025 is located outside the first inner inlet 12015, and the first inner inlet 12015 communicates with the first debris inlet 1111a, so that the liquid on the water surface directly enters the inner cavity of the filtering box through the first debris inlet 1111a and the first inner inlet 12015 for filtration, and the filtered liquid enters the filtering box cavity 1010, is sucked into the suction assembly through the first liquid discharge opening 1112, and is finally discharged from the cleaning device through the second liquid discharge opening 212.

In an embodiment, as shown in FIG. 39e, the first inner inlet 12015 is provided with a first periphery 120122 extending outward. The first periphery 120122 laps over a top surface of the first outer inlet 12025, so that the first outer inlet 12025 is lower than the first inner inlet 12015, to ensure that after passing through the first debris inlet 1111a, the liquid directly enters the cavity of the inner filtering box 1201 through the first inner inlet 12015.

In an embodiment, the first inner inlet 12015 and the first outer inlet 12025 are both openings, so that the liquid is not subject to resistance in a path of flowing into the filtering box through the first debris inlet 1111a and the first inner inlet 12015. In another embodiment, the first inner inlet 12015 and the first outer inlet 12025 are both holes. In this case, the liquid can also enter the inner cavity of the inner filtering box 1201 through the first debris inlet 1111a and the first inner inlet 12015.

As shown in FIG. 39e, a first inner filtering box opening 12016 is provided at the top of the inner filtering box 1201. As shown in FIG. 39g, a first outer filtering box opening 12026 is provided at the top of the outer filtering box 1202. The first sealing strip 12361 is provided on the second outer edge 1236. The first protrusion corresponding to the first sealing strip 12361 is provided on the inner wall of the filtering box cover 124. When the filtering box cover 124 covers the access opening, the first protrusion squeezes the first sealing strip 12361 to seal the first inner filtering box opening 12016, so that small-sized trash in the inner filtering box 1201 is blocked inside the filtering box. The first side wall of the double filtering boxes is provided with the first inlet, and the bottom is provided with the second inlet 1212. As shown in FIG. 39d, to ensure negative pressure in the filtering box and the filtering box cavity 1010, the top opening of the filtering box cavity 1010 is provided with a third outer edge 1017 extending outward. The second outer edge 1236 of the inner filtering box 1201 may be lapped over the third outer edge 1017. The third outer edge 1017 is provided with a second mounting groove 1014. A second sealing strip is provided in the second mounting groove. The second sealing strip is located outside the third outer edge. An inner wall surface of the filtering box cover 124 is provided with a second protrusion. When the filtering box cover 124 covers the access opening, the second protrusion squeezes the second sealing strip to seal the top opening of the filtering box cavity 1010, to ensure that when the suction assembly is turned on, desired negative pressure can be formed in the filtering box cavity 1010. In the height direction of the cleaning device, the second outer edge is lapped over the third outer edge 1017, so that the first sealing strip is higher than the second sealing strip, to form primary seal at the top opening of the filtering box cavity 1010 and secondary seal at the first inner filtering box opening of the inner filtering box 1201. Certainly, the first sealing strip may alternatively be flush with the second sealing strip, or the first sealing strip may be lower than the second sealing strip.

As shown in FIG. 39d, in addition to the raised outer edge provided at the bottom of the outer filtering box 1202, the bottom of the filtering box cavity 1010 may be provided with a raised second rib 1015 to support the outer filtering box 1202, to avoid the following case: When the bottom of the outer filtering box 1202 of the double filtering boxes is in direct contact with the bottom of the filtering box cavity 1010, an adsorption force is generated by a water film formed by liquid between the bottom of the outer filtering box 1202 and the bottom of the filtering box cavity 1010. In this way, a gap is formed between the bottom of the outer filtering box 1202 and the bottom of the filtering box cavity 1010 to prevent the water film from being formed. This facilitates removing of the double filtering boxes from the filtering box cavity 1010.

As shown in FIG. 39k, the filtering box cover 124 may only cover the access opening, or as shown in FIG. 38d, the filtering box cover 124 may cover the access opening and other regions at the top of the cleaning device body, provided that the second liquid discharge opening 21221 is exposed.

In another embodiment, as shown in FIG. 40a, FIG. 40b, and FIG. 40d, for the double filtering boxes, in addition to the second outer inlet 1212b and the second inner inlet 1212a respectively provided at the bottom of the outer filtering box 1202 and the inner filtering box 1201, at least one fifth outer filtering mesh and at least one fifth inner filtering mesh are respectively provided on the outer filtering box 1202 and the inner filtering box 1201. The fifth outer filtering mesh forms a fifth outer filtering surface 120229. The fifth inner filtering mesh forms a fifth inner filtering surface 120121. The fifth inner filtering surface corresponds to the fifth outer filtering surface. In an embodiment, the fifth inner filtering surface 120121 performs coarse filtration, and the fifth outer filtering surface 120229 performs fine filtration. Filtration levels of the five inner filtering surfaces of the inner filtering box 1201 are the same, and in the five outer filtering surfaces of the outer filtering box 1202, filtration levels of four outer filtering surfaces other than the first outer filtering surface 12021 whose filtration level is the same as that of the inner filtering surface of the inner filtering box 1201 are the same and perform fine filtration. When the double filtering boxes are removed from the filtering box cavity 1010, the fifth outer filtering surface 120229 and the fifth inner filtering surface 120121 are provided, so that when the filtering box is lifted, the liquid in the filtering box can be quickly discharged from the filtering box through the fifth inner filtering surface 120121 and the fifth outer filtering surface 120229. In this way, a quick water discharge function of the filtering box can be implemented when the filtering box is lifted.

In an embodiment, refer to FIG. 40e and FIG. 40f. FIG. 40e is a schematic structural view of an outer filtering box according to another embodiment of the present disclosure. A side wall of the outer filtering box 1202 is close to the first liquid discharge opening 1112, namely, the third side wall close to the second side 114 of the cleaning device body 110. A part of the third side wall of the outer filtering box 1202 corresponds to the first liquid discharge opening 1112, and the part is further provided with a second filtering apparatus 12029. The second filtering apparatus 12029 may be provided on a side of the third side wall of the outer filtering box 1202, and the side is away from the inner filtering box, so that the liquid in the pool enters the filtering box through the second debris inlet 1111b and the second inlet 1212, is further filtered by the second filtering apparatus 12029 after being filtered by the filtering surfaces of the inner filtering box 1201 and the outer filtering box 1202, enters the filtering box cavity 1010 and then enters the suction assembly through the first liquid discharge opening 1112 on the filtering box cavity 1010, and is finally discharged through the second liquid discharge opening 212 of the cleaning device. In this way, the filtration effect for the swimming pool is further improved. If the side wall of the outer filtering box 1202 is provided with a third avoidance region 12028, the second filtering apparatus 12029 is provided lower than the third avoidance region 12028 to avoid affecting mounting and fixing of the outer filtering box 1202 to the inner filtering box 1201. The second filtering apparatus 12029 includes a filtering assembly (not shown in the figure) and a fixing frame 120191. The fixing frame 120291 is square or rectangular. Certainly, the fixing frame 120291 may alternatively be in other appropriate shapes such as a circle or a polygon. This is not limited in the present disclosure. A middle part of the fixing frame 120291 is provided with a groove. The filtering assembly may be detachably or non-detachably provided in the groove at the middle part of the fixing frame. A bottom surface of the groove is in a cross-shaped frame. Certainly, this is not limited in the present disclosure. Each of four corners of the fixing frame 12091 is provided with a detachable fixing member. The third side wall of the outer filtering box 1202 is provided with a detachable fixing member corresponding to the detachable fixing member. For example, each of four corners of the fixing frame 12091 is provided with an opening, and a buckle is provided at a corresponding position on the third side wall of the outer filtering box 1202. The buckle is detachably connected to the opening, so that the fixing frame is fixedly connected to the outer filtering box. The detachable connection in the present disclosure is not limited thereto. In addition, the filtering assembly may include a HEPA (HEPA) filtering member. This is not limited in this application.

In an embodiment, the second inner inlet 1212a and the fifth inner filtering surface 120121 are staggered at the bottom of the inner filtering box 1201. The second inner inlet 1212a is close to the first inner filtering surface 12011, and the fifth inner filtering surface 120121 is away from the first inner filtering surface 12011 and close to the third inner filtering surface 12013. Similarly, the second outer inlet 1212b is close to the first outer filtering surface 12021, and the fifth outer filtering surface 120229 is away from the first outer filtering surface 12021 and close to the third outer filtering surface 12023.

In an embodiment, as shown in FIG. 38a or FIG. 39e, when the second handle 252 is in the stored state, the lifting piece 2523 of the second handle 252 is close to or adjacent to the third side wall of the filtering box. In this way, when the liquid is filtered in the filtering box, the liquid preferably flows toward the third filtering surface 1233 under the action of the suction assembly, and in a flow process, a small amount of trash in the liquid gets caught on the lifting piece 2523 of the second handle 252. To prevent the trash in the filtering box from getting caught on the second handle 252, as shown in FIG. 40c, when the second handle 252 is in the stored state, the lifting piece 2523 of the second handle 252 is away from the third side wall and close to the first inlet on the first side wall of the filtering box, to prevent the trash from getting caught on the second handle 252 in a process in which liquid flows toward the third filtering surface 1233.

In another embodiment of the filtering box, as shown in FIG. 42, the first side wall of the filtering box 120 is provided with a flow guiding opening 11014. An adjustment assembly is provided on the flow guiding opening 11014 and configured to close the flow guiding opening or open the flow guiding opening. If the filtering box 120 is double-layer filtering boxes or multi-layer filtering boxes, the adjustment assembly may be provided on at least one filtering box, provided that the adjustment assembly can control opening and closing of the flow guiding opening. For example, the adjustment assembly includes a cover part 11015. When the cleaning device moves on the slope or the side wall of the pool, if the detection mechanism detects that at least one of the first outer filtering surface 12021, the second outer filtering surface 12022, the third outer filtering surface 12023, or the fourth outer filtering surface 12024 of the outer filtering box 1202 is clogged to a preset degree, the control unit controls the drive assembly to drive the cover part 11015 to move to expose the flow guiding opening, so that the liquid filtered by the inner filtering box 1201 quickly flows into the filtering box cavity 1010 through the flow guiding opening and then enters the suction assembly through the first liquid discharge opening 1112, to ensure the amount of water flowing into the suction assembly. In this way, the liquid discharged through the second liquid discharge opening 212 generates a counter-thrust to ensure that the bottom of the cleaning device is tightly attached to the side wall or the slope, and the cleaning device can move on the side wall or the slope. The adjustment assembly may alternatively not be driven by the drive assembly to be opened to expose the flow guiding opening. The adjustment assembly is provided with a counterweight block. For example, the adjustment assembly includes the cover part 11015 and a counterweight block 11016 provided on an inner wall of the cover part 11015. In this way, when the filtering surface of the filtering box is clogged, and the cleaning device moves on the wall, because the first side wall is higher than the third side wall, the adjustment assembly is automatically opened under gravity to expose the flow guiding opening, to meet the amount of water flowing into the suction assembly. In an embodiment, a third partition plate 11017 is provided on the flow guiding opening, and the third partition plate is provided with a plurality of grille holes. A filtration level of the grille hole is lower than those of the filtering surfaces on other side walls of the filtering box. When the filtering surfaces on other side walls of the filtering box are clogged, the cover part 11015 is opened, and the liquid in the filtering box flows out through the grille holes. The grille holes perform coarse filtration, and the filtration level of the grille hole is lower than those of the filtering surfaces on other side walls of the filtering box.

In another embodiment, a sixth filtering mesh may be provided on the third side wall of the filtering box cavity 1010 or on the first liquid discharge opening 1112 of a second partition plate. The filtering box may be a single filtering box or double filtering boxes. The sixth filtering mesh is configured to partially perform fine filtration and partially perform coarse filtration. In other words, the sixth filtering mesh includes a coarse filtration region and a fine filtration region. The adjustment assembly may be provided on the coarse filtration region. When the fine filtration region is not clogged, the adjustment assembly keeps the coarse filtration region closed. When the detection mechanism detects that the fine filtration region of the sixth filtering mesh is clogged, the control unit controls the drive assembly to drive the adjustment assembly to move, to expose the coarse filtration region, so that the liquid in the filtering box cavity 1010 or the first accommodating cavity enters the suction assembly through the coarse filtration region, to meet the amount of water flowing into the suction assembly, enabling the cleaning device to move on the wall. Alternatively, the first liquid discharge opening 1112 is partially provided with the sixth filtering mesh for coarse filtration and partially provided with a seventh filtering mesh for fine filtration, and the adjustment assembly is provided on the sixth filtering mesh. When the seventh filtering mesh is not clogged, the adjustment assembly keeps the sixth filtering mesh closed. When the detection mechanism detects that the seventh filtering mesh is clogged, the control unit controls the drive assembly to drive the adjustment assembly to move to expose the sixth filtering mesh.

In another embodiment, the filtering surface on at least one side wall of the filtering box 120 is provided with regions of different filtration precisions, that is, the filtering surface includes at least a fine filtering surface region and a coarse filtering surface region. The adjustment assembly may be provided on the coarse filtering surface region. When the fine filtering surface region is not clogged, the adjustment assembly keeps the coarse filtering surface region closed. When the detection mechanism detects that the fine filtering surface region of the filtering surface is clogged, the control unit controls the drive assembly to drive the adjustment assembly to move to expose the coarse filtering surface region, so that the liquid in the filtering box cavity 1010 or the first accommodating cavity enters the suction assembly through the coarse filtering surface region, to meet the amount of water flowing into the suction assembly, enabling the cleaning device to move on the wall.

In some embodiments, refer to FIG. 24. FIG. 24 is another side view of a cleaning device according to an embodiment of the present disclosure. The cleaning device 1000 includes the second liquid discharge opening 212 in fluid communication with the first liquid discharge opening 1112. The second liquid discharge opening 212 is located at the top of the cleaning device 1000, namely, on the sixth side 118 of the cleaning device body 110. The main drive pump 210 can further drive the liquid flowing into the main drive pump 210 through the first liquid discharge opening 1112 and the liquid inlet 211 to flow along the main drive pump 210 and be discharged through the second liquid discharge opening 212. The second liquid discharge opening 212 of the main drive pump 210 is provided with a grille part 213. The grille part 213 may guide liquid flowing through the grille part 213. In an embodiment, a grille of the grille part 213 may be rotatably provided and can be configured to adjust a liquid discharge direction of the second liquid discharge opening 212.

The main drive pump 210 may be fixed to an outer wall of the electronic control box 220 and/or in the cleaning device body 110. The grille part 213 is provided and locked to the second liquid discharge opening 212 of the main drive pump 210.

In some embodiments, the second liquid discharge opening 212 is configured to allow liquid to be obliquely discharged in a direction away from the central plane α of the cleaning device 1000. The cleaning device 1000 further includes a flow division plate 214. The flow division plate 214 is provided at the rear of the second liquid discharge opening 212. The liquid discharge direction of the second liquid discharge opening 212 tilts backward relative to a normal moving direction of the cleaning device 1000, so that a downward reaction force and a forward reaction force are applied to the cleaning device 1000. The flow division plate 214 is provided at the rear of the second liquid discharge opening 212, to block a backward fluid component. This reduces the forward reaction force applied to the cleaning device 1000 and therefore reduces the moving speed.

With reference to FIG. 24, the flow division plate 214 may be provided on the sixth side 118 of the cleaning device body 110 and is closer to the second side 114 of the cleaning device body 110 than the second liquid discharge opening 212. A center of the flow division plate 214 and a center of the second liquid discharge opening 212 may be located on a same straight line. The flow division plate 214 extends from the center of the second liquid discharge opening 212 to two sides and curves toward the second liquid discharge opening 212. The flow division plate 214 is configured to divert the liquid discharged through the second liquid discharge opening 212, that is, divide the liquid discharged through the second liquid discharge opening 212 into two streams of liquid, to reduce a flow rate at which the liquid is discharged through the second liquid discharge opening 212, thereby reducing the moving speed of the cleaning device 1000. In this way, the following case can be avoided: The trash is pushed away from the working region of the debris inlet 1111 due to an excessively high moving speed of the cleaning device 1000. This improves the cleaning effect of the cleaning device 1000.

In some embodiments, refer to FIG. 25 and FIG. 26 together. FIG. 25 is a schematic structural view of a cleaning device according to another embodiment of the present disclosure. FIG. 26 is a sectional view of a cleaning device according to another embodiment of the present disclosure. The second liquid discharge opening 212 further includes a first liquid discharge sub-opening 2151 and a second liquid discharge sub-opening 2161. A liquid discharge direction of the first liquid discharge sub-opening 2151 is substantially upward, for example, perpendicular to the longitudinal plane of the cleaning device 1000, or tilts at a specific angle relative to the central plane of the cleaning device 1000, for example, within 10°. A liquid discharge direction of the second liquid discharge sub-opening 2161 tilts toward a direction opposite to the normal moving direction of the cleaning device 1000, for example, tilts backward relative to the central plane of the cleaning device 1000 α at an angle ranging from 25° to 50°. For definitions of the longitudinal plane and the central plane α of the cleaning device 1000, refer to the above embodiment corresponding to the side brush 151.

In some embodiments, the first liquid discharge sub-opening 2151 is closer to the first side 113 of the cleaning device 1000 than the second liquid discharge sub-opening 2161, and the second liquid discharge sub-opening 2161 is closer to the second side 114 of the cleaning device 1000 than the first liquid discharge sub-opening 2151. However, this is not limited thereto.

In some embodiments, the first liquid discharge sub-opening 2151 and the second liquid discharge sub-opening 2161 may be arranged side by side, or the second liquid discharge sub-opening 2161 may be closer to the first side 113 of the cleaning device 1000 than the first liquid discharge sub-opening 2151, which may be adjusted based on construction of the cleaning device 1000.

In an embodiment, the first liquid discharge sub-opening 2151 is located between the central plane α and the first side 113. In other words, the first liquid discharge sub-opening 2151 is substantially located in front of a center of the cleaning device 1000. The second liquid discharge sub-opening 2161 is located between the central plane α and the second side 114. In other words, the second liquid discharge sub-opening 2161 is substantially located behind the center of the cleaning device 1000.

When the cleaning device 1000 is under different operation conditions, the first liquid discharge sub-opening 2151 and/or the second liquid discharge sub-opening 2161 are/is opened based on an angle of the cleaning device 1000 and/or a current state of the cleaning device 1000. The angle of the cleaning device 1000 may be a tilt angle of the cleaning device 1000 relative to the horizontal plane and may be obtained by a single angle detection device or a plurality of angle detection devices provided in the cleaning device 1000. The current state of the cleaning device 1000 may be a water surface operation state, an underwater operation state, or the like. The current state of the cleaning device 1000 may be determined based on an environment in which the cleaning device 1000 is currently located, and the environment may be determined by the submersion detection assembly 232, the liquid level detection assembly 233, the topography detection assembly 196, and the like.

When the cleaning device 1000 is in the water surface operation state, the second liquid discharge sub-opening 2161 is opened to form a clean water flow channel and provide a part of a forward thrust, and the first liquid discharge sub-opening 2151 is closed to avoid generating downward pressure that causes the front portion of the cleaning device 1000 to be pressed into the water. In this way, normal operation of the first debris inlet 1111a is not affected.

When the cleaning device 1000 is in the underwater operation state, the first liquid discharge sub-opening 2151 is controlled to be opened and the second liquid discharge sub-opening 2161 is controlled to be closed based on a current action of the cleaning device 1000. For example, when the cleaning device 1000 operates at the bottom of the pool, the bottom of the pool may be made of cement, a tile, PVC, or the like, and a topography of the bottom of the pool may include an inclined uphill slope or downhill slope, a transition from a horizontal plane to an inclined plane, a transition from an inclined plane to a horizontal plane, a raised or recessed obstacle, and the like. When the cleaning device 1000 cruises or performs cleaning at the bottom of the pool along the bow-shaped path or the square spiral path, moves along the inclined bottom of the pool, or the like, as shown in FIG. 26, because the first liquid discharge sub-opening 2151 is located on the front portion of the cleaning device 1000, sufficient downward pressure can be provided for the cleaning device 1000 for various operations, to prevent the front portion of the cleaning device 1000 from being lifted. In this way, the cleaning device 1000 can normally move, and the cleaning effect is not affected.

As shown in FIG. 27, when the cleaning device 1000 moves on the bottom of the pool, if the cleaning device 1000 meets a step and needs to clean a stepped surface, the first liquid discharge sub-opening 2151 may also be opened when the cleaning device 1000 climbs a vertical plane of the step, to better improve a wall climbing capability. Particularly, when the cleaning device 1000 moves from the vertical plane of the step to a horizontal plane, the first liquid discharge sub-opening 2151 located at the front portion of the cleaning device 1000 is opened, so that the cleaning device 1000 can be switched from a vertical state to the horizontal state more quickly. This improves operation efficiency. As shown in FIG. 28, when the cleaning device 1000 moves from a horizontal plane to a downhill slope, the first liquid discharge sub-opening 2151 is opened to avoid the following case: The cleaning device 1000 is separated from the downhill slope due to an inertia effect at a transition between the horizontal plane and the downhill slope, and then is lifted and flips. When the cleaning device 1000 moves from a horizontal plane to an uphill slope and then moves on the uphill slope, the first liquid discharge sub-opening 2151 is opened to prevent the cleaning device 1000 from being lifted and flipping on the uphill slope. As shown in FIG. 29, when the cleaning device 1000 moves from the uphill slope to the horizontal plane, the first liquid discharge sub-opening 2151 is opened to avoid the following case: The cleaning device 1000 remains in a tilting posture in which the cleaning device climbs the uphill slope, causing the cleaning device 1000 to be separated from the horizontal plane.

In an embodiment, when a tilt angle of the longitudinal plane of the cleaning device 1000 relative to the horizontal plane is less than or equal to a predetermined angle threshold, the first liquid discharge sub-opening 2151 may alternatively be controlled to be opened. The predetermined angle threshold may be, for example, 60°. However, this is not limited thereto. For example, the cleaning device 1000 is located on the target bottom wall 1012. In this case, the horizontal plane is the target bottom wall 1012, and the tilt angle of the longitudinal plane of the cleaning device 1000 relative to the horizontal plane is less than or equal to the predetermined angle threshold. In this case, the first liquid discharge sub-opening 2151 is opened to increase an action force between the cleaning device 1000 and the target bottom wall 1012, so that the cleaning device 1000 does not drift when moving or rotating on the target bottom wall 1012 with low friction. This improves a coverage rate of movement of the cleaning device 1000, thereby improving the cleaning effect and the cleaning efficiency. When the first liquid discharge sub-opening 2151 is close to the first side 113 of the cleaning device 1000, the first liquid discharge sub-opening 2151 is opened, so that the first side 113 of the cleaning device 1000 is not lifted when the cleaning device 1000 moves on the target bottom wall 1012 with a slope, for example, an uphill slope or a downhill slope, thereby preventing the cleaning device 1000 from flipping over. This improves the cleaning efficiency of the cleaning device 1000.

When the tilt angle of the longitudinal plane of the cleaning device 1000 relative to the horizontal plane is greater than or equal to the predetermined angle threshold, the second liquid discharge sub-opening 2161 may be opened. For example, the cleaning device 1000 is located on the target side wall 1011. In this case, the horizontal plane is the target side wall 1011, and the tilt angle of the longitudinal plane of the cleaning device 1000 relative to the horizontal plane is greater than or equal to the predetermined angle threshold. In this case, the second liquid discharge sub-opening 2161 is opened to provide a horizontal thrust whose direction is the same as the forward direction of the cleaning device 1000 while increasing an action force between the cleaning device 1000 and the target side wall 1011. The filtering box 120 of the cleaning device 1000 is clogged, causing an amount of water discharged through the second liquid discharge sub-opening 2161 to be reduced. In this case, under a component of a thrust provided by the second liquid discharge sub-opening 2161, the cleaning device 1000 may still move upward on the target side wall 1011 to be close to the water line, where a direction of the component of the thrust is the same as the forward direction of the cleaning device 1000. This improves a success rate of normal operation of the cleaning device 1000 on the target side wall 1011.

In some embodiments, when the tilt angle of the longitudinal plane of the cleaning device 1000 relative to the horizontal plane is greater than or equal to the predetermined angle threshold, if it is detected that the cleaning device 1000 has a flipping tendency, the first liquid discharge sub-opening 2151 may be opened. For example, opening of the second liquid discharge sub-opening 2161 may be switched to opening of the first liquid discharge sub-opening 2151, or liquid may be controlled to be discharged through both the first liquid discharge sub-opening 2151 and the second liquid discharge sub-opening 2161. Whether the cleaning device 1000 has the flipping tendency may be detected by the topography detection assembly 196 or a sensor such as an acceleration sensor or a gyroscope provided on the cleaning device 1000.

In some embodiments, the cleaning device 1000 includes a liquid discharge baffle plate 217. The liquid discharge baffle plate 217 may be configured to move between a first position and a second position. At the first position, the liquid discharge baffle plate 217 covers the first liquid discharge sub-opening 2151 and does not cover the second liquid discharge sub-opening 2161. In this case, the liquid flows out of the cleaning device 1000 through the second liquid discharge sub-opening 2161. At the second position, the liquid discharge baffle plate 217 covers the second liquid discharge sub-opening 2161 and does not cover the first liquid discharge sub-opening 2151. In this case, the liquid flows out of the cleaning device 1000 through the first liquid discharge sub-opening 2151. In an embodiment, there is a third position between the first position and the second position. When the liquid discharge baffle plate 217 is located at the third position, the liquid discharged through an outlet of the main drive pump 210 is partially discharged from the cleaning device 1000 through the first liquid discharge sub-opening 2151 and partially discharged from the cleaning device 1000 through the second liquid discharge sub-opening 2161. In this case, the first liquid discharge sub-opening 2151 at the front portion of the cleaning device 1000 and the second liquid discharge sub-opening 2161 at the rear portion of the cleaning device 1000 both generate a downward pressure, causing the cleaning device 1000 to be pressed toward the to-be-cleaned surface. In addition, the second liquid discharge sub-opening 2161 generates a thrust in the forward direction of the cleaning device 1000, so that the cleaning device 1000 can stably move on the to-be-cleaned surface.

In an embodiment, as shown in FIG. 26, the liquid discharge baffle plate 217 is a rotation baffle plate. The cleaning device 1000 further includes a first liquid discharge sub-duct 215 and a second liquid discharge sub-duct 216 that communicate with the outlet of the main drive pump 210. The first liquid discharge sub-duct 215 and the second liquid discharge sub-duct 216 communicate with the first accommodating cavity 111 through a liquid inlet 211 of the main drive pump 210. The first liquid discharge sub-opening 2151 is formed at an end of the first liquid discharge sub-duct 215, and the second liquid discharge sub-opening 2161 is formed at an end of the second liquid discharge sub-duct 216. A rotation shaft of the rotation baffle plate may be provided at a joint between the first liquid discharge sub-duct 215 and the second liquid discharge sub-duct 216, and the rotation baffle plate is driven by a baffle plate motor (not shown in the figure) to move among the first position, the third position, and the first position. In other embodiments, the liquid discharge baffle plate 217 may alternatively be a sliding baffle plate or the like. The baffle plate motor is electrically connected to the control system of the cleaning device 1000 to control the motor based on an operation condition of the cleaning device 1000.

In an embodiment, the liquid discharge baffle plate 217 may cover/not cover one of the first liquid discharge sub-duct 215 and the second liquid discharge sub-duct 216, thereby correspondingly covering/not covering the other one of the first liquid discharge sub-opening 2151 and the second liquid discharge sub-opening 2161.

With reference to FIG. 25, the cleaning device 1000 further includes a first handle 251. The first handle 251 is provided on the cleaning device body 110. Because the liquid enters the filtering box 120 when the cleaning device 1000 cleans the target region 100, some liquid in the filtering box 120 may not be discharged in time. When the cleaning device 1000 is lifted by using the first handle 251, a side of the cleaning device 1000 tilts downward, where the side is provided with the second liquid discharge opening 212, and the liquid in the filtering box 120 flows out through the second liquid discharge opening 212 and other liquid discharge channels under gravity. The liquid is discharged, so that the following case can be avoided: The liquid remains in the filtering box 120, affecting subsequent cleaning of the filtering box 120. In addition, this can further reduce the weight of the cleaning device 1000 and therefore facilitate lifting of the cleaning device 1000.

In some embodiments, the cleaning device body 110 is provided with an avoidance opening 251a configured to allow the user to reach into the avoidance opening 251a and grip the first handle 251 to lift the cleaning device 1000. When the user lifts the cleaning device 1000 by using the first handle 251, the fourth filtering surface 1234 of the filtering box 120 tilts and is at a lower portion of the entire filtering box 120, and the side of the main drive pump 210 tilts downward, where the side is provided with the second liquid discharge opening 212, so that the liquid in the filtering box 120 can flow to the main drive pump 210 through the fourth filtering surface 1234 under gravity and then be quickly discharged through the second liquid discharge opening 212. This can ensure liquid discharge efficiency, improve a liquid discharge ratio, and reduce the liquid remaining in the filtering box 120.

In some embodiments, the first handle 251 is fixed to the two first auxiliary cleaning assemblies 150. In other words, one end of the first handle 251 is fixed to one of the first auxiliary cleaning assemblies 150, and another end of first handle 251 is fixed to the other one of the first auxiliary cleaning assemblies 150. For example, the first handle 251 may be fixed to a side of the side brush cover 1513 of each of the two first auxiliary cleaning assemblies 150, and the side faces the sixth side 118 of the cleaning device body 110. The first handle 251 may alternatively be provided on the cleaning device body 110 or integrally molded with the housing of the cleaning device body 110.

Refer to FIG. 30 and FIG. 31 together. FIG. 30 is a sectional view of mating between a filtering box and a second handle of a cleaning device according to the present disclosure. FIG. 31 is a schematic structural view of a second handle of a cleaning device according to the present disclosure. The filtering box 120 in the present disclosure is configured to store trash sucked into through the debris inlet 1111. The cleaning device 1000 further includes the second handle 252. The second handle 252 is provided above the filtering box opening 122 of the filtering box 120. The second handle 252 is provided at the filtering box opening 122, so that the user can conveniently remove the filtering box 120 from the first accommodating cavity 111 by using the second handle 252. In an embodiment, the second handle 252 may move between a closed position and an open position relative to the filtering box 120. At the closed position, the filtering box cover 124 is in a closed state and tightly attached to the filtering box opening 122 of the filtering box 120. At the open position, the filtering box cover 124 is in an open state, and the user may remove the filtering box 120 from the cleaning device body 110 by using the second handle 252. The second handle 252 mates with the filtering box 120 by using a second reset assembly. When the filtering box cover 124 is closed, the second reset assembly is compressed, enabling the second handle 252 to be in the closed position. When the filtering box cover 124 is opened, the second handle 252 moves from the closed position to the open position under the action of the second reset assembly. The second reset assembly may be a compression spring, a spring sheet, or the like.

In some embodiments, an outer surface of the second handle 252 is smooth. This can reduce friction between the second handle 252 and a palm of the user to improve a hand feeling of the user when the user is in contact with the second handle 252, and can also reduce a probability that the trash adheres to the outer surface of the second handle 252. The second handle 252 may further avoid the trash suction flow path, so that the second handle 252 does not prevent the trash from entering the filtering box 120, and the probability that the trash adheres to the outer surface of the second handle 252 can be reduced. For example, when the trash enters the filtering box 120 through the debris inlet 1111 close to the first filtering surface 1231 along the trash suction flow path, and the liquid flowing into the filtering box 120 flows toward the fourth filtering surface 1234 and flows out through the first liquid discharge opening 1112, the second handle 252 may be provided on a side of the filtering box opening 122, where the side is close to the first filtering surface 1231, one end of the second handle 252 is provided on a side of the filtering box 120, where the side is provided with the second filtering surface 1232, and the other end is provided on a side of the filtering box 120, where the side is provided with the third filtering surface 1233. A gap between a side of the second handle 252 and the filtering box 120 is reduced when the second handle 252 is mounted on the filtering box 120, so that the following case can be avoided: The trash gets stuck between the side of the second handle 252 and the filtering box 120, leading to difficulty in cleaning the filtering box 120. For example, a gap between one end of the second handle 252 and the second filtering surface 1232 is reduced, and a gap between the other end of the second handle 252 and the third filtering surface 1233 is reduced.

In some embodiments, a distance between the second handle 252 and the filtering surface 123 in the suction flow path is increased, so that the following case can be avoided: The trash gets stuck between the second handle 252 and the filtering surface 123, leading to difficulty in cleaning the filtering box 120. For example, a region on the fourth filtering surface 1234 corresponds to the second handle 252, and the region tilts in a direction away from the second handle 252, to increase a distance D1 between the second handle 252 and the fourth filtering surface 1234, so that the following case can be avoided: The trash gets stuck between the second handle 252 and the fourth filtering surface 1234, leading to difficulty in cleaning the filtering box 120. In some embodiments, the distance between the second handle 252 and the filtering surface 123 ranges from 5 mm to 20 mm. For example, the distance D1 between the second handle 252 and the fourth filtering surface 1234 may be 7 mm, 14 mm, or the like, but is not limited thereto, provided that it can be ensured that the distance between the second handle 252 and the filtering surface 123 is within a range from 5 mm to 20 mm. The distance between the second handle 252 and the filtering surface 123 in the suction flow path is controlled to be within the range from 5 mm to 20 mm, so that the second handle 252 does not prevent the trash from entering the filtering box 120 through the debris inlet 1111 and does not prevent the liquid from being discharged through the filtering surface 123. In addition, the following case can be avoided: The trash gets stuck between the second handle 252 and the filtering surface 123, leading to difficulty in cleaning the filtering box 120.

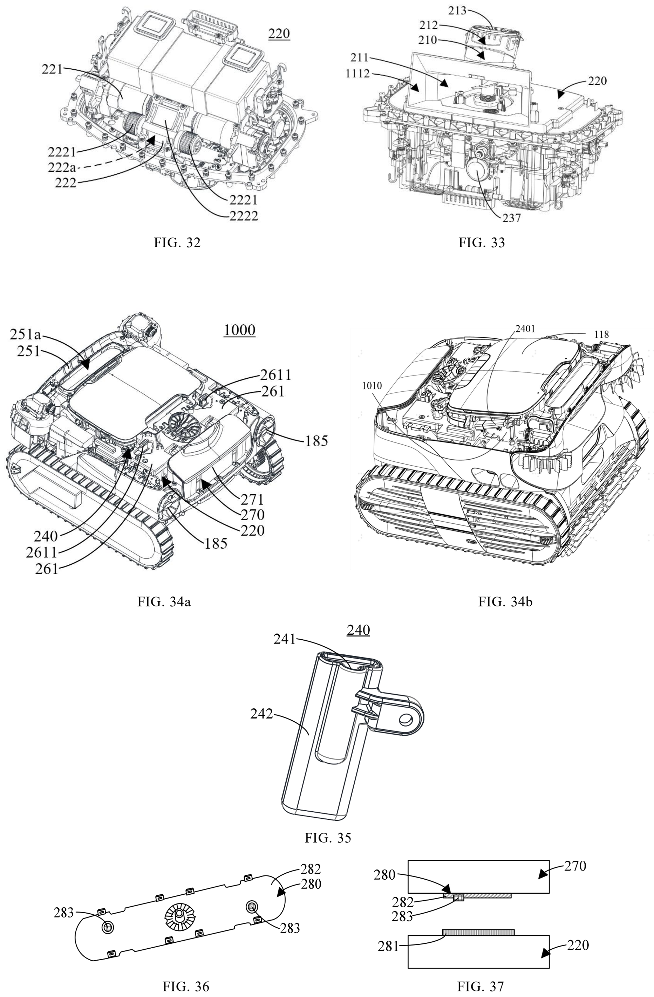

In some embodiments, refer to FIG. 32. FIG. 32 is a schematic structural view of an electronic control box of a cleaning device according to an embodiment of the present disclosure. The electronic control box 220 is configured to accommodate a battery (namely, a battery pack), the control system 231, various motors, and other power supply and control components. The electronic control box 220 needs to be waterproofed. Therefore, the electronic control box 220 is of a sealed structure to prevent liquid from entering the electronic control box 220. The electronic control box 220 includes an electronic control box body 221, an electronic control box terminal 222, and an electronic control box terminal cover 2222. The electronic control box terminal 222 is provided with a groove portion 222a and a plurality of wire extending portions 2221 communicating with the groove portion 222a, and the wire extending portions 2221, the groove portion 222a, and the inside of the electronic control box 220 sequentially communicate. The electronic control box terminal cover 2222 is configured to cover the groove portion 222a and be fixed to the electronic control box terminal 222 to seal the groove portion 222a and the electronic control box 220. The electronic control box terminal 222 is provided on the electronic control box body 221. Specifically, the electronic control box terminal 222 may be provided on a lower cover of the electronic control box 220 or directly inserted into the electronic control box 220. The second auxiliary cleaning assembly 160, the traveling mechanism 190, the propulsion assembly 180, the vision sensing assembly 140, the roller brush assembly 171, the main drive pump 210, and another module of the cleaning device 1000 may be electrically connected to the battery in the electronic control box 220 through the electronic control box terminal 222 or communicatively connected to the control system 231 of the electronic control box 220. An example in which the vision sensing assembly 140 is electrically connected to the control system 231 and/or the battery in the electronic control box 220 through the wire harness 1463 is used for description in embodiments of the present disclosure.

In some embodiments, with reference to FIG. 14 and FIG. 32, one end of the wire harness 1463 is away from the vision sensing assembly 140, and the end extends into the groove portion 222a through the wire extending portion 2221 and then extends into the electronic control box 220 through the groove portion 222a to be electrically connected to the control system 231 and/or the battery. In a process of mounting and sealing the electronic control box terminal 222, the electronic control box terminal cover 2222, and the wire harness 1463 in the electronic control box body 221, sealant is first filled between the wire extending portion 2221 and the wire harness 1463, and then a third sealing ring (not shown in the figure) is provided between the electronic control box terminal 222 and the electronic control box body 221, and then the electronic control box terminal 222 is fixed to the electronic control box body 221, so that the third sealing ring is press-fit between the electronic control box terminal 222 and the electronic control box body 221. Then, the sealant is filled into the groove portion 222a, and finally, the electronic control box terminal cover 2222 covers the groove portion 222a and is fixed to the electronic control box terminal 222. The third sealing ring is provided between the electronic control box terminal 222 and the electronic control box body 221, and the sealant is filled between the wire extending portion 2221 and the wire harness 1463 and filled into the groove portion 222a, so that the liquid is prevented from infiltrating into the electronic control box 220 from a gap between the electronic control box terminal 222 and the electronic control box body 221. In addition, the following case can be avoided: The sealant is directly filled for the electronic control box terminal 222, which may cause some electronic control box terminals 222 to be in poor contact, affecting operation of the electronic control box 220. Both a manner of fixing the electronic control box terminal 222 to the electronic control box body 221 and a manner of fixing the electronic control box terminal cover 2222 to the electronic control box terminal 222 may be screw fixing, rivet fixing, bolt fixing, pin-key fixing, welding fixing, adhesive bonding fixing, snap-fit fixing, magnetic adsorption fixing, and the like. However, this is not limited thereto.

In some embodiments, refer to FIG. 33. FIG. 33 is a schematic structural view of mating between an electronic control box and a prompt assembly of a cleaning device according to the present disclosure. The cleaning device 1000 further includes a prompt assembly 237. The prompt assembly 237 may be provided in the electronic control box 220. The prompt assembly 237 is configured to send prompt information. The prompt information includes a prompt of executing an operation step of the cleaning device 1000, a prompt that the cleaning device 1000 leaves the target region 100, a prompt that the cleaning device 1000 is moved at a side of the target region 100, a prompt that the filtering box 120 is full-loaded, a prompt that the filtering box 120 is clogged, and a prompt that the second auxiliary cleaning assembly 160, the traveling mechanism 190, the propulsion assembly 180, the vision sensing assembly 140, the roller brush assembly 171, the main drive pump 210, or another module of the cleaning device 1000 is faulty. However, this is not limited thereto. In some embodiments, the prompt assembly 237 is further configured to play voice. The prompt assembly 237 may be provided on an inner side wall of the electronic control box 220. In some embodiments, the prompt assembly 237 may be provided on the inner top wall of the electronic control box 220, so that when the cleaning device 1000 is on the water surface of the target region 100 or when the cleaning device 1000 is in the station, a user can control the cleaning device 1000 based on prompt information sent by the prompt assembly 237. The prompt assembly 237 may be a loudspeaker, an LED, a vibrator, or the like. The prompt information may be voice and music played by the loudspeaker, light and a flash emitted by the LED, a vibration generated by the vibrator, or the like.

Refer to FIG. 34a. FIG. 34a is a partial schematic structural view of a cleaning device according to an embodiment of the present disclosure. The cleaning device 1000 further includes a first buoyancy cavity 261. The first buoyancy cavity 261 may be provided on an outer top wall of the electronic control box 220. The first buoyancy cavity 261 may be configured to accommodate liquid and/or gas. The cleaning device 1000 further includes a first buoyancy adjustment and control part 2611. The first buoyancy adjustment and control part 2611 may be configured to adjust a volume of the liquid and/or the gas in the first buoyancy cavity 261. The volume of the liquid and/or the gas in the first buoyancy cavity 261 is adjusted by using the first buoyancy adjustment and control part 2611 to change a magnitude of a buoyancy force applied to the cleaning device 1000 in a vertical direction, so that the cleaning device 1000 is switched between floating on the water surface of the target region 100 and moving on the bottom of the target region 100.

There may be one, two, or a plurality of first buoyancy cavities 261. When there is one first buoyancy cavity 261, the first buoyancy cavity 261 is located at a connection line between centers of the two traveling mechanisms 190. When the cleaning device 1000 is located on the water surface of the target region 100, a shape of the first buoyancy cavity 261 needs to be set in such a way that the first debris inlet 1111a or the second debris inlet 1111b is at least partially exposed above the water surface under the buoyancy force applied to the cleaning device 1000. When there are a plurality of first buoyancy cavities 261, adjacent first buoyancy cavities 261 may communicate with or not communicate with each other. For example, when there are two first buoyancy cavities 261, one first buoyancy cavity 261 is closer to the third side 115 of the cleaning device body 110 than the main drive pump 210 and the electronic control box 220, and is located above or fixed to the outer top wall of the electronic control box 220, and the other first buoyancy cavity 261 is closer to the fourth side 116 of the cleaning device body 110 than the main drive pump 210 and the electronic control box 220, and is located above or fixed to the outer top wall of the electronic control box 220. There may be two first buoyancy adjustment and control parts 2611, and the first buoyancy cavity 261 is connected to the corresponding first buoyancy adjustment and control part 2611. At least two first buoyancy cavities 261 are provided, so that stability of the buoyancy force can be improved. This prevents the cleaning device 1000 from overturning and deflecting due to an uneven buoyancy force applied to the cleaning device 1000 under or on the water surface.

The first buoyancy cavity 261 may be, but is not limited to, an inflatable buoyancy cavity, a liquid-containing buoyancy cavity, a partitioned buoyancy cavity, or the like. A volume of the first buoyancy cavity 261 may be preset. The first buoyancy cavity 261 may be made of a flexible material and/or a rigid material. The flexible material may include, but is not limited to, polyvinyl alcohol resin, polyethylene terephthalate, rubber, and the like. The rigid material may include, but is not limited to, glass, ceramics, phenolic plastic, polyurethane plastic, epoxy plastic, unsaturated polyester plastic, and the like. For example, the first buoyancy cavity 261 may be of a two-layer structure: an inner layer and an outer layer. The inner layer may be made of a flexible material and is configured to accommodate liquid and/or gas. The outer layer is a rigid protection housing 242 and may be configured to provide protection and stability for the inner layer.

The first buoyancy adjustment and control part 2611 may be further configured to adjust the volume of the gas in the first buoyancy cavity 261. For example, when the first buoyancy cavity 261 made of the flexible material is in a deflated state, gas may be input into the first buoyancy cavity 261 by using the first buoyancy adjustment and control part 2611, to increase the volume of the gas in the first buoyancy cavity 261. In this way, the buoyancy force applied to the cleaning device 1000 in the vertical direction is increased.

The first buoyancy adjustment and control part 2611 may be further configured to adjust the volume of the liquid in the first buoyancy cavity 261. The cleaning device 1000 may adjust the volume of the liquid in the first buoyancy cavity 261 by using the first buoyancy adjustment and control part 2611 to adjust the volume of the gas in the first buoyancy cavity 261, thereby changing the magnitude of the buoyancy force applied to the cleaning device 1000 in the liquid. For example, when the first buoyancy cavity 261 made of the rigid material contains liquid, the first buoyancy adjustment and control part 2611 may pump out the liquid in the first buoyancy cavity 261 to increase the magnitude of the buoyancy force applied to the cleaning device 1000 in the vertical direction. The first buoyancy adjustment and control part 2611 may be any component that can adjust the gas and/or the liquid in the first buoyancy cavity 261. The first buoyancy adjustment and control part 2611 may include a first buoyancy cavity pump. The first buoyancy cavity pump may drive the liquid in the first buoyancy cavity 261 to be discharged. The first buoyancy cavity 261 pump may be, but is not limited to, a pneumatic pump, a hydraulic pump, an electric pump, a peristaltic pump, or the like. In a working state, the first buoyancy cavity 261 pump can adjust the liquid and/or the gas in the first buoyancy cavity 261. In a non-working state, the first buoyancy 261 cavity bump can prevent any water flow and/or liquid outside the cleaning device 1000 from entering the first buoyancy cavity 261, so that the first buoyancy cavity 261 is not affected by the external liquid and/or gas. The first buoyancy adjustment and control part 2611 may alternatively be another component. For example, the first buoyancy adjustment and control part 2611 may be a piston assembly provided inside the first buoyancy cavity 261. The piston assembly moves inside the first buoyancy cavity 261 to adjust the volume of the gas and/or the liquid in the first buoyancy cavity 261.

Refer to FIG. 34a, FIG. 34b, and FIG. 35 together. FIG. 34b is a partial schematic structural view of a cleaning device according to another embodiment of the present disclosure. FIG. 35 is a schematic structural view of a data transmission assembly of a cleaning device according to the present disclosure. The cleaning device 1000 further includes a data transmission assembly 240. The data transmission assembly 240 may be provided at a position close to the sixth side 118 of the cleaning device body 110, for example, provided at the top of an inner side wall of the cleaning device body 110, inside a top wall, above the first buoyancy cavity 261 of the cleaning device 1000, or close to an upper edge of the filtering box cavity 1010, so that when the cleaning device 1000 is located on the water surface of the target region 100, the data transmission assembly 240 is located above the water surface. This facilitates establishment of a communication connection between the data transmission assembly 240 and the communication device. The data transmission assembly 240 may alternatively be provided in the electronic control box 220 or another confined space, and an antenna 2401 connected to the data transmission assembly 240 may be provided adjacent to or located at the sixth side 118, so that when the cleaning device 1000 is located on the water surface of the target region 100, the antenna 2401 is located above the water surface. In this way, the data transmission assembly 240 can send and receive data through the antenna 2401 and further establish the communication connection with the communication device. The data transmission assembly 240 may be a Wi-Fi assembly, a Bluetooth assembly, or the like, and the communication device may be a mobile phone, a tablet computer, a notebook computer, a desktop computer, the station of the cleaning device 1000, or the like. However, this is not limited thereto. The data transmission assembly 240 and/or the antenna 2401 may be provided in a manner, for example, screwed connection, bolt connection, adhesive bonding, snap-fit connection, or magnetic adsorption connection. However, this is not limited thereto. Certainly, the data transmission assembly 240 and/or the antenna 2401 may alternatively be provided at other positions, provided that it can be ensured that the data transmission assembly 240 and/or the antenna 2401 can be located above the water surface when the cleaning device 1000 is located on the water surface of the target region 100. Based on the above disposition, the data transmission assembly 240 can transmit a data signal in air. This reduces problems, for example, signal attenuation caused by transmission of the data signal between air and liquid.

In some embodiments, when there are two first buoyancy cavities 261, the data transmission assembly 240 and/or the antenna 2401 are/is provided at the top of the first buoyancy cavity 261 close to the third side 115 of the cleaning device body 110. In other words, the data transmission assembly 240 and/or the antenna 2401 are/is provided at the top of the first buoyancy cavity 261 close to the left side of the cleaning device 1000 in the forward direction. Certainly, the data transmission assembly 240 and/or the antenna 2401 may alternatively be provided at the top of the first buoyancy cavity 261 close to the fourth side 116 of the cleaning device body 110. In other words, the data transmission assembly 240 and/or the antenna 2401 may alternatively be provided at the top of the first buoyancy cavity 261 close to the left side of the cleaning device 1000 in the forward direction.

The data transmission assembly 240 includes a data transmission member 241, a protection housing 242, and a connection line (not shown in the figure). The data transmission member 241 is provided in the protection housing 242. One end of the connection line extends into the protection housing 242 and is electrically connected to the data transmission member 241, and the other end of the connection line may extend into the electronic control box 220 to be connected to the control system 231 in the electronic control box 220. The data transmission member 241 is sealed in the protection housing 242 by filling glue. A cover of the connection line has good waterproof performance. The cover of the connection line may be selected from, but is not limited to, thermoplastic polyurethane (TUP), high density polyethylene (HDPE), polyvinyl chloride (PVC), and the like. However, this is not limited thereto. The cleaning device 1000 may access a network through the data transmission assembly 240 and establish the communication connection with the communication device, for example, a mobile phone, a tablet computer, a notebook computer, a desktop computer, or the station of the cleaning device 1000, so that the user can conveniently control the cleaning device 1000 by using the communication device.

In some embodiments, after the cleaning device 1000 establishes the communication connection with the communication device, the user may control, by using the communication device, the cleaning device 1000 to perform operations, for example, moving, returning to a specific position, starting working, stopping working, selecting a cleaning mode, and selecting a cleaning region. The user may control, by using a physical or virtual button on the communication device, the cleaning device 1000 to move in any direction, for example, pressing, tapping, or sliding the button. Duration for pressing the button or pressing strength of the button may be adjusted to change moving duration and/or a moving speed of the cleaning device 1000. However, this is not limited thereto.

In some embodiments, after the cleaning device 1000 establishes the communication connection with the communication device, data of the cleaning device 1000 may be displayed on a display apparatus of the communication device, for example, a remaining battery level of the cleaning device 1000, a network connection state, a working state, a map of the target region 100 constructed by the cleaning device 1000, a motion trajectory of the cleaning device 1000 in the target region 100, or data detected by the cleaning device 1000, for example, water quality data or water temperature data.

In some embodiments, as shown in FIG. 21, the cleaning device 1000 further includes a second buoyancy cavity 262. The second buoyancy cavity 262 may be provided on a side of the first side 113 of the cleaning device body 110, and the side of the first side 113 faces the filtering box 120. The second buoyancy cavity 262 is configured to balance buoyancy forces applied to the front portion and the rear portion of the cleaning device 1000 in the forward direction to prevent the cleaning device 1000 from tilting forward or backward. The second buoyancy cavity 262 may be configured to accommodate liquid and/or gas. The cleaning device 1000 further includes a second buoyancy adjustment and control part 2621. The second buoyancy adjustment and control part 2621 may be configured to adjust a volume of the liquid and/or the gas in the second buoyancy cavity 262. The volume of the liquid and/or the gas in the second buoyancy cavity 262 is adjusted by the second buoyancy adjustment and control part 2621 to balance the buoyancy forces applied to the front portion and the rear portion of the cleaning device 1000.

There may be one, two, or a plurality of second buoyancy cavities 262. When there is one second buoyancy cavity 262, the second buoyancy cavity 262 may be closer to the travel surface 101 of the cleaning device 1000 than the vision sensing assembly 140 and located at a symmetric axis of the two traveling mechanisms 190. When there are two second buoyancy cavities 262, one second buoyancy cavity 262 is closer to the third side 115 of the cleaning device body 110 than the vision sensing assembly 140, and the other second buoyancy cavity 262 is closer to the fourth side 116 of the cleaning device body 110 than the vision sensing assembly 140. There may be two second buoyancy adjustment and control parts 2621, and the second buoyancy cavity 262 is connected to the corresponding second buoyancy adjustment and control part 2621.

The second buoyancy cavity 262 may be, but is not limited to, an inflatable buoyancy cavity, a liquid-containing buoyancy cavity, a partitioned buoyancy cavity, or the like. A volume of the second buoyancy cavity 262 may be preset. The second buoyancy cavity 262 may be made of a flexible material and/or a rigid material. The flexible material may include, but is not limited to, polyvinyl alcohol resin, polyethylene terephthalate, rubber, foam, and the like. The rigid material may include, but is not limited to, glass, ceramic, phenolic plastic, polyurethane plastic, epoxy plastic, unsaturated polyester plastic, and the like. The second buoyancy cavity 262 may be of a two-layer structure: an inner layer and an outer layer. The inner layer may be made of the flexible material and is configured to accommodate liquid and/or gas. The outer layer is a rigid protection housing 242 and may be configured to provide protection and stability for the inner layer.

The cleaning device 1000 may adjust the volume of the liquid in the second buoyancy cavity 262 by using the second buoyancy adjustment and control part 2621 to adjust gravity of the front portion of the cleaning device 1000, to balance the buoyancy forces applied to the front portion and the rear portion of the cleaning device 1000. For example, before the cleaning device 1000 cleans the target region 100, a weight of the front portion of the cleaning device 1000 is less than a weight of the rear portion of the cleaning device 1000, and the second buoyancy adjustment and control part 2621 may control liquid to enter the second buoyancy cavity 262, so that the weight of the front portion and the weight of the rear portion of the cleaning device 1000 are the same or similar to balance the buoyancy forces applied to the front portion and the rear portion of the cleaning device 1000. In a process in which the cleaning device 1000 performs cleaning, the second buoyancy adjustment and control part 2621 may be controlled, based on a difference in the buoyancy forces of the front portion and the rear portion of the cleaning device 1000, to allow liquid to be discharged from the second buoyancy cavity 262, to prevent the cleaning device 1000 from tilting forward.

In some embodiments, as shown in FIG. 21 and FIG. 22, the cleaning device 1000 further includes a water quality treatment assembly 270. The water quality treatment assembly 270 may be detachably mounted inside the cleaning device body 110. For example, the water quality treatment assembly 270 may be provided on a side inside the cleaning device body 110, and the side is away from the filtering box 120. For another example, the water quality treatment assembly 270 may be provided behind the second liquid discharge opening 212. Optionally, the water quality treatment assembly 270 and the filtering box 120 may be respectively provided on two sides of the second liquid discharge opening 212. Because the water quality treatment assembly 270 and the filtering box 120 each need to be detached and mounted, the water quality treatment assembly 270 and the filtering box 120 are provided on two sides of the cleaning device body 110, and especially, are separated by the second liquid discharge opening 212. This can facilitate detaching and mounting of each of the water quality treatment assembly 270 and the filtering box 120. Optionally, the filtering box 120 and the water quality treatment assembly 270 separately communicate with the second liquid discharge opening 212 through a flow channel or a pipeline, and the liquid filtered by the filtering box 120 and a reagent spread by the water quality treatment assembly 270 are both discharged through the second liquid discharge opening 212. The filtering box 120 and the water quality treatment assembly 270 are provided on the two sides of the second liquid discharge opening 212, so that the filtering box 120 and the water quality treatment assembly 270 can separately communicate with the second liquid discharge opening 212 through a flow channel or a pipeline. The water quality treatment assembly 270 spreads the reagent into the pool to implement water quality treatment of the pool. The water quality treatment assembly 270 includes a reagent kit 271 and a reagent drive part (not shown in the figure). The reagent kit 271 is configured to store one or more types of reagents. The reagent may include, but is not limited to, a disinfectant, an algaecide, a coagulant aid, a pH adjuster, and the like. The reagent kit 271 includes the reagent drive part. The reagent drive part is configured to provide a driving force to spread the reagent. The reagent drive part may be a reagent drive pump.

In some embodiments, the cleaning device 1000 includes an in-position sensing assembly 280. The in-position sensing assembly 280 is configured to detect whether the reagent kit 271 is mounted in position, to ensure that only after the reagent kit 271 is mounted in position, the cleaning device 1000 can normally spread the reagent. In this way, the following case can be avoided: The reagent kit 271 is not mounted in position or has not been mounted in the cleaning device 1000 yet, causing the cleaning device 1000 not to normally spread the reagent.

The in-position sensing assembly 280 includes at least one of a magnetic induction assembly, an inductance assembly, or a switch assembly. During actual use, a detection manner may be adjusted based on an actual requirement. For example, the in-position sensing assembly 280 may be the magnetic induction assembly, the inductance assembly, or the switch assembly. Alternatively, the in-position sensing assembly 280 may include all of the magnetic induction assembly, the inductance assembly, and the switch assembly. The magnetic induction assembly may sense, in a magnetic induction manner, whether the reagent kit 271 is in position. A Hall element 281 and a Hall magnet 283 may mate with each other to implement the magnetic induction manner. The inductance assembly may detect, in an inductance manner, whether the reagent kit 271 is in position. The switch assembly detects, by using a switch part, whether the reagent kit 271 is in position. It should be noted that the magnetic induction assembly, the inductance assembly, and the switch assembly may be provided with a waterproof component based on a requirement, to prevent short circuits. This helps ensure use performance of the in-position sensing assembly 280 and improve stability of the in-position sensing assembly 280.

In embodiments of the present disclosure, an example in which the in-position sensing assembly 280 is the magnetic induction assembly is used for description. Refer to FIG. 36 and FIG. 37. FIG. 36 is a schematic structural view of mating between a Hall magnet and a carrier plate of an in-position sensing assembly of a cleaning device according to the present disclosure. FIG. 37 is a schematic structural view of mating between a Hall element and a Hall magnet of an in-position sensing assembly of a cleaning device according to an embodiment of the present disclosure. The magnetic induction assembly includes a Hall element 281, a carrier plate 282, and a Hall magnet 283. The Hall magnet 283 is provided on a side of the carrier plate 282, and the side faces the Hall magnet 283. The Hall element 281 may be provided on a circuit board, and the circuit board is configured to at least provide a stable power supply and a magnetic circuit for the Hall element 281, to ensure operation stability of the in-position sensing assembly and improve in-position sensing efficiency of the in-position sensing assembly. One of the Hall element 281 and the carrier plate 282 is provided in the reagent kit 271, and the other one of the Hall element 281 and the carrier plate 282 is provided on the electronic control box 220 or the cleaning device body 110. A magnetic field of the Hall magnet 283 can penetrate the reagent kit 271 and the electronic control box 220, and the Hall element 281 can sense the magnetic field.

In some embodiments, the cleaning device 1000 further includes a first component, a second component, at least one power component, and at least one discharging hole. The first component and the second component are provided on the cleaning device body 110. The first component can move relative to the second component. The at least one power component is provided in the cleaning device body 110 and configured to generate an action force, so that a foreign matter between the first component and the second component can be discharged. The at least one discharging hole is provided on at least one of the first component or the second component and is in fluid communication with the at least one power component of the cleaning device body 110. The action force may be a force generated when the power component drives fluid or gas. The discharging hole may be provided on the first component or the second component or provided on each of the first component and the second component.

The first component is a component that moves relative to the cleaning device body 110, and the second component is a component, for example, a guide rail, that limits space in which the first component moves. The discharging hole is provided at a movable component of the cleaning device 1000, and a foreign matter at the movable component is discharged through the discharging hole under the action force generated by the power component, so that the following case can be avoided: The foreign matter continues to exist at the movable component, causing the movable component to be jammed. The foreign matter may be gravel, debris, and the like. A manner of discharging the foreign matter between the first component and the second component may be discharging the foreign matter into the cleaning device body 110 or discharging the foreign matter out of the cleaning device body 110. This is not specifically limited herein.

In some embodiments, a first discharging hole may be provided on the first component, and a second discharging hole may be provided on the second component. The first discharging hole and the second discharging hole are both in fluid communication with the power component.

With reference to FIG. 43a, FIG. 43b, and FIG. 43c, one of the first component and the second component is a pressing assembly 125 of a filtering box cover plate assembly, and the other one of the first component and the second component forms a part of the filtering box cover 124. The pressing assembly 125 is configured to allow the filtering box cover 124 to be opened. The discharging hole 128 is in fluid communication with the filtering box 120, so that the foreign matter is discharged into the filtering box 120 under the action of the power component. For fluid communication, the fluid may be water that may flow into the filtering box 120 through the discharging hole 128. The water may directly flow into the filtering box 120 through the discharging hole 128 or may first flow through the discharging hole 128 and then flow into the filtering box 120 through a pipeline between the discharging hole 128 and the filtering box 120. This is not specifically limited herein.

For example, when the first component is the pressing assembly 125, the second component is a snap-fit component of the filtering box cover 124, and the snap-fit component is connected to the pressing assembly.

Specifically, the first component of the cleaning device 1000 is the pressing assembly 125 in the filtering box cover plate assembly, and the filtering box cover 124 in the filtering box cover plate assembly includes at least a part of the second component. In other words, the second component is partially or completely located on the filtering box cover 124, and the filtering box cover plate assembly is provided on the cleaning device body 110. The filtering box cover 124 is configured to cover an opening of the filtering box 120 of the cleaning device body 110. The filtering box 120 is provided in a cavity of the cleaning device body 110. The pressing assembly 125 is provided on a side of the filtering box cover 124. The pressing assembly 125 is configured to control the filtering box cover 124 to be opened and closed. The discharging hole 128 is provided corresponding to the pressing assembly 125. The pressing assembly 125 communicates with the filtering box 120 through the discharging hole 128, so that the foreign matter at the pressing assembly 125 is discharged through the discharging hole 128 to the filtering box 120 under the action force.

In some embodiments, a side of the filtering box cover 124 is away from the pressing assembly 125, and the side is movably connected to the cleaning device body 110. The filtering box cover 124 may be opened under the action of the pressing assembly 125, so that the filtering box 120 is removed from the cleaning device body 110. When the filtering box cover 124 is opened, the filtering box cover 124 may flip over around the side of the filtering box cover 124, where the side is away from the pressing assembly 125.

Specifically, for a structure of connecting the filtering box cover 124 to the cleaning device body 110, refer to FIG. 43a and FIG. 43f. A connection part, for example, a U-shaped connection part 126, is provided on the side of the filtering box cover 124, where the side is away from the pressing assembly 125. One end of the U-shaped connection part 126 is fixed to the side of the filtering box cover 124, where the side is away from the pressing assembly 125, and the other end of the U-shaped connection part 126 is movably connected to the cleaning device body 110 through a bolt, so that the filtering box cover 124 flips over relative to the cleaning device body 110. With reference to FIG. 43f, the U-shaped connection part 126 is movably connected to the cleaning device body 110 through a first fixing part 127. The U-shaped connection part 126 mates with the first fixing part 127 to limit a position of the filtering box cover 124 in an open state and a closed state, to ensure stability of the filtering box cover 124 in the open state and the closed state. It should be understood that the side of the filtering box cover 124 may alternatively be connected to the cleaning device body 110 through a hinge or the like, where the side is away from the pressing assembly 125. This is not specifically limited herein.

In some embodiments, one end of the U-shaped connection part 126 is provided with a rotation shaft portion 1261. At least two curved concave portions 1262 are spaced from each other on an outer side of the rotation shaft portion 1261 in a circumferential direction. The curved concave portion 1262 extends in an axial direction of the rotation shaft portion 1261. A first groove 1274 and a second groove 1275 are respectively provided on a first side wall 1271 and a second side wall 1272 of the first fixing part 127. The end of the U-shaped connection part 126 is movably provided in the first groove 1274 and the second groove 1275 through the rotation shaft portion. A third side wall 1273 of the first fixing part 127 is in contact with the U-shaped connection part 126, and the third side wall 1273 is provided with a curved convex portion 1263. A shape of the curved convex portion 1263 matches a shape of the curved concave portion 1262 on the U-shaped connection part 126, so that the curved convex portion 1263 mates with the curved concave portion 1262 to ensure the stability of the filtering box cover 124 in the open state and the closed state. When the filtering box cover 124 is in the closed state, the curved convex portion 1263 is in contact with and abuts against one curved concave portion 1262. In other words, the curved convex portion 1263 is configured to limit a position of and fix the curved concave portion 1262 to limit a position of the end of the U-shaped connection part 126, to prevent the U-shaped connection part 126 from accidentally rotating, so that the stability of the filtering box cover 124 in the closed state can be ensured. When the filtering box cover 124 is in the open state, the curved convex portion 1263 is in contact with and abuts against the other curved concave portion 1262. In other words, the curved convex portion 1263 is configured to limit a position of and fix the other curved concave portion 1262 to limit the position of the end of the U-shaped connection part 126, to prevent the U-shaped connection part 126 from accidentally rotating, so that the stability of the filtering box cover 124 in the open state can be ensured.

With reference to FIG. 43d and FIG. 43e, the pressing assembly 125 includes a pressing portion 1251, a pressing elastic part 1252, and a locking portion 1253. A first end of the pressing portion 1251 is provided on one side of the filtering box cover 124. One end of the pressing elastic part 1252 is connected to the first end of the pressing portion 1251, and the other end of the pressing elastic part 1252 is connected to the filtering box cover 124. The locking portion 1253 is provided on the cleaning device body 110. A second end of the pressing portion 1251 can abut against the locking portion 1253, so that the pressing portion 1251 is locked to the locking portion 1253. The pressing portion 1251 is pressed to drive the pressing elastic part 1252 to be compressed, so that the pressing portion 1251 is not locked to the locking portion 1253. In this way, the filtering box cover 124 is opened. The discharging hole 128 is provided corresponding to the pressing portion 1251 and/or the pressing elastic part 1252.

Specifically, the locking portion 1253 is fixed to the cleaning device body 110. When the pressing portion 1251 is locked to the locking portion 1253, the locking portion 1253 abuts against the pressing portion 1251, and the locking portion 1253 is higher than the pressing portion 1251.

The discharging hole 128 is provided corresponding to the pressing portion 1251 and may be provided on a motion trajectory of the pressing portion 1251, for example, on the bottom of space formed by the pressing portion 1251 and the filtering box cover 124. The discharging hole 128 is provided corresponding to the pressing elastic part 1252 and may be provided on a side of the pressing elastic part 1252, where the side is connected to the filtering box cover 124. The discharging holes 128 are provided corresponding to the pressing portion 1251 and the pressing elastic part 1252 and may be provided both on the motion trajectory of the pressing portion 1251 and on the side of the pressing elastic part 1252, where the side is connected to the filtering box cover 124.

In some embodiments, as shown in FIG. 43d, a position-limiting groove 12511 is provided at the first end of the pressing portion 1251, and the position-limiting groove 12511 is configured to limit a compression direction of the pressing elastic part 1252, so that the following case can be avoided: The pressing elastic part 1252 is bent during compression, affecting pressing experience of the user. To further prevent the pressing elastic part 1252 from being separated from the pressing portion 1251 or the filtering box cover 124 during compression and resetting, the pressing elastic part 1252 may be in a snap-fit connection to the filtering box cover 124.

In some embodiments, as shown in FIG. 43b and FIG. 43d, a positioning groove 12512 may be provided at the first end of the pressing portion 1251, and the positioning groove 12512 is configured to mate with a positioning post 12513 on a side of the filtering box cover 124 for performing position limiting, so that the following case can be avoided: The pressing portion 1251 deviates leftward or rightward when the pressing portion 1251 is pressed, affecting pressing experience of the user. When the pressing portion 1251 is in a normal state, only a small part of the positioning post 12513 is provided in the positioning groove 12512. When the pressing portion 1251 is in a pressed state, most of the positioning post 12513 or the entire positioning post 12513 is provided in the positioning groove 12512. In this way, when the user presses different positions on the pressing portion 1251, the pressing portion 1251 can move toward the filtering box cover 124 without deviating.

In addition, the pressing portion 1251 may be connected to the filtering box cover 124. For example, the pressing portion 1251 is in a snap-fit connection to the filtering box cover 124. This is not specifically limited herein.

In this embodiment, a side of the pressing portion 1251 faces the filtering box cover 124, and the side is provided with both the position-limiting groove 12511 and the positioning groove 12512 to improve the pressing experience of the user.

In some embodiments, at least one discharging hole 128 is provided between the filtering box cover 124 and the pressing assembly 125, and the discharging hole 128 is provided corresponding to the pressing assembly 125. With reference to FIG. 43b, the discharging hole 128 is provided on a side of the filtering box cover 124, where the side is connected to the pressing elastic part 1252. Alternatively, the discharging hole 128 is provided on a region of the filtering box cover 124, and the region corresponds to the pressing assembly 125.

The discharging holes 128 are uniformly arranged. When the cleaning device 1000 cleans the pool, the main drive pump 210 may generate power to drive water around the pump to move. In this case, at least one or a plurality of water flow channels passing through the cleaning device 1000 can be formed under the power generated by the main drive pump 210. A foreign matter between the filtering box cover 124 and the pressing assembly 125 may be driven by water in at least one water flow channel to be discharged into the filtering box 120 through the discharging hole 128.

In addition, in addition to the filtering box cover 124, other components such as a connection plate may be provided at a gap between the pressing assembly 125 and the filtering box 120. Therefore, the discharging hole 128 may alternatively not be provided on the filtering box cover 124 and may be provided on other components between the pressing assembly 125 and the filtering box 120.

In this embodiment, an upper portion of the filtering box 120 is open, and the filtering box cover 124 serves as a top cover of the filtering box 120. If the filtering box 120 is provided with a top cover, an opening may be provided at a position on the upper portion of the filtering box 120, where the position is adjacent to the discharging hole 128, so that the pressing portion 1251 is in fluid communication with the inside of the filtering box 120 through the discharging hole 128.

During use, the pressing portion 1251 is pressed, so that the pressing portion 1251 moves backward toward the filtering box cover 124 to drive the pressing elastic part 1252 to be compressed. In this way, the pressing portion 1251 is not locked to the locking portion 1253. In this case, the filtering box cover 124 is in an unlocked state, and the filtering box cover 124 may be opened. When the filtering box cover 124 is closed, the pressing portion 1251 is first pressed 1251, so that the pressing portion 1251 moves backward toward the filtering box cover 124 to drive the pressing elastic part 1252 to be compressed and then remain in a compressed state. At the same time, the filtering box cover 124 flips downward until the filtering box cover 124 is in the closed state, and then the pressing portion 1251 is released. Under a restoring force generated by the pressing elastic part 1252, the pressing portion 1251 moves forward to abut against the locking portion 1253 until the pressing portion is locked to the locking portion 1253.

In some embodiments, a plurality of discharging holes 128 are uniformly provided on the side of the filtering box cover 124, where the side is connected to the pressing elastic part 1252. The discharging holes 128 may be all of a same diameter or partially of a same diameter, and the diameter of the discharging hole 128 may be greater than a diameter of the foreign matter. One end of the discharging hole 128 communicates with the inside of the filtering box 120, and the other end of the discharging hole 128 communicates with the pressing assembly 125, so that the foreign matter at the pressing assembly 125 can be discharged to the filtering box 120 under the action of a water flow, and then the filtering box 120 filters out and collects the foreign matter entering the filtering box 120.

The filtering box cover 124 in this embodiment is provided at the opening of the filtering box of the cleaning device 1000, and opening and closing of the filtering box cover 124 are controlled by using the pressing assembly provided on a side of the filtering box cover 124. The pressing assembly communicates with the filtering box through the discharging hole 128 in the filtering box cover plate assembly, and the foreign matter at the pressing assembly is discharged through the discharging hole 128 to the filtering box under an external force, so that the following case can be avoided: The foreign matter gets stuck at the pressing assembly, causing the pressing assembly to be jammed. This improves user experience.

In this embodiment, under the premise of using the pressing assembly, the following effects are implemented by disposing the discharging hole and under the action of the water flow of the main drive pump 210 of the cleaning device 1000: First, dust, sand, stones, and other foreign matters are prevented from getting stuck at the pressing assembly, so that the pressing assembly is effectively prevented from being jammed, leading to smoother operation of the user; second, wear and tear caused by jamming of the pressing assembly is reduced, so that a service life of the pressing assembly is greatly improved; and third, because the service life of the pressing assembly is improved, after-sales costs caused by maintenance are greatly reduced.

In some embodiments, ridges are added on the filtering box cover 124 and/or the pressing assembly 125, and the ridges may be spaced from each other in parallel on the filtering box cover 124 and/or the pressing assembly 125. Due to the ridges, there is a gap between the filtering box cover 124 and the pressing assembly 125, so that the foreign matter can flow to the discharging hole 128 through the gap and then be discharged through the discharging hole 128. This further improves a discharging effect of the foreign matter. As shown in FIG. 43g, a plurality of first ridges 12514 are spaced from each other in parallel at the bottom of the pressing portion 1251, and a plurality of second ridges 12515 are also spaced from each other in parallel at a position on the filtering box cover 124, where the position corresponds to the bottom of the pressing portion 1251. The first ridges 12514 and the second ridges 12515 are provided in a staggered manner.

With reference to FIG. 1 and FIG. 25, the first component of the cleaning device 1000 may alternatively be a third auxiliary cleaning assembly 170 of the cleaning device 1000, and the second component is at least a part of an assembly forming a cleaning assembly mounting portion. The third auxiliary cleaning assembly 170 is connected to the cleaning device body 110 through the cleaning assembly mounting portion. The discharging hole 128 is provided corresponding to the third auxiliary cleaning assembly 170 and configured to allow a foreign matter between the third auxiliary cleaning assembly 170 and the second component to be discharged under the action of the power component. For example, the second component is a guide rail, and the third auxiliary cleaning assembly 170 is slidably connected to the guide rail to clean to-be-cleaned objects at different positions. The guide rail may be completely located on the cleaning assembly mounting portion or partially located on the cleaning assembly mounting portion. This is not specifically limited herein.

In some embodiments, the third auxiliary cleaning assembly 170 may be a roller brush, and the second component may be a bearing. The bearing is a part of the cleaning assembly mounting portion. The cleaning assembly mounting portion is fixed to the cleaning device body 110, so that the roller brush rolls relative to the bearing.

The power component is configured to drive the roller brush to rotate. When the roller brush rotates, the roller brush drives water around the roller brush to move to generate an action force, so that a foreign matter between the roller brush and the bearing can be discharged through the discharging hole. Alternatively, the power component may be configured to drive the water around the roller brush to move to generate an action force, so that the foreign matter between the roller brush and the bearing can be discharged into the cleaning device body through the discharging hole and the debris inlet of the cleaning device. It may be understood that the power component may be an electric motor, a main drive pump, or the like. This is not specifically limited herein.

In some embodiments, the third auxiliary cleaning assembly 170 may be indirectly connected to the cleaning assembly mounting portion. For example, the cleaning device 1000 includes the third auxiliary cleaning assembly 170, the second component is at least a part of the assembly forming the cleaning assembly mounting portion, and the first component is a first opening and closing part. The first opening and closing part is configured to allow the third auxiliary cleaning assembly 170 to be detached from the cleaning assembly mounting portion. The discharging hole 128 is provided corresponding to the first opening and closing part.

Specifically, the third auxiliary cleaning assembly 170 may be a cleaning brush, and the second component is a rotatable mechanical arm. In this case, the rotatable mechanical arm is the cleaning assembly mounting portion. The cleaning brush is connected to the rotatable mechanical arm through a snap-fit component. In this case, the snap-fit component is the first opening and closing part.

With reference to FIG. 1, the first component of the cleaning device 1000 may be the traveling mechanism 190 of the cleaning device 1000. The traveling mechanism 190 is connected to the cleaning device body 110 through a traveling mechanism mounting portion. The discharging hole 128 is provided corresponding to the traveling mechanism 190 and configured to allow a foreign matter between the traveling mechanism and the second component to be discharged under the action of the power component.

In some embodiments, the traveling mechanism 190 is indirectly connected to the traveling mechanism mounting portion. For example, the cleaning device 1000 includes the traveling mechanism 190, the second component is at least a part of the assembly forming the traveling mechanism mounting portion, and the first component is a second opening and closing part. The second opening and closing part is configured to allow the traveling mechanism to be detached from the traveling mechanism mounting portion. The discharging hole 128 is provided corresponding to the second opening and closing part. The second opening and closing part may be a switch. The traveling mechanism 190 may be detached from the traveling mechanism mounting portion by pressing the switch. In addition, to prevent the switch from being jammed, the discharging hole 128 may be provided at a position corresponding to the switch or the discharging hole 128 may be provided between the switch and the traveling mechanism mounting portion.

In some embodiments, the discharging hole 128 is provided at a region on the traveling mechanism mounting portion, where the region corresponds to the traveling mechanism. The traveling mechanism is provided close to the third auxiliary cleaning assembly 170. When the third auxiliary cleaning assembly 170 rotates, surrounding water driven by the third auxiliary cleaning assembly 170 also generates an action force, so that the foreign matter between the traveling mechanism and the second component is discharged. Alternatively, the power component may be configured to drive the water around the traveling mechanism to move to generate an action force, so that the foreign matter between the traveling mechanism and the traveling mechanism mounting portion can be discharged into the cleaning device body through the discharging hole 128 and the debris inlet of the cleaning device. It may be understood that the power component may be an electric motor, a main drive pump, or the like. This is not specifically limited herein.

The first component of the cleaning device may move relative to the second component. Therefore, to avoid the following case: A foreign matter enters and then jams a movable component including the first component and the second component in a cleaning process, affecting the service life of the movable part and the user experience, the discharging hole is provided at one of the first component and the second component, so that the foreign matter at the movable component can be discharged through the discharging hole.

It can be learned from the above embodiments that there may be two manners of discharging the foreign matter at the movable component through the discharging hole: One is to discharge the foreign matter at the movable component into the cleaning device through the discharging hole to be filtered out, and the other is to discharge the foreign matter at the movable component from the cleaning device through the discharging hole.

It may be understood that, in addition to the above component, the discharging hole may be further provided at a component such as a knob of the cleaning device.

In some embodiments, with reference to FIG. 47a and FIG. 47b, the water quality treatment assembly 270 further includes a reagent inlet assembly 270a. The reagent inlet assembly 270a includes a sealing member 272, a valve member 274, and a reagent inlet portion 273 and configured to allow a to-be-spread reagent to enter the cleaning device body 110. At least a part of the valve member 274 extends into the reagent inlet portion 273, and liquid in the reagent kit 271 flows into the reagent inlet portion 273 through the valve member 274. At least a part of the sealing member 272 is located in the reagent inlet portion 273 to seal a joint between the valve member 274 and the reagent inlet portion 273. Optionally, the water quality treatment assembly 270 further includes a mounting member 278. The mounting member 278 is provided between the reagent kit 271 and the sealing member 272, so that the sealing member 272 can be stably mounted in the reagent inlet portion 273.

In some embodiments, the sealing member 272 is provided with a through hole 275 configured to allow the valve member 274 to pass through, and the through hole 275 communicates with the reagent inlet portion 273. The water quality treatment assembly 270 further includes a blocking member 276, and the blocking member 276 includes a pushing post 277. At least a part of the blocking member 276 is movably provided in the reagent inlet portion 273. When the reagent kit 271 is assembled to the cleaning device body 110, the blocking member 276 is switched to an open state to avoid at least a part of the through hole 275, so that the valve member 274 communicates with the reagent inlet portion 273. When the reagent kit 271 is detached from the cleaning device body 110, the blocking member 276 is switched to a blocking state to block the through hole 275.

As shown in FIG. 47b, the reagent inlet portion 273 may be concave, and the water quality treatment assembly 270 further includes an elastic member. One end of the elastic member is connected to the blocking member 276. The other end of the elastic member is connected to a bottom wall of the reagent inlet portion 273. The elastic member is configured to allow the blocking member 276 to reset to the blocked state. In this way, after the water quality treatment assembly 270 is detached, the blocking member 276 can automatically reset to the blocking state under an elastic force generated by the elastic member.

In some embodiments, when the blocking member 276 is in the open state, there is a distance between the blocking member 276 and an end of the sealing member 272, where the end is provided with the through hole 275, so that a flow gap is formed between at least a part of the blocking member 276 and the sealing member 272. In this way, the valve member 274 communicates with the reagent inlet portion 273 through the flow gap. In this way, based on the above disposition, a flow gap can be formed between the blocking member 276 and the sealing member 272 when the blocking member 276 is in the open state, so that liquid flowing out of the valve member 274 can flow into the reagent inlet portion 273 through the flow gap.

In some embodiments, the valve member 274 may be provided in the reagent kit 271. When the reagent kit 271 is mounted in position, the valve member 274 pushes the pushing post 277 of the blocking member 276 to push the blocking member 276 to be in the blocking state, and after the blocking member 276 abuts against the bottom wall of the reagent inlet portion 273, the pushing post 277 pushes a valve core of the valve member 274 to be in the open state, so that the reagent kit 271 communicates with the reagent inlet portion 273 of the cleaning device body 110.

In some embodiments, the cleaning device 1000 further includes a button 290. The button 290 is configured to control the cleaning device 1000. For example, the button 290 may be configured to control opening and closing of a main power supply of the cleaning device 1000, to control the cleaning device 1000 to enter or exit a cleaning mode, and to control operating power of each of the second auxiliary cleaning assembly 160, the propulsion assembly 180, the traveling mechanism 190, the main drive pump 210, and other modules. However, this is not limited thereto. The button 290 may be provided on the first side 113, the second side 114, the third side 115, the fourth side 116, or the sixth side 118 of the cleaning device body 110. Optionally, the button 290 may be provided on the sixth side 118 of the cleaning device body 110, that is, on the top of the cleaning device body 110, so that when the cleaning device 1000 cleans the water surface of the target region 100, the button 290 can be exposed above the water surface. In this way, the user can conveniently control the cleaning device 1000. The button 290 may be provided between the second liquid discharge opening 212 of the main drive pump 210 and the filtering box 120, that is, at a middle position on the top of the cleaning device body 110, so that the user can conveniently view an operation. In addition, space between the second liquid discharge opening 212 and the filtering box 120 can be fully used. The button 290 may be connected to the electronic control box 220, for example, connected to a main circuit board of the electronic control box 220. An operation performed by the user through the button 290 may be transmitted to the electronic control box 220, and then the electronic control box 220 generates a corresponding control signal to control the cleaning device 1000. Optionally, a light is provided lower than the button 290 and configured to illuminate the button 290, so that the user can conveniently view the operation. A control board of the light may be connected to the electronic control box 220.

In an embodiment, as shown in FIG. 45f, FIG. 45m, FIG. 45n, FIG. 45o, FIG. 45s, and FIG. 45q, the cleaning device includes a buoyancy adjustment mechanism 260. The buoyancy adjustment mechanism 260 includes at least one buoyancy cavity and at least one buoyancy adjustment part 2633. The buoyancy cavity is configured to accommodate liquid and/or gas. The buoyancy adjustment part 2633 is configured to adjust a volume of the liquid/or gas in the buoyancy cavity. The buoyancy adjustment mechanism further includes a fifth opening 264 and a sixth opening 265 corresponding to the buoyancy cavity. The fifth opening 264 and the sixth opening 265 both communicate with the buoyancy cavity. The fifth opening 264 is used for gas flow, and the sixth opening 265 is used for liquid flow. When the cleaning device needs to be switched from the second motion state to the third motion state, the cleaning device first moves upward on the side wall, so that the fifth opening 264 is at least partially exposed above the water surface or located on the water surface. In this case, under driving of the buoyancy adjustment part 2633, the external gas flows into the buoyancy cavity through the fifth opening 264, and the liquid in the buoyancy cavity is discharged from the buoyancy cavity through the sixth opening 265, to increase the volume of the gas in the buoyancy cavity and reduce a weight of the liquid in the buoyancy cavity, so that the buoyancy force applied to the cleaning device is increased, enabling the cleaning device to be switched from the second motion state to the third motion state. In contrast, when the cleaning device needs to be switched from moving on the water surface to being in the first motion state or the second motion state, under driving of the buoyancy adjustment part 2633, the gas in the buoyancy cavity is discharged from the buoyancy cavity through the fifth opening 264, and the liquid in the swimming pool is sucked into the buoyancy cavity through the sixth opening 265, to reduce the volume of the gas in the buoyancy cavity and increase the weight of the liquid, so that the buoyancy force applied to the cleaning device is reduced, enabling the cleaning device to be switched from the third motion state to the second motion state or the first motion state. No matter whether when the cleaning device is in the first motion state or when the cleaning device is in the third motion state, the cleaning device is in the substantially horizontal state, and the second debris inlet 1111b faces downward. In an embodiment, the buoyancy adjustment part 2633 is a buoyancy cavity pump. When a motor of the buoyancy cavity pump rotates forward, the gas is input into the buoyancy cavity, and the liquid is discharged to increase the buoyancy force generated by the buoyancy cavity. In contrast, when the buoyancy cavity pump rotates reversely, the liquid is input into the buoyancy cavity, and the gas is discharged to reduce the buoyancy force generated by the buoyancy cavity. In an embodiment, the buoyancy adjustment part 2633 is provided in the electronic control box 220.

The gas in the buoyancy cavity is discharged, and liquid outside the buoyancy cavity is sucked into the buoyancy cavity to reduce a buoyancy force applied to the cleaning device, and the liquid in the buoyancy cavity is discharged, and gas outside the buoyancy cavity is sucked into the buoyancy cavity to increase the buoyancy force applied to the cleaning device, so that the cleaning device floats up and submerges in water. The fifth opening and the sixth opening both communicate with the buoyancy cavity. The fifth opening is configured to allow gas to flow into or be discharged from the buoyancy cavity. The sixth opening is configured to allow liquid to flow into or be discharged from the buoyancy cavity.

**In** an embodiment, the fifth opening is closer to a front portion of a first end portion than the first accommodating cavity, so that the fifth opening is located at the front portion of the cleaning device. In this way, when the cleaning device moves upward on the side wall, the fifth opening is exposed above the water surface earlier than the first accommodating cavity to allow gas to be input into or discharged from the buoyancy cavity.

There may be one buoyancy cavity. At least a part (namely, a first part) of the buoyancy cavity is located in front of the filtering box 12 or the first accommodating cavity, and at least a part (namely, a second part) of the buoyancy cavity is located behind the filtering box 120 or the first accommodating cavity 111 and provided at the top of the electronic control box 220. Because the filtering box 120 is located in front of the electronic control box 220 in the forward direction of the cleaning device, at least a part of the buoyancy cavity is located at the front portion of the cleaning device, the fifth opening 264 communicates with the first part of the buoyancy cavity, the sixth opening 265 communicates with the second part of the buoyancy cavity, the fifth opening 264 and the first part of the buoyancy cavity are provided at the front portion of the cleaning device, and the second part of the buoyancy cavity is provided at the rear portion of the cleaning device. For example, the second part of the buoyancy cavity is located at the top of the electronic control box 220, at the bottom of the electronic control box 220, on a side wall of the electronic control box 220, or at another position on the electronic control box 220. Certainly, the second part may alternatively be provided at the rear portion of the cleaning device body and close to the electronic control box 220 to adjust a buoyancy force applied to the rear portion of the cleaning device body.

When the cleaning device moves on the side wall toward the water surface, because the front portion of the cleaning device is exposed at the water surface earlier than the rear portion, the fifth opening 264 is exposed above the water surface earlier than the rear portion of the cleaning device. Under driving of the buoyancy adjustment part 2633, the external gas enters the buoyancy cavity through the fifth opening 264, and the liquid inside the buoyancy cavity is discharged from the buoyancy cavity through the sixth opening 265. Liquid in the first part of the buoyancy cavity is discharged earlier than liquid in the second part of the buoyancy cavity, and the first part of the buoyancy cavity is filled with gas earlier than the second part of the buoyancy cavity, to increase the buoyancy force generated by the buoyancy cavity. Because the front portion of the cleaning device abuts against the side wall, the rear portion of the cleaning device moves toward the water surface, so that the cleaning device is switched from the second motion state to the third motion state. In contrast, if the cleaning device is directly switched from operating on the water surface to operating on the bottom of the pool or the side wall, under driving of the buoyancy adjustment part 2633, the gas in the buoyancy cavity is discharged through the fifth opening 264, and the liquid in the swimming pool is sucked into the buoyancy cavity through the sixth opening 265. Gas in the second part of the buoyancy cavity is discharged earlier than gas in the first part of the buoyancy cavity, and the second part of the buoyancy cavity is filled with liquid earlier than the first part of the buoyancy cavity, to reduce the buoyancy force applied to the cleaning device. Because gravity of the second part of the buoyancy cavity increases earlier than gravity of the first part, the rear portion of the cleaning device rotates and moves downward earlier than the front portion, so that the cleaning device is switched from the third motion state to the first motion state or the second motion state.

In another embodiment, when there is one buoyancy cavity, the buoyancy cavity may further have at least one third part. The third part may be located outside the side wall of the filtering box cavity 1010, so that the third part is connected to and communicates with the first part and the second part to further increase the gas in the buoyancy cavity. In this way, the buoyancy cavity accommodates a larger volume of gas, to further increase the buoyancy force generated by the buoyancy cavity, thereby increasing the buoyancy force applied to the cleaning device, so that the cleaning device can quickly float up to the water surface or move downward from the water surface to the bottom wall or the side wall of the swimming pool, enabling the cleaning device to be switched from the third motion state to the first motion state or the second motion state.

In an embodiment, as shown in FIG. 41 and FIG. 45m, because the battery pack 2103, the first control board 2311, the buoyancy adjustment part 2633, the reagent drive part 2792, a motor 2102 of the main drive pump, and the fourth drive parts 194 of the two traveling mechanisms 190 are all provided in the electronic control box 220, the weight of the electronic control box 220 is large, that is, the rear portion of the cleaning device is heavier than the front portion. To further ensure that the cleaning device can be switched from under the water surface to on the water surface and can float on the water surface, a volume of the second part of the buoyancy cavity is greater than a volume of the first part of the buoyancy cavity, so that after the gas enters the buoyancy cavity, when the buoyancy cavity is filled with the gas or most of the buoyancy cavity is filled with the gas, a volume of the gas in the second part of the buoyancy cavity is greater than that of the gas in the first part of the buoyancy cavity, and a buoyancy force generated by the second part of the buoyancy cavity is larger than a buoyancy force generated by the first part, thereby ensuring that the rear portion of the cleaning device can float on the water surface. In this way, the cleaning device is switched from the second motion state to the third motion state and remains in the third motion state.

In an embodiment, the cleaning device body includes a first accommodating cavity configured to accommodate at least a part of a filtering box; a first end portion; a second end portion; an electronic control box provided in the cleaning device body and configured to at least accommodate a battery pack; and a buoyancy cavity including at least a first buoyancy sub-cavity and a second buoyancy sub-cavity. The first buoyancy sub-cavity and the second buoyancy sub-cavity are configured to accommodate at least one of gas or liquid. The first accommodating cavity is close to the first end portion, and the electronic control box is close to the second end portion. At least a part of the first buoyancy sub-cavity is closer to the first end portion than the electronic control box, and at least a part of the second buoyancy sub-cavity is closer to the second end portion than the first accommodating cavity. The first end portion is the front portion of the cleaning device body, and the second end portion is the rear portion of the cleaning device. Because the electronic control box is close to the second end portion, and at least a part of the second buoyancy sub-cavity is close to the second end portion, the second buoyancy sub-cavity is close to the electronic control box, so that the rear portion of the cleaning device can float up or submerge more easily under a buoyancy force generated by the second buoyancy sub-cavity closer to the electronic control box.

In an embodiment, at least a part of the first buoyancy sub-cavity is closer to the first end portion than the first accommodating cavity 111, so that the first buoyancy sub-cavity is located at the front portion of the cleaning device body. In this way, when the front portion of the cleaning device is exposed at the water surface, the external gas can be input into the first buoyancy sub-cavity, or the gas in the first buoyancy sub-cavity can be discharged.

In an embodiment, at least a part of the second buoyancy sub-cavity is located above or below the electronic control box, and a projection of the second buoyancy sub-cavity and a projection of the electronic control box on the to-be-cleaned surface at least partially overlap, so that the second buoyancy sub-cavity is closer to the electronic control box. In this way, a buoyancy force applied to a portion, of the cleaning device, at which the electronic control box is located, can be adjusted in a timely manner. Certainly, at least a part of the second buoyancy sub-cavity may be located on a side wall of the electronic control box.

Specifically, in an embodiment, at least a part of the second buoyancy sub-cavity is higher than the electronic control box in the height direction of the cleaning device. A part of the second buoyancy sub-cavity is higher than the electronic control box, so that the second buoyancy sub-cavity is not affected by the weight of the electronic control box regardless of whether there is gas or liquid in the second buoyancy sub-cavity. This ensures that the gas can be normally input into or discharged from the second buoyancy sub-cavity.

In another embodiment, at least a part of the second buoyancy sub-cavity is located in front of or behind the electronic control box, and a projection of the second buoyancy sub-cavity and a projection of the electronic control box on a projection plane perpendicular to the to-be-cleaned surface at least partially overlap, so that the second buoyancy sub-cavity is closer to the electronic control box. In this way, a buoyancy force applied to a portion, of the cleaning device, at which the electronic control box is located, can be adjusted in a timely manner, enabling the cleaning device to float up or submerge.

Specifically, as shown in FIG. 45n and FIG. 45o, each buoyancy cavity includes a first buoyancy sub-cavity 2631 and a second buoyancy sub-cavity 2632. The first buoyancy sub-cavity 2631 communicates with the second buoyancy sub-cavity 2632. The first buoyancy sub-cavity 2631 is provided in front of the filtering box 120. The second buoyancy sub-cavity 2632 is provided at the top of the electronic control box 220, so that the second buoyancy sub-cavity is closer to the electronic control box. The first buoyancy sub-cavity 2631 is equivalent to the first part of the buoyancy cavity, and the second buoyancy sub-cavity 2632 is equivalent to the second part of the buoyancy cavity. Specifically, the buoyancy adjustment part 2633 may be provided in the electronic control box 220. Because the electronic control box 220 is sealed and highly waterproof, the buoyancy adjustment part 2633 is provided in the electronic control box 220 to prevent the buoyancy adjustment part 2633 from being in contact with liquid in the swimming pool and protect the buoyancy adjustment part 2633. The first buoyancy sub-cavity 2631 is connected to the second buoyancy sub-cavity 2632 through a second pipeline 268. The second buoyancy sub-cavity 2632 is connected to the buoyancy adjustment part 2633. The buoyancy adjustment part 2633 is connected to the sixth opening 265. In an embodiment, a volume of the second buoyancy sub-cavity 2632 is greater than a volume of the first buoyancy sub-cavity 2631, or when the first buoyancy sub-cavity 2631 and the second buoyancy sub-cavity 2632 are filled with gas, a volume of the second buoyancy sub-cavity 2632 is greater than a volume of the first buoyancy sub-cavity 2631, so that the second buoyancy sub-cavity can generate a greater buoyancy force, enabling the portion, of the cleaning device, at which the heavy electronic control box is located, to float up quickly. The buoyancy adjustment part 2633 may alternatively be provided outside the electronic control box 220. However, the buoyancy adjustment part 2633 is easily in contact with the liquid in the swimming pool, leading to a higher requirement on waterproof performance of the buoyancy adjustment part 2633. Certainly, the volume of the first buoyancy sub-cavity may be equal to the volume of the second buoyancy sub-cavity, or the volume of the first buoyancy sub-cavity may be greater than the volume of the second buoyancy sub-cavity, provided that the cleaning device can float up or submerge in the liquid under mating between the first buoyancy sub-cavity and the second buoyancy sub-cavity.

Alternatively, there are two buoyancy cavities. As shown in FIG. 45g, the two buoyancy cavities are bilaterally symmetrically provided in the cleaning device body. There are two buoyancy adjustment parts 2633. One buoyancy cavity corresponds to one buoyancy adjustment part 2633. Each buoyancy cavity includes the first buoyancy sub-cavity 2631 and the second buoyancy sub-cavity 2632. The two buoyancy adjustment parts 2633 are both provided in the electronic control box 220.

As shown in FIG. 45n, the two first buoyancy sub-cavities 2631 are bilaterally symmetrically provided in front of the filtering box 120 or the first accommodating cavity 111, and the two second buoyancy sub-cavities 2632 are bilaterally symmetrically provided behind the filtering box 120 or the first accommodating cavity 111, so that the two buoyancy cavities are symmetrically provided in the cleaning device body as a whole. The first buoyancy sub-cavities are closer to the front portion of the cleaning device, and the second buoyancy sub-cavities are closer to the electronic control box.

In an embodiment, at least a part of the first buoyancy sub-cavity is located below the first debris inlet in the height direction of the cleaning device. Specifically, as shown in FIG. 45e, the two first buoyancy sub-cavities 2631 are located below the first debris inlet 1111a so as not to occupy space in which the first debris inlet 1111a is located. As shown in FIG. 45g, FIG. 45e, and FIG. 45f, a first mounting region 26311 is formed between the two first buoyancy sub-cavities 2631. The vision sensing assembly 140 is located below the first debris inlet 1111a and provided in the first mounting region 26311, so that space of the first mounting region 26311 is fully used. In this way, the two first buoyancy sub-cavities 2631 and the vision sensing assembly 140 are compactly arranged in front of the filtering box 120 or the first accommodating cavity 111. More specifically, when the detection assembly 130 is provided in front of the filtering box 120 or the first accommodating cavity 111, to further use the space of the first mounting region 26311, the detection assembly 130 is also provided in the first mounting region 26311 and is located below the vision sensing assembly 140. In other words, in the height direction of the cleaning device, the vision sensing assembly 140 is located below the first debris inlet 1111a and above the detection assembly 130, and in a width direction of the cleaning device, the vision sensing assembly 140 and the detection assembly 130 are located between the two first buoyancy sub-cavities 2631.

In an embodiment, as shown in FIG. 45h, the two second buoyancy sub-cavities 2632 are bilaterally symmetrically provided at the top of the electronic control box 220 and behind the first accommodating cavity 111 or the filtering box 120. The two second buoyancy sub-cavities 2632 are configured to adjust the buoyancy force applied to the rear portion of the cleaning device body together, so that the cleaning device can be quickly switched from the second motion state to the third motion state or from the third motion state to the first motion state or the second motion state.

Specifically, as shown in FIG. 45i and FIG. 45h, the cleaning device further includes a flow guiding cover 218 (mentioned below). The flow guiding cover includes a third cavity. One end of the flow guiding cover is provided on the side wall of the first accommodating cavity and covers or surrounds the first liquid discharge opening, so that the first liquid discharge opening communicates with the third cavity. The other end of the flow guiding cover is connected to the second liquid discharge opening. In the height direction of the cleaning device, at least a part of the flow guiding cover is located above the electronic control box. In an embodiment, at least a part of the second buoyancy sub-cavity surrounds at least a part of a periphery of the flow guiding cover and is located above the electronic control box. A second mounting region 26321 is formed between the two second buoyancy sub-cavities 2632. The flow guiding cover 218 is located in the second mounting region 26321, or the two second buoyancy sub-cavities 2632 are symmetrical and at least partially enclose or surround an outer side of the flow guiding cover 218, so that the flow guiding cover 218 and the two second buoyancy sub-cavities 2632 are more compactly arranged above the electronic control box 220. Specifically, as shown in FIG. 45, the cleaning device further includes a reagent cavity 2791. The reagent cavity is closer to the second end portion than the second buoyancy sub-cavity, or the reagent cavity is closer to the second end portion than the third cavity, and at least a part of the reagent cavity is located in the fourth cavity. For example, the reagent cavity 2791 is located above the electronic control box 220 and behind the two second buoyancy sub-cavities 2632 and the flow guiding cover 218, so that the reagent cavity 2791, the flow guiding cover 218, and the two second buoyancy sub-cavities 2632 are compactly arranged at the top of the electronic control box 220. In an embodiment, a reagent outlet is provided in the third cavity, and after the reagent kit is mounted in the reagent cavity, a reagent in the reagent kit is delivered into the third cavity through the reagent outlet.

In other words, a left buoyancy cavity and a right buoyancy cavity are symmetrically provided in the cleaning device body. Second buoyancy sub-cavities of the two buoyancy cavities are bilaterally symmetrically provided in the fourth cavity, and at least a part of each second buoyancy sub-cavity surrounds the periphery of the flow guiding cover and is located at the top of the electronic control box.

In addition, there may be a plurality of buoyancy cavities, for example, three, four, five, or more buoyancy cavities. Some buoyancy cavities are provided in the fourth cavity and at the top of the electronic control box, some buoyancy cavities are provided in front of the first accommodating cavity, and some buoyancy cavities are provided in second space or first space between the first accommodating cavity and a side housing of the cleaning device body.

Specifically, in a first aspect, the reagent drive part 2792 is provided in the electronic control box 220 to prevent the reagent drive part 2792 from being in contact with the liquid, thereby ensuring a service life of the reagent drive part 2792. Because the reagent cavity 2791 is close to the flow guiding cover 218 and provided above the electronic control box 220, the reagent in the reagent kit 271 can be delivered into the third cavity 11011 of the flow guiding cover 218 over a short distance, and the reagent is discharged into the swimming pool through the second liquid discharge opening 212 with water in the third cavity 110 11, so that the reagent is spread. Because the cleaning device is provided with the reagent kit 271, the reagent kit 271 moves with the cleaning device, so that the reagent in the reagent kit 271 can be spread at different positions in the swimming pool or the target region. In this way, the reagent is spread more uniformly, and the water in the swimming pool or the target region can be better treated. In a second aspect, the flow guiding cover 218 is adjacent to a rear portion of the first accommodating cavity 111 or the filtering box 120, and the first liquid discharge opening of the first accommodating cavity 111 directly communicates with the third cavity 11011 of the flow guiding cover 218 to shorten a water flow path between the first accommodating cavity 111 and the flow guiding cover 218, so that the first water flow path formed by the debris inlet, the filtering box 120, the first liquid discharge opening, the third cavity 110 11, and the second liquid discharge opening 212 is short, leading to high cleaning efficiency. The flow guiding cover 218 is provided at the top of the electronic control box 220, so that the motor 2102 of the main drive pump is conveniently provided in the electronic control box 220, to prevent the motor 2102 of the main drive pump from being in contact with the external liquid, thereby ensuring a service life of the motor 2102 of the main drive pump. In addition, an output shaft of the motor 2102 of the main drive pump may directly pass through the electronic control box 220 and then extend into the third cavity 11011 of the flow guiding cover 218, and is connected to an impeller 2101 of the main drive pump, so that a driving force output by the motor 2102 of the main drive pump is more efficiently transmitted to the impeller, and a structure is also more compact. In a third aspect, because the electronic control box 220 is heavy, the two second buoyancy sub-cavities 2632 are provided at the top of the electronic control box 220 and at least partially enclose or surround the periphery of the flow guiding cover 218 without affecting arrangement of the flow guiding cover 218 and the reagent cavity 2791 at the top of the electronic control box 220, so that adjustment of buoyancy forces generated by the two second buoyancy sub-cavities 2632 can directly affect the electronic control box 220. In this way, the buoyancy force applied to the electronic control box 220 can be quickly adjusted, enabling the rear portion, of the cleaning device body, at which the electronic control box 220 is located, to float up or submerge in the liquid. The second buoyancy sub-cavities 2632 at least partially surround the periphery of the flow guiding cover 218 to protect the flow guiding cover 218. In a fourth aspect, because the second buoyancy sub-cavities 2632, the flow guiding cover 218, and the reagent cavity 2791 are all located at the top of the electronic control box 220, the weight of the electronic control box 220 does not affect structures of the second buoyancy sub-cavities 2632, the flow guiding cover 218, and the reagent cavity 2791, so that the second buoyancy sub-cavities 2632, the flow guiding cover 218, and the reagent cavity 2791 are protected. Therefore, a material of the second buoyancy sub-cavity 2632 is not limited. The second buoyancy sub-cavity 2632 may be made of a hard material, a soft material, a deformable material, or the like. Space between the housing 110a of the cleaning device body and the electronic control box 220 is fully used to accommodate the flow guiding cover 218, the reagent cavity 2791, and the two second buoyancy sub-cavities 2632 without increasing an additional height of the cleaning device and the width of the cleaning device, leading to a small overall height and width of the cleaning device, a more compact structure, and a small volume of the entire cleaning device. In a fourth aspect, the two first buoyancy sub-cavities 2631 are provided in front of the filtering box 120 or the first accommodating cavity 111. Because the second accommodating cavity 112 is located in front of the first accommodating cavity 111, the two first buoyancy sub-cavities 2631 are provided on two sides of the second accommodating cavity 112, to use space (namely, third space) between the first accommodating cavity 111 and an end surface of the front portion of the cleaning device body, so that no space is occupied in the width direction of the cleaning device, leading to a compact structure. In addition, the two first buoyancy sub-cavities 2631 are located just on the front portion of the cleaning device body, so that when the cleaning device is switched from the second motion state to the third motion state, the fifth opening 264 communicating with the first buoyancy sub-cavity 2631 is exposed above the water surface as early as possible, and then the gas is quickly input into the first buoyancy sub-cavity 2631 to change the buoyancy force applied to the cleaning device.

Specifically, as shown in FIG. 45a, FIG. 45b, FIG. 45c, FIG. 45e, and FIG. 45f, the cleaning device body further includes a bottom housing 110d, a front housing 110b, and a rear housing 110c in addition to the housing 110a. The housing 110a is connected to a front portion of the bottom housing 110d through the front housing 110b, and the housing 110a is connected to a rear portion of the bottom housing 110d through the rear housing 110c to form a mounting cavity in an enclosing manner. The filtering box cavity 1010 is provided in the mounting cavity. The second cavity 1014 of the filtering box cavity 1010 serves as the first accommodating cavity 111. The second accommodating cavity 112 is provided between the front housing 110b and a front portion of the filtering box cavity 1010. A rear portion of the filtering box cavity 1010, the bottom housing 110d, and the rear housing 110c form a third accommodating cavity 1101 in an enclosing manner. The third space 110g is formed between the front housing 110b and the filtering box cavity 1010 or the first accommodating cavity 111. The second accommodating cavity 112 is provided in the third space 110g. The vision sensing assembly 140 is provided in the second accommodating cavity 112. The two first buoyancy sub-cavities 2631 are provided in the third space 110g and respectively provided on two sides of the vision sensing assembly 140, to effectively use the third space 110g.

The third accommodating cavity may be provided at another position, provided that the third accommodating cavity is closer to the second end portion than the first accommodating cavity. At least a part of the electronic control box is provided in the third accommodating cavity, and at least a part of the second buoyancy sub-cavity is located in the third accommodating cavity, to adjust the buoyancy force applied to the rear portion, of the cleaning device, at which the electronic control box is located.

In an embodiment, the two second buoyancy sub-cavities 2632 are bilaterally symmetrically provided behind the filtering box 120 or the first accommodating cavity, and the two first buoyancy sub-cavities 2631 are bilaterally symmetrically provided outside two side walls of the filtering box 120, or as shown in FIG. 45g, the two first buoyancy sub-cavities 2631 are bilaterally symmetrically provided in front of the filtering box 120, and the two second buoyancy sub-cavities 2632 are bilaterally symmetrically provided outside the two side walls of the filtering box cavity 1010. Based on this arrangement manner, a size of the cleaning device in the width direction is increased, and space above the electronic control box 220 cannot be well used, leading to a waste of space, but the cleaning device can also float up or submerge in the liquid. Alternatively, when there are two buoyancy cavities, a left buoyancy cavity and a right buoyancy cavity are symmetrically provided outside the two side walls of the filtering box 120. A first part of each buoyancy cavity may extend beyond an end surface of a front portion of the filtering box 120 and a second part of each buoyancy cavity may extend beyond an end surface of a rear portion of the filtering box 120 to the side walls of the electronic control box 220. In this way, the cleaning device can also float up or submerge. However, the width of the cleaning device is increased. Alternatively, the first part does not extend beyond the end surface of the front portion of the filtering box 120 and may be aligned with or unexposed from the end surface of the front portion of the filtering box 120, or the second part does not extend beyond the end surface of the rear portion of the filtering box 120, and a rear portion of the second part may be provided on a front portion of the electronic control box 220. In this way, the cleaning device can also float up or submerge. Specifically, the buoyancy cavity is a complete cavity without the first buoyancy sub-cavity 2631 and the second buoyancy sub-cavity 2632. Certainly, the buoyancy cavity may alternatively include the first buoyancy sub-cavity 2631 and the second buoyancy sub-cavity 2632, and the first buoyancy sub-cavity 2631 is located in front of the second buoyancy sub-cavity 2632.

Alternatively, when there is one buoyancy cavity, the buoyancy cavity may be provided at a region between the rear portion of the filtering box 120 or the rear portion of the first accommodating cavity and the front portion of the electronic control box 220, so that the buoyancy cavity is located at a central position or a position of a gravity center of the cleaning device. For example, the buoyancy cavity is mounted on the front portion of the electronic control box 220, or the buoyancy cavity is mounted on a side wall of the first accommodating cavity 111 and avoids the flow guiding cover 218 and the first liquid discharge opening, and the buoyancy cavity may be located below the first liquid discharge opening. Alternatively, a front portion of the buoyancy cavity is mounted on the first accommodating cavity 111, and a rear portion of the buoyancy cavity is mounted on the electronic control box 220. In conclusion, a part of the buoyancy cavity is closer to the first end portion of the cleaning device body than the first accommodating cavity, and a part of the buoyancy cavity is closer to the second end portion of the cleaning device than the first accommodating cavity. In a process in which the cleaning device floats up, the part, of the buoyancy cavity, close to the first end portion can be filled with the gas as soon as possible to change a buoyancy force generated by the buoyancy cavity, and the part, of the buoyancy cavity, close to the second end portion mainly generates a buoyancy force to ensure than the rear portion, of the cleaning device, at which the electronic control box is located can float up or submerge. The first end portion is the front portion of the cleaning device, and the second end portion is the rear portion of the cleaning device.

In an embodiment, as shown in FIG. 45n and FIG. 45f, the buoyancy adjustment mechanism 260 further includes a first gas flow portion 2634. The first gas flow portion 2634 is provided with the fifth opening 264. The first gas flow portion has a first gas flow cavity. The first gas flow portion 2634 is connected to the first part of the buoyancy cavity, and the first gas flow cavity communicates with the buoyancy cavity. The fifth opening 264 communicates with the outside, so that the external gas is input into the buoyancy cavity through the fifth opening 264 and the first gas flow cavity, or the gas in the buoyancy cavity is discharged from the buoyancy cavity through the first gas flow cavity and the fifth opening 264. The fifth opening 264 may be provided on the front portion of the cleaning device body, so that the fifth opening 264 directly communicates with an environment outside the cleaning device body, or the fifth opening 264 may be provided in the cleaning device body, so that the external gas first enters the cleaning device body and then enters the first gas flow cavity and the buoyancy cavity through the fifth opening 264.

For example, as shown in FIG. 45a, at least one first gas flow hole 110h is provided at a position on the cleaning device body, where the position is close to or adjacent to the fifth opening 264. The external gas first enters the cleaning device body through a plurality of first gas flow holes 110h and then flows through the fifth opening 264.

The fifth opening 264 may be provided at various positions. Specifically, the fifth opening 264 is provided on the first side 113, or the fifth opening 264 is provided in the cleaning device body and adjacent to or close to the first side 113. For example, the fifth opening 264 is provided on an upper section of the first side 113, or the fifth opening 264 is provided in the cleaning device body and adjacent to or close to the upper section of the first side 113.

Alternatively, the fifth opening 264 is provided on a front section of the third side 115, or the fifth opening 264 is provided in the cleaning device body and adjacent to or close to the front section of the third side 115. Alternatively, the fifth opening 264 is provided on a front section of the fourth side 116, or the fifth opening 264 is provided in the cleaning device body and adjacent to or close to the front section of the fourth side 116. Alternatively, the fifth opening 264 is provided on a front section of the fifth side 117, or the fifth opening 264 is provided in the cleaning device body and adjacent to or close to the front section of the fifth side 117. Alternatively, the fifth opening 264 is provided on a front section of the sixth side 118, or the fifth opening 264 is provided in the cleaning device body and adjacent to or close to the front section of the sixth side 118.

In other words, the front portion of the cleaning device body 110 includes the first side 113, the front section of the third side 115, the front section of the fourth side 116, the front section of the fifth side 117, and the front section of the sixth side 118, but does not include the second side 114. Similarly, the rear portion of the cleaning device includes at least the second side 114, a rear section of the third side 115, a rear section of the fourth side 116, a rear section of the fifth side 117, and a rear section of the sixth side 118, but does not include the first side 113. The fifth opening is provided on the front portion of the cleaning device body 110.

In an embodiment, the first gas flow portion 2634 may be provided in front of the filtering box 120. For example, the first gas flow portion 2634 may be provided in the third space 110g and provided with the first debris inlet 1111a in a staggered manner. The first gas flow portion 2634 is located above the first buoyancy sub-cavity 2631. In an embodiment, the first handle 251 is located at the front portion of the cleaning device body and is located above the first debris inlet 1111a. The first gas flow portion 2634 may be close to or adjacent to the first handle 251 and provided in the cleaning device body. The plurality of first gas flow holes 110h may be provided on the first handle 251, so that the external gas enters the cleaning device body through the first gas flow holes 110h and then enters the first gas flow cavity through the fifth opening 264 and then flows into the buoyancy cavity. Alternatively, if an inner cavity of the first handle 251 communicates with an inner cavity of the cleaning device body, the first gas flow portion 2634 may be provided in the inner cavity of the first handle 251. For example, the upper portion of the first side 113 of the cleaning device body and the front portion of the sixth side 118 form the first handle 251 in an enclosing manner, and the plurality of first gas flow holes 110h are provided at a joint between the upper portion of the first side 113 and the front portion of the sixth side 118. Alternatively, the first gas flow portion 2634 may be located above the first debris inlet 1111a, but may be provided adjacent to or close to the first handle 251, provided that the first gas flow portion is located at the front portion of the cleaning device body. Alternatively, the fifth opening 264 is located above the first debris inlet 1111a.

A first filtering part 266 is provided at the fifth opening 264 to block trash carried by gas or liquid outside the fifth opening 264 outside the fifth opening 264 to prevent trash carried by the external gas from entering the fifth opening 264 or to avoid the following case: when the cleaning device is in water, because the liquid can enter the cleaning device body and then be in contact with the fifth opening 264, trash carried by the gas and the liquid blocks the fifth opening 264, affecting gas flow at the fifth opening 264.

In an embodiment, the first filtering part 266 is detachably provided on the cleaning device body, and the first filtering part 266 may be detached from the outside of the cleaning device body. This facilitates cleaning of the first filtering part 266. For example, the first filtering part 266 is provided on the first handle 251, or at least a part of the first filtering part 266 is provided at a mounting hole at the front portion of the cleaning device body, and the part of the first filtering part 266 is exposed to the external environment or communicates with the external environment through the mounting hole.

Specifically, the first filtering part 266 includes a first mounting bracket 2661 and at least one first filtering portion 2662 provided on the first mounting bracket 2661. The first mounting bracket 2661 is detachably mounted on the first handle 251 or the front portion of the cleaning device body. An outer side end of the first mounting bracket 2661 communicates with the external environment, so that the first mounting bracket 2661 is conveniently detached from the cleaning device body. At least a part of the first filtering portion 2662 is provided on the fifth opening 264 to cover or be provided at the fifth opening 264 to filter out trash at the fifth opening 264 and keep the trash out of the fifth opening 264.

As shown in FIG. 45p, FIG. 45q, and FIG. 45r, the first filtering part 266 further includes at least one or more second filtering portions 2663. In this way, the following case can be avoided: The first filtering portion 2662 is clogged, affecting gas flow at the fifth opening 264. In addition, this increases an amount of gas flowing into the fifth opening 264 and an amount of gas discharged through the fifth opening 264, so that the volume of the gas in the buoyancy cavity can be quickly adjusted. Each of the first filtering portion 2662 and the second filtering portion 2663 may be a filtering mesh, a HEPA filtering member, or another member having a filtering function. The first filtering portion 2662 and the second filtering portion 2663 are respectively mounted on different side walls of the first mounting bracket 2661. The first mounting bracket 2661 and all first filtering portions 2662, and all second filtering portions 2663 form a fifth cavity with an opening at one end in an enclosing manner. The fifth cavity communicates with the fifth opening 264, so that the external gas partially enters the fifth cavity through the first filtering portion 2662 and partially enters the fifth cavity through the second filtering portion 2663, and then the gas in the fifth cavity flows into the fifth opening 264, to increases the amount of gas flowing into the fifth opening 264, or the gas in the buoyancy cavity is partially discharged through the first filtering portion 2662 and partially discharged through the second filtering portion 2663, to increase the amount of gas discharged from the buoyancy cavity. In addition, the trash can be kept out of the first filtering portion 2662 and the second filtering portion 2663. Even if one of the first filtering portion 2662 and the second filtering portion 2663 is blocked by the trash and cannot allow the gas to flow through, the gas can still be discharged through the other filtering portion, so that the gas can flow into or be discharged through the fifth opening 264.

Specifically, in an embodiment, a length of the first filtering portion 2662 is the same as a length of the second filtering portion 2663. The fifth cavity covers the outside of the fifth opening 264 or is connected to and in contact with the fifth opening 264, so that the fifth cavity communicates with the fifth opening 264. Alternatively, in another embodiment, one of the first filtering portions 2662 is longer than the second filtering portion 2663. A portion, of the first filtering portion 2662, extending beyond the second filtering portion 2663 is referred to as an extension portion. The extension portion of the first filtering portion 2662 blocks the fifth opening 264, and a flow gap is formed between an inner side of the extension portion and the fifth opening 264. The fifth cavity communicates with the fifth opening 264 through the flow gap, or the flow gap is also a part of the fifth cavity. The external gas may partially directly flow into the fifth opening 264 after flowing through the extension portion of the first filtering portion 2662 and partially enter the fifth cavity through other portions of the first filtering portion 2662 and the second filtering portion 2663, and then flow into the fifth opening 264 through the flow gap, to increase the amount of gas flowing into the fifth opening 264, so that the volume of the gas in the buoyancy cavity can be quickly increased. In contrast, the gas in the buoyancy cavity may be partially quickly discharged to the outside through the fifth opening 264 and the extension portion of the first filtering portion 2662 and partially discharged to the outside through the fifth opening 264, the flow gap, the fifth cavity, other portions of the first filtering portion 2662, and the second filtering portion 2663, so that the volume of the gas in the buoyancy cavity can be quickly reduced. In addition, when one of the first filtering portion 2662 and the second filtering portion 2663 is blocked by the trash and does not allow the gas to flow through, the gas can also flow through the other filtering portion, to ensure that the volume of the gas in the buoyancy cavity can be adjusted.

In an embodiment, there is one first filtering portion 2662 and two, three, four, or more second filtering portions 2663. As shown in FIG. 45r, there is one first filtering portion 2662 and three second filtering portions 2663, so that the fifth cavity is a cuboid or a cube. Alternatively, there are a plurality of first filtering portions 2662, and correspondingly, there are a plurality of fifth openings 264, to further increase the amount of gas flowing into the fifth opening or the amount of gas discharged through the fifth opening. One fifth opening 264 usually corresponds to one first filtering portion 2662.

As an optional embodiment, the first filtering part 266 may not be exposed to the external environment, and may be entirely located in the cleaning device body. If the first filtering part 266 needs to be cleaned or replaced, the housing 110a and/or the front housing 110b of the cleaning device body needs to be opened, leading to inconvenience in replacing or tilting the first filtering part 266.

In an embodiment, there are two buoyancy cavities. As shown in FIG. 45n and FIG. 45o, a left buoyancy cavity and a right buoyancy cavity are symmetrically provided. The two buoyancy cavities share a first gas flow portion 2634, and gas is input into or discharged from the two buoyancy cavities through the fifth opening 264, leading to a compact structure of the buoyancy adjustment mechanism 260. For example, the first buoyancy sub-cavity 2631 and the second buoyancy sub-cavity 2632 are each connected to the fifth opening 264 through a third pipeline 269, so that gas can conveniently flow into or flow out of the first buoyancy sub-cavity 2631 and the second buoyancy sub-cavity 2632. Alternatively, each buoyancy cavity corresponds to one first gas flow portion 2634, so that gas is input into or discharged from the two buoyancy cavities. Because the first buoyancy sub-cavity 2631 communicates with the second buoyancy sub-cavity 2632, gas entering the first buoyancy sub-cavity 2631 enters the second buoyancy sub-cavity 2632 through the second pipeline 268.

The sixth opening 265 is provided similarly to the fifth opening 264. The two buoyancy cavities may share a buoyancy adjustment part 2633, or one buoyancy adjustment part 2633 may be provided for each buoyancy cavity, and the buoyancy adjustment part 2633 is provided in the electronic control box 220 to avoid being in contact with the liquid. For example, if the two buoyancy cavities share a buoyancy adjustment part 2633, second parts of the two buoyancy cavities are connected to the buoyancy adjustment part 2633 through a pipeline, and an outlet end of the buoyancy adjustment part 2633 is connected to the sixth opening 265, so that liquid in the buoyancy cavity is discharged, or the external liquid is input into the buoyancy cavity. Alternatively, one buoyancy adjustment part 2633 is provided for each buoyancy cavity, a second part of each buoyancy cavity is connected to a corresponding buoyancy adjustment part 2633 through a pipeline, and the outlet end of the buoyancy adjustment part 2633 is connected to the sixth opening 265.

In an embodiment, the sixth opening 265 may be provided on the cleaning device body and directly communicate with the outside, so that the liquid in the buoyancy cavity is conveniently discharged from the buoyancy cavity, or the external liquid conveniently enters the buoyancy cavity through the sixth opening 265. For example, the sixth opening 265 is provided at the bottom of the cleaning device body 110, so that the liquid in the buoyancy cavity can be quickly discharged.

Specifically, the sixth opening 265 may be provided between the electronic control box 220 and the first accommodating cavity 111. Because the second part of the buoyancy cavity is located at the top of the electronic control box 220, and the buoyancy adjustment part 2633 is provided in the electronic control box 220, a connection path between the second part of the buoyancy cavity (for example, the second buoyancy sub-cavity) and the buoyancy adjustment part 2633 and a connection path between the buoyancy adjustment part 2633 and the sixth opening 265 are shortened. In other words, the sixth opening 265 is located behind the second debris inlet 1111b. Alternatively, the sixth opening 265 is provided at another position on the bottom of the cleaning device body, but needs to avoid the second debris inlet 1111b and allow the liquid to be input or discharged through the sixth opening 265. However, in this case, the connection path between the sixth opening 265 and the buoyancy adjustment part 2633 increases.

For example, the sixth opening 265 is provided at a rear section of the bottom of the cleaning device body, provided on the second side 114 of the cleaning device, for example, at a lower section of the second side 114, or provided at a rear section of the third side 115 or the fourth side 116. However, because the cleaning device moves on the water surface, in the height direction of the cleaning device, the third side 115 and the fourth side 116 are partially above the water surface. To ensure that the liquid can be input or discharged through the sixth opening 265, when the sixth opening 265 is provided on the third side 115 or the fourth side 116, the sixth opening 265 needs to be provided close to a lower section of the third side 115 or the fourth side 116. Similarly, the sixth opening 265 may be provided at a lower section of the first side 113.

In another embodiment, the sixth opening 265 is not provided on the cleaning device body, but is located in an inner cavity of the cleaning device body. As shown in FIG. 45j, FIG. 45k, FIG.45i, FIG. 45m, and FIG. 45n, the buoyancy adjustment mechanism 260 further includes a first liquid flow portion 2635. Similar to the first gas flow portion 2634, the first liquid flow portion 2635 is provided with the sixth opening 265, a second opening end 26331 of the buoyancy adjustment part 2633 is connected to the first liquid flow portion 2635 through a pipeline, and the first liquid flow portion 2635 includes a first liquid flow cavity. The cleaning device body is provided with at least one or more first liquid flow holes, so that the external liquid can quickly flow into the buoyancy cavity through the sixth opening 265, or the liquid in the buoyancy cavity can quickly flow out of the buoyancy cavity. Similar to the first gas flow hole 110h, the first liquid flow hole communicates with the sixth opening 265, so that the external liquid first enters the cleaning device body through the first liquid flow hole and then flows into the sixth opening 265, or the liquid in the buoyancy cavity first flows into the cleaning device body through the sixth opening 265 and then flows out of the cleaning device body through the first liquid flow hole.

In an embodiment, as shown in FIG. 45v, the first liquid flow hole may be the second water discharge opening 1113. The second water discharge opening 1113 is located behind the sixth opening 265. When the cleaning device leaves the water, the first handle 251 on the front portion of the cleaning device body 110 is lifted, so that the entire cleaning device tilts. In this case, the liquid in the cleaning device body can be quickly discharged through the second water discharge opening 1113, the external liquid can quickly enter the cleaning device body through the second water discharge opening 1113, and the second water discharge opening 1113 communicates with the sixth opening 265. In this way, the liquid can be quickly input into or discharged from the buoyancy cavity.

Alternatively, the first liquid flow hole is not the second water discharge opening 1113, but is independently provided at the bottom (namely, the sixth side 118) of the cleaning device body, the lower section of the first side 113, the lower section of the third side 115, the lower section of the fourth side 116, or the second side 114. For example, the first liquid flow hole is provided on the sixth side 118, located in front of the second water discharge opening 1113, and is located right below the sixth opening 265, or provided adjacent to or close to the sixth opening 265 and located lower than the sixth opening 265.

Similar to the sixth opening 265, the first liquid flow portion 2635 is provided on at least one of a side wall of the electronic control box 220 or a side wall of the first accommodating cavity 111, and is located between the electronic control box 220 and the first accommodating cavity 111. As shown in FIG. 45u, a plurality of grille parts are provided on at least one side wall of the first liquid flow portion, and each grille part serves as the sixth opening 265. The first liquid flow portion 2635 may alternatively be provided at another position in the cleaning device body, provided that the first liquid flow portion 2635 is connected to the first liquid flow hole. For example, the first liquid flow portion 2635 is provided at the rear portion or the front portion of the cleaning device body.

Similar to the first filtering part 266, a second filtering part 267 may be provided inside or outside the sixth opening 265 to prevent trash carried by liquid at the sixth opening 265 from blocking the sixth opening 265 or the first liquid flow cavity. As shown in FIG. 45s, for example, the second filtering part 267 is provided in the first liquid flow cavity, and the sixth opening 265 is provided outside the second filtering part 267, or the second filtering part 267 is provided outside the first liquid flow cavity, and the sixth opening 265 is provided inside the second filtering part 267 to keep trash carried by liquid out of the second filtering part 267.

As shown in FIG. 45t and FIG. 45u, to further increase an amount of liquid flowing into the sixth opening 265 and an amount of liquid discharged through the sixth opening 265, similar to the first filtering part 266, the second filtering part 267 includes a second mounting bracket 2671 and at least two or a plurality of third filtering portions 2672 provided on side walls of the second mounting bracket 2671. The second mounting bracket 2671 and all third filtering portions 2672 form a sixth cavity with an opening at one end in an enclosing manner. The liquid in the cleaning device body enters the buoyancy cavity through the plurality of third filtering portions 2672 to increase the amount of liquid entering the buoyancy cavity, or the liquid in the buoyancy cavity is discharged through the plurality of third filtering portions 2672 to increase the amount of liquid discharged from the buoyancy cavity. In addition, when one of the third filtering portions 2672 is blocked, the liquid may flow through other third filtering portions 2672 to enter or be discharged from the buoyancy cavity.

In an embodiment, the second mounting bracket 2671 is embedded in the first liquid flow cavity, or the first liquid flow portion 2635 is at least partially sleeved over or surrounds the second mounting bracket 2671, and the sixth opening 265 is located outside the second mounting bracket 2671. In other words, the first liquid flow cavity is at least partially sleeved outside the sixth cavity, the sixth cavity communicates with a first opening end 26351 of the first liquid flow portion 2635, and the first opening end 26351 is connected to the buoyancy adjustment part 2633. For example, the sixth cavity is a first groove, and the first liquid flow cavity is a second groove. An opening of the first groove faces or abuts against a bottom of the second groove, and the bottom of the second groove is provided with the first opening end 26351. The first opening end 26351 communicates with the buoyancy adjustment part 2633.

The liquid outside the cleaning device body first enters the cleaning device body or the fourth cavity 11012 (mentioned below) through the first liquid flow hole, sequentially flows through the sixth opening 265, the first liquid flow cavity located outside the second mounting bracket 2671 (or outside the sixth cavity), the third filtering portion 2672, the sixth cavity, and the first opening end 26351 of the first liquid flow cavity, and then enters the buoyancy cavity through the buoyancy adjustment part 2633. In contrast, the liquid in the buoyancy cavity flows through the buoyancy adjustment part 2633, the first opening end 26351 of the first liquid flow cavity, the sixth cavity, the first liquid flow cavity located outside the second mounting bracket 2671 (or outside the sixth cavity), and the sixth opening 265, and then is discharged from the buoyancy cavity.

In another embodiment, the second mounting bracket 2671 is sleeved over or surrounds the first liquid flow cavity, the sixth opening 265 is provided in the sixth cavity, and the third filtering portion 2672 on the second mounting bracket 2671 keeps trash carried by the liquid out of the third filtering portion 2672, so that the trash cannot enter the first liquid flow cavity through the sixth opening 265. The liquid outside the cleaning device body first enters the cleaning device body or the fourth cavity 11012 (mentioned below) through the first liquid flow hole, sequentially flows through the third filtering portion 2672, the sixth cavity, the sixth opening 265, the first liquid flow cavity, and the buoyancy adjustment part 2633, and then enters the buoyancy cavity. In contrast, the liquid in the buoyancy cavity flows through the buoyancy adjustment part 2633, the first liquid flow cavity, the sixth opening 265, the sixth cavity, and the third filtering portion 2672, and then is discharged from the buoyancy cavity.

In addition, as shown in FIG. 45v, a mounting hole is provided at the bottom of the cleaning device body, so that the second mounting bracket 2671 can be conveniently detached from the outside of the cleaning device body similar to the first mounting bracket 2661, to clean or replace the third filtering portion 2672. The second mounting bracket 2671 is mounted in the mounting hole. The third filtering portion 2672 is provided in the cleaning device body and mates with the first liquid flow portion 2635. An outer side end of the second mounting bracket 2671 communicates with the outside, so that the second filtering part 267 can be mounted and detached from the outside of the cleaning device body.

In the foregoing embodiment, the two buoyancy cavities may share a buoyancy adjustment part 2633, or one buoyancy adjustment part 2633 may be provided for each buoyancy cavity, and the buoyancy adjustment part 2633 is provided in the electronic control box 220 to avoid being in contact with the liquid. For example, if the two buoyancy cavities share a buoyancy adjustment part 2633, second parts of the two buoyancy cavities are connected to the buoyancy adjustment part 2633 through a pipeline, and the second opening end 26331 of the buoyancy adjustment part 2633 is connected to the first opening end 26351 of the first liquid flow portion 2635, so that liquid in the buoyancy cavity is discharged, or the external liquid is input into the buoyancy cavity. Alternatively, one buoyancy adjustment part 2633 is provided for each buoyancy cavity, and a second part of each buoyancy cavity is connected to a corresponding buoyancy adjustment part 2633 through a pipeline. The first liquid flow portion 2635 is provided with two first opening ends 26351. Each first opening end 26351 is connected to a second opening end 26331 of one buoyancy adjustment part 2633. Alternatively, the second opening end 26331 of each buoyancy adjustment part 2633 is connected to a first opening end 26351 of one first liquid flow portion 2635. Liquid is input into or discharged from each buoyancy cavity through a respective first liquid flow portion 2635.

Similarly, when there are two buoyancy cavities, there may also be two first gas flow portions 2634, and a third opening end 26341 of each first gas flow portion 2634 communicates with one buoyancy cavity; or there are two buoyancy cavities, the two buoyancy cavities share a first gas flow portion 2634, the first gas flow portion 2634 is provided with two third opening ends 26341, and each opening end communicates with one buoyancy cavity, so that gas is input into or discharged from the two buoyancy cavities through the fifth opening 264.

The first filtering part 266 is similar to the second filtering part 267. Therefore, the first filtering part 266 may be replaced with the second filtering part 267. For example, a length of the first filtering portion 2662 is the same as a length of the second filtering portion 2663. The first mounting bracket 2661 may be partially embedded in the first gas flow cavity, so that the fifth opening 264 is located outside the first filtering portion 2662, or the first mounting bracket 2661 is partially sleeved over the first gas channel, so that the fifth opening 264 is located inside the first filtering portion 2662. Alternatively, the second filtering part 267 may be replaced with the first filtering part 266.

In addition, in an embodiment, as shown in FIG. 45j, a third gap 110i is formed between the first accommodating cavity 111 and the electronic control box 220, and the second filtering part 267 is located in the third gap and behind the water baffle plate 1012. In this way, the third gap is fully used without affecting rotation of the water baffle plate, and the second filtering part 267 is mounted without increasing the width, height, and length of the cleaning device, leading to a compact layout of the cleaning device, an appropriate layout of various functional modules, and small occupied space.

Based on the foregoing embodiment, as shown in FIG. 41, this application provides a cleaning device. The cleaning device includes the first accommodating cavity 111. The filtering box 120 is provided in the first accommodating cavity 111. The first liquid discharge opening 1112 and the first water discharge opening 1016 are provided on a side wall of the first accommodating cavity 111. The cleaning device body further includes the third accommodating cavity 1101. The third accommodating cavity 1101 includes the third cavity 11011 and the fourth cavity 11012. The third cavity 11011 is isolated or separated from the fourth cavity 11012. The first liquid discharge opening 1112 communicates with the third cavity 11011. The electronic control box is provided in the fourth cavity. The second buoyancy sub-cavity is at least partially provided in the fourth cavity.

The cleaning device 1000 further includes the second liquid discharge opening 212 in fluid communication with the first liquid discharge opening 1112. The second liquid discharge opening 212 is located on the sixth side 118118 and communicates with the third cavity 11011. The sixth side 118 is located on an upper portion of the cleaning device body 110. The impeller of the main drive pump 210 is located in the third cavity 110 11. When the impeller 2101 of the main drive pump 210 is turned on, the liquid enters the filtering box 120 through the debris inlet 1111 and then enters the third cavity 11011 through the first liquid discharge opening 1112 after being filtered in the filtering box 120, and is finally discharged through the second liquid discharge opening 212, to form the first water flow path of the cleaning device 1000. The first debris inlet 1111a, the filtering box 120, the first liquid discharge opening, the third cavity 11011, and the second liquid discharge opening 212 sequentially communicate to form the first water flow path for water surface cleaning. The second debris inlet 1111b, the filtering box 120, the first liquid discharge opening, the third cavity 11011, and the second liquid discharge opening 212 sequentially communicate to form the first water flow path for side wall or bottom wall cleaning, namely, the first water flow path for underwater cleaning.

In an embodiment, a side wall of the first accommodating cavity 111 is close to the main drive pump 210, and the side wall is further provided with the first water discharge opening 1016. The first water discharge opening 1016 communicates with the fourth cavity 11012. The cleaning device 1000 is further provided with the second water discharge opening 1113. The first water discharge opening 1016 communicates with the second water discharge opening 1113 through the fourth cavity 1014. When the cleaning device 1000 leaves the water surface, the first water discharge opening, the fourth cavity 11012, and the second water discharge opening 1113 sequentially communicate to form the second water flow path of the cleaning device 1000. The second water flow path is separated from the first water flow path.

In an embodiment, as shown in FIG. 45i, FIG. 45k, and FIG. 45i, the cleaning device further includes the flow guiding cover 218. The flow guiding cover 218 is provided in the third accommodating cavity 1101. An inner cavity of the flow guiding cover 218 serves as the third cavity 11011. One end of the flow guiding cover 218 is connected to or abuts against the first accommodating cavity 111, so that the plurality of first liquid discharge openings 1112 communicate with the third cavity 11011. For example, one end of the flow guiding cover 218 is connected to or abuts against an outer side wall of the first accommodating cavity 111 to cover or surround all of the first liquid discharge openings 1112, so that the plurality of first liquid discharge openings 1112 communicate with the third cavity 11011. Another end of the flow guiding cover 218 communicates with the second liquid discharge opening 212, so that the third cavity 11011 communicates with the second liquid discharge opening 212. In this way, the liquid in the third cavity 11011 can be conveniently discharged out of the housing 110a of the cleaning device body 110 through the second liquid discharge opening 212.

In an embodiment, as shown in FIG. 45k, the flow guiding cover 218 includes a first housing 2181 and a second housing 2182. The first housing 2181 is connected to the second housing 2182, and inner cavities of the first housing 2181 and the second housing 2182 communicate with each other. An end of the first housing 2181 is away from the second housing 2182, and an opening at the end covers the first water discharge opening. An extension direction of a first flow channel of the first housing 2181 and an extension direction of a second flow channel of the second housing 2182 intersect. The first flow channel and the second flow channel jointly form the third cavity 11011.

For example, the first flow channel extends substantially in the horizontal direction, and the second flow channel extends substantially in a direction intersecting the horizontal direction. The second flow channel may extend in the vertical direction, or the second flow channel extends at a tilt angle relative to the horizontal direction. The tilt angle is an acute angle to change a flow direction of the filtered liquid in the filtering box 120, so that the filtered liquid is finally discharged through the second liquid discharge opening 212. The discharged liquid can generate a component in the vertical direction, so that a downward action force is applied to the cleaning device, enabling the bottom of the cleaning device to be tightly attached to and move on the side wall or the bottom wall.

In an embodiment, the impeller 2101 of the main drive pump 210 is provided in the second flow channel, and the impeller 2101 rotates in the second flow channel, so that negative pressure is generated in the filtering box 120 or the first accommodating cavity. As shown in FIG. 45i, to guide liquid entering the second flow channel, the cleaning device further includes a flow guiding part 2183. At least a part of the flow guiding part 2183 is provided in the second flow channel. The flow guiding part 2183 is provided with a hollow flow guiding channel. The flow guiding channel communicates with both the first flow channel and the second flow channel. The impeller 2101 of the main drive pump is provided in the flow guiding channel, so that the impeller guides liquid entering the flow guiding channel during rotation, to ensure that when the impeller 2101 rotates, sufficient negative pressure can be generated in the filtering box 120 or the first accommodating cavity.

In an embodiment, as shown in FIG. 45i, the cleaning device includes a liquid outlet portion 219. The liquid outlet portion 219 is provided with the second liquid discharge opening 212. The housing 110a of the cleaning device body is provided with an avoidance hole, so that the second liquid discharge opening 212 communicates with the outside. At least a part of the liquid outlet portion 219 is provided in the second flow channel and located above or downstream of the flow guiding part 2183. In an embodiment, when the cleaning device includes the grille part 213, the liquid outlet portion 219 is provided with the grille part 213, and the grille part 213 may guide liquid flowing through the grille part 213 to implement flow guiding. In an embodiment, at least a part of the liquid outlet portion 219 is mounted in the second flow channel, and an outer end portion of the liquid outlet portion 219 may protrude from the second flow channel to communicate with the outside. For example, the liquid outlet portion 219 is detachably connected to the second housing 2182 through clamping, threaded connection, magnetic suction, or the like.

In an embodiment, for the flow guiding cover 218, an opening at an end of the first housing 2181 is flared in a direction in which the second housing 2182 faces the first liquid discharge opening 1112, so that the opening at the end of the first housing 2181 covers all of the first water discharge openings.

In an embodiment, the liquid outlet portion 219 may be provided on the housing 110a of the cleaning device body, and the second flow channel of the second housing 2182 communicates with the liquid outlet portion 219, or the liquid outlet portion 219 may not be provided, the second liquid discharge opening 212 is provided on the housing 110a of the cleaning device body, and the second flow channel of the second housing 2182 directly communicates with the second liquid discharge opening 212 on the housing 110a. When the cleaning device is provided with the grille part 213, the grille part is provided on the housing 110a and in the second liquid discharge opening 212.

Due to disposition of the flow guiding cover 218, a region in the third accommodating cavity 1101 other than a region in which the flow guiding cover 218 is provided may serve as the fourth cavity 11012. As shown in FIG. 41, the electronic control box 220 of the cleaning device is provided in the fourth cavity 11012. The suction assembly includes the main drive pump. The main drive pump includes the impeller 2101 and the motor 2102 that drives the impeller to rotate. The motor 2102 is provided in the electronic control box 220. The output shaft or a transmission shaft of the main motor extends out of the electronic control box 220 and extends into the flow guiding cover 218, and is connected to the impeller. The flow guiding part 2183 surrounds the output shaft or the transmission shaft and the impeller.

In an embodiment, at least a part of the flow guiding cover 218 is mounted at the top of and located over the electronic control box 220, and the opening at the end of the flow guiding cover 218 sealingly abuts against or abuts against the outer side wall of the first accommodating cavity 111 to cover all of the first liquid discharge openings 1112.

In an embodiment, in a cleaning direction of the cleaning device, the second accommodating cavity 112 is located in front of the first accommodating cavity 111, and the third accommodating cavity 1101 is located behind the first accommodating cavity 111, or the third cavity 11011 of the third accommodating cavity 1101 is behind the first accommodating cavity 111.

As shown in FIG. 45i, when the cleaning device includes the filtering box cavity 1010, the second cavity 1014 of the filtering box cavity 1010 serves as the first accommodating cavity 111 to allow the filtering box 120 to be mounted. The first liquid discharge opening 1112 is provided on the filtering box cavity 1010. Correspondingly, the opening at the end of the flow guiding cover 218 is provided on an outer side wall of the filtering box cavity 1010, so that the first cavity 1214 of the filtering box 120, the second cavity 1014 of the filtering box cavity 1010, the first liquid discharge opening, the third cavity 11011, and the second liquid discharge opening 212 communicate. In a flow direction of the first water flow path, the filtering box cavity 1010 is located upstream of the flow guiding cover 218. In the forward direction of the cleaning device, the filtering box cavity 1010 is located in front of the third accommodating cavity 1101, the filtering box cavity 1010 is located in front of the second liquid discharge opening 212, or the filtering box cavity 1010 is located in front of the electronic control box 220.

As shown in FIG. 45d and FIG. 45f, the cleaning device body further includes the reagent cavity 2791. The reagent kit 271 of the water quality treatment assembly is provided in the reagent cavity 2791. The reagent in the reagent kit 271 is pumped into the third cavity 11011 under the action of the reagent drive part 2792, and then the reagent is discharged with water in the third cavity 11011 into the liquid in the target region through the second liquid discharge opening 212. The reagent drive part 2792 may be a pump, for example, a peristaltic pump or a pump in another form.

In an embodiment, in the forward direction of the cleaning device, the reagent cavity 2791 is located behind the second liquid discharge opening 212, or the reagent cavity 2791 is located behind the flow guiding cover 218, and the reagent cavity 2791 is close to or adjacent to the flow guiding cover 218 and provided on the cleaning device body, so that the reagent in the reagent kit 271 is conveniently delivered into the flow guiding cover 218, to shorten a delivery path of the reagent, or the reagent cavity 2791 is located at the top of the electronic control box 220 and behind the flow guiding cover 218, so that a region enclosed by the top of the electronic control box 220 and the upper housing 110a1 of the cleaning device body is fully used, leading to a compact structure of the cleaning device and a small overall volume of the cleaning device. In other words, the reagent cavity is close to the second end portion of the cleaning device body.

In an embodiment, as shown inFIG. 45i, a connection opening 2184 is provided at the bottom of the flow guiding cover 218. The flow guiding cover 218 is mounted on the top of the electronic control box 220. The third cavity 11011 is enclosed between the top of the electronic control box 220 and the flow guiding cover 218. The reagent outlet 2795 is provided at the top of the electronic control box 220 and located in the third cavity 11011, so that the reagent outlet 2795 communicates with the third cavity 11011.

Specifically, the connection opening is provided at the bottom of the first housing 2181 of the flow guiding cover 218. The first flow channel is formed between the top of the electronic control box 220 and the first housing 2181. The reagent outlet 2795 is provided at the top of the electronic control box 220 and is covered by the first housing 2181, so that the reagent outlet 2795 is located in the first flow channel.

A fifth filtering part 2793 is provided at the reagent outlet 2795, so that the following case can be avoided: Trash carried by the liquid in the third cavity 11011 blocks the reagent outlet 2795, affecting delivery of the reagent in the reagent kit 271 into the third cavity 11011. For example, the fifth filtering part 2793 is a filtering mesh, to prevent the trash carried by the liquid in the third cavity 11011 from flowing into the reagent outlet 2795 and blocking the reagent outlet 2795.

In an embodiment, the cleaning device further includes the reagent inlet portion 273. The reagent inlet portion 273 may be provided on the electronic control box 220 or the reagent cavity 2791, or the reagent inlet portion 273 is partially provided on the reagent cavity 2791 and partially provided on the electronic control box 220. The reagent inlet portion 273 communicates with the reagent outlet 2795 through the first pipeline 2794. The reagent drive part 2792 is provided on the first pipeline 2794 and configured to pump out the reagent in the reagent kit 271 and then deliver the reagent into the third cavity 11011 through the reagent outlet 2795. For positions of the first pipeline 2794 and the reagent drive part 2792, the first pipeline 2794 and the reagent drive part 2792 may be provided in the electronic control box 220, so that the reagent drive part 2792 can be prevented from being in contact with the external liquid. This prolongs a service life of the reagent drive part. In addition, because the reagent outlet 2795 is provided at the top of the electronic control box 220, and the first pipeline 2794 is provided in the electronic control box 220, the reagent outlet 2795 is conveniently connected to the reagent kit 271.

For example, when the reagent kit 271 is mounted in the reagent cavity 2791, the reagent in the reagent kit 271 is in communication with the reagent inlet portion 273. The reagent in the reagent kit 271 is driven by the reagent drive part 2792 to flow into the third cavity 11011 through the reagent inlet portion 273, the first pipeline 2794, and the reagent outlet 2795.

In an embodiment, as shown inFIG. 45iand FIG. 45m, the electronic control box 220 includes a box body 2201 and a sealing top cover 2202 for sealing an opening at the top of the box body 2201. A sealed cavity is formed between the box body 2201 and the sealing top cover 2202. The reagent inlet portion 273, the first pipeline 2794, and the reagent drive part 2792 are provided on the sealing top cover 2202. The first pipeline 2794 and the reagent drive part 2792 are located in the sealed cavity. The reagent inlet portion 273 may be at least partially provided in the sealed cavity to be connected to the first pipeline 2794. The reagent inlet portion 273 is at least partially provided outside the sealing top cover 2202 to communicate with a liquid outlet of the reagent kit 271 of the reagent cavity 2791.

Specifically, the battery pack 2103, the first control board 2311, the fourth drive parts 194 of the two traveling mechanisms 190, the buoyancy adjustment parts 2633 of the two buoyancy cavities, the reagent drive part 2792, and the motor 2102 of the main drive pump are all provided in the electronic control box 220. As shown in FIG. 41, the battery pack 2103 is provided at a lower portion of the sealed cavity, and the first control board 2311 is provided above the battery pack 2103. The first control board 2311 is provided with an avoidance region. The motor 2102 of the main drive pump is provided above the battery pack 2103 and extends from the top of the first control board 2311 through the avoidance region. The output shaft of the motor extends out of the sealing top cover 2202 of the electronic control box 220. The two fourth drive parts 194 of the traveling mechanisms 190 are symmetrically provided in the sealed cavity, are located above the battery pack 2103, and avoid the first control board 2311. The two buoyancy adjustment parts 2633 are symmetrically provided in the sealed cavity, are located above the battery pack 2103, and avoid the first control board 2311. The buoyancy adjustment part 2633 is located in front of the fourth drive part 194. Fourth drive part mounting space 1941 is provided in the electronic control box to allow the fourth drive part to be mounted, so that the buoyancy adjustment part 2633 is closer to the first accommodating cavity 111. This facilitates connection of the buoyancy adjustment part 2633 with the first liquid flow portion 2635 and the second buoyancy sub-cavity 2632. The reagent drive part 2792 is provided on an inner wall of the sealing top cover 2202, leading to compact structural arrangement of the electronic control box 220. Components in the electronic control box 220 may alternatively be arranged in another manner, which is not limited herein and may be adjusted as required.

As shown in FIG. 45j, a charging member 2104 is provided on the bottom of the electronic control box 220. At least a part of the charging member 2104 is located right below the battery, and the charging member 2104 passes through the bottom of the cleaning device body and communicates with the outside, so that the cleaning device is conveniently connected to an external charging member 2104 to quickly charge the battery pack 2103. In other words, the battery pack 2103 is provided below the electronic control box 220, so that the battery pack 2103 is connected to the charging member 2104 over a short distance, for example, in a plug-in manner, so that the charging member 2104 conveniently charges the battery pack 2103.

As shown in FIG. 45v, the charging member 2104 is located behind the second filtering part 267 or in front of the second water discharge opening 1113. In the forward direction of the cleaning device, the second debris inlet 1111b is located in front of the second filtering part 267, the charging member 2104, and the second water discharge opening 1113. The second water discharge opening 1113 is provided at a rear section of the bottom of the cleaning device body. When the cleaning device is lifted out of water, the first handle 251 is located at an upper portion of the front portion of the cleaning device, and the entire cleaning device tilts downward from the front portion to the rear portion. Therefore, the second water discharge opening 1113 is provided at the rear section of the bottom of the cleaning device body. In this case, the second water discharge opening 1113 is located at a lowermost portion, so that the liquid in the cleaning device body can be more easily discharged. In addition, the charging member 2104 is located in front of the second water discharge opening 1113. When the cleaning device is charged, the entire cleaning device tilts downward from the front portion to the rear portion. Therefore, the charging member 2104 is higher than the second water discharge opening, so that in a charging process, even if a part of the liquid in the cleaning device body is discharged through the second water discharge opening 1113, charging of the charging member 2104 is not affected to ensure that the liquid discharged from the cleaning device body does not flow to the charging member 2104, to avoid an electric shock. The second filtering part 267 is provided in front of the charging member 2104. Because the second filtering part 267 is provided between the electronic control box 220 and the first accommodating cavity 111, the second filtering part 267 is provided in front of the charging member 2104. However, liquid discharged through the second filtering part 267 first enters the cleaning device body and then is discharged through the second water discharge opening 1113 without affecting normal charging of the charging member 2104. Because the first part of the buoyancy cavity is located in front of the filtering box 120, the first part of the buoyancy cavity is also located in front of the second debris inlet 1111b, but is located below the first debris inlet 1111a, so that the first part of the buoyancy cavity floats on the water surface earlier than the second part of the buoyancy cavity.

As shown in FIG. 45b, a first top cover 2796 is provided at an opening of the reagent cavity 2791. The first top cover 2796 moves, so that the opening of the reagent cavity 2791 is exposed to allow the reagent kit 271 to be taken out of or put into the reagent cavity 2791.

As shown in FIG. 45a, FIG. 45b, FIG. 45d, and FIG. 45e, the cleaning device body further includes a bottom housing 110d, a front housing 110b, and a rear housing 110c in addition to the housing 110a. The housing 110a is connected to a front portion of the bottom housing 110d through the front housing 110b, and the housing 110a is connected to a rear portion of the bottom housing 110d through the rear housing 110c to form a mounting cavity in an enclosing manner. The filtering box cavity 1010 is provided in the mounting cavity. The second cavity 1014 of the filtering box cavity 1010 serves as the first accommodating cavity 111. The second accommodating cavity 112 is provided between the front housing 110b and a front portion of the filtering box cavity 1010. A rear portion of the filtering box cavity 1010, the bottom housing 110d, and the rear housing 110c form a third accommodating cavity 1101 in an enclosing manner. The bottom of the cleaning device body is the bottom housing 110d.

Specifically, the filtering box cavity 1010 may be integrally molded with the bottom housing 110d, or the filtering box cavity 1010 may be detachably mounted on the bottom housing 110d. In an embodiment, the reagent cavity 2791 may be integrally molded with the rear housing 110c, the reagent cavity 2791 may be detachably connected to the rear housing 110c, or the reagent cavity 2791 may be mounted on the electronic control box 220 instead of the rear housing 110c. In addition, the housing 110a of the cleaning device body may include the upper housing 110a1 and two side housings 110a2. One end of each side housing 110a2 is connected to the front housing 110b, another end of each side housing 110a2 is connected to the rear housing 110c, and the upper housing 110a1 and the two side housings 110a2 are detachably connected or integrally molded, or a part of one side housing 110a2 is connected to the rear housing 110c, a part of the side housing 110a2 is connected to the front housing 110b, a part of the other side housing 110a2 is connected to the upper housing 110al, a part of the other side housing 110a2 is connected to the rear housing 110c, and a part of the other side housing 110a2 is connected to the front housing 110b, so that the housing 110a, the bottom housing 110d, and the front housing 110b are connected. The housing 110a, the bottom housing 110d, and the front housing 110b may be connected in other manners.

In an embodiment, when the housing 110a includes the upper housing 110a1 and the two side housings 110a2, first space 110e in which the second control board is mounted is formed between one side housing 110a2 and one side wall of the filtering box cavity 1010, second space 110f is formed between the other side housing 110a2 and another side wall of the filtering box 120, and third space 110g is formed between the front housing 110b and a front portion of the filtering box 120. The first control board 2311 of the control system is provided in the electronic control box 220. The second control board 2312 is connected to the first control board 2311. In an embodiment, the second accommodating cavity 112 is located in the third space 110g, and the vision sensing assembly 140 and the two first buoyancy sub-cavities 2631 or the first part of the buoyancy cavity are located in the third space 110g. There are at least two detection assemblies 130. One detection assembly 130 is provided in the second space 110f to perform detection in a direction of the side wall of the cleaning device. The other detection assembly 130 is provided in the third space 110g and avoids the second accommodating cavity 112 to perform detection in the forward direction of the cleaning device. The front housing 110b is provided with a first avoidance opening and a second avoidance opening that respectively avoid the vision sensing assembly 140 and the detection assembly 130 located in the third space 110g.

As shown in FIG. 45c, there are two traveling mechanisms 190. One traveling mechanism 190 is provided at an outer side wall on one side of the bottom housing 110d, the other traveling mechanism 190 is provided at an outer side wall on another side of the bottom housing 110d, and the traveling mechanisms 190 are provided below the housing 110a of the cleaning device body. There are two roller brush assemblies 171. One roller brush assembly 171 is provided outside a front side wall of the bottom housing 110d, and the other roller brush assembly 171 is provided outside a rear side wall of the bottom housing 110d. The traveling mechanism 190 and the roller brush assembly 171 are provided on the bottom housing 110d, and the propulsion assembly 180 is provided in inner space of the traveling mechanism 190, so that components for driving the cleaning device to move are all arranged on the bottom housing 110d, leading to a more compact structure of the cleaning device. In addition, additional space is not occupied.

In an embodiment, a first partition plate 11013 is horizontally provided in the third accommodating cavity. The first partition plate 11013 divides the third accommodating cavity into the third cavity 11011 and the fourth cavity 11012 that are vertically arranged. The suction assembly 210 includes the impeller 2101 and the main motor that drives the impeller to rotate. The cleaning device further includes the electronic control box 220. The electronic control box 220 has a sealed mounting cavity. The main motor of the main drive pump is provided in the electronic control box 220. The output shaft of the main motor extends into the third cavity 11011 and is connected to the impeller 2101 to drive the impeller to rotate. When the main drive pump is turned on, the liquid enters the filtering box through the first debris inlet 1111a and the first inlet (corresponding to the first debris inlet 1111a) of the filtering box or the second debris inlet 1111b and the second inlet 1212 (corresponding to the second debris inlet 1111b), and after being filtered in the filtering box, the liquid enters a gap between the first accommodating cavity and the filtering box, and then enters the third cavity 11011 through the first liquid discharge opening 1112, and finally is discharged through the second liquid discharge opening 212 to form the first water flow path for the cleaning device to perform cleaning. As shown in FIG. 39i, the second water discharge opening 1113 is provided at the bottom of the cleaning device body. The first water discharge opening 1016 communicates with the second water discharge opening 1113 through the fourth cavity 11012, so that when the cleaning device leaves the water surface, the first water discharge opening 1016, the fourth cavity, and the second water discharge opening 1113 sequentially communicate to form the second water flow path. The second water flow path is separated from the first water flow path.

In an embodiment, the detection end 2331 of the liquid level detection assembly 233 is provided on the electronic control box and in the fourth cavity 11012 and configured to detect a liquid level at a current position of the cleaning device. In addition, the fourth drive part 194 and the first buoyancy adjustment and control part 2611 are both provided in the electronic control box, and the battery pack, the control system, 231, or the control unit is also provided in the electronic control box and isolated from liquid in the external environment to ensure normal operation. In an embodiment, in the forward direction of the cleaning device, the filtering box cavity is located in front of the electronic control box, and there is a third gap between a rear portion of the filtering box cavity and a front portion of the electronic control box. The third gap also belongs to the fourth cavity. The detection end 2331 is located in the third gap. The second filtering part is also located in the third gap and located below the detection end.

In an embodiment, the electronic control box includes the box body 2201 (namely, an electronic control box body) and the sealing top cover 2202 for sealing the opening at the top of the box body. An opening is provided on the first partition plate 11013. A part of the sealing top cover seals the opening on the first partition plate 11013, so that the electronic control box is provided in the cleaning device body, and the output shaft of the main drive pump extends into an upper cavity through the sealing top cover and is connected to the impeller. The electronic control box 220 is provided below the first partition plate in a sealing manner to separate the third cavity 11011 and the fourth cavity 11012.

When the cleaning device is provided with the filtering box cavity 1010, the second cavity in the filtering box cavity serves as the first accommodating cavity, the filtering box is provided in the filtering box cavity, and the first liquid discharge opening 1112 and the first water discharge opening 1016 are provided on a side wall of the filtering box cavity. In an embodiment, a side wall of the filtering box cavity corresponds to a side wall of the filtering box cavity. When the filtering box has four side walls, the filtering box cavity also has four side walls correspondingly, and the filtering box cavity fits the filtering box. In an embodiment, the first liquid discharge opening and the first water discharge opening are provided on the third side wall of the filtering box cavity.

In an embodiment, when the cleaning device is not provided with the filtering box cavity, a second partition plate vertically extending may be provided in the cleaning device body. The second partition plate divides the cleaning device body into the first accommodating cavity and the third accommodating cavity horizontally arranged. The filtering box cavity is provided in the first accommodating cavity. The first liquid discharge opening 1112 and the first water discharge opening 1016 are provided on the second partition plate. The first partition plate is provided above the second partition plate to divide the third accommodating cavity into the third cavity and the fourth cavity vertically arranged.

Refer to FIG. 44a to FIG. 44e. FIG. 44a is a schematic structural view of a water surface cleaning device according to an embodiment of the present disclosure. The water surface cleaning device 3000 may be configured to perform water surface cleaning. The water surface cleaning device includes a water surface cleaning device body 3100, an adjustment mechanism 3200, a moving mechanism 3300, a main cleaning mechanism 3400, and a water quality treatment assembly 3500. The adjustment mechanism 3200 is configured to allow the water surface cleaning device to perform a water surface operation. For example, the adjustment mechanism 3200 includes at least a buoyancy cavity 3210 configured to adjust the water surface cleaning device body 3100 to be at least partially located on a water surface. The main cleaning mechanism 3400 is at least configured to perform filtering. The main cleaning mechanism 3400 includes at least a filtering box 3410, and a debris inlet 3411 is formed on the filtering box 3410.

In some embodiments, the moving mechanism 3300 may be a propeller. Optionally, the water surface cleaning device 3000 includes two propellers that are symmetrically provided. Optionally, a housing may be provided outside the propeller to protect the propeller. Optionally, because the water surface cleaning device 3000 is easily entangled by trash on the water surface when performing water surface cleaning, as shown in FIG. 44a, a housing may not be provided outside the propeller to avoid difficulty in cleaning the propeller after the propeller is entangled by the trash.

In some embodiments, the water surface cleaning device 3000 includes the water quality treatment assembly 3500 and a drive box. The water quality treatment assembly 3500 may be detachably provided on the water surface cleaning device body 3100. For example, the water quality treatment assembly 3500 is provided at a rear portion of the water surface cleaning device body 3100. The water quality treatment assembly 3500 spreads a reagent into a pool to implement water quality treatment of the pool. The water quality treatment assembly 3500 includes a reagent kit 3510 and a reagent drive part. The reagent kit 3510 is configured to store one or more types of reagents. The drive box is provided in the water surface cleaning device body 3100, or the reagent kit 3510 includes the reagent drive part. The drive box or the reagent drive part is configured to provide a driving force to spread the reagent. Optionally, the drive box or the reagent drive part includes a reagent drive pump. Optionally, the drive box may be a sealed cavity.

In some embodiments, when the reagent drive part is the drive box, the water quality treatment assembly 3500 further includes a first reagent pipeline and a second reagent pipeline. One end of the first reagent pipeline communicates with an outlet of the reagent kit 3510 in a sealing manner, and the other end of the first reagent pipeline communicates with an inlet of the drive box. One end of the second reagent pipeline communicates with an outlet of the drive box, and the other end of the second reagent pipeline communicates with a reagent outlet. Optionally, the reagent outlet is provided on a housing of the drive box. Optionally, a filtering mesh is provided at the reagent outlet to prevent external trash from entering the drive box and causing damage to the drive box. A housing of the water surface cleaning device 3000 is provided with a reagent spread opening. For example, a bottom housing of the water surface cleaning device 3000 is provided with the reagent spread opening. Optionally, the drive box is located above the bottom housing of the water surface cleaning device 3000. The reagent outlet is provided at the bottom of the drive box. The reagent outlet is aligned with the reagent spread opening on the bottom housing, so that the reagent is driven by the drive box to sequentially flow through the reagent kit 3510, the first reagent pipeline, the drive box, the second reagent pipeline, the reagent outlet, and the reagent spread opening, and finally enters the target region 100.

In some embodiments, a communication assembly is provided on the water surface cleaning device 3000 and configured to communicate with another device. Optionally, the communication assembly is provided on the water surface cleaning device body 3100, so that when the water surface cleaning device 3000 is on the water surface, the communication assembly is at least partially located above the water surface. Optionally, when the water surface cleaning device 3000 is on the water surface, the communication assembly is completely located above the water surface, to improve an effect of communication between the cleaning device and the another device. For example, the communication assembly is a Wi-Fi assembly. A Wi-Fi antenna is completely located above the water surface when the water surface cleaning device 3000 is on the water surface.

In some embodiments, the water surface cleaning device 3000 includes a roller brush 3420. The roller brush 3420 may be rotatably provided at the water surface cleaning device body 3100 or the debris inlet 3411 of the filtering box 3410. The water surface cleaning device 3000 includes a roller brush drive assembly. The roller brush 3420 is driven by the roller brush drive assembly 3421.

In some embodiments, the water surface cleaning device 3000 includes an anti-regurgitation assembly 3430. For example, the anti-regurgitation assembly 3430 is provided close to the debris inlet 3411 of the filtering box 3410. When the cleaning device 3000 moves backward, makes a turn, or stops operating, the anti-regurgitation assembly 3430 is configured to prevent at least a part of the trash from being regurgitated to a to-be-cleaned region through the debris inlet 3411, to resolve the problem of the cleaning device 3000 that the debris may be regurgitated. In some embodiments, the anti-regurgitation assembly 3430 includes an anti-regurgitation door 3431 and an anti-regurgitation drive assembly 3432. The anti-regurgitation door 3431 may be rotatably provided at a position on the filtering box 3410, and the position is close to the debris inlet 3411. The anti-regurgitation drive assembly 3432 drives the anti-regurgitation door 3431 to rotate relative to the debris inlet 3411.

In some embodiments, the roller brush drive assembly 3421 and the anti-regurgitation drive assembly 3432 may be provided on a side surface of the water surface cleaning device body 3100 in a forward direction. Optionally, as shown in FIG. 44b, the roller brush drive assembly 3421 and the anti-regurgitation drive assembly 3432 are respectively provided on different sides, so that space on each side can be fully used, and weights of the two sides can be balanced.

In some embodiments, the water surface cleaning device 3000 includes at least one sensor. Optionally, as shown in FIG. 44c, the water surface cleaning device 3000 includes a plurality of ultrasonic sensors, for example, at least two overwater ultrasonic sensors 3610 and at least one underwater ultrasonic sensor 3620. When the cleaning device 3000 is on the water surface, the overwater ultrasonic sensors 3610 are located above the water surface, and the underwater ultrasonic sensor 3620 is located below the water surface. The at least two overwater ultrasonic sensors 3610 may be provided symmetrically on a front side of the water surface cleaning device 3000 in the forward direction to detect an object in front of the water surface cleaning device 3000. The at least one underwater ultrasonic sensor 3620 may be provided in the buoyancy cavity 3210 to detect an object on a side of the water surface cleaning device 3000 underwater. The plurality of overwater ultrasonic sensors with different orientations and the plurality of underwater ultrasonic sensors with different orientations are provided, so that a detection range of the water surface cleaning device 3000 can be improved. Particularly, the overwater ultrasonic sensors are provided at a front portion, and the underwater ultrasonic sensor is provided at a side portion, so that the water surface cleaning device 3000 can perform detection in the forward direction and perform underwater detection in a side direction.

In some embodiments, the filtering box 3410 may be provided at the water surface cleaning device body 3100 in a pull-out manner. A locking mechanism 3440 is provided between the filtering box 3410 and the water surface cleaning device body 3100. Optionally, the locking mechanism 3440 includes a locking assembly 3441 and a locking groove 3442. One of the filtering box 3410 and the water surface cleaning device body 3100 is provided with the locking assembly 3441, and the other one of the filtering box 3410 and the water surface cleaning device body 3100 is provided with the locking groove 3442. The locking assembly 3441 may be releasably locked to the locking groove 3442.

In some embodiments, as shown in FIG. 44d, the locking assembly 3441 includes a locking part 34411, an elastic part 34412, and a pressing part 34413. The elastic part 34412 is provided between a top end of the locking part 34411 and the water surface cleaning device body 3100. The locking part 34411 may be releasably locked to the locking groove 3442. When an external force is applied to the pressing part 34413, the pressing part 34413 acts on the locking part 34411, the locking part 34411 is lifted and acts on the elastic part 34412, and the locking part 34411 is disconnected from the locking groove 422, so that the filtering box 410 can be removed. When the external force is not applied, the pressing part 34413 is reset under a restoring force of the elastic part 34412. At the same time, the locking part 34411 is lowered under the restoring force of the elastic part 34412, and the locking part 34411 is locked to the locking groove 3442, so that the filtering box 3410 can be locked in the water surface cleaning device body 3100.

In some embodiments, an end of the pressing part 34413 faces the locking part 34411, and the end is provided with a first pressing inclined surface 34413a. The first pressing inclined surface 34413a is provided on the pressing part 34413, so that the locking part 34411 is pushed to be lifted.

In some embodiments, a filtering box button 3450 is provided on a front side of the water surface cleaning device body 3100. The filtering box button 3450 may be pressed, so that the filtering box is taken out. The filtering box button 3450 overcomes an elastic force generated by an elastic part of the filtering box button 3451 under an external force to be in contact with the pressing part 34413, and then applies a force to the pressing part 34413. Each of the filtering box button 3450 and the pressing part 34413 may include a matched contact surface. Optionally, as shown in FIG. 44e, an inclined surface 3452 of the filtering box button 3450 matches a second pressing inclined surface 34413b of the pressing part 34413, the filtering box button 3450 is provided in the middle of the front side of the water surface cleaning device body 3100, and two locking assemblies 3441 are symmetrically provided on two sides of the filtering box button. When a force in a direction opposite to the forward direction of the water surface cleaning device 3000 is applied to the filtering box button 3450, the filtering box button 3450 acts on the pressing part 34413 through the inclined surface, and then the two locking assemblies 3441 may move respectively in an arrow direction shown inFIG. 44eand in a direction opposite to the arrow direction, so that the locking assembly 3441 is disconnected from the locking groove 3442.

Refer to FIG. 46a to FIG. 46h. FIG. 46a is a schematic structural view of a cleaning device 1000 according to another embodiment of the present disclosure. In this embodiment, the cleaning device 1000 may be switched between a position on the water surface and a position under the water surface. When the cleaning device 1000 is located below the water surface, the cleaning device 1000 may perform an underwater operation, that is, the cleaning device 1000 is configured to clean the target bottom wall 1012 and the target side wall 1011 of the swimming pool. When the cleaning device 1000 is located on the water surface, the cleaning device 1000 floats on the water surface, so that the user can conveniently directly retrieve the cleaning device 1000 from the water surface.

As shown in FIG. 46b and FIG. 46c, the filtering box 120 is provided in the cleaning device body 110 and close to the first side 113 of the cleaning device body 110, the electronic control box 220 is provided in the cleaning device body 110 and close to the second side 114 of the cleaning device body 110, the main motor of the main drive pump 210 is provided in the electronic control box 220, and the output shaft of the main motor extends into the third cavity 11011 to be connected to the impeller 2101 to drive the impeller to rotate. When the main drive pump 210 is turned on, the liquid enters the filtering box 120 through the second debris inlet 1111b and the second inlet 1212 (corresponding to the second debris inlet 1111b) of the filtering box 120, and after being filtered in the filtering box 120, the liquid enters a gap between the first accommodating cavity 111 and the filtering box 120, and then enters the third cavity 11011 through the first liquid discharge opening 1112, and finally is discharged through the second liquid discharge opening 212 to form the first water flow path for the cleaning device 1000 to perform cleaning. In this case, the filtering box 120 may be configured to perform underwater cleaning on the swimming pool.

As shown in FIG. 46d, when the cleaning device 1000 floats on the water surface, the cleaning device 1000 is in a tilt state in which the first side 113 is higher than the second side 114 due to overall arrangement and counterweighting of various components in the cleaning device 1000. The tilt state is set to facilitate retrieval and communication of the cleaning device 1000 (mentioned below).

In some embodiments, the first handle 251 is provided on the first side 113 of the cleaning device body 110. Because when the cleaning device 1000 floats on the water surface, the cleaning device 1000 is in the tilt state in which the first side 113 is higher than the second side 114, the first handle 251 is at a high part of the cleaning device 1000, so that the user can conveniently hold the first handle 251. This helps improve user experience.

In some embodiments, as shown in FIG. 46c, the button 290 is fixed behind the filtering box 120 and located above the first liquid discharge opening 1112. The button 290 is provided above the first liquid discharge opening 1112 to prevent the button 290 from blocking the first liquid discharge opening 1112, to prevent the button 290 from affecting a water flow. In this way, when the main drive pump 210 is turned on, the liquid can enter the gap between the first accommodating cavity 111 and the filtering box 120 after being filtered in the filtering box 120, and then smoothly enter the third cavity 11011 through the first liquid discharge opening 1112, and finally can be discharged through the second liquid discharge opening 212. Further, the button 290 is provided between the second liquid discharge opening 212 of the main drive pump 210 and the filtering box 120 and extends to the top of the cleaning device body 110, so that the user can conveniently control the button of the cleaning device 1000.

In some embodiments, the button 290 may include a power button 291 and at least two cleaning mode buttons 291. A type of the button 290 and a quantity of buttons 290 may be adjusted based on an actual function of the cleaning device 1000.

In some embodiments, an indicator light 293 may be provided on one or more sides of the button 290. Due to the indicator light 293, the user can conveniently touch the button 290 in a dark environment, so that the following case can be avoided: The user accidentally touches the button 290 due to lack of light, affecting user experience. In addition, the indicator light 293 may be further configured to indicate a working state of the cleaning device 1000, for example, an on state and a cleaning mode state of the cleaning device 1000.

As shown in FIG. 46b, the button 290 includes the power button 291 and two cleaning mode buttons 292. The two cleaning mode buttons are respectively located on two sides of the power button. The indicator light 293 is closer to the electronic control box 220 than the button 290.

In some embodiments, the cleaning device further includes a mode switching member. The mode switching member may adjust an action force applied to the cleaning device 1000 in the vertical direction. Specifically, when the traveling mechanism 190 is in the second motion state, the mode switching member may adjust an action force applied to the traveling mechanism 190 in the vertical direction, so that the traveling mechanism 190 can be switched from the second motion state to the third motion state. In this embodiment, the cleaning device 1000 may be switched from the first motion state to the second motion state until the second gas flow portion 414 is exposed at the water surface, and then the cleaning device 1000 is switched to the third motion state, so that the cleaning device 1000 is switched from the position under the water surface to the position on the water surface. When the cleaning device 1000 is located on the water surface, the user can conveniently directly retrieve the cleaning device 1000 from the water surface. When the cleaning device 1000 is located under the water surface, the cleaning device 1000 may perform an underwater operation.

In some embodiments, the action force applied to the cleaning device 1000 in the vertical direction may include a buoyancy force applied to the cleaning device 1000 in the vertical direction. When the action force includes the buoyancy force applied to the cleaning device 1000 in the vertical direction, the mode switching member may include the buoyancy adjustment assembly 410. The buoyancy adjustment assembly 410 may be configured to adjust a magnitude of the buoyancy force applied to the cleaning device 1000 in the vertical direction.

In some embodiments, the buoyancy adjustment assembly 410 may include the buoyancy cavity. For a specific structure of the buoyancy cavity, refer to the first buoyancy cavity 261 and the second buoyancy cavity 262. Details are not described herein again.

In some embodiments, as shown in FIG. 46b, FIG. 46e, and FIG. 46f, the cleaning device 1000 may include two buoyancy cavities. A third buoyancy cavity 4111 is closer to the third side 115 of the cleaning device body 110 than the filtering box 120 and the electronic control box 220 and fixed to a left side wall of each of the filtering box 120 and the electronic control box 220. A length of the third buoyancy cavity 4111 extends from a front end of the filtering box 120 to a rear end of the electronic control box 220. A fourth buoyancy cavity 4112 is closer to the fourth side 116 of the cleaning device body 110 than the filtering box 120 and the electronic control box 220 and fixed to a right side wall of each of the filtering box 120 and the electronic control box 220. A length of the fourth buoyancy cavity 4112 extends from the front end of the filtering box 120 to the rear end of the electronic control box 220. In other words, the third buoyancy cavity 4111 and the fourth buoyancy cavity 4112 are symmetrically provided on left and right sides of each of the filtering box 120 and the electronic control box 220. Symmetrically disposing the third buoyancy cavity 4111 and the fourth buoyancy cavity 4112 allows the cleaning device 1000 to remain stable when the third buoyancy cavity 4111 and the fourth buoyancy cavity 4112 provide buoyancy forces for the cleaning device 1000. This prevents the cleaning device 1000 from tilting and flipping due to an uneven buoyancy force applied to the cleaning device under or on the water surface.

In some embodiments, as shown in FIG. 46c and FIG. 46f, the cleaning device 1000 may further include a fifth buoyancy cavity 4113. The fifth buoyancy cavity 4113 may be provided between the filtering box 120 and the electronic control box 220. A front side wall and a rear side wall of the fifth buoyancy cavity 4113 are respectively provided adjacent to the filtering box 120 and the electronic control box 220. A width of the fifth buoyancy cavity 4113 extends from a leftmost end of each of the filtering box 120 and the electronic control box 220 to a rightmost end of each of the filtering box 120 and the electronic control box 220. A left side wall and a right side wall of the fifth buoyancy cavity 4113 are respectively provided adjacent to the third buoyancy cavity 4111 and the fourth buoyancy cavity 4112. The fifth buoyancy cavity 4113 is provided adjacent to the filtering box 120, the electronic control box 220, the third buoyancy cavity 4111, and the fourth buoyancy cavity 4112, leading to compact arrangement of the buoyancy cavities. This helps ensure stability of the cleaning device 1000 when the buoyancy cavities provide buoyancy forces for the cleaning device 1000. In addition, internal space of the cleaning device 1000 can be fully used, and use of the internal space of the cleaning device 1000 can be maximized.

In some embodiments, a side of the fifth buoyancy cavity 4113 is attached to the filtering box 120, and the side is recessed inward to form specific space. The space is movable space of the water baffle plate 1012 to allow the water baffle plate 1012 to be normally opened and closed, to prevent the fifth buoyancy cavity 4113 from blocking the water baffle plate 1012 when the water baffle plate 1012 is opened to expose the first water discharge opening 1016. In other words, the water baffle plate 1012 may move in the space, enabling the water baffle plate 1012 to be smoothly switched between two states (namely, a non-water discharge state in which the first water discharge opening 1016 is covered and a water discharge state in which the first water discharge opening 1016 is exposed).

It should be noted that sizes and positions of the buoyancy cavities may be adjusted based on weights and positions of various components of the cleaning device 1000 to ensure that the cleaning device 1000 can be in a preset state when volumes of liquid and/or gas in the buoyancy cavities change.

In some embodiments, the buoyancy adjustment assembly 410 further includes a buoyancy adjustment and control part. The buoyancy adjustment and control part may be configured to adjust a volume of liquid or gas in the buoyancy cavity. The volume of the liquid and/or the gas in the buoyancy cavity is adjusted by using the buoyancy adjustment and control part to change a magnitude of a buoyancy force applied to the cleaning device 1000 in the vertical direction, so that the cleaning device 1000 is switched between floating on the water surface of the target region 100 and moving on the bottom of the target region 100. It may be understood that the upward buoyancy force applied to the cleaning device 1000 in the vertical direction is positively correlated with the volume of the gas in the buoyancy cavity and negatively correlated with the volume of the liquid in the buoyancy cavity. For a specific structure of the buoyancy adjustment and control part, refer to the first buoyancy adjustment and control part 2611 and the second buoyancy adjustment and control part 2621. Details are not described herein again.

In some embodiments, the buoyancy adjustment assembly 410 may further include a second liquid flow portion 413. The second liquid flow portion 413 is configured to allow liquid to enter or leave the buoyancy cavity. In some embodiments, the buoyancy adjustment assembly 410 may further include a second gas flow portion 414. The second gas flow portion 414 is configured to allow gas to enter or leave the buoyancy cavity. The second liquid flow portion 413 and the second gas flow portion 414 may be directly provided on the buoyancy cavity or may be independent of the buoyancy cavity. The second liquid flow portion 413 and the second gas flow portion 414 may be provided on the housing of the cleaning device 1000 to communicate with the outside (such as external liquid or external air) for gas and/or liquid exchanging.

As shown in FIG. 46f, the second liquid flow portion 413 may be provided between the filtering box 120 and the electronic control box 220 and fixed to the electronic control box 220. Further, an upper side of the second liquid flow portion 413 may be tightly attached to the bottom of the fifth buoyancy cavity 4113, and a lower side of the second liquid flow portion 413 may be provided at the bottom of the housing of the cleaning device 1000 to reduce an overall size of the cleaning device 1000. In some embodiments, the second liquid flow portion 413 is provided at a position on the bottom of the housing of the cleaning device 1000, where the position is close to the second water discharge opening 1113, so that liquid quickly flows to the second water discharge opening 1113 after being discharged from the buoyancy cavity, and then is discharged through the second water discharge opening 1113 in a timely manner.

In some embodiments, the second liquid flow portion 413 further includes a second liquid flow cavity 4131. The second liquid flow cavity 4131 is provided with an eighth outlet 41311. There may be one or more eighth outlets 41311. The eighth outlets 41311 may be spaced from each other in parallel on a side wall of the second liquid flow cavity 4131. In some embodiments, a side wall of the second liquid flow cavity 4131 further communicates with the buoyancy cavity, enabling liquid to enter or leave the buoyancy cavity. As shown in FIG. 46f and FIG. 46g, there are a plurality of eighth outlets 41311 spaced from each other in parallel on an upper side wall of the second liquid flow cavity 4131. A left side wall of the second liquid flow cavity 4131 communicates with the buoyancy cavity.

In some embodiments, the second liquid flow portion 413 further includes a third filtering part 4132. The third filtering part 4132 is provided inside the second liquid flow cavity 4131. In some embodiments, the third filtering part 4132 includes a third filtering cavity 41321. The third filtering cavity 41321 communicates with the second liquid flow cavity 4131 to implement liquid flow and filtration. In some embodiments, a ninth filtering mesh is provided on at least one side wall of the third filtering cavity 41321. The ninth filtering mesh forms a ninth filtering surface 41322, and the ninth filtering surface 41322 extends into the second liquid flow cavity 4131. There may be one or more ninth filtering surfaces. This is not limited herein. As shown in FIG. 46h, the ninth filtering mesh is provided on each side wall of the third filtering part 4132. The ninth filtering mesh forms the ninth filtering surface 41322.

In some embodiments, a bottom wall of the third filtering cavity 41321 is detachably provided on the bottom of the housing of the cleaning device 1000, and the bottom wall of the third filtering cavity 41321 is configured as a planar structure to match an overall shape of the housing of the cleaning device 1000. The third filtering part 4132 is provided to filter liquid flowing through the second liquid flow portion 413 to prevent debris from clogging the second liquid flow portion 413. When the third filtering part 4132 needs to be cleaned or replaced, the bottom wall of the third filtering cavity 41321 is directly detached from the bottom of the housing of the cleaning device 1000.

As shown in FIG. 46d, the second gas flow portion 414 may be provided at the first handle 251 of the cleaning device 1000, so that the second gas flow portion 414 can be more quickly in communication with the external gas above the water surface during a floating process of the cleaning device 1000.

In some embodiments, the second gas flow portion 414 further includes a second gas flow cavity 4141. The second gas flow cavity 4141 is provided with at least one ninth outlet 41411. In some embodiments, a side wall of the second gas flow cavity 4141 further communicates with the buoyancy cavity, enabling gas to enter or leave the buoyancy cavity. As shown in FIG. 46e and FIG. 46g, there is one ninth outlet 41411 provided on a front side wall of the second gas flow cavity 4141, and a right side wall of the second gas flow cavity 4141 communicates with the buoyancy cavity.

In some embodiments, the second gas flow portion 414 further includes a fourth filtering part 4142. In some embodiments, the fourth filtering part 4142 includes a fourth filtering cavity 41421. The fourth filtering cavity 41421 communicates with the second gas flow cavity 4141 to implement gas flow and filtration. In some embodiments, a tenth filtering mesh is provided on at least one side wall of the fourth filtering cavity 41421. The tenth filtering mesh forms a tenth filtering surface 41422. An eleventh filtering mesh is provided on at least one of the other side walls of the fourth filtering cavity 41421. The eleventh filtering mesh forms an eleventh filtering surface 41423. There may be one or more tenth filtering meshes and eleventh filtering meshes. This is not limited herein. In some embodiments, a part of the tenth filtering mesh covers the ninth outlet 41411 to block the ninth outlet 41411, and the tenth filtering mesh is in clearance fit with the ninth outlet 41411, that is, there is a gap between the tenth filtering mesh and the ninth outlet 41411. Due to the gas, when the tenth filtering mesh is clogged, gas flow and filtration may be implemented through the eleventh filtering mesh, to ensure normal operation of the second gas flow portion 414. As shown in FIG. 46g, the tenth filtering mesh is provided on one side wall of the fourth filtering part 4142. The tenth filtering mesh forms the tenth filtering surface 41422. A part of the tenth filtering mesh covers the ninth outlet 41411, and the tenth filtering mesh is in clearance fit with the ninth outlet 41411. The eleventh filtering mesh is provided on each of the other side walls of the fourth filtering cavity 41421. The eleventh filtering mesh forms the eleventh filtering surface 41423.

In some embodiments, a bottom wall of the fourth filtering cavity 41421 is detachably provided on the bottom of the first handle 251, and the bottom wall of the fourth filtering cavity 41421 is configured as an arc surface to match an overall shape of the first handle 251. The fourth filtering part 4142 is provided to filter gas flowing through the second gas flow portion 414 to prevent debris from clogging the second gas flow portion 414. When the fourth filtering part 4142 needs to be cleaned or replaced, the bottom wall of the fourth filtering cavity 41421 is directly detached from the bottom of the first handle 251.

In some embodiments, as shown in FIG. 46e, the second gas flow portion 414 further includes a tenth outlet 41412. There may be one or more tenth outlets 41412. When there are a plurality of tenth outlets 41412, the plurality of tenth outlets 41412 may be spaced from each other on the first handle 251. Because the first handle 251 is at a high part of the cleaning device 1000, the tenth outlet 41412 can be more quickly in communication with the external gas above the water surface during the floating process of the cleaning device 1000, to improve a speed at which the cleaning device 1000 floats up. This improves user experience.

In some embodiments, the buoyancy adjustment assembly 410 may further include a connection duct 415. The connection duct 415 is configured to transmit the gas or the liquid. The connection duct 415 may be connected to one or more of the buoyancy cavity, the buoyancy adjustment part, the second liquid flow portion 413, and the second gas flow portion 414. As shown in FIG. 46e, the buoyancy adjustment assembly 410 may further include a buoyancy cavity pump 412 and a plurality of connection ducts 415. The third buoyancy cavity 4111 and the fourth buoyancy cavity 4112 respectively communicate with a flow cavity 416 through a first connection duct 4151 and a second connection duct 4152. The second gas flow cavity 4141 communicates with the flow cavity 416 through a third connection duct 4153. The third buoyancy cavity 4111 and the fourth buoyancy cavity 4112 respectively communicate with the fifth buoyancy cavity 4113 through a fourth connection duct 4154 and a fifth connection duct 4155. The fifth buoyancy cavity 4113 communicates with the buoyancy cavity pump 412 through a sixth connection duct 4156. The buoyancy cavity pump 412 is connected to the second liquid flow cavity 4131 through a seventh connection duct 4157. In this embodiment, there is one buoyancy cavity pump 412. The cleaning device 1000 can float up only under the action of one buoyancy cavity pump 412. This effectively ensures that the cleaning device 1000 can float up. In addition, a quantity of buoyancy cavity pumps 412 is reduced, so that power costs are reduced.

In some embodiments, the buoyancy cavity pump 412 may be provided at the top of the electronic control box 220 to fully use free space from the top of the electronic control box 220 to the sixth side 118 of the cleaning device 1000. This reduces the overall size of the cleaning device 1000.

As shown in FIG. 46b, the buoyancy cavity pump 412 is provided on a left side of the top of the electronic control box 220. To improve mounting stability of the buoyancy cavity pump 412, a stepped accommodating groove is correspondingly provided on the left side of the top of the electronic control box 220 to fix the buoyancy cavity pump 412 in the stepped accommodating groove.

In a non-working state, the buoyancy cavity pump 412 has a same function as a one-way valve and can prevent the external liquid and/or liquid from entering the buoyancy cavity through the second gas flow portion 414. In some other embodiments, when the buoyancy adjustment part is a centrifugal pump or the like, a one-way valve is provided at each of three positions on the connection duct to prevent the external liquid and/or liquid from entering the buoyancy cavity through the second gas flow portion 414.

The gas in the buoyancy cavity comes from various sources. For a first source of the gas, the gas is obtained directly from the outside. For example, the cleaning device 1000 moves along the target side wall 1011 of the target region 100 to the water surface to obtain the external gas. For example, the external gas enters the buoyancy cavity through the second gas flow portion 414 to change the volume of the gas in the buoyancy cavity.

For a second source of the gas, the gas is obtained indirectly from the outside. In other words, the cleaning device 1000 is provided with a protruding duct (not shown in the figure). The protruding duct communicates with the second gas flow portion 414. An end of the protruding duct is away from the second gas flow portion 414, and the end extends out of the water surface to allow gas to be directly discharged or sucked in to change the volume of the gas in the buoyancy cavity. In this way, the volume of the gas in the buoyancy cavity can be changed before the cleaning device 1000 climbs the wall of the target region 100 to the water surface.

For a third source of the gas, a gas generation assembly (not shown in the figure) is provided in the cleaning device 1000. The gas generation assembly can generate gas to change the volume of the gas in the buoyancy cavity. In this way, the volume of the gas in the buoyancy cavity can be changed before the cleaning device 1000 climbs the wall of the target region 100 to the water surface. This improves convenience. The gas generation assembly may generate gas through a chemical reaction, electrolysis, water boiling, and the like to increase or reduce the volume of the gas in the buoyancy cavity.

In addition to discharging the gas from the buoyancy cavity through the second gas flow portion 414, the gas can alternatively be compressed by a compression cylinder (not shown in the figure) to reduce the volume of the gas in the buoyancy cavity, so that the cleaning device 1000 can submerge. In an actual process, the buoyancy adjustment assembly 410 may not include the second gas flow portion 414. The volume of the gas may be changed inside the buoyancy adjustment assembly 410, such as increasing the volume of the gas in the buoyancy cavity by the gas generation assembly or reducing the volume of the gas in the buoyancy cavity by the compression cylinder. In other embodiments, the volume of the gas may be increased or decreased in other means. This is not limited herein.

When the cleaning device 1000 needs to float up, under the action of the buoyancy cavity pump 412, the liquid enters the fifth buoyancy cavity 4113 from the third buoyancy cavity 4111 and the fourth buoyancy cavity 4112 through the fourth connection duct 4154 and the fifth connection duct 4155, respectively, the liquid in the fifth buoyancy cavity 411 enters the buoyancy cavity pump 412 through the sixth connection duct 4156, and then flows out of the buoyancy cavity pump 412 through the seventh connection duct 4157 and flows into the second liquid flow cavity 4131 through the third filtering part 4132, and the liquid entering the second liquid flow cavity 4131 flows out through the eighth outlet 41311 and is finally discharges from the cleaning device body 110 through the second water discharge opening 1113. In addition, the gas enters and passes through the fourth filtering part 4142 through the tenth outlet 41412, the gas passing through the fourth filtering part 4142 enters the second gas flow cavity 4141 through the ninth outlet 41411, and the gas entering the second gas flow cavity 4141 flows into the flow cavity 416 through the third connection duct 4153, then enters the third buoyancy cavity 4111 and the fourth buoyancy cavity 4112 through the first connection duct 4151 and the second connection duct 4152, respectively, and finally enters the fifth buoyancy cavity 4113 through the fourth connection duct 4154 and the fifth connection duct 4155, to increase a volume of the gas in each of the third buoyancy cavity 4111, the fourth buoyancy cavity 4112, and the fifth buoyancy cavity 4113, so that the buoyancy force applied to the cleaning device 1000 is increased. In this way, the cleaning device 1000 can float up to the water surface. Conversely, the cleaning device 1000 can also submerge. When the cleaning device 1000 needs to submerge, under the action of the buoyancy cavity pump 412, the gas enters the third buoyancy cavity 4111 and the fourth buoyancy cavity 4112 from the fifth buoyancy cavity 4113 through the fourth connection duct 4154 and the fifth connection duct 4155, respectively, and then flows into the flow cavity 416 through the first connection duct 4151 and the second connection duct 4152, respectively, the gas entering the flow cavity 416 flows into the second gas flow cavity 4141 through the third connection duct 4153, and the gas is discharged through the ninth outlet 41411 and passes through the fourth filtering part 4142, and is subsequently discharged from the cleaning device body 110 through the tenth outlet 41412. In addition, the liquid enters the cleaning device body 110 through the second water discharge opening 1113, and then flows into the second liquid flow cavity 4131 through the eighth outlet 41311, the liquid passing through the third filtering part 4132 flows into the buoyancy cavity pump 412 through the seventh connection duct 4157, the liquid flowing out of the buoyancy cavity pump 412 enters the fifth buoyancy cavity 4113 through the sixth connection duct 4156, and the liquid in the fifth buoyancy cavity 4113 enters the fourth buoyancy cavity 4112 and the third buoyancy cavity 4111 through the fifth connection duct 4155 and the fourth connection duct 4154, respectively, to increase the weight of the cleaning device 1000. In this way, the cleaning device 1000 can submerge.

As shown in FIG. 46b, the data transmission assembly 240 is provided on the electronic control box 220, and the data transmission assembly 240 may be provided inside the electronic control box 220 or outside the electronic control box 220. The data transmission assembly 240 may be provided to mate with the buoyancy cavity pump 412, that is, when the buoyancy cavity pump 412 is provided on the left side of the electronic control box 220, the data transmission assembly 240 may be provided on the right side of the electronic control box 220. Conversely, when the buoyancy cavity pump 412 is provided on the right side of the electronic control box 220, the data transmission assembly 240 may be provided on the left side of the electronic control box 220, to fully use the free space from the top of the electronic control box 220 to the sixth side 118 of the cleaning device 1000. This reduces the overall size of the cleaning device 1000 and also ensures that various components of the cleaning device 1000 are uniformly arranged to balance weights at various positions on the cleaning device 1000 as much as possible.

In some embodiments, the cleaning device 1000 may further include a Wi-Fi antenna 417. A connection wire is provided on one end of the Wi-Fi antenna 417, and the other end of the connection wire may extend into the electronic control box 220 to be connected to the control system 231 in the electronic control box 220. When the cleaning device 1000 moves on the water surface, the Wi-Fi antenna 417 is located above the water surface, so that the data transmission assembly 240 can operate in air. This reduces problems such as signal attenuation caused by transmission of a data signal between air and liquid and improves communication quality on the water surface. As shown in FIG. 46b, the Wi-Fi antenna 417 may be provided inside the first handle 251 of the cleaning device 1000, so that the Wi-Fi antenna 417 can float out of the water surface more quickly in the floating process of the cleaning device 1000. In addition, because the first handle 251 is at a high part in the process in which the cleaning device 1000 floats on the water surface, it can also be ensured that the Wi-Fi antenna 417 is always away from the water surface in the process in which the cleaning device 1000 floats on the water surface, so that the user can sense a real-time state of the cleaning device 1000 more quickly and accurately by using the terminal device. This improves experience of interaction between the user and the cleaning device 1000.

In some embodiments, the cleaning device 1000 may return to a poolside through the terminal device in a one-click manner. When the cleaning device 1000 floats on the water surface, the user may control, through the terminal device in the one-click manner, the cleaning device 1000 to return to the poolside from the water surface of the swimming pool, so that the user can conveniently lift the cleaning device 1000 out of the water surface of the swimming pool at the poolside. Specifically, when the cleaning device 1000 floats on the water surface after being switched from the second motion state to the third motion state, a current orientation of the first side 113 of the cleaning device 1000 on the water surface is set as an initial orientation of the cleaning device 1000. In this case, the user sends, through the terminal device based on a use requirement, an instruction that the cleaning device 1000 needs to return to the poolside in the one-click manner, and then the cleaning device 1000 returns toward a poolside corresponding to the initial orientation. In a returning process, the cleaning device 1000 continuously corrects the direction, so that the cleaning device 1000 always moves toward the poolside corresponding to the initial orientation until the cleaning device returns to the poolside. Because the first handle 251 is at an uppermost position on the cleaning device 1000, the user can lift the first handle 251 at the poolside to quickly lift the cleaning device 1000 out of the water surface of the swimming pool.

In some embodiments, the cleaning device 1000 corrects the direction through differential rotation of the guiding wheels of the traveling mechanisms 190 on the left side and the right side of the cleaning device.

The above description describes only implementations of the present disclosure and is not intended to limit the scope of the present disclosure. Any equivalent structure or equivalent process transformation performed based on the contents of this specification and the accompanying drawings of the present disclosure or applied directly or indirectly in other related technical fields shall fall within the protection scope of the present disclosure.

## Claims

1. A cleaning device, at least operating in a pool and comprising a cleaning device body, wherein the cleaning device body comprises:
a first accommodating cavity configured to accommodate at least a part of a filtering box;
a first end portion; and
a second end portion; and
the cleaning device comprises:
an electronic control box provided in the cleaning device body and configured to at least accommodate a battery pack; and
a buoyancy adjustment mechanism comprising at least one buoyancy cavity, wherein the at least one buoyancy cavity comprises at least a first buoyancy sub-cavity and a second buoyancy sub-cavity, and the first buoyancy sub-cavity and the second buoyancy sub-cavity are configured to accommodate at least one of gas or liquid;
the first accommodating cavity is close to the first end portion, and the electronic control box is close to the second end portion; and
at least a part of the first buoyancy sub-cavity is closer to the first end portion than the electronic control box, and at least a part of the second buoyancy sub-cavity is closer to the second end portion than the first accommodating cavity.

2. The cleaning device according to claim 1, wherein at least a part of the first buoyancy sub-cavity is closer to the first end portion than the first accommodating cavity, and/or at least a part of the second buoyancy sub-cavity is higher than the electronic control box in a height direction of the cleaning device.

3. The cleaning device according to claim 1 or 2, wherein at least a part of the second buoyancy sub-cavity is located above or below the electronic control box, and projections of the second buoyancy sub-cavity and the electronic control box on a to-be-cleaned surface at least partially overlap; or
at least a part of the second buoyancy sub-cavity is provided in front of or behind the electronic control box, and projections of the second buoyancy sub-cavity and the electronic control box on a projection plane perpendicular to the to-be-cleaned surface at least partially overlap.

4. The cleaning device according to any one of claims 1 to 3, wherein a volume of the second buoyancy sub-cavity is not less than a volume of the first buoyancy sub-cavity.

5. The cleaning device according to any one of claims 1 to 4, wherein the cleaning device body further comprises:
a third accommodating cavity, wherein
the third accommodating cavity is closer to the second end portion than the first accommodating cavity; and
the electronic control box is at least partially accommodated in the third accommodating cavity, and at least a part of the second buoyancy sub-cavity is provided above the electronic control box.

6. The cleaning device according to claim 5, wherein the third accommodating cavity comprises at least a third cavity and a fourth cavity, the third cavity is separated from the fourth cavity, the electronic control box is provided in the fourth cavity, and at least a part of the second buoyancy sub-cavity is provided in the fourth cavity;
a side wall of the first accommodating cavity is provided with at least one first liquid discharge opening, and the first accommodating cavity communicates with the third cavity through the at least one first liquid discharge opening; and
the cleaning device further comprises a main drive pump, a second liquid discharge opening, and a debris inlet, the debris inlet, the filtering box, the at least one first liquid discharge opening, the third cavity, and the first liquid discharge opening sequentially communicate to form a first water flow path, and liquid is driven by the main drive pump to flow through the first water flow path to be cleaned.

7. The cleaning device according to claim 6, wherein the main drive pump comprises a motor and an impeller, the motor is provided in the electronic control box, the impeller is provided in the third cavity, and an output shaft of the motor passes through a sealed cavity of the electronic control box, extends into the third cavity, and is connected to the impeller.

8. The cleaning device according to claim 6 or 7, further comprising a flow guiding cover, wherein the flow guiding cover comprises the third cavity, one end of the flow guiding cover is provided on the side wall of the first accommodating cavity and covers or surrounds the at least one first liquid discharge opening, so that the at least one first liquid discharge opening communicates with the third cavity, and the other end of the flow guiding cover is connected to the second liquid discharge opening; and
at least a part of the flow guiding cover is located above the electronic control box in the height direction of the cleaning device.

9. The cleaning device according to claim 8, wherein at least a part of the second buoyancy sub-cavity surrounds at least a part of a periphery of the flow guiding cover and is located above the electronic control box.

10. The cleaning device according to claim 9, wherein there are two buoyancy cavities, a left buoyancy cavity and a right buoyancy cavity are symmetrically provided in the cleaning device body, second buoyancy sub-cavities of the two buoyancy cavities are symmetrically provided in the fourth cavity, and at least a part of each second buoyancy sub-cavity surrounds the periphery of the flow guiding cover and is located above the electronic control box.

11. The cleaning device according to any one of claims 6 to 10, wherein the cleaning device body further comprises a reagent cavity, and the reagent cavity is configured to at least accommodate a reagent kit; and
the reagent cavity is closer to the second end portion than the second buoyancy sub-cavity, or the reagent cavity is closer to the second end portion than the third cavity, and at least a part of the reagent cavity is located in the fourth cavity.

12. The cleaning device according to claim 11, further comprising a reagent outlet, wherein
the reagent outlet is provided in the third cavity, and after the reagent kit is mounted in the reagent cavity, a reagent in the reagent kit is delivered into the third cavity through the reagent outlet.

13. The cleaning device according to any one of claims 1 to 12, wherein the first end portion comprises at least a first side at a front portion of the cleaning device body, and third space is enclosed between the first side and the first accommodating cavity; and
at least a part of the first buoyancy sub-cavity is provided in the third space.

14. The cleaning device according to claim 13, wherein the first side is provided with a first debris inlet, and the first debris inlet communicates with the filtering box and is configured as an inlet for water surface cleaning; and
at least a part of the first buoyancy sub-cavity is located below the first debris inlet in the height direction of the cleaning device.

15. The cleaning device according to claim 14, further comprising a vision sensing assembly and at least one detection assembly, wherein
the at least one detection assembly is configured to at least detect an obstacle, and the vision sensing assembly is configured to capture an image; and
the vision sensing assembly is located below the first debris inlet and above the at least one detection assembly in the height direction of the cleaning device.

16. The cleaning device according to claim 14 or 15, wherein there are two buoyancy cavities, first buoyancy sub-cavities of the two buoyancy cavities are bilaterally symmetrically provided in the third space, a first mounting region is formed between the two first buoyancy sub-cavities, and the vision sensing assembly and the at least one detection assembly are provided in the first mounting region.

17. The cleaning device according to any one of claims 1 to 16, wherein the gas in the at least one buoyancy cavity is discharged, and liquid outside the at least one buoyancy cavity is sucked into the at least one buoyancy cavity to reduce a buoyancy force applied to the cleaning device, and the liquid in the at least one buoyancy cavity is discharged, and gas outside the at least one buoyancy cavity is sucked into the at least one buoyancy cavity to increase the buoyancy force applied to the cleaning device, so that the cleaning device floats up and submerges in water.

18. The cleaning device according to claim 17, wherein the cleaning device further comprises a fifth opening and a sixth opening, the fifth opening and the sixth opening both communicate with the at least one buoyancy cavity, the fifth opening is configured to allow gas to flow into or be discharged from the at least one buoyancy cavity, and the sixth opening is configured to allow liquid to flow into or be discharged from the at least one buoyancy cavity.

19. The cleaning device according to any one of claims 1 to 18, wherein the buoyancy adjustment mechanism further comprises at least one buoyancy adjustment part, and the at least one buoyancy adjustment part is configured to drive at least one of the gas or the liquid to flow into or be discharged from the at least one buoyancy cavity; and
the at least one buoyancy adjustment part is provided in the electronic control box.

20. The cleaning device according to claim 18 or 19, wherein the fifth opening is closer to a front portion of the first end portion than the first accommodating cavity.
